(19) **Europäisches Patentamt / European Patent Office / Office européen des brevets**

(11) **EP 3 973 166 B1**

(12) # EUROPEAN PATENT SPECIFICATION

(45) Date of publication and mention of the grant of the patent:
**09.07.2025 Bulletin 2025/28**

(21) Application number: **20732354.4**

(22) Date of filing: **20.05.2020**

(51) International Patent Classification (IPC):
**F02G 1/055** $^{(2006.01)}$    **F02G 1/047** $^{(2006.01)}$
**H02K 7/18** $^{(2006.01)}$

(52) Cooperative Patent Classification (CPC):
**F02G 1/055; B33Y 80/00; F02G 1/0435;**
**F02G 1/044; F02G 1/045; F02G 1/047; F02G 1/057;**
**F23K 5/20; F23L 15/02; F23L 15/04; F23R 3/005;**
F02G 2244/00; F02G 2244/08; F02G 2254/10;
F02G 2255/10;        (Cont.)

(86) International application number:
**PCT/US2020/033721**

(87) International publication number:
**WO 2020/236885 (26.11.2020 Gazette 2020/48)**

(54) **ENERGY CONVERSION APPARATUS AND CONTROL SYSTEM**

ENERGIEUMWANDLUNGSVORRICHTUNG UND STEUERUNGSSYSTEM

APPAREIL DE CONVERSION D'ÉNERGIE ET SYSTÈME DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2019 US 201962850599 P
21.05.2019 US 201962850623 P
21.05.2019 US 201962850678 P
21.05.2019 US 201962850692 P
21.05.2019 US 201962850701 P**

(43) Date of publication of application:
**30.03.2022 Bulletin 2022/13**

(73) Proprietor: **Hyliion Holdings Corp.
Cedar Park, TX 78613 (US)**

(72) Inventors:
• **MOOK, Joshua Tyler
Cincinnati, Ohio 45215 (US)**
• **GANSLER, Michael Thomas
Cincinnati, Ohio 45215 (US)**
• **WAUN, Scott Douglas
Cincinnati, Ohio 45215 (US)**
• **VANDEVOORDE, Kevin Michael
Cincinnati, Ohio 45215 (US)**

• **AKWARA, Aigbedion
Cincinnati, Ohio 45215 (US)**
• **NOTARNICOLA, Michael Robert
Cincinnati, Ohio 45215 (US)**
• **BELLARDI, Jason Joseph
Cincinnati, Ohio 45215 (US)**
• **SENNOUN, Mohammed El Hacin
Cincinnati, Ohio 45215 (US)**
• **THOMPSON, Mary Kathryn
Cincinnati, Ohio 45215 (US)**
• **OSAMA, Mohamed
85748 Garching b. Muenchen (DE)**
• **MARRERO ORTIZ, Victor Luis
Cincinnati, Ohio 45215 (US)**

(74) Representative: **Hafner & Kohl PartmbB
Schleiermacherstraße 25
90491 Nürnberg (DE)**

(56) References cited:
EP-A1- 3 301 287    WO-A1-02/057612
WO-A1-2006/008540    WO-A1-2009/099343
WO-A1-2018/023142    WO-A1-92/18346
WO-A2-2006/023872    WO-A2-2011/003038
US-A1- 2008 122 408    US-A1- 2013 042 607
US-B1- 7 171 811

(52) Cooperative Patent Classification (CPC): (Cont.)
F02G 2255/20; F02G 2256/02; F02G 2257/00;
F02G 2275/20; F02G 2275/40; Y02E 20/34;
Y02T 10/12

## Description

CROSS-REFERENCE TO RELATED APPLICATIONS

FIELD

The present subject matter relates generally to energy conversion systems, power generation systems, and energy distribution systems. The present subject matter additionally relates to heat exchangers and heat exchanger systems. The present subject matter further relates to piston engine assemblies, such as closed-cycle engine systems. The present subject matter still further relates to systems and methods for control or operation of one or more systems of the present subject matter herein.

BACKGROUND

Power generation and distribution systems are challenged to provide improved power generation efficiency and/or lowered emissions. Furthermore, power generation and distribution systems are challenged to provide improved power output with lower transmission losses. Certain power generation and distribution systems are further challenged to improve sizing, portability, or power density generally while improving power generation efficiency, power output, and emissions.

Certain engine system arrangements, such as closed cycle engines, may offer some improved efficiency over other engine system arrangements. However, closed cycle engine arrangements, such as Stirling engines, are challenged to provide relatively larger power output or power density, or improved efficiency, relative to other engine arrangements. Closed cycle engines may suffer due to inefficient combustion, inefficient heat exchangers, inefficient mass transfer, heat losses to the environment, non-ideal behavior of the working fluid(s), imperfect seals, friction, pumping losses, and/or other inefficiencies and imperfections. As such, there is a need for improved closed cycle engines and system arrangements that may provide improved power output, improved power density, or further improved efficiency. Additionally, there is a need for an improved closed cycle engine that may be provided to improve power generation and power distribution systems.

Additionally, or alternatively, there is a general need for improved heat transfer devices, such as for heat engines, or as may be applied to power generation systems, distribution systems, propulsion systems, vehicle systems, or industrial or residential facilities.

Furthermore, there is a need for improved control system and methods for operating power generation systems as may include subsystems that collectively may provide improved power generation efficiency or reduced emissions.

A closed cycle engine driving an electrical machine is known from EP 3 301 287 A1.

BRIEF DESCRIPTION

Aspects and advantages of the invention will be set forth in part in the following description, or may be obvious from the description, or may be learned through practice of the invention.

An aspect of the disclosure is directed to a system including a closed cycle engine having a piston body defining a hot side and a cold side and having a piston assembly movable within the piston body. An electric machine is operatively coupled with the piston assembly. A control system includes one or more sensors operable to detect a piston movement characteristic of the piston assembly movable within the piston body. A controller is communicatively coupled with the one or more sensors and a controllable device. The controller is configured to determine a control command based at least in part on data received from the one or more sensors. The control command is selected based at least in part to cause the electric machine operatively coupled with the piston assembly to generate a preselected electrical power output. The controller provides the determined control command to the controllable device. The controllable device is operable to control an input to an engine working fluid disposed within the piston body.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure including the best mode, directed to one of ordinary skill in the art, is set forth in the specification, which makes reference to the appended figures, in which:

**With respect to Chapter 1,**

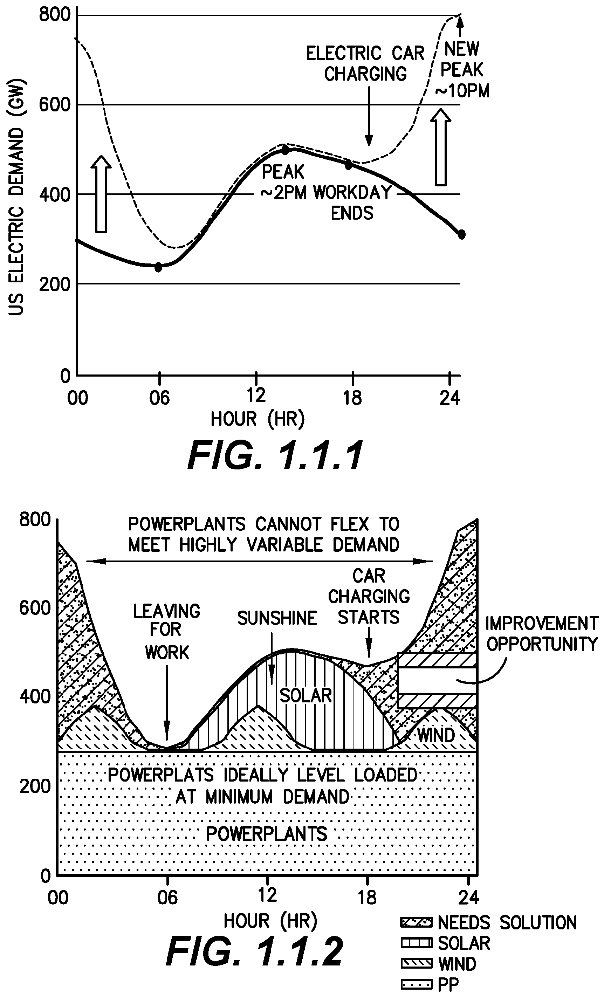

> FIG. 1.1.1 is a graph depicting power demand as a function of time of day;
> FIG. 1.1.2 is a graph depicting power demand versus energy supply from various power generation and distribution systems and a forecasted gap in supply and demand brought to power generation and distribution by an increase in electric load demand;

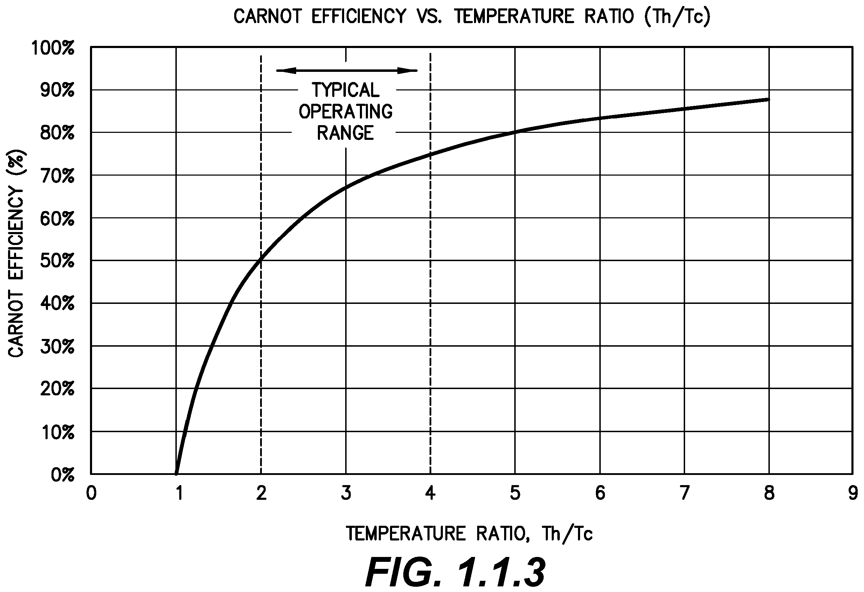

> FIG. 1.1.3 is a graph depicting Carnot efficiency versus temperature ratio;

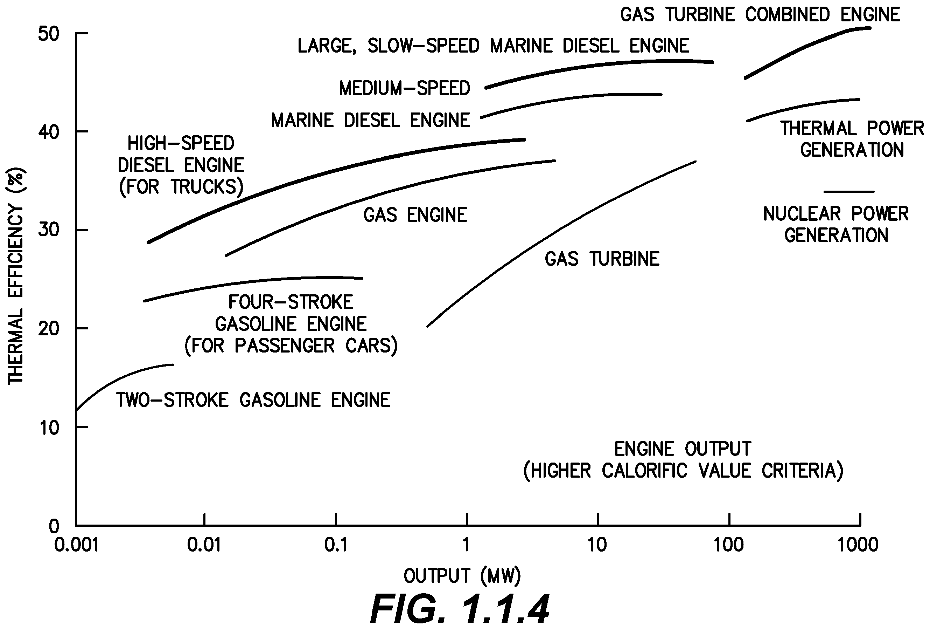

> FIG. 1.1.4 is a graph depicting thermal efficiency versus power output;

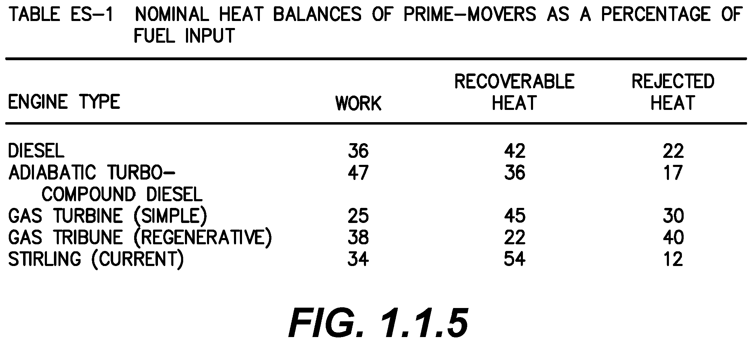

> FIG. 1.1.5 is a chart depicting nominal heat balances of prime-movers as a percentage of fuel input;

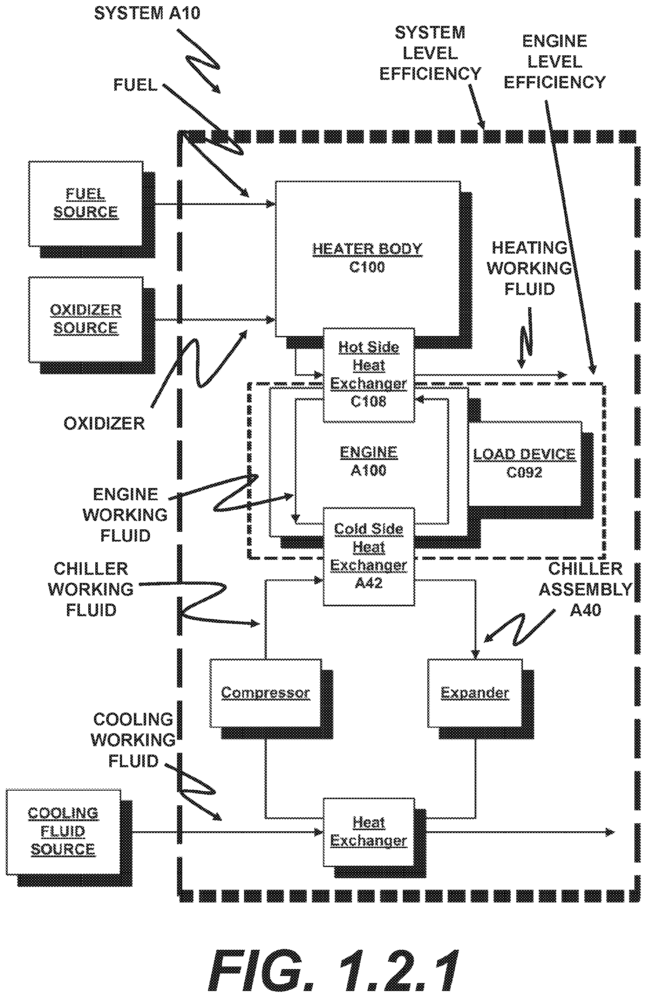

FIG. 1.2.1 is a schematic block diagram depicting a system for energy conversion according to an aspect of the present disclosure;

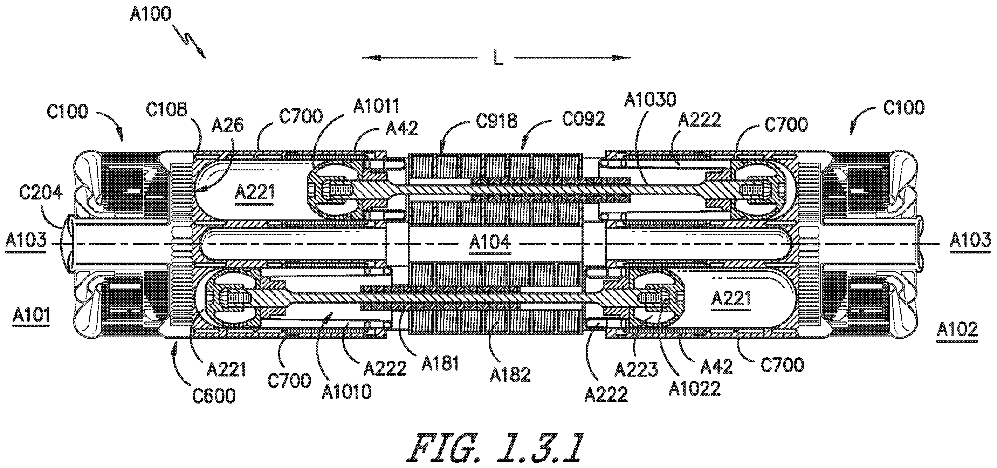

FIG. 1.3.1 is a cross sectional view of an exemplary embodiment of a closed cycle engine and load device according to an aspect of the present disclosure;

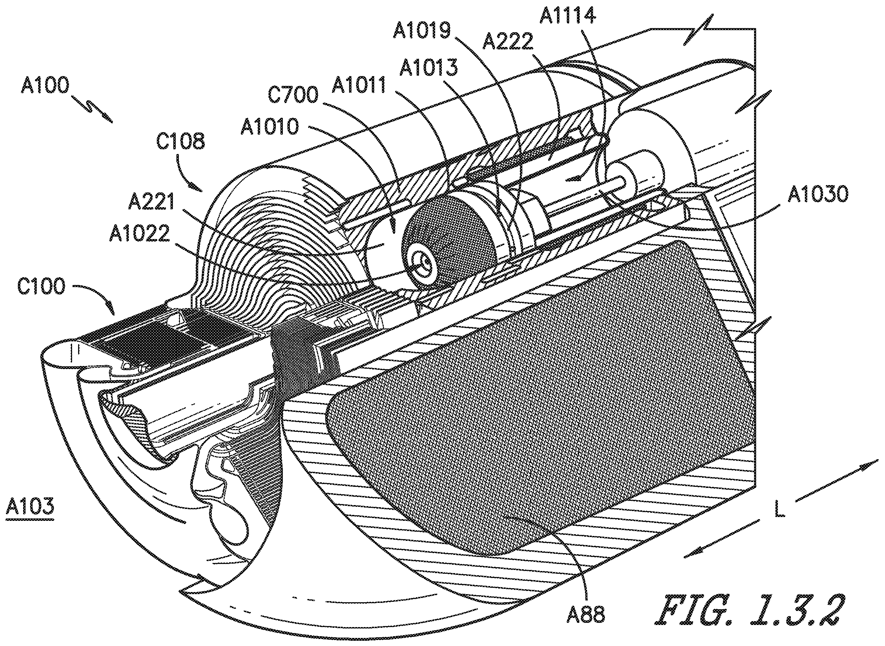

FIG. 1.3.2 is a perspective cutaway view of an exemplary portion of an exemplary embodiment of an engine according to an aspect of the present disclosure;

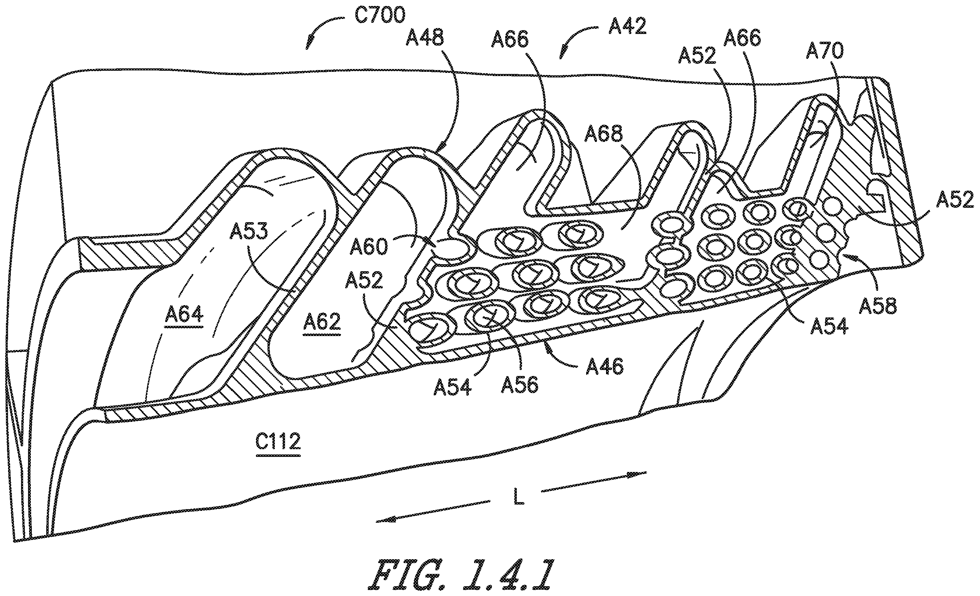

FIG. 1.4.1 is a perspective cutaway view of an exemplary portion of an engine according to an aspect of the present disclosure;

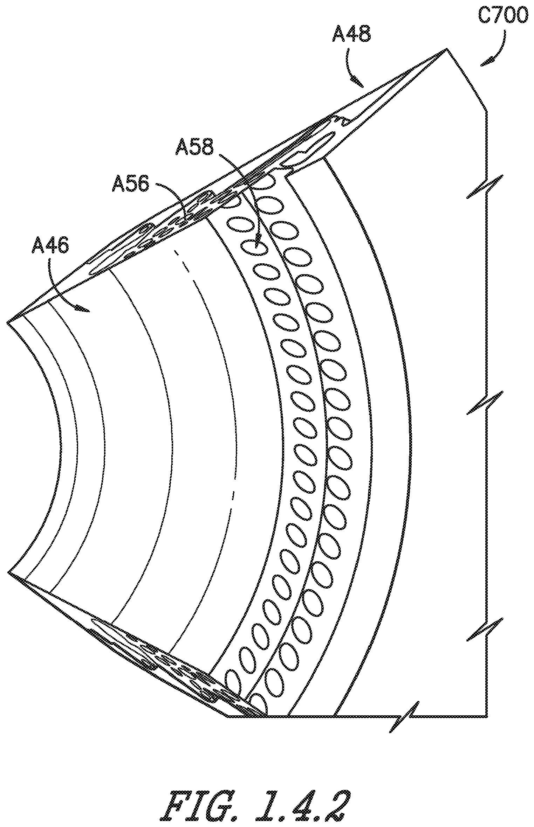

FIG. 1.4.2 is a perspective cutaway view of another exemplary portion of an engine according to an aspect of the present disclosure;

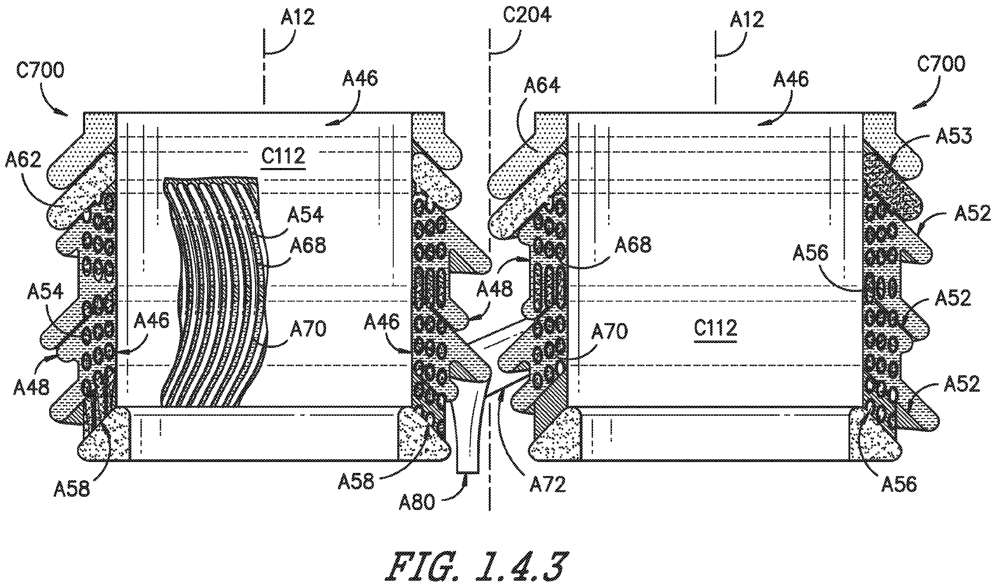

FIG. 1.4.3 is a cutaway view of a portion of an exemplary embodiment of an engine according to an aspect of the present disclosure;

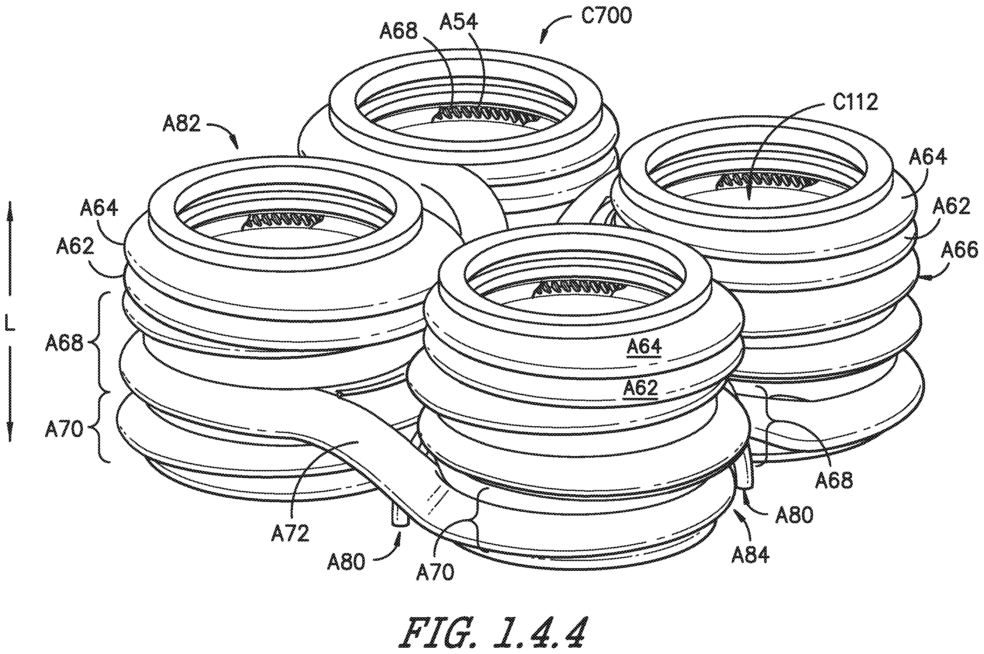

FIG. 1.4.4 is a perspective view of a portion of an exemplary embodiment of an engine according to an aspect of the present disclosure;

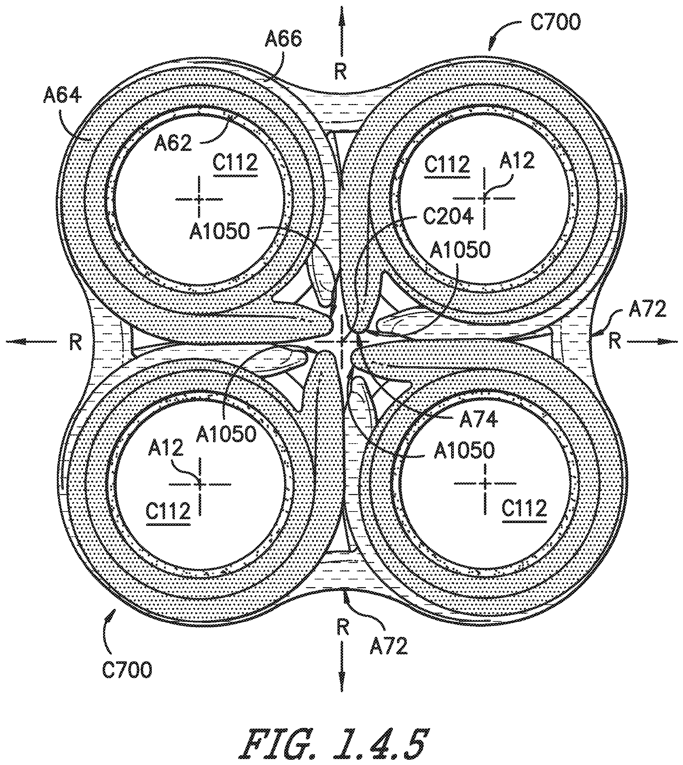

FIG. 1.4.5 is a top-down view of fluid flowpaths within a portion of an exemplary embodiment of an engine such as provided in regard to FIG. 1.4.4;

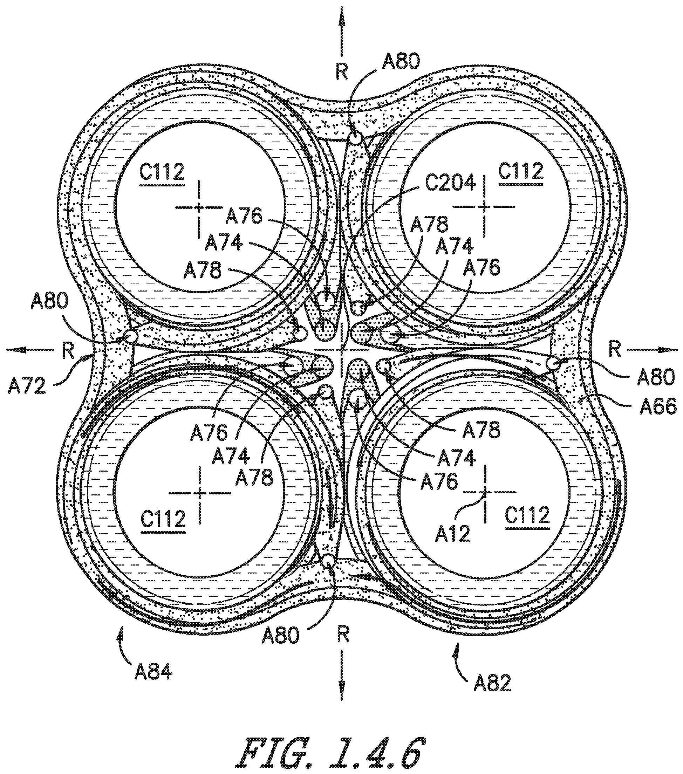

FIG. 1.4.6 is a bottom-up view of fluid flowpaths within a portion of an exemplary embodiment of an engine such as provided in regard to FIG. 1.4.4;

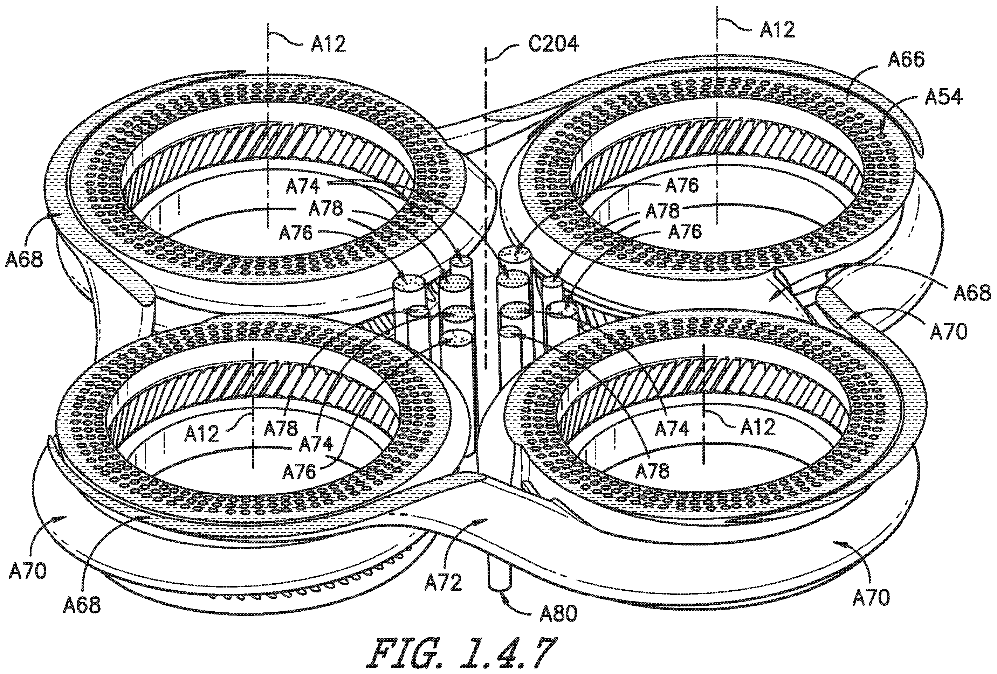

FIG. 1.4.7 is a perspective cutaway view of a portion of an exemplary embodiment of an engine such as provided in regard to FIG. 1.4.4;

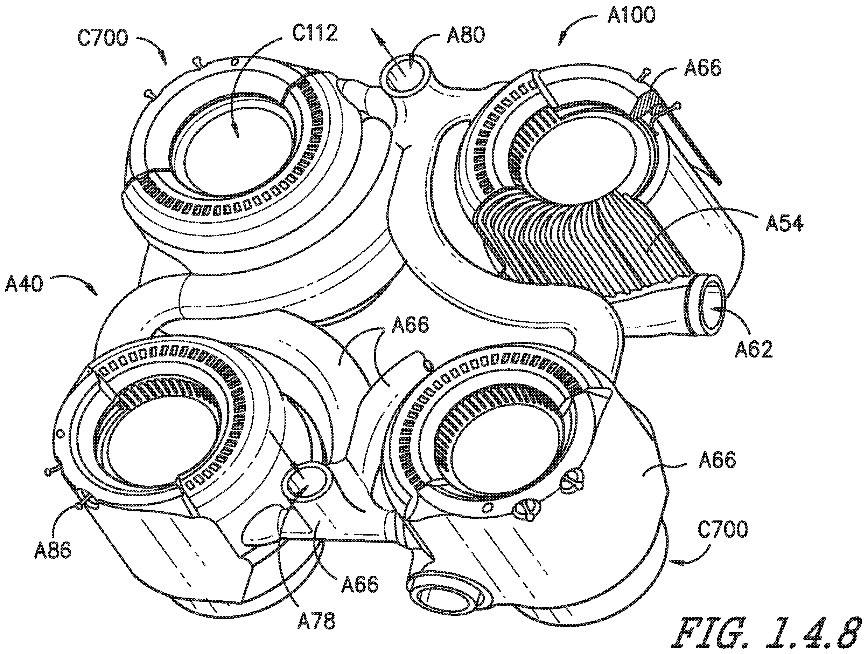

FIG. 1.4.8 is a perspective view with a partial cutaway view of a portion of an exemplary embodiment of an engine according to an aspect of the present disclosure;

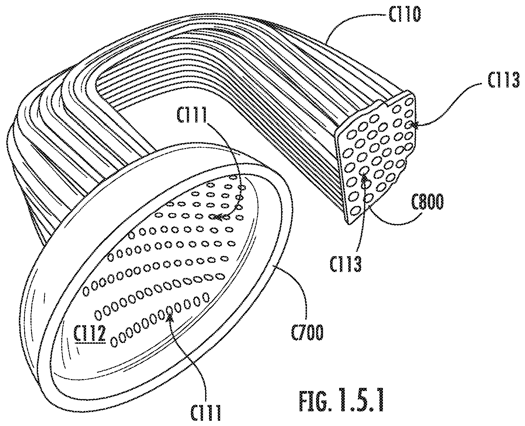

FIG. 1.5.1 is a perspective view of a portion of an exemplary embodiment of an engine such as provided according to an aspect of the present disclosure;

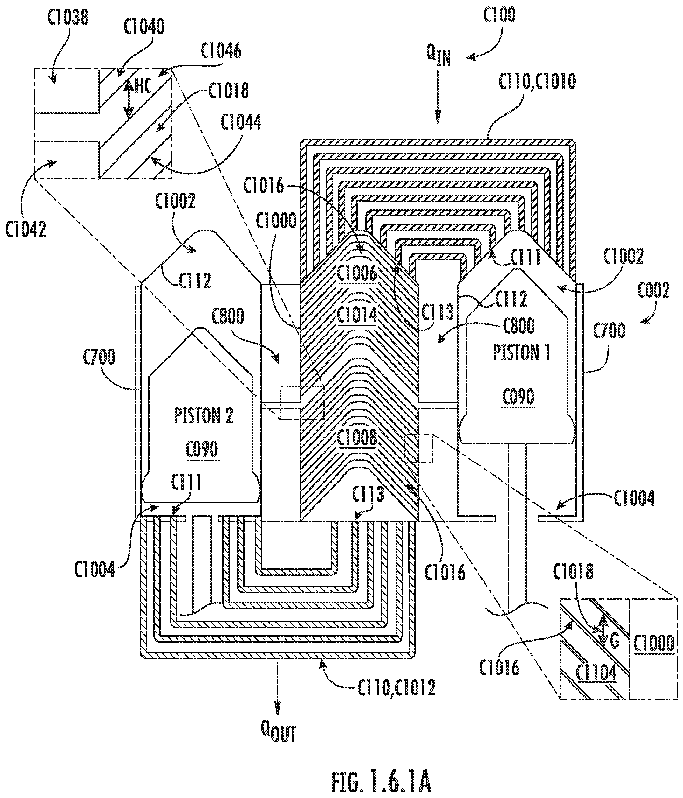

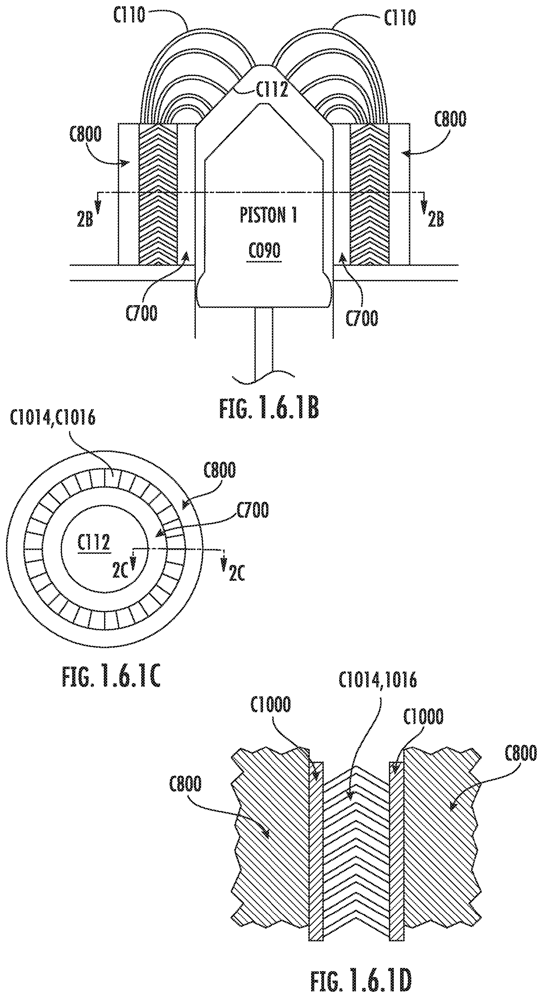

FIG. 1.6.1A schematically depicts an exemplary regenerator system of an engine according to an aspect of the present disclosure;

FIG. 1.6.1B schematically depicts a cross-sectional view of an exemplary regenerator body in relation to a portion of an engine according to an aspect of the present disclosure;

FIG. 1.6.1C schematically depicts a top cross-sectional view of the exemplary regenerator body of FIG. 1.6.1B;

FIG. 1.6.1D schematically depicts an enlarged perspective cross-sectional view of the exemplary regenerator body of FIG. 1.6.1B;

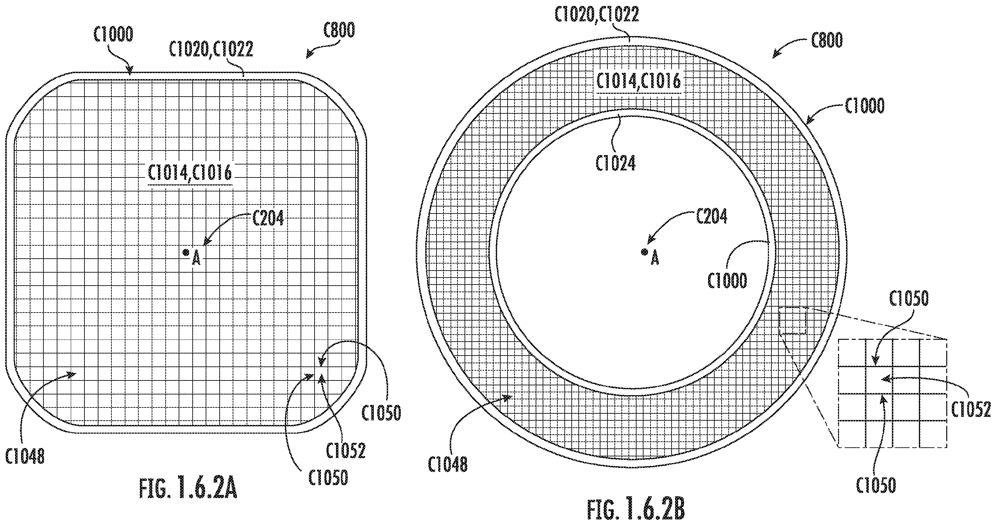

FIG. 1.6.2A schematically depicts a cross-sectional view of another exemplary regenerator body;

FIG. 1.62B schematically depicts a cross-sectional view of yet another exemplary regenerator body;

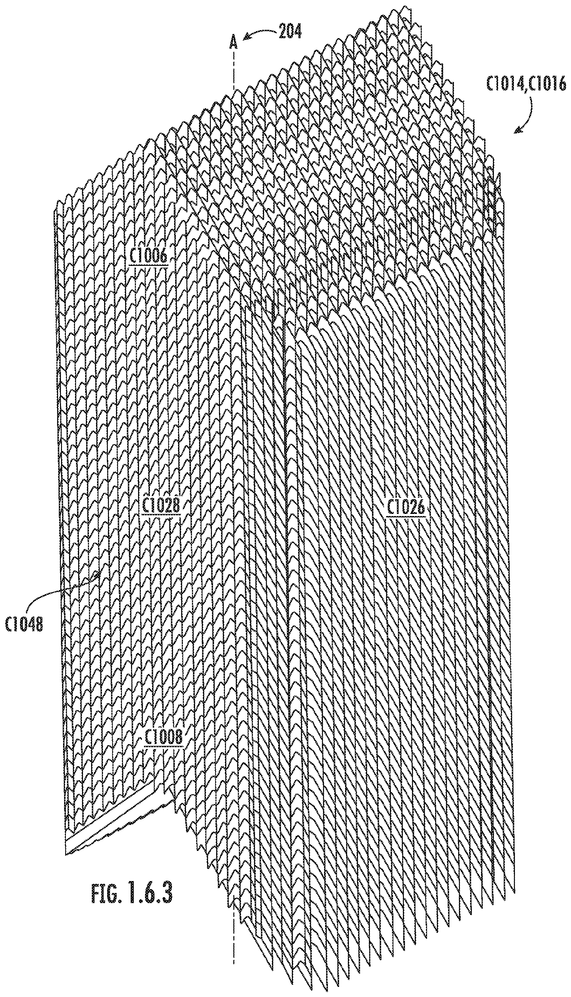

FIG. 1.6.3 schematically depicts a perspective view of a plurality of fin arraysthat may be included in a regenerator body, such as the regenerator body shown in FIGS. 1.6.1A or 1.6.1B;

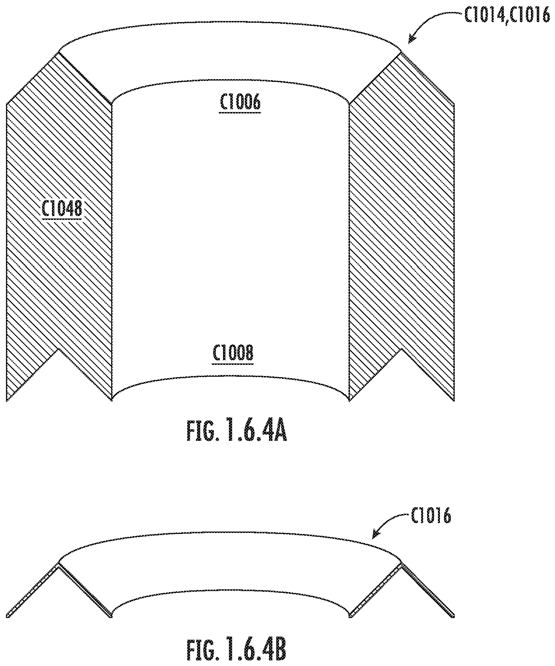

FIG. 1.6.4A schematically depicts a perspective cross-sectional view of another exemplary plurality of fin arrays that may be included in a regenerator body, such as the regenerator body shown in FIG. 1.6.2B;

FIG. 1.6.4B schematically depicts an exemplary fin array from the exemplary plurality of fin arrays shown in FIG. 1.6.4A;

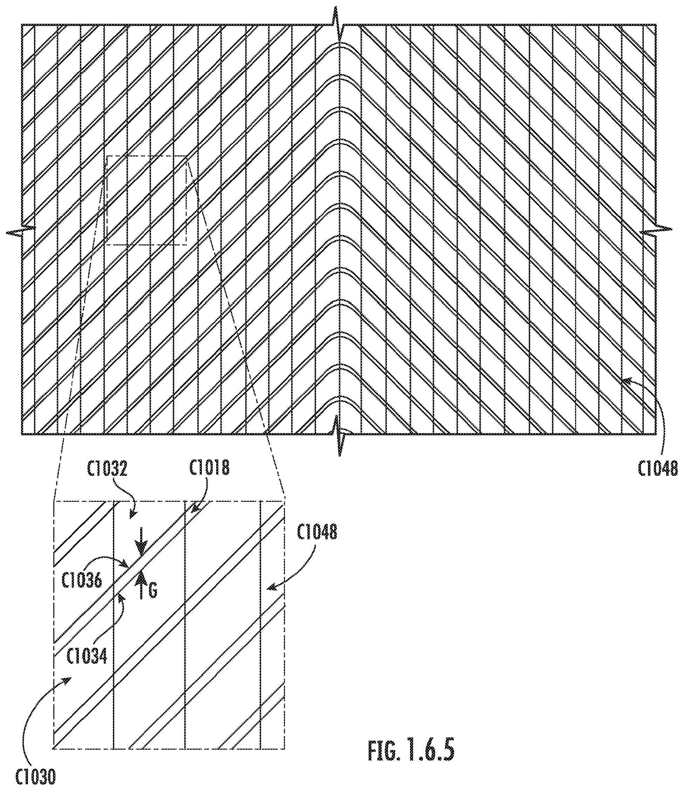

FIG. 1.6.5 schematically depicts a side view of the plurality of fin arrays shown in FIGS. 1.6.3 and/or 1.6.4A;

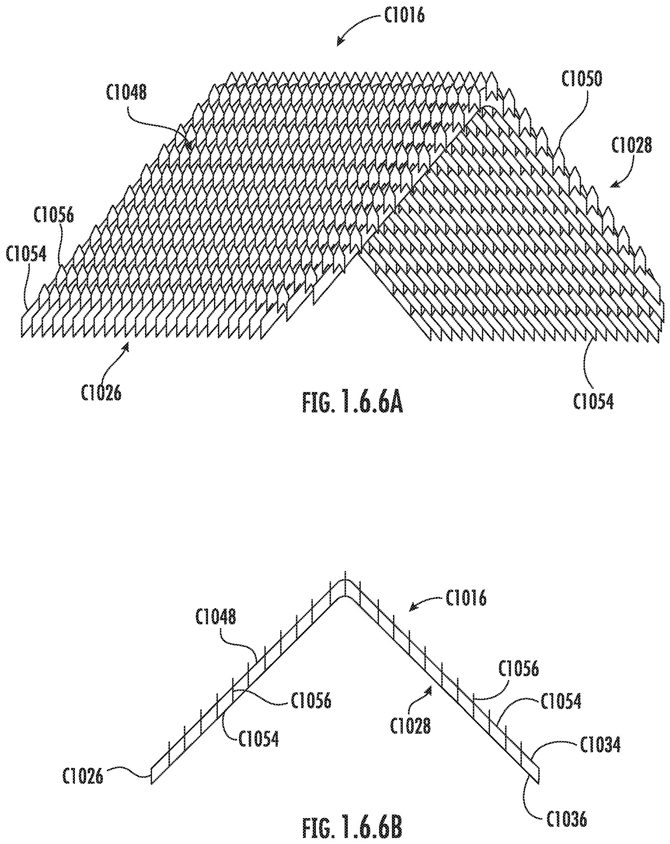

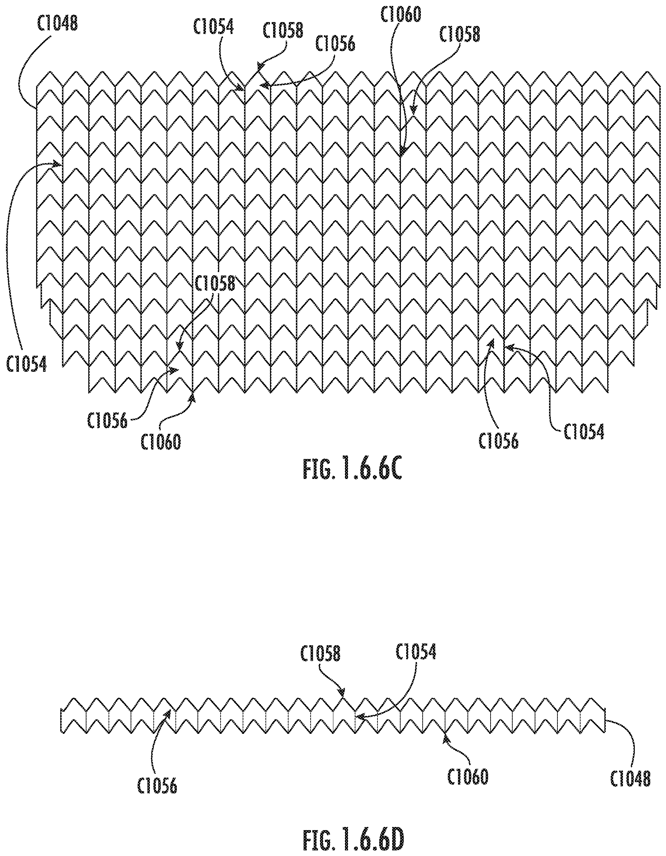

FIG. 1.6.6A schematically depicts a perspective view of a fin array from the plurality of fin arrays shown in FIG. 1.6.3;

FIG. 1.6.6B schematically depicts a right-side view of the fin array shown in Fig. 1.6.6A;

FIG. 1.6.6C schematically depicts a side view of the fin array viewing the fin array perpendicular to the perspective shown in Fig. 1.6.5A;

FIG. 1.6.6D schematically depicts a plurality of fins from the fin array shown in FIG. 1.6.6A viewed from the perspective shown in FIG. 1.6.6C; and

FIG. 1.6.7 shows a flowchart depicting an exemplary method of regenerating heat in an engine-working fluid;

FIG. 1.7.1 is a side view of an exemplary embodiment of a portion of an engine according to an aspect of the present disclosure;

FIG. 1.7.2 is a perspective view of an exemplary embodiment of a portion of an engine such as provided in regard to FIG. 1.7.1;

FIG. 1.7.3 is another perspective view of an exemplary embodiment of a portion of an engine such as provided in regard to FIGS. 1.7.1 through FIG. 1.7.2;

FIG. 1.7.4 is an end view of an exemplary embodiment of a portion of an engine such as provided in regard to FIGS. 1.7.1 through FIG. 1.7.2;

FIG. 1.7.5 is a schematic view of an embodiment of an arrangement of a portion of a system including an engine and a load device according to an aspect of the present disclosure;

FIG. 1.7.6 is a schematic view of another embodiment of an arrangement of a portion of a system including an engine and a load device according to an aspect of the present disclosure;

FIG. 1.7.7 is a schematic view of yet another embodiment of an arrangement of a portion of a system including an engine and a load device according to an aspect of the present disclosure;

FIG. 1.7.8 is a schematic view of still another embodiment of an arrangement of a portion of a system including an engine and a load device according to an aspect of the present disclosure;

FIGS. 1.8.1A, 1.8.1B, 1.8.1C, 1.8.1D, 1.8.1E, and 1.8.1F schematically depict exploded views of exemplary engine assemblies according to aspects of the present disclosure;

FIG. 1.8.2 schematically depicts an enlarged partial exploded view of another exemplary engine assembly according to aspects of the present disclosure; and

FIG. 1.8.3 shows a flowchart depicting an exemplary method of building an engine assembly.

**With respect to chapter 5,**

FIG. 5.1.1 provides a schematic block diagram of a power generation system according to an aspect of the present disclosure;

FIG. 5.1.2 provides a detailed schematic view of the power generation system of FIG. 5.1.1;

FIG. 5.1.3 provides a block diagram of a control system of the power generation system of FIGS. 5.1.1 and 5.1.2;

FIG. 5.1.4 provides a block diagram depicting various modes of operation of the power generation system of FIGS. 5.1.1 and 5.1.2;

FIG. 5.1.5 provides a flow diagram depicting an example method of initializing the power generation system of FIGS. 5.1.1 and 5.1.2;

FIG. 5.1.6 provides a power generation that includes the power generation system of FIG. 5.1.2 as one of a plurality of power generation systems operable to provide electrical power to one or more energy storage devices;

FIG. 5.1.7 provides a schematic view of an example piston assembly disposed within one of the piston bodies of a closed cycle engine of the power generation system of FIGS. 5.1.1 and 5.1.2 and depicts the piston assembly in a top dead center position;

FIG. 5.1.8 provides a schematic view of the piston assembly of FIG. 5.1.7 and depicts the piston assembly in a bottom dead center position;

FIG. 5.1.9 provides a schematic view of the piston assembly of FIG. 5.1.7 and depicts the piston assembly positioned at a midpoint of a preselected stroke of the piston assembly;

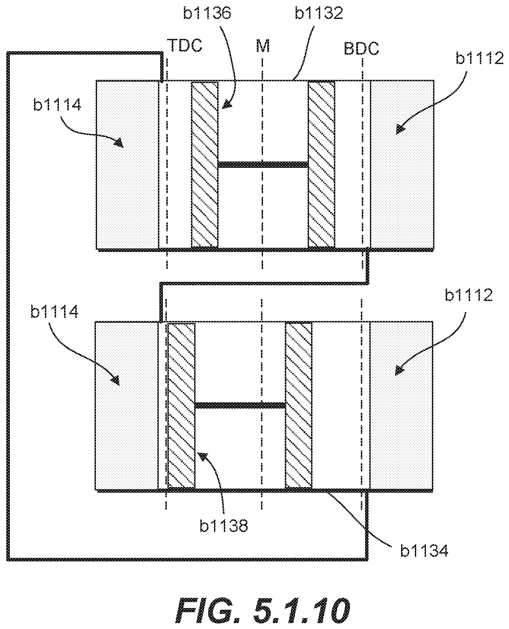

FIG. 5.1.10 provides a schematic view of two fluidly coupled piston bodies with piston assemblies disposed therein;

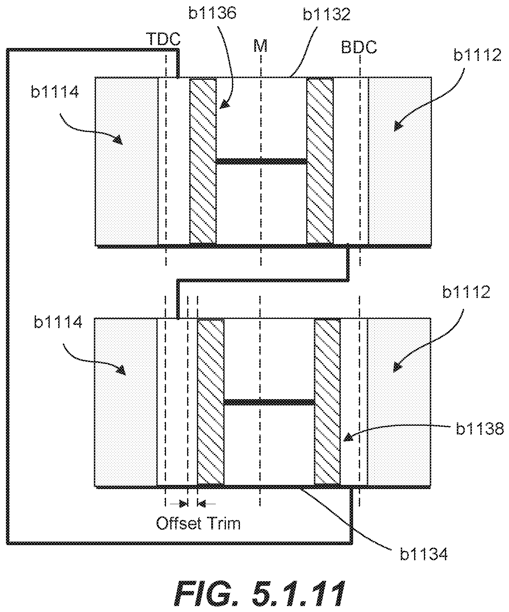

FIG. 5.1.11 provides another schematic view of two fluidly coupled piston bodies with piston assemblies disposed therein;

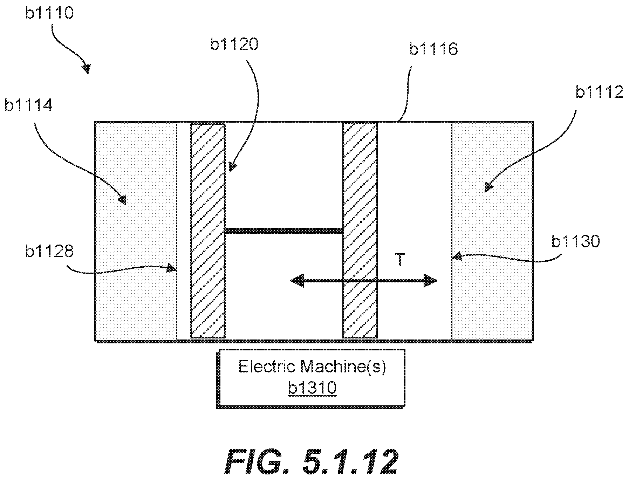

FIG. 5.1.12 provides a schematic view of a piston assembly being moved within its associated piston body;

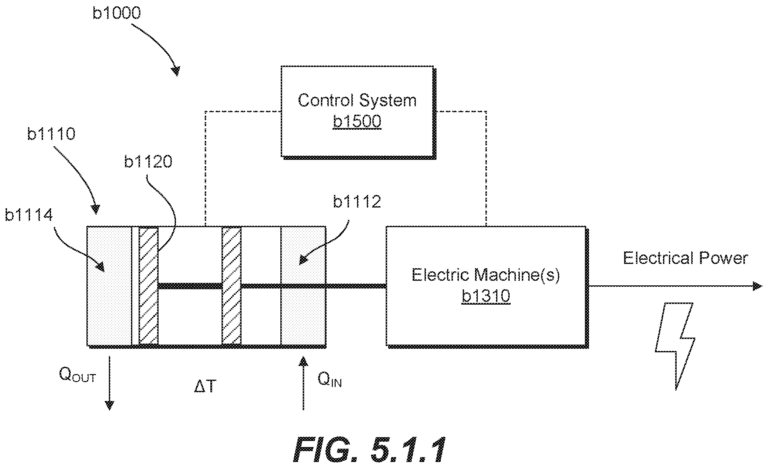

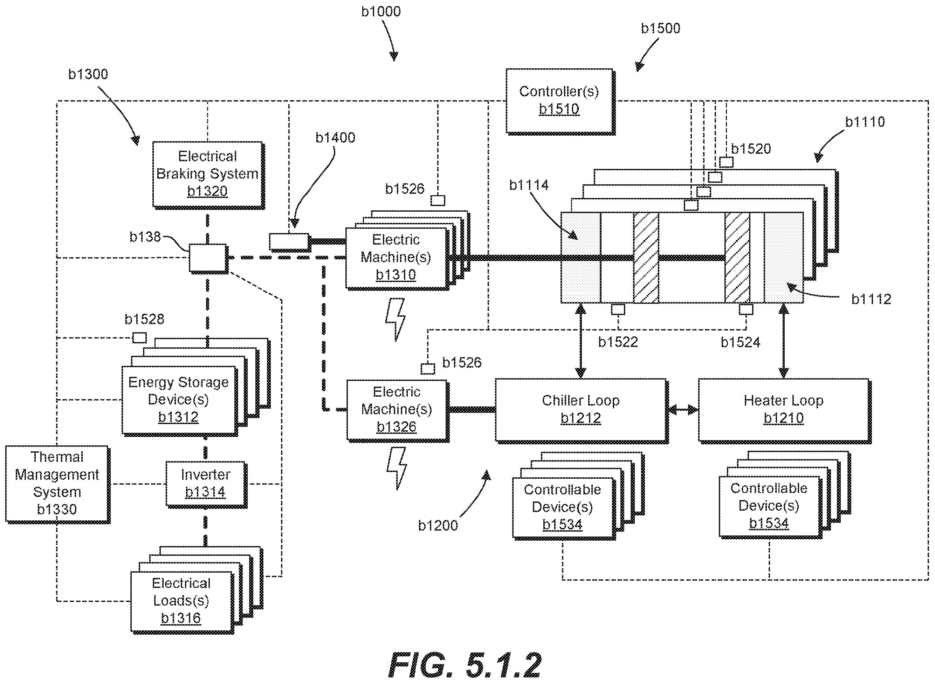

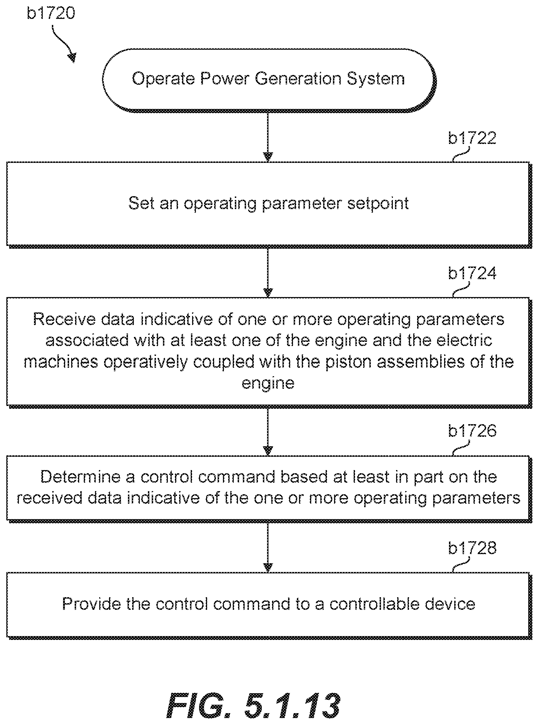

FIG. 5.1.13 provides a flow diagram depicting an example method of controlling the power generation system of FIGS. 5.1.1 and 5.1.2 in a normal mode;

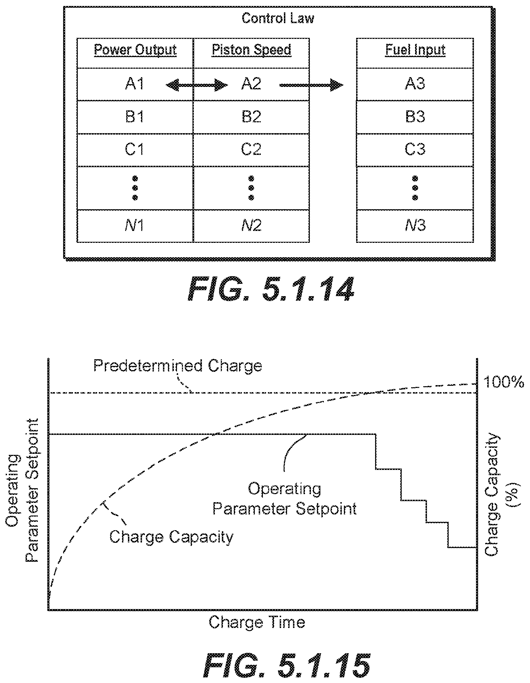

FIG. 5.1.14 provides a table of an example control law that associates piston speeds of the piston assembly with power outputs of the electric machines as well as fuel inputs to a combustor for heating a hot side of the closed cycle engine;

FIG. 5.1.15 provides a graph depicting an operating parameter setpoint as well as a charge capacity of the one or more energy storage devices as a function of charge time;

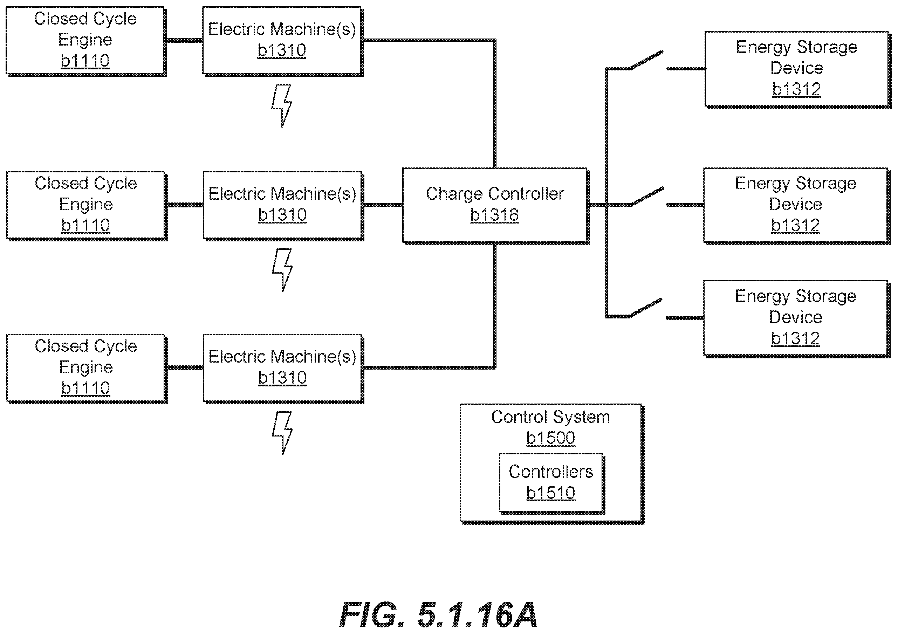

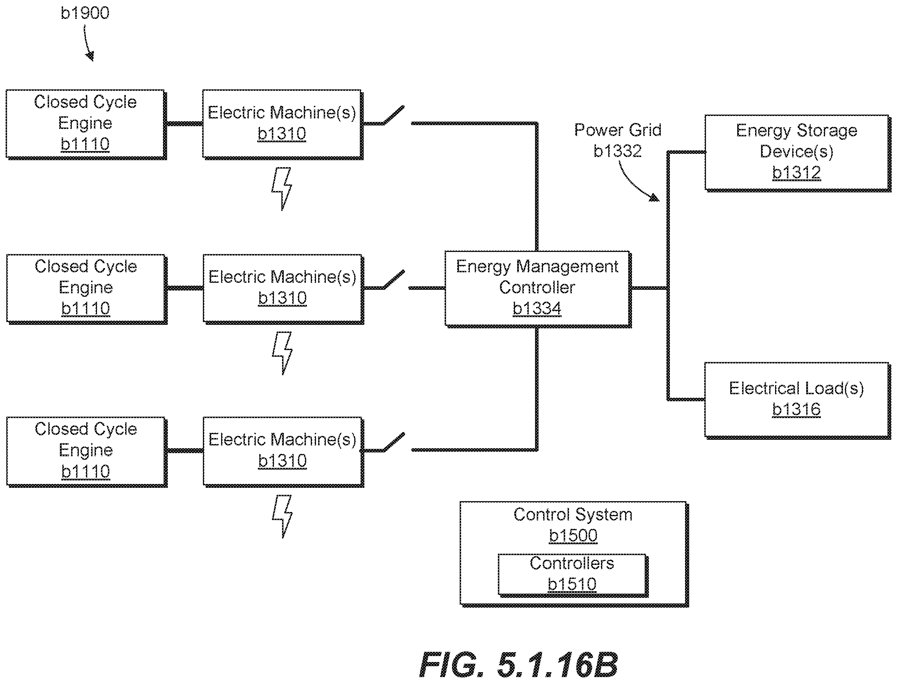

FIG. 5.1.16A provides a schematic view of a power generation system that includes a plurality of closed cycle engines each having one or more associated electric machines according to an example aspect of the present disclosure;

FIG. 5.1.16B provides a schematic view of a distributed power generation network that includes a plurality of closed cycle engines each having one or more associated electric machines according to an example aspect of the present disclosure;

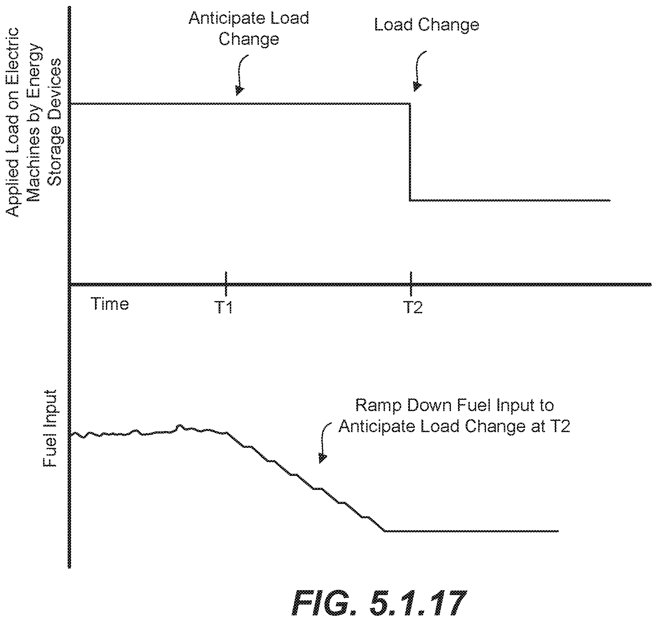

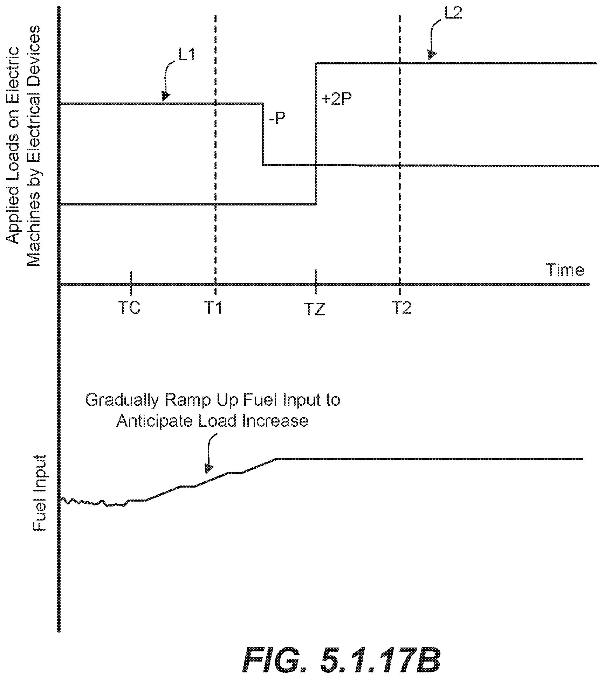

FIG. 5.1.17 provides a graph depicting an applied load on the electric machines as a function of time as well as a fuel input to the combustor of a closed cycle engine as a function of time according to an example aspect of the present disclosure;

FIG. 5.1.17B provides a graph depicting a plurality of applied loads on the electric machines as a function of time as well as a fuel input to the combustor of a closed cycle engine as a function of time according to an example aspect of the present disclosure;

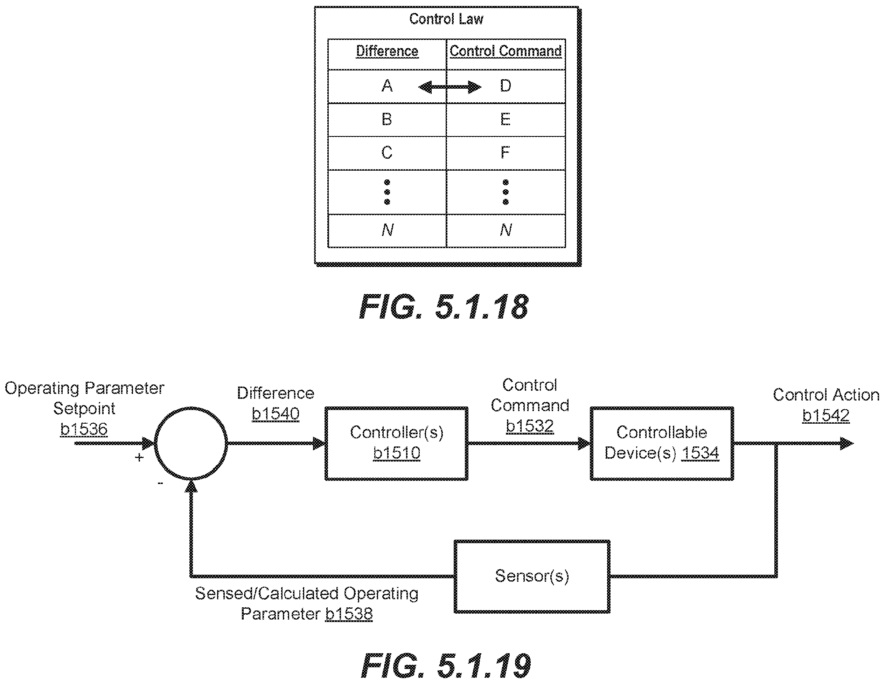

FIG. 5.1.18 provides a table of an example control law that associates various differences with various control commands;

FIG. 5.1.19 provides an example feedback control loop for controlling the power generation system in accordance with an embodiment of the present disclosure;

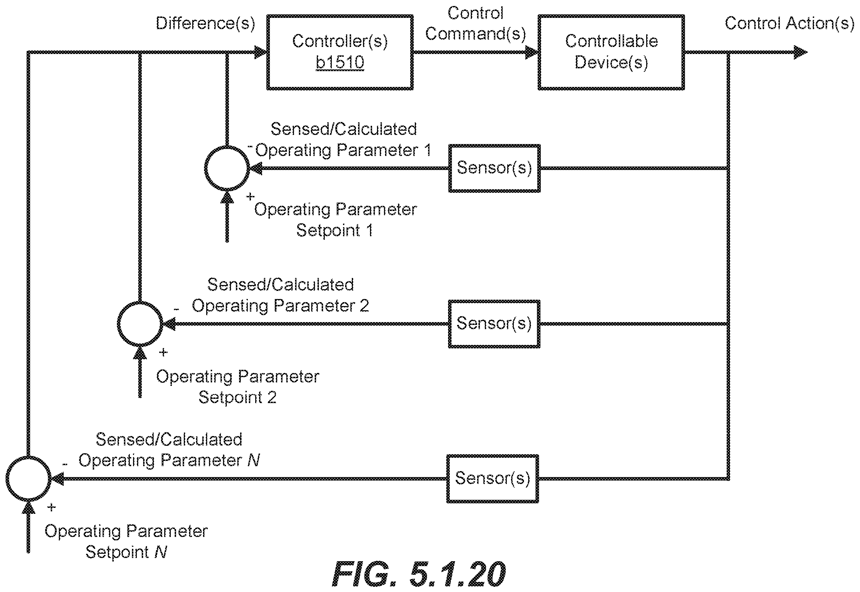

FIG. 5.1.20 provides another example feedback control loop for controlling the power generation system in accordance with an embodiment of the present disclosure;

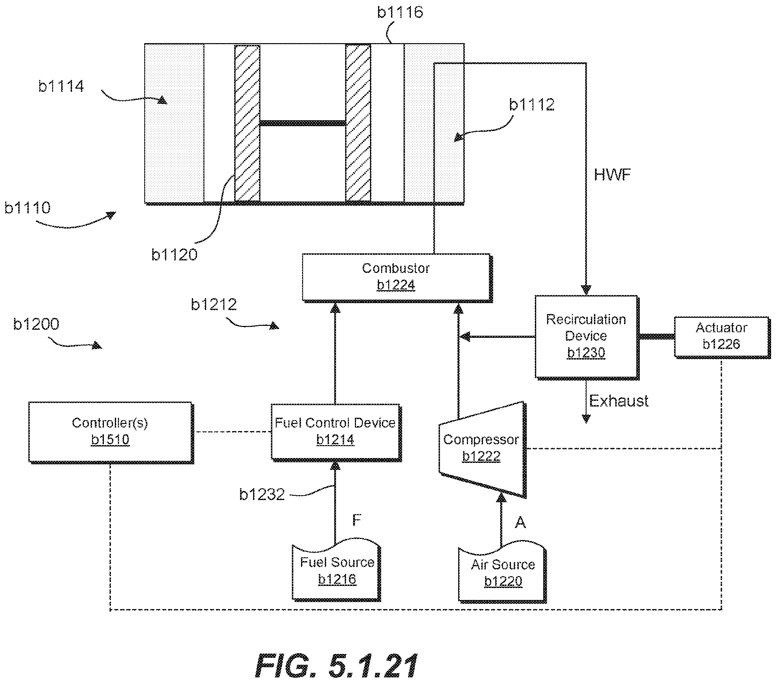

FIG. 5.1.21 provides a schematic view of an example heater loop of the balance of plant of the power generation system of FIGS. 5.1.1 and 5.1.2;

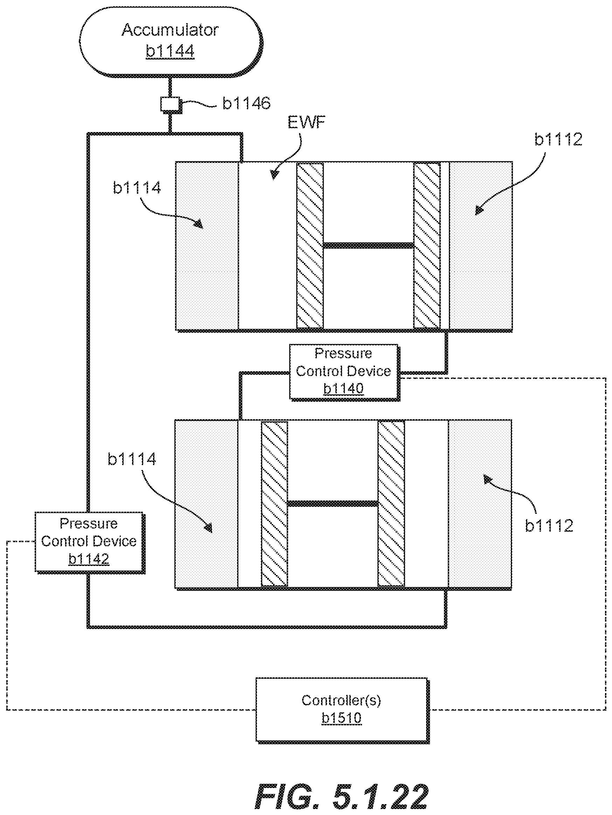

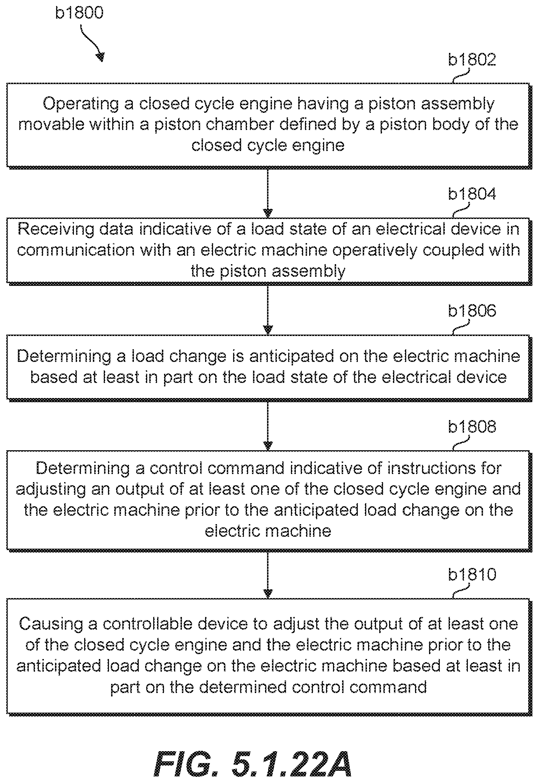

FIG. 5.1.22 provides a schematic view of two fluidly coupled piston bodies of the closed cycle engine of FIG. 5.1.2;

FIG. 5.1.22A is a flow diagram of a method for controlling a system according to an example aspect of the present disclosure;

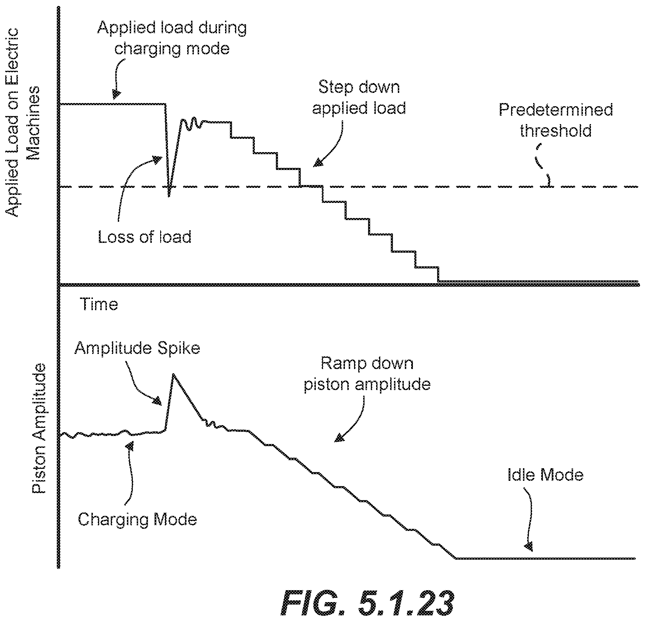

FIG. 5.1.23 provides a graph depicting an applied load on the electric machines as a function of time as well as piston speed as a function of time according to an example aspect of the present disclosure;

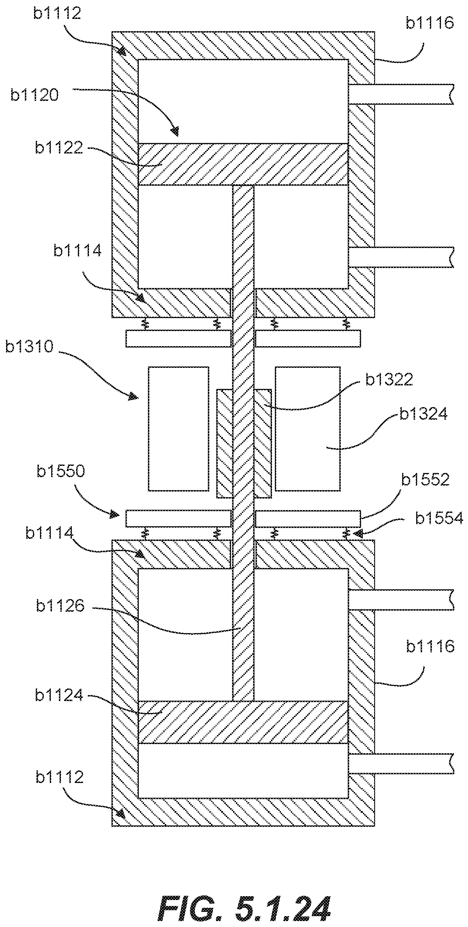

FIG. 5.1.24 provides a schematic view of an impact prevention system b1550 according to an example aspect of the present disclosure;

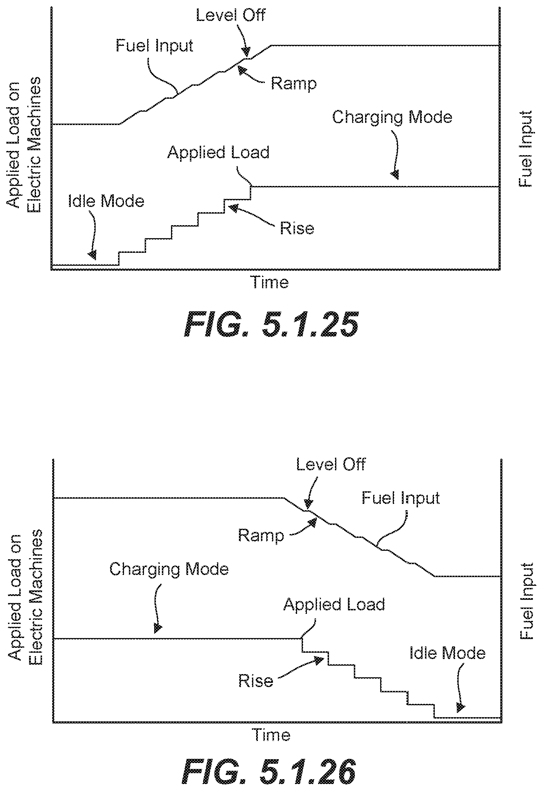

FIG. 5.1.25 provides a graph depicting an applied load on the electric machines as well as a fuel input as a function of time as the system transitions from an idle mode to a charging mode according to an example aspect of the present disclosure;

FIG. 5.1.26 provides a graph depicting an applied load on the electric machines as well as a fuel input as a function of time as the system transitions from a charging mode to an idle mode according to an example aspect of the present disclosure;

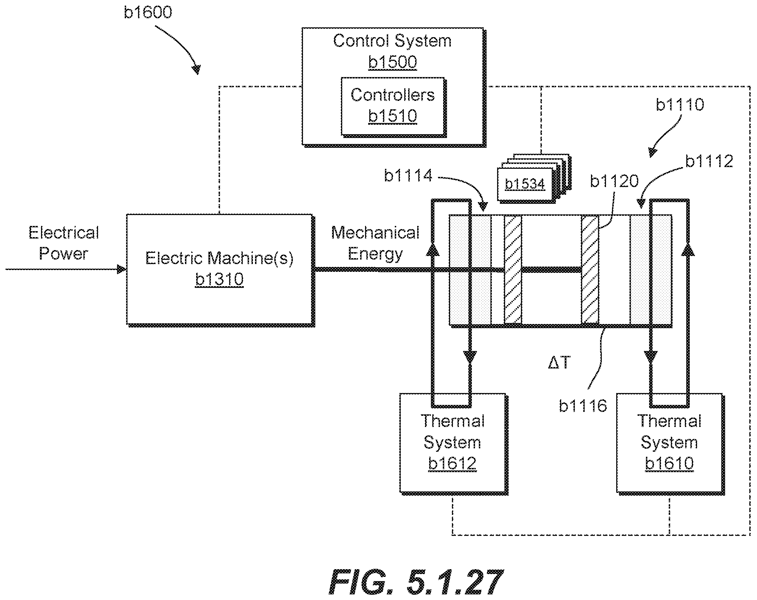

FIG. 5.1.27 provides a schematic block diagram of a heat pump system according to an aspect of the present disclosure; and

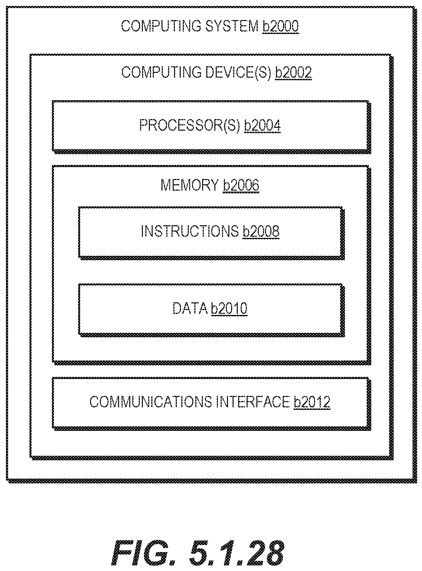

FIG. 5.1.28 provides an example computing system in accordance with an example embodiment of the present disclosure.

Repeat use of reference characters in the present specification and drawings is intended to represent the same or analogous features or elements of the present disclosure.

DETAILED DESCRIPTION

Reference now will be made in detail to embodiments of the disclosure, one or more examples of which are illustrated in the drawings. Each example is provided by way of explanation of the disclosure and not limitation. In fact, it will be apparent to those skilled in the art that various modifications and variations can be made in the present disclosure without departing from the scope of the disclosure. For instance, features illustrated or described as part of one embodiment can be used with another embodiment to yield a still further embodiment. In another instance, ranges, ratios, or limits associated herein may be altered to provide further embodiments, and all such embodiments are within the scope of the present disclosure. Unless otherwise specified, in various embodiments in which a unit is provided relative to a ratio, range, or limit, units may be altered, and/or subsequently, ranges, ratios, or limits associated thereto are within the scope of the present disclosure. Thus, it is intended that the present disclosure covers such modifications and variations as come within the scope of the appended claims.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows. The term "loop" can be any suitable fluid pathway along which fluid can flow and can be either open or closed, unless stated otherwise.

## CHAPTER 1 - GENERATION, CONVERSION, AND DISTRIBUTION SYSTEMS

### Chapter 1.1 - Power Generation, Engine and Energy Conversion Systems, and Energy Distribution Systems

Power generation and distribution systems are generally challenged to reduce production inefficiencies, transmission losses, and emissions (e.g., oxides of nitrogen, sulfur, or carbon) during and post energy production. For example, the U.S. Energy Information Administration (EIA) estimates that electricity transmission and distribution (T&D) losses average about 5% annually in the United States, with other estimates of line losses of 8% or higher. With average power plant efficiencies in the United States of about 30% to 40%, overall electrical efficiency at the end user (e.g., residences, businesses, etc.) is approximately 25% to 35%. Local, distributed, or on-demand power generation may not require access to T&D networks or grids, such as to result in an at least 5% improvement in efficiency, in addition to reducing emission and adverse environmental impacts.

In the United States, power generation may account for approximately one-third of national greenhouse gas emissions. Transportation may further account for another approximately one-third of national greenhouse gas emissions, about 85% of which may be from ground transportation vehicles (e.g., cars, trucks, buses, etc.). Known systems for reducing emissions include chemical or catalytic reduction after-treatment. However, such systems may be expensive to acquire and maintain, complex, or heavy, thereby reducing overall system efficiency. Additionally, such systems may be difficult to regulate, such that emissions reduction benefits may be lost after initial acquisition. Furthermore, although known systems have resulted in reducing emissions of high reactive gases such as unburned hydrocarbons, volatile organic compounds, or oxides of sulfur or nitrogen, emissions of greenhouse gases such as carbon dioxide may generally correspond or increase with power generation and consumption.

Power generation and distribution systems may turn to renewable energy sources such as solar, wind, or tidal energy to reduce emissions. However, renewable energy sources are often periodic or unpredictable, such as depicted in FIG. 1.1.1 and FIG. 1.1.2. For example, referring to FIGS. 1.1.1 - FIG. 1.1.2, available sunlight for solar power generation is dependent on the time of day and weather. As another example, wind power generation is dependent on weather patterns and may be both unpredictable and irregular. As still another example, tidal power generation is dependent on currents and lunar phases. Additionally, renewable energy sources are difficult to incorporate to transportation systems due to size, scale, and desired power output and density.

Historically, peak power demand occurs in the mid-afternoon, such as due to high industrial usage. In contrast, power usage is historically lower during the overnight hours when residential and industrial usage is both relatively low. However, overnight power demand is expected to increase with increased electrification, such as with increased usage of electric vehicles. Additionally, daytime power demand may further increase, further increasing peak power demands. For example, full charging of electric vehicles may take 4 to 8 hours and may generally occur overnight when power usage is historically low. Additionally, or alternatively, electric vehicle charging may occur during the workday, such as after a morning commute and during business hours, which may further increase industrial power usage. Generally, current power generation and distribution systems are inflexible relative to changes in usage and demand throughout a day, such as depicted in regard to FIG. 1.1.1 - FIG. 1.1.2. Additionally, such inflexibility may be exasperated by periodic, irregular, or unpredictable power generation from renewable energy sources.

In addition, or alternatively, power generation and distribution infrastructure is costly and renders large geographic areas vulnerable to power outages based on adverse weather, natural or man-made disasters, equipment malfunctions and failures, or maintenance activities. Initial and on-going costs, such as maintenance and repair, result in barriers to further development of access to electricity in developing countries and rural areas. Expanding access to electricity may be hindered by relatively high costs to establish generation and distribution infrastructure, relatively high operational costs, and an ability for governments, corporations, or consumers to pay or invest in power generation and distribution. Such costs may also pose barriers to further maintenance and development in developed countries, as older infrastructure and natural or man-made disasters may cause maintenance or improvement to be cost-prohibitive. For example, in the United States, power lines and transformers are approximately 30 years old on average. Replacement costs for such equipment have been estimated at over $1 trillion dollars.

Such issues and barriers from power generation and distribution systems may further pose barriers to developing or expanding access to clean water, water desalination, and food security. Additionally, or alternatively, smaller scale or portable power generation systems that may overcome distribution obstacles may nonetheless be challenged to provide a necessary power density and output. Such limitations in power density and output may generally result in an inability to apply smaller scale or portable power generation systems to rural areas or developing nations. Furthermore, as clean water treatment and desalination are generally energy intensive, smaller scale or portable power generation system may generally provide inadequate power density and output for providing water to rural or less population-dense areas.

As such, there is a need for power generation systems that provide improved efficiency and reduced emissions over known power generation systems that may further be sized or scaled to provide improved power distribution without adversely affecting efficiency and emissions. The need for improved power generation systems is further, or alternatively, such that issues regarding power distribution, power generation versus changing peak power demands, emissions, barriers to infrastructure development, and challenges and limitations posed by vehicle electrification may each be addressed, improved upon, or alleviated.

Small-scale or portable power generation systems are desirable for applications including space vehicles and systems, automotive drivetrain and aerospace propulsion electrification, direct cooling sources, and portable or distributed power generation such as to address issues regarding power generation efficiency, density, and output. However, there is a need for improved thermal efficiency, electrical conversion efficiency, or both, for such systems.

Heat engines and other devices for converting thermal energy into useful work are generally inefficient. Carnot's theorem states that the maximum theoretical efficiency ($\eta_{Carnot}$) for an ideal, reversible heat engine is given by:

$$\eta_{Carnot} = 1 - (\frac{T_{Hot,engine}}{T_{Cold\ ambient}})$$

where $T_{hot,engine}$ is the absolute temperature (e.g. in Rankine or Kelvin) at which heat enters the engine and $T_{cold,ambient}$ is the absolute temperature of the environment into which the engine exhausts its waste heat. Carnot efficiencies for terrestrial applications over 90% and Carnot efficiencies for space applications of over 99% are theoretically possible based at least on known fuel sources. However, in practice, $T_{Hot,engine}$ is limited by the maximum operating temperature of the materials in the engine and $T_{Cold,ambient}$ is limited by an available heat sink available (e.g., the atmosphere at ambient temperature, the temperature of a body of water, etc.). Thus, heat engines may generally operate with a temperature ratio ($T_{Hot,engine}/T_{Cold,ambient}$) between 2 and 4 and have actual Carnot efficiencies between 50% and 70% (Figure 1.1.3). In contrast, open cycle internal combustion engines, such as those that use the Otto cycle, are generally limited to a maximum theoretical efficiency between 60% and 70% based at least on a fuel type or compression ratio at the open cycle engine. Closed cycle heat engines operate through an exchange of thermal energy to and from relatively hot and cold volumes of a piston engine. Closed cycle heat engines, such as Stirling arrangements, or variations thereof, such as Franchot or Vuilleimier arrangements, generally have a maximum theoretical efficiency that is the Carnot efficiency. As such, closed cycle engines such as Stirling arrangements are considered to have a greater potential as high efficiency engines based at least on the difference in maximum theoretical efficiency and actual efficiency.

Achieving maximum theoretical efficiency of an engine is challenged or limited based at least on inefficient combustion, inefficient heat exchange, heat losses to a surrounding environment, non-ideal behavior of one or more working fluids, friction losses, pumping losses, or other inefficiencies and imperfections. Actual or real thermal efficiency $\eta_{th}$ of a heat engine is given by:

$$\eta_{th} = \frac{W_{out}}{Q_{in}} = \frac{Q_{in} - Q_{out}}{Q_{in}} = 1 - \frac{Q_{out}}{Q_{in}}$$

where $W_{out}$ is the net useful work done by the engine, $Q_{in}$ is the thermal energy received by the engine, and $Q_{out}$ is the thermal energy lost or rejected to the environment. Achievable thermal efficiency tends to increase with power output. For example, motor vehicle applications are generally 20% to 35% thermally efficient, while large marine and stationary diesel systems can exceed 50% thermal efficiency (Figure 1.1.3). Stirling engines have demonstrated thermal efficiencies up to 38%.

The useful work generated by a heat engine can further be converted into electrical energy. The electrical efficiency ($\eta_{El}$) can be calculated in the same manner as the thermal efficiency:

$$\eta_{El} = \frac{E_{out}}{Q_{in}}$$

where $E_{out}$ is the net electrical energy output from an electric machine that is operatively coupled to the engine and $Q_{in}$ is the thermal energy received by the engine. $E_{out}$ may be calculated by subtracting any electricity required to operate the power generation system from the gross power generated by the system. If combustion is the source of heating working fluid for the engine, the electrical efficiency may be calculated using a lower heating value (LHV) of the fuel. Gas turbine power plants have demonstrated greater than 41% LHV electrical efficiency. Stirling engines have demonstrated LHV electrical efficiencies between 10% and 30%.

Waste heat, or an amount of heat from a heat engine that is not converted into useful work, may be recoverable to provide additional benefit before being exhausted. The amount and quality of the recoverable heat varies based on the cycle, the engine (Figure 1.1.5), and the operating conditions. High grade or otherwise high quality waste heat may be used in one or more additional heat engines or power generation cycles before being exhausted, such as in one or more bottoming cycles of a combined cycle power generation system. For example, the waste heat from a gas turbine power generation system may be used to boil water for a bottoming steam power generation cycle. The electrical efficiency $\eta_{CC}$ of a combined cycle power generation system is given by:

$$\eta_{CC} = \frac{\sum(E_{out,1} + E_{out,2} + \cdots E_{out,n})}{\sum Q_{in}}$$

where $E_{out,1}$ is the net electricity produced by a first power generation cycle, $E_{out,2}$ is the net electricity produced by a second power generation cycle, $E_{out,n}$ is the net electricity produced by an $n^{th}$ (final) power generation cycle, and $\Sigma\, Q_{in}$ is the net thermal energy received by the system. Generally, the net thermal energy received by the system may be nominally $Q_{in}$ of the topping cycle, or additionally or alternatively inclusive of any supplementary thermal input (e.g. supplementary firings, if applicable). Stated another way, $\eta_{CC}$ is the total net electricity generated by the entire combined cycle power generation system divided by the total energy input into the combined cycle system. Some combined cycle power generation systems may include an efficiency (i.e., LHV electrical efficiency) of up to approximately 62% for a gas turbine bottomed by a steam cycle.

Waste heat may also be used to produce hot water, process steam, or other useful products that would otherwise require additional energy input to produce in a combined heat and power (CHP) system or cogeneration system, after a combined cycle, or in lieu thereof. The overall electrical efficiency $\eta_{CHP}$ of a combined heat and power system is given by:

$$\eta_{CHP} = \frac{E_{out} + \sum Q_{th}}{Q_{in}}$$

where $E_{out}$ is the net useful power output of the system, $\Sigma\, Q_{th}$ is the sum of the net useful thermal outputs from the system, and $Q_{in}$ is the thermal energy received by the system. CHP systems may have demonstrated total efficiencies between 55% and 85%. Stirling engines may have total efficiencies of 88% and higher. However, higher CHP system efficiencies can come at the cost of lower thermal efficiency, lower electrical efficiency, or both. For example, $\eta_{CHP}$ can maximized by maximizing $\Sigma\, Q_{th}$, which may be achieved at the cost of electricity generation.

Known closed cycle engines, such as Stirling arrangements, are challenged to produce increasing levels of power output and power density, and generally compromise improved efficiency or power output with larger sizes and scaling. Such larger sizes or scales can negate other desirable qualities of the engine, such as relatively small-scale or portability. Stirling engines tend to be small, with power generation of 1 - 5 kW for domestic use, up to 25 kW for commercial use, or up to 75 kW for military use. At least one 75 kW engine Stirling engine is a four shaft kinematic Stirling engine for use in submarines. It is nominally 1.1 m in diameter, 1.75 m long, including the generator and control system but not including the fuel or oxidizer sources, with an energy density of 175 kWh/ton.

Stirling engines may generally include two types: kinematic or free piston. Kinematic Stirling engines use mechanically-connected piston assemblies to transmit and convert linear motion of the pistons to a rotary motion for an output shaft. Although such systems may address issues regarding power transmission and stability of the engine, mechanically-connected piston assemblies introduce relatively large power losses via the mechanical members. Additionally, or alternatively, the relatively fixed relationship of mechanically-connected piston assemblies limits the mechanical stroke of the piston assembly. As such, the efficiency of mechanically-connected multi- piston assemblies in a closed cycle engine is decreased in addition to mechanical losses (e.g., friction, leakage, inertia, etc.).

Single-piston free piston closed cycle engine arrangements generally exchange improved thermal efficiency for lower total power generation and density. As such, single-piston free piston closed cycle engine arrangements are not generally suited for higher power output applications.

Multi-piston free piston closed cycle engine arrangements may provide thermal efficiencies of single-piston free piston arrangements and further increase total power generation. However, multi-piston free piston arrangements generally differ from single-piston arrangements and mechanically-connected multi-piston arrangements in that the cycle or motion of a multi-piston free piston arrangement is generally determined by thermo-mechanical interactions of the entire system including the free pistons, the thermal source(s), and a power extraction apparatus. The thermo-mechanical interactions may further include mechanical losses and their effect on balance of the entire system.

For example, multi-piston free-piston closed cycle engines are challenged to respond to time lags. As another example, if one piston assembly drifts from an intended position a subsequent oscillation can become unbalanced. An unbalanced arrangement may lead to undesired vibrations, crashing of the pistons to end walls, or other mechanical losses that may further reduce power output, induce wear and deterioration, or otherwise reduce efficient, stable, or effective use of a multi-piston free piston engine.

As such, there is a need for improved closed cycle engines such as Stirling engines that provide improved power generation efficiency and output. Additionally, there is a need for such improved closed cycle engines that may further retain or improve power density, such as to provide relatively small-scale or portability such as to provide improved application to power generation and distribution systems.

**Chapter 1.2 - System for Energy Conversion**

Referring now to FIG. 1.2.1, an exemplary schematic block diagram depicting a system for energy conversion (hereinafter, "system A10") is provided. Various embodiments of the system A10 provided herein include systems for power generation, a heat recovery system, a heat pump or cryogenic cooler, a system including and/or acting as a bottoming cycle and/or a topping cycle, or other system for producing useful work or energy, or combinations thereof. Referring additionally for FIG. 1.3.1, various embodiments of the system A10 include a closed cycle engine apparatus (hereinafter, "engine A100", apparatus "A100", or "engine assembly C900", or otherwise denoted herein) operably coupled to a load device c092. The engine A100 contains a substantially fixed mass of an engine working fluid to which and from which thermal energy is exchanged at a respective cold side heat exchanger A42 and a hot side heat exchanger C108. In one embodiment, the engine working fluid is helium. In other embodiments, the engine working fluid may include air, nitrogen, hydrogen, helium, or any appropriate compressible fluid, or combinations thereof. In still various embodiments, any suitable engine working fluid may be utilized in accordance with the present disclosure. In exemplary embodiments, the engine working fluid may include a gas, such as an inert gas. For example, a noble gas, such as helium may be utilized as the engine working fluid. Exemplary working fluids preferably are inert, such that they generally do not participate in chemical reactions such as oxidation within the environment of the engine. Exemplary noble gasses include monoatomic gases such as helium, neon, argon, krypton, or xenon, as well as combinations of these. In some embodiments, the engine working fluid may include air, oxygen, nitrogen, or carbon dioxide, as well as combinations of these. In still various embodiments, the engine working fluid may be liquid fluids of one or more elements described herein, or combinations thereof. It should further be appreciated that various embodiments of the engine working fluid may include particles or other substances as appropriate for the engine working fluid.

In various embodiments, the load device C092 is a mechanical work device or an electric machine. In one embodiment, the load device C092 is a pump, compressor, or other work device. In another embodiment, the load device C092 as an electric machine is configured as a generator producing electric energy from movement of a piston assembly A1010 at the engine. In still another embodiment, the electric machine is configured as a motor providing motive force to move or actuate the piston assembly A1010, such as to provide initial movement (e.g., a starter motor). In still various embodiments, the electric machine defines a motor and generator or other electric machine apparatus such as described further herein.

A heater body C100 is thermally coupled to the engine A100. The heater body C100 may generally define any apparatus for producing or otherwise providing a heating working fluid such as to provide thermal energy to the engine working fluid. Various embodiments of the heater body C100 are further provided herein. Exemplary heater bodies C100 may include, but are not limited to, a combustion or detonation assembly, an electric heater, a nuclear energy source, a renewable energy source such as solar power, a fuel cell, a heat recovery system, or as a bottoming cycle to another system. Exemplary heater bodies C100 at which a heat recovery system may be defined include, but are not limited to, industrial waste heat generally, gas or steam turbine waste heat, nuclear waste heat, geothermal energy, decomposition of agricultural or animal waste, molten earth or metal or steel mill gases, industrial drying systems generally or kilns, or fuel cells. The exemplary heater body C100 providing thermal energy to the engine working fluid may include all or part of a combined heat and power cycle, or cogeneration system, or power generation system generally.

In still various embodiments, the heater body C100 is configured to provide thermal energy to the engine working fluid via a heating working fluid. The heating working fluid may be based, at least in part, on heat and liquid, gaseous, or other fluid provided by one or more fuel sources and oxidizer sources providing a fuel and oxidizer. In various embodiments, the fuel includes, but is not limited to, hydrocarbons and hydrocarbon mixtures generally, "wet" gases including a portion of liquid (e.g., humid gas saturated with liquid vapor, multiphase flow with approximately 10% liquid and approximately 90% gas, natural gas mixed with oil, or other liquid and gas combinations, etc.), petroleum or oil (e.g., Arabian Extra Light Crude Oil, Arabian Super Light, Light Crude Oil, Medium Crude Oil, Heavy Crude Oil, Heavy Fuel Oil, etc.), natural gas (e.g., including sour gas), biodiesel condensate or natural gas liquids (e.g., including liquid natural gas (LNG)), dimethyl ether (DME), distillate oil #2 (DO2), ethane ($C_2$), methane, high $H_2$ fuels, fuels including hydrogen blends (e.g., propane, butane, liquefied petroleum gas, naphtha, etc.), diesel, kerosene (e.g., jet fuel, such as, but not limited to, Jet A, Jet A-1, JP1, etc.), alcohols (e.g., methanol, ethanol, etc.), synthesis gas, coke over gas, landfill gases, etc., or combinations thereof.

In various embodiments, the system A10 includes a working fluid body C108, such as further described herein. In one embodiment, the working fluid body C108 defines a hot side heat exchanger A160, such as further described herein, from which thermal energy is output to the engine working fluid at an expansion chamber A221 of the engine. The working fluid body C108 is positioned at the expansion chamber A221 of the engine in thermal communication with the heater body C100. In other embodiments, the working fluid body C108 may be separate from the heater body C100, such that the heating working fluid is provided in thermal communication, or additionally, in fluid communication with the working fluid body C108. In particular embodiments, the working fluid body C108 is positioned in direct thermal communication with the heater body C100 and the expansion chamber A221 of the engine A100 such as to receive thermal energy from the heater body C100 and provide thermal energy to the engine working fluid within the engine.

In still various embodiments, the heater body C100 may include a single thermal energy output source to a single expansion chamber A221 of the engine. As such, the system A10 may include a plurality of heater assemblies each providing thermal energy to the engine working fluid at each expansion chamber A221. In other embodiments, such as depicted in regard to FIG. 1.3.1, the heater body C100 may provide thermal energy to a plurality of expansion chambers A221 of the engine. In still other embodiments, such as depicted in regard to FIG. 8, the heater body includes a single thermal energy output source to all expansion chambers A221 of the engine.

The system A10 further includes a chiller assembly, such as chiller assembly A40 further described herein. The chiller assembly A40 is configured to receive and displace thermal energy from a compression chamber A222 of the engine. The system A10 includes a cold side heat exchanger A42 thermally coupled to the compression chamber A222 of the closed cycle engine and the chiller assembly. In one embodiment, the cold side heat exchanger A42 and the piston body C700 defining the compression chamber A222 of the engine are together defined as an integral, unitary structure, such as further shown and described in regard to FIGS. 1.4.1-1.4.7. In still various embodiments, the cold side heat exchanger A42, at least a portion of the piston body C700 defining the compression chamber A222, and at least a portion of the chiller assembly together define an integral, unitary structure.

In various embodiments, the chiller assembly A40 is a bottoming cycle to the engine A100. As such, the chiller assembly A40 is configured to receive thermal energy from the engine A100. The thermal energy received at the chiller assembly A40, such as through a cold side heat exchanger A42, or cold side heat exchanger A170 further herein, from the engine A100 is added to a chiller working fluid at the chiller assembly A40. In various embodiments, the chiller assembly A40 defines a Rankine cycle system through which the chiller working fluid flows in closed loop arrangement with a compressor. In some embodiments, the chiller working fluid is further in closed loop arrangement with an expander. In still various embodiments, the system A10 includes a heat exchanger A88 (FIG. 1.3.2). In various embodiments, the heat exchanger A188 may include a condenser or radiator. The cold side heat exchanger A40 is positioned downstream of the compressor and upstream of the expander and in thermal communication with a compression chamber A222 of the closed cycle engine, such as further depicted and described in regard to FIG. 1.3.1 - FIG. 1.3.2. In various embodiments, the cold side heat exchanger A42 may generally define an evaporator receiving thermal energy from the engine A40.

Referring still to FIG. 1.2.1, in some embodiments, the heat exchanger A188 is positioned downstream of the expander and upstream of the compressor and in thermal communication with a cooling working fluid. In the schematic block diagram provided in FIG. 1.2.1, the cooling working fluid is an air source. However, in various embodiments, the cooling fluid may define any suitable fluid in thermal communication with the heat exchanger. The heat exchanger may further define a radiator configured to emit or dispense thermal energy from the chiller assembly A40. A flow of cooling working fluid from a cooling fluid source is provided in thermal communication with the heat exchanger to further aid heat transfer from the chiller working fluid within the chiller assembly A40 to the cooling working fluid.

As further described herein, in various embodiments the chiller assembly A40 may include a substantially constant density heat exchanger. The constant density heat exchanger generally includes a chamber including an inlet and an outlet each configured to contain or trap a portion of the chiller working fluid for a period of time as heat from the closed cycle engine is transferred to the cold side heat exchanger A42. In various embodiments, the chamber may define a linear or rotary chamber at which the inlet and the outlet are periodically opened and closed via valves or ports such as to trap the chiller working fluid within the chamber for the desired amount of time. In still various embodiments, the rate at which the inlet and the outlet of the chamber defining the constant density heat exchanger is a function at least of velocity of a particle of fluid trapped within the chamber between the inlet and the outlet. The chiller assembly A40 including the constant density heat exchanger may provide efficiencies, or efficiency increases, performances, power densities, etc. at the system A10 such as further described herein.

It should be appreciated that in other embodiments, the chiller assembly A40 of the system A10 may include a thermal energy sink generally. For example, the chiller assembly A40 may include a body of water, the vacuum of space, ambient air, liquid metal, inert gas, etc. In still various embodiments, the chiller working fluid at the chiller assembly A40 may include, but is not limited to, compressed air, water or water-based solutions, oil or oil-based solutions, or refrigerants, including, but not limited to, class 1, class 2, or class 3 refrigerants. Further exemplary refrigerants may include, but are not limited to, a supercritical fluid including, but not limited to, carbon dioxide, water, methane, ethane, propane, ethylene, propylene, methanol, ethanol, acetone, or nitrous oxide, or combinations thereof. Still exemplary refrigerants may include, but are not limited to, halon, perchloroolefin, perchlorocarbon, perfluoroolefin, perfluororcarbon, hydroolefin, hydrocarbon, hydrochloroolefin, hydrochlorocarbon, hydrofluoroolefin, hydrofluorocarbon, hydrochloroolefin, hydrochlorofluorocarbon, chlorofluoroolefin, or chlorofluorocarbon type refrigerants, or combinations thereof. Still further exemplary embodiments of refrigerant may include, but are not limited to, methylamine, ethylamine, hydrogen, helium, ammonia, water, neon, nitrogen, air, oxygen, argon, sulfur dioxide, carbon dioxide, nitrous oxide, or krypton, or combinations thereof.

It should be appreciated that where combustible or flammable refrigerants are included for the chiller working fluid, various embodiments of the system A10 may beneficially couple the heater body C100, and/or the fuel source, and the chiller assembly A40 in fluid communication such that the combustible or flammable working fluid to which thermal energy is provided at the chiller assembly A40 may further be utilized as the fuel source for generating heating working fluid, and the thermal energy therewith, to output from the heater body C100 to the engine working fluid at the engine A100.

Various embodiments of the system A10 include control systems and methods of controlling various sub-systems disclosed herein, such as, but not limited to, the fuel source, the oxidizer source, the cooling fluid source, the heater body C100, the chiller assembly C40, the engine A100, and the load device C092, including any flow rates, pressures, temperatures, loads, discharges, frequencies, amplitudes, or other suitable control properties associated with the system A10. In one aspect, a control system for the system A10 defining a power generation system is provided. The power generation system includes one or more closed cycle engines (such as engine A100), one or more load devices defining electric machines (such as load device C092) operatively coupled to the engine, and one or more energy storage devices in communication with the electric machines.

The control system can control the closed cycle engine and its associated balance of plant to generate a temperature differential, such as a temperature differential at the engine working fluid relative to the heating working fluid and the chiller working fluid. Thus, the engine defines a hot side, such as at the expansion chamber A221, and a cold side, such as at the compression chamber A222. The temperature differential causes free piston assemblies A1010 to move within their respective piston chambers defined at respective piston bodies C700. The movement of the pistons A1011 causes the electric machines to generate electrical power. The generated electrical power can be provided to the energy storage devices for charging thereof. The control system monitors one or more operating parameters associated with the closed cycle engine, such as piston movement (e.g., amplitude and position), as well as one or more operating parameters associated with the electric machine, such as voltage or electric current. Based on such parameters, the control system generates control commands that are provided to one or more controllable devices of the system A10. The controllable devices execute control actions in accordance with the control commands. Accordingly, the desired output of the system A10 can be achieved.

Furthermore, the control system can monitor and anticipate load changes on the electric machines and can control the engine A100 to anticipate such load changes to better maintain steady state operation despite dynamic and sometimes significant electrical load changes on the electric machines. A method of controlling the power generation system is also provided. In another aspect, a control system for a heat pump system is provided. The heat pump system includes one or more of the closed cycle engines described herein. A method of controlling the heat pump system is also provided. The power generation and heat pump systems as well as control methods therefore are provided in detail herein.

**Chapter 1.3 - Energy Conversion Apparatus**

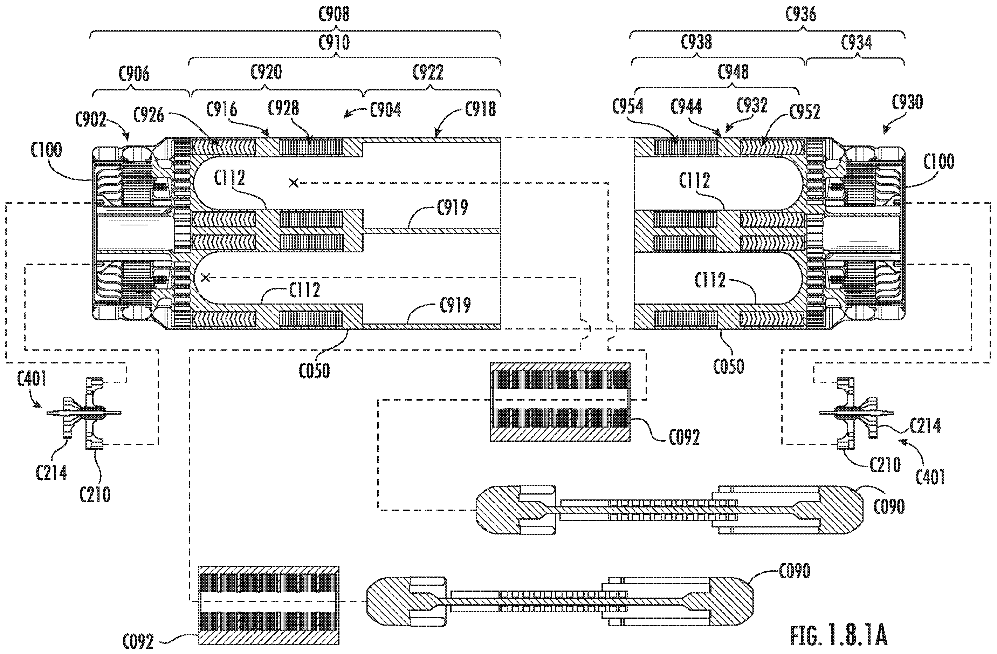

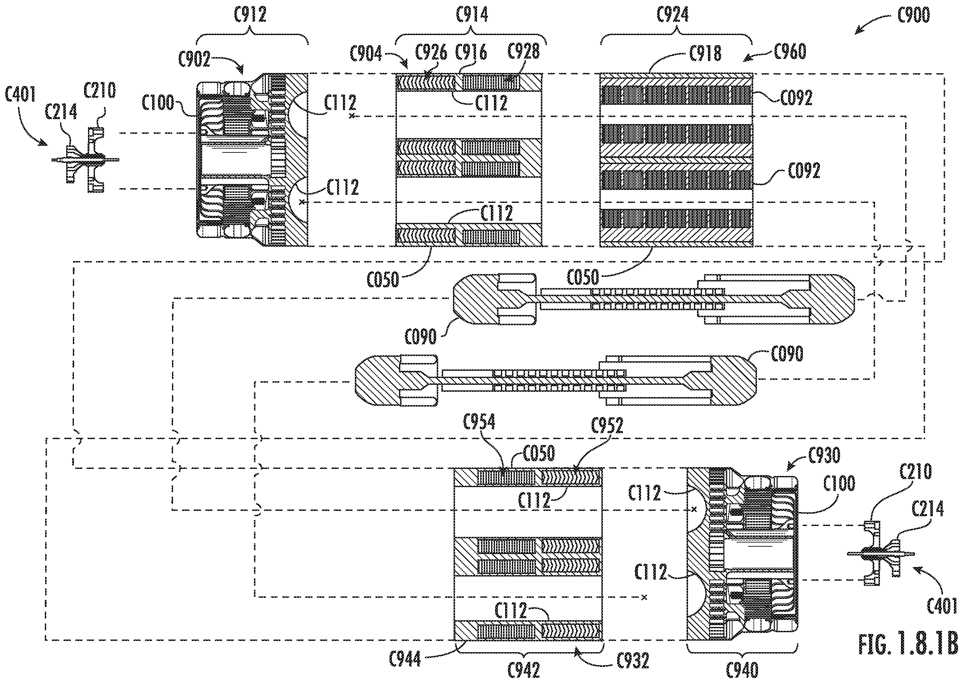

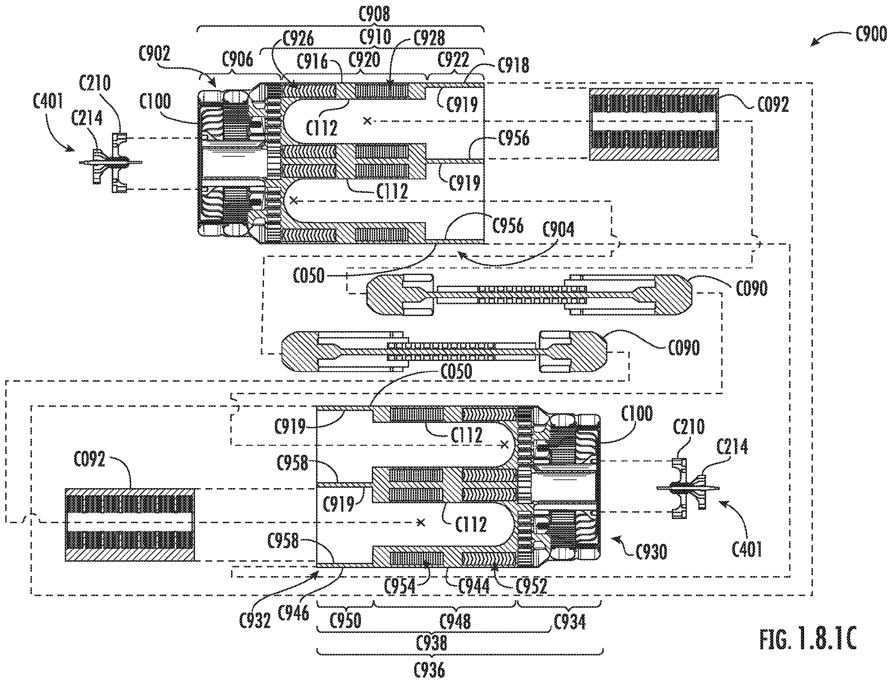

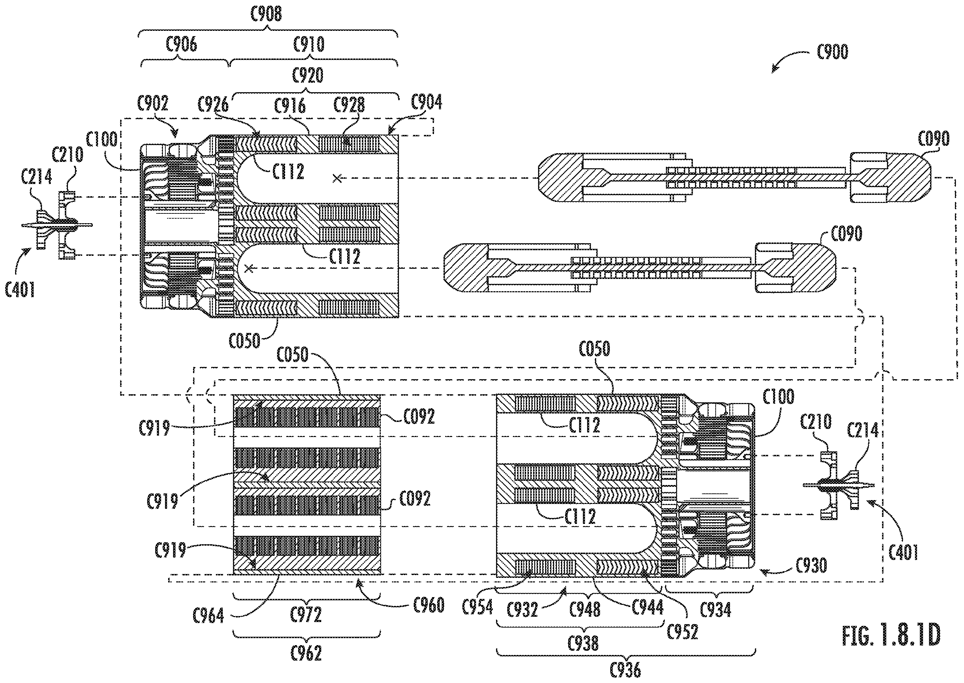

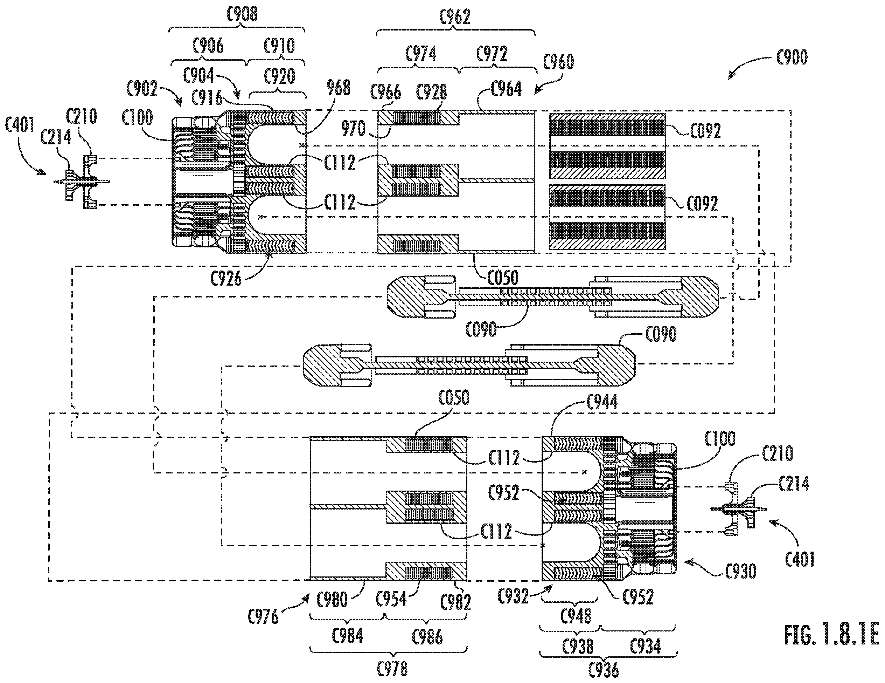

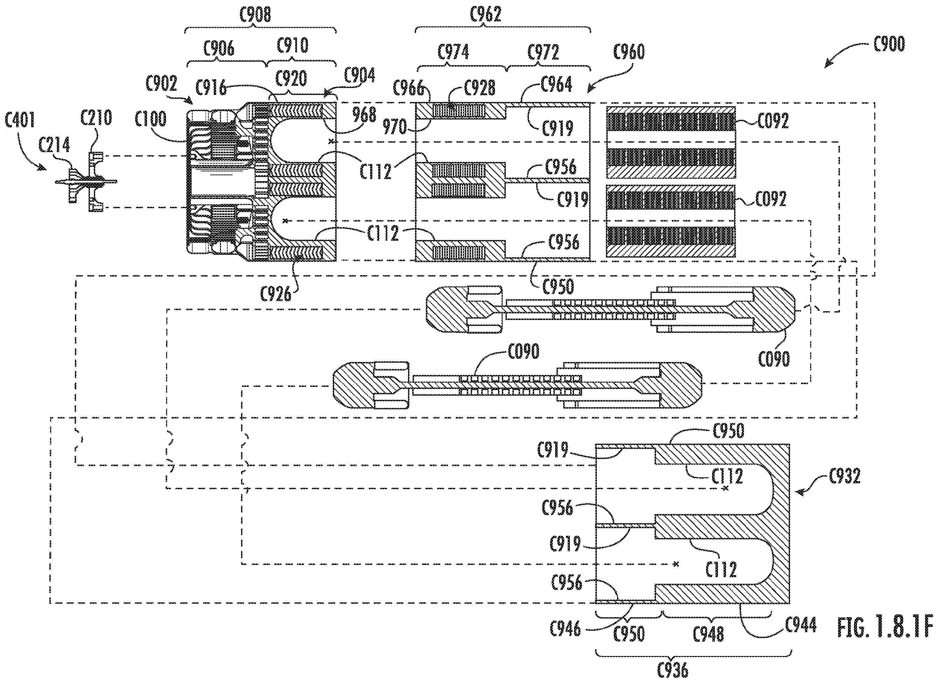

Referring now to FIG. 1.3.1 - FIG. 1.3.2, exemplary embodiments of the system A10 are further provided. FIG. 1.3.1 is an exemplary cross sectional view of the system A10 including the heater body C100 and the chiller assembly A40 each in thermal communication with the engine A100, or particularly the engine working fluid within the engine A100, such as shown and described according to the schematic block diagram of FIG. 1.2.1. FIG. 1.3.2 is an exemplary cutaway perspective view of a portion of the engine A100. The system A10 includes a closed cycle engine A100 including a piston assembly A1010 positioned within a volume or piston chamber C112 (FIGS. 1.8.1A - FIG. 1.8.1F) defined by a wall defining a piston body C700. The volume within the piston body C700 is separated into a first chamber, or hot chamber, or expansion chamber A221 and a second chamber, or cold chamber (relative to the hot chamber), or compression chamber A222 by a piston A1011 of the piston assembly A1010. The expansion chamber A221 is positioned thermally proximal to the heater body C100 relative to the compression chamber A222 thermally distal to the heater body C100. The compression chamber A222 is positioned thermally proximal to the chiller assembly A40 relative to the expansion chamber A221 thermally distal to the chiller assembly A40.

In various embodiments, the piston assembly A1010 defines a double-ended piston assembly A1010 in which a pair of pistons A1011 is each coupled to a connection member A1030. The connection member A1030 may generally define a rigid shaft or rod extended along a direction of motion of the piston assembly A1010. In other embodiments, the connection members A1030 includes one or more springs or spring assemblies, such as further provided herein, providing flexible or non-rigid movement of the connection member A1030. In still other embodiments, the connection member A1030 may further define substantially U- or V- connections between the pair of pistons A1011.

Each piston A1011 is positioned within the piston body C700 such as to define the expansion chamber A221 and the compression chamber A222 within the volume of the piston body C700. The load device c092 is operably coupled to the piston assembly A1010 such as to extract energy therefrom, provide energy thereto, or both. The load device c092 defining an electric machine is in magnetic communication with the closed cycle engine via the connection member A1030. In various embodiments, the piston assembly A1010 includes a dynamic member A181 positioned in operable communication with a stator assembly A182 of the electric machine. The stator assembly A182 may generally include a plurality of windings wrapped circumferentially relative to the piston assembly A1010 and extended along a lateral direction L. In one embodiment, such as depicted in regard to FIG. 1.3.1, the dynamic member A181 is connected to the connection member A1030. The electric machine may further be positioned between the pair of pistons A1011 of each piston assembly A1010. Dynamic motion of the piston assembly A1010 generates electricity at the electric machine. For example, linear motion of the dynamic member A181 between each pair of chambers defined by each piston A1011 of the piston assembly A1010 generates electricity via the magnetic communication with the stator assembly A182 surrounding the dynamic member A181.

Referring to FIG. 1.3.1 - FIG. 1.3.2, in various embodiments, the working fluid body C108 may further define at least a portion of the expansion chamber A221. In one embodiment, such as further described herein, the working fluid body C108 defines a unitary or monolithic structure with at least a portion of the piston body C700, such as to define at least a portion of the expansion chamber A221. In some embodiments, the heater body C100 further defines at least a portion of the working fluid body C108, such as to define a unitary or monolithic structure with the working fluid body C108, such as further described herein. In one embodiment, such as further shown and described in regard to FIG. 1.5.1, the system A10 includes the hot side heat exchanger or working fluid body C108 positioned between the heater body C100 and the expansion chamber A221 of the piston body C700. In various embodiments, such as further shown and described in regard to FIG. 1.5.1, the working fluid body C108 includes a plurality of heater conduits or working fluid pathways C110 extended from the expansion chamber A221.

The engine A100 defines an outer end A103 and an inner end A104 each relative to a lateral direction L. The outer ends A103 define laterally distal ends of the engine A100 and the inner ends 104 define laterally inward or central positions of the engine A100. In one embodiment, such as depicted in regard to FIG. 1.3.1 - FIG. 1.3.2, the heater body C100 is positioned at outer ends A103 of the system A10. The piston body C700 includes a dome structure A26 at the expansion chamber A221. The expansion chamber dome structure A26 s provides reduced surface area heat losses across the outer end A103 of the expansion chamber A221. In various embodiments, the pistons A1011 of the piston assembly A1010 further include domed pistons A1011 corresponding to the expansion chamber A221 dome. The dome structure A26, the domed piston A1011, or both may provide higher compressions ratios at the chambers A221, A222, such as to improve power density and output.

The chiller assembly A40 is positioned in thermal communication with each compression chamber A222. Referring to FIG. 1.3.1 - FIG. 1.3.2, the chiller assembly A40 is positioned inward along the lateral direction L relative to the heater body C100. In one embodiment, the chiller assembly A40 is positioned laterally between the heater body C100 and the load device c092 along the lateral direction L. The chiller assembly A40 provides the chiller working fluid in thermal communication with the engine working fluid at the cold side heat exchanger A42 and/or compression chamber A222. In various embodiments, the piston body C700 defines the cold side heat exchanger A42 between an inner volume wall A46 and an outer volume wall A48 surrounding at least the compression chamber A222 portion of the piston body C700.

In various embodiments, such as depicted in regard to FIG. 1.3.1 - FIG. 1.3.2, the load device c092 is positioned at the inner end A104 of the system A10 between laterally opposing pistons A1011. The load device c092 may further include a machine body c918 positioned laterally between the piston bodies C700. The machine body c918 surrounds and houses the stator assembly A182 of the load device c092 defining the electric machine. The machine body c918 further surrounds the dynamic member A181 of the electric machine attached to the connection member A1030 of the piston assembly A1010. In various embodiments, such as depicted in regard to FIG. 1.3.1 - FIG. 1.3.2, the machine body c918 further provides an inner end wall A50 at the compression chamber A222 laterally distal relative to the expansion chamber A221 dome.

**Chapter 1.4 - Cold Side Heat Exchanger, Piston Body, and Chiller Assembly**

Referring now to FIG. 1.4.1 - FIG. 1.4.7, exemplary embodiments of a portion of the piston body C700, cold side heat exchanger A42, and chiller assembly A40 are provided. In various embodiments, the system A10 includes the cold side heat exchanger A42 further including a plurality of chiller conduits A54 each defining chiller passages A56 providing fluid communication of the engine working fluid through the chiller conduit A54 and the compression chamber A222. The piston body C700 includes the outer volume wall A48 and an inner volume wall A46 each separated along a radial direction R perpendicular to the lateral direction L. Each volume wall A46, A48 may be defined at least partially circumferentially relative to a piston body centerline A12 extended through each piston body C700.

In the embodiments depicted in the perspective cutaway views of FIGS. 1.4.1-1.4.2, each volume wall A46, A48 is extended along the lateral direction L. The outer volume wall A48 surrounds the plurality of chiller conduits A54. The plurality of chiller conduits A54 is positioned between the outer volume wall A48 and the inner volume wall A46. The cold side heat exchanger A42 further includes a chamber wall A52 extended between the outer volume wall A48 and the inner volume wall A46. The chamber wall A52, the outer volume wall A48, and the inner volume wall A46 together define a chiller working fluid passage A66 surrounding the plurality of chiller conduits A54. The chiller conduits A54 define walled manifolds fluidly separating the chiller passage A56 (i.e., the passage through which the engine working fluid flows) and the chiller working fluid passage A66 (i.e., the passage through which the chiller working fluid flows). As such, the chiller working fluid flowing through the chiller working fluid passage A66 is fluidly separated from the engine working fluid flowing through the chiller conduits A54. Additionally, the chiller working fluid flowing through the chiller working fluid passage A66 is in thermal communication with the engine working fluid flowing through the chiller conduits A54.

In various embodiments, the chamber wall A52 is extended between the volume walls at an acute angle relative to the lateral direction L along which the piston assembly A1010 is extended. In one embodiment, the chamber wall A52 is extended between 0 degrees and approximately 90 degrees relative to the lateral direction L. In another embodiment, the chamber wall A52 is extended between 30 degrees and approximately 60 degrees relative to the lateral direction L along which the volume walls A46, A48 are substantially extended. In yet another embodiment, the chamber wall A52 is extended approximately 45 degrees relative to the lateral direction L. The chamber wall A52 is further connected to the outer volume wall A48, the inner volume wall A46, and the chiller conduits A54 such as to provide support to one another. The chamber walls A52 extended along an acute angle may further provide advantageous placement of the chiller conduits A54 within the chiller working fluid passage A66 such as to promote thermal energy transfer from the engine working fluid to the chiller working fluid.

During operation of the engine A100, a portion of the engine working fluid is admitted from the compression chamber A222 into the plurality of chiller conduits A54 via the plurality of chiller passage openings A58. The chiller passage opening A58 is defined at a fluid interface of the chiller conduit A54 to the compression chamber A222. In various embodiments, the chiller passage opening A58 provides direct fluid communication with the compression chamber A222. In one embodiment, a distance between the compression chamber A222 of the engine and the cold side heat exchanger A42, or particularly the plurality of chiller conduits A54 in direct thermal communication with the chiller working fluid, is substantially zero. Stated differently, the distance from the compression chamber A222 to the chiller conduits A54 in direct thermal communication with the chiller working fluid (i.e., the chiller working fluid is fluidly contacting an outer wall of the chiller conduits A54 such as to provide direct thermal communication to the engine working fluid within the chiller conduit A54) is the thickness of the chamber wall A52 through which the plurality of chiller passage openings A58 is defined. A distance between the compression chamber A222 and the cold side heat exchanger A42 beyond or greater than the thickness of the chamber wall A52 is approximately zero.

Still further, during operation of engine A100, the compression stroke of the piston assembly A1010 may generally push the engine working fluid through the chiller conduits A54. The engine working fluid within chiller passages A56 in the chiller conduits A54 is in thermal communication with the chiller working fluid surrounding the chiller conduits A54 within the chiller working fluid passage A66. The expansion stroke of the piston assembly A1010 may generally pull the engine working fluid through the chiller conduits A54 such as to egress the engine working fluid from the chiller conduits A54 through the chiller passage openings A58 and into the compression chamber A222. As further described herein, the chiller working fluid passage A66 is in fluid communication with a chiller working fluid outlet opening A78 and a chiller working fluid outlet opening A80 together providing flow of the chiller working fluid such as to remove and displace thermal energy from the engine working fluid at the chiller conduits A54. As still further described herein, the chiller working fluid passage A66, the chiller working fluid outlet opening A78, and/or the chiller working fluid output may form a circuit of the chiller assembly at which thermal energy from the engine working fluid at the compression chamber A222 is released from the closed cycle engine.

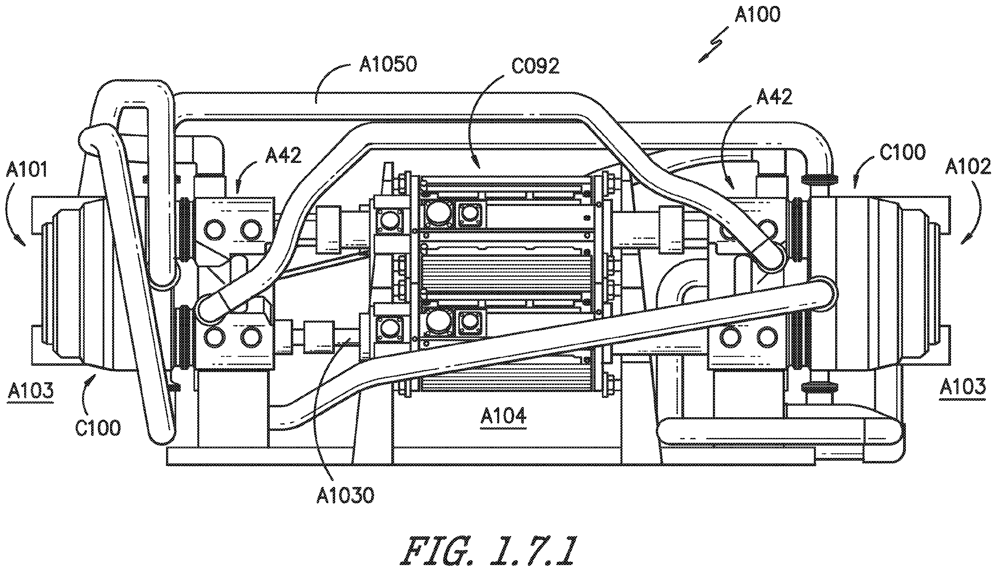

An outer chamber wall A53 and at least one chamber wall A52 may together define a chiller collection chamber A62 at which the engine working fluid may egress the plurality of chiller conduits A54 and collect into a volume. The outer chamber wall A53 defines a plurality of chiller collection chamber openings A60 each corresponding to a respective chiller conduit A54 and chiller passage opening A58. As further described herein in regard to FIGS. 1.4.5-1.4.7 and FIGS. 1.7.1 - FIG. 1.7.4, the chiller collection chamber A62 is further in fluid communication with a walled conduit A1050 such as to provide fluid communication between the compression chamber A222 of one piston assembly A1010 and the expansion chamber A221 of another piston assembly A1010.

In various embodiments, the compression chamber A222 of one piston assembly A1010 is fluidly connected to the expansion chamber A221 of another piston assembly A1010 via the walled conduit A1050 to provide a balanced pressure and/or balanced phase fluid coupling arrangement of the plurality of chambers A221, A222. An interconnected volume of chambers including the expansion chamber A221 of one piston assembly A1010 and the compression chamber A222 of another piston assembly A1010 defines a fluid interconnection of the chambers A221, A222 at different piston assemblies A1010. The fluid interconnection of chambers A221, A222 at different piston assemblies is such that if there is any fluid communication or fluid leakage path between the expansion chamber A221 and the compression chamber A222 of the same piston assembly A1010, a single fluid loop of connected chambers A221, A222 is provided that is separated from the chambers A221, A222 outside of the interconnected volume of chambers. In one embodiment, the balanced pressure arrangement, or additionally, the balance phase arrangement, of the piston assemblies A1010 is the fluid interconnection of the walled conduits A1050 and the chambers A221, A222 such that the chambers within the interconnected volume are substantially fluidly and/or pneumatically separated from those outside of the interconnected volume to provide a substantially equal and opposite force relative to one another to at least one piston assembly A1010 when the engine working fluid within the chambers A221, A222 is at a uniform temperature. Stated differently, when one piston assembly A1010 is articulated, such as along the lateral direction L, the fluid interconnection of chambers A221, A222 via the walled conduit A1050 provides a substantially net zero force at another piston assembly A1010 when the engine working fluid is at a substantially uniform temperature. As such, when one piston assembly A1010 is articulated under such conditions, adjacent or other piston assemblies A1010 remain stationary due at least to the net zero force at the piston assembly A1010. In various embodiments, the substantially uniform temperature is defined when no heat input or thermal energy is provided from the heater body C100 or working fluids body C108 to the engine working fluid.

Referring now to FIG. 1.4.3, a side cutaway view of an embodiment of a pair of piston bodies C700 is provided. The embodiment depicted in regard to FIG. 1.4.3 is configured substantially similarly as shown and described in regard to FIGS. 1.4.1-1.4.2. FIG. 1.4.3 further provides a partial cutaway view within the piston body C700 exposing a portion of the plurality of chiller conduits A54 between the volume walls A46, A48. In various embodiments, the chiller conduit A54 extends along the lateral direction L between the chiller passage opening A58 and the chiller collection chamber A62. In one embodiment, the chiller conduit A54 extends at least partially along an oblique or orthogonal direction relative to the lateral direction L. In various embodiments, the chiller conduit A54 extends substantially circumferentially around the piston body C700. The chiller conduit A54 may extend at least partially along the oblique or orthogonal direction relative to the lateral direction L such as to desirably increase a surface area of the chiller passage A56 defined within the chiller conduit A54 at which the engine working fluid is in thermal communication with the chiller working fluid in the cold side heat exchanger A42. The desirable increase in surface area of the chiller passage A56 defined by the chiller conduit A54 provides the surrounding chiller working fluid in the first and second chiller working fluid passage A68, A70 to be in thermal communication so as to improve the opportunity for the transfer of thermal energy from the engine working fluid to the chiller working fluid. In one embodiment, the surface area over which the engine working fluid is desirably in thermal communication with the surrounding chiller working fluid is desirably adjusted by adjusting the lateral, circumferential, or orthogonal extension of the chiller conduits A54 such as to adjust the heat exchanging surface area of the chiller passage A56. In one embodiment, the chiller conduit A54 may extend at least partially in a curved or circumferential or spiral direction, such as a helix, between the chiller passage opening A58 and the chiller collection chamber A62. In another embodiment, the chiller conduit A54 may extend in a zig-zag or serpentine pattern between the chiller passage opening A58 and the chiller collection chamber A62. However, it should be appreciated that other geometries may be defined such as to produce the desired heat exchanging surface area of the chiller conduit A54 relative to the chiller working fluid passage A66.

It should be appreciated that in various embodiments the surface area of the chiller passage A56 defined within each chiller conduit A54 described herein corresponds to the chiller passage A56, such as an internal wall or surface of the chiller conduit A54 at which the engine working fluid is in direct contact. In one embodiment, the surface area defines a nominal surface area of the chiller passage A56, such as a cross section of the chiller conduit A54. In other embodiments, features may be added or altered to the chiller passage A56 within the chiller conduit A54, such as, but not limited to, surface roughness, protuberances, depressions, spikes, nodules, loops, hooks, bumps, burls, clots, lumps, knobs, projections, protrusions, swells, enlargements, outgrowths, accretions, blisters, juts, and the like, or other raised material, or combinations thereof, to desirably alter flow rate, pressure drop, heat transfer, flow profile or fluid dynamics of the engine working fluid.

Referring still to FIG. 1.4.3, various embodiments further include a connecting chiller conduit A54 extended between the first piston body C700 and the second piston body C700. The connecting chiller conduit A54 provides fluid communication of the chiller working fluid between two or more piston bodies C700. In various embodiments, the chiller working fluid passage A66 at each piston body C700 includes a first chiller working fluid passage A68 and a second chiller working fluid passage A70 each in thermal communication with the compression chamber A222. The second chiller working fluid passage A70 is positioned proximal to the chiller passage opening A58 at the compression chamber A222. The first chiller working fluid passage A68 is positioned distal to the chiller passage opening A58 at the compression chamber A222. Additionally, or alternatively, the first chiller working fluid passage A68 is positioned proximal to the chiller collection chamber A62 or the expansion chamber A221. The connecting chiller conduit A54 is configured to fluidly connect the first chiller working fluid passage A68 of one piston body C700 (e.g., the first piston body 82) to the second chiller working fluid passage A70 of another piston body C700 (e.g., the second piston body 84), such as further depicted in the embodiments in regard to FIGS. 1.4.4-1.4.7. As further shown and described in regard to FIGS. 1.4.4-1.4.7 and FIGS. 1.7.1 - FIG. 1.7.4, the chiller working fluid may enter the chiller assembly A40 and flow at the first chiller working fluid passage A68 of one piston body C700 and the second chiller working fluid passage A70 of another piston body C700. Stated differently, in various embodiments, the chiller working fluid may enter the chiller assembly A40 and flow in thermal communication with a generally hotter portion of one piston body C700 (i.e., proximate along the lateral direction L to the expansion chamber A221) and engine working fluid positioned proximal to the hot or expansion chamber A221. The chiller working fluid may then flow to another piston body C700 to a portion distal to the hot or expansion chamber A221 of the other piston body C700, such as may be generally cooler relative to first piston body C700.

Referring now to FIG. 1.4.4, a perspective view of an exemplary embodiment of a portion of the engine A100 is provided. Referring additionally to FIGS. 1.4.5-1.4.6, further embodiments of the portion of the engine A100 are provided. FIG. 1.4.4 includes a partial cutaway view within the piston body C700 exposing chiller conduits A54 between the volume walls A46, A48. FIG. 1.4.4 depicts at least a pair of the piston bodies C700 including the connecting chiller conduit A54 such as to provide fluid communication and thermal communication from the first chiller working fluid passage A68 of the first piston body C700 to the second chiller working fluid passage A70 of the second piston body C700. Additionally, the second piston body C700 includes the connecting chiller conduit A54 providing fluid communication and thermal communication from the first chiller working fluid passage A68 of the second piston body C700 to another adjacent second chiller working fluid passage A70 of another adjacent piston body C700 different from the first piston body C700 and the second piston body C700.

Referring to FIG. 1.4.5, a top-down view of an exemplary embodiment of the portion of the engine depicted in FIG. 1.4.4 is provided. Referring additionally to FIG. 1.4.6, a bottom-up view of an exemplary embodiment of the portion of the engine depicted in FIG. 1.4.4 is provided. Referring to FIGS. 1.4.5-1.4.6, the embodiments further depict the connecting chiller conduit A54 extended between pairs of the piston body C700. In one embodiment, such as depicted in regard to FIGS. 1.4.5-1.4.6, the engine includes a chiller working fluid inlet opening A78 through which chiller working fluid is provided to the chiller working fluid passage A66. The chiller working fluid inlet opening A78 may be positioned generally inward within the engine or proximal to the reference longitudinal axis C204. Referring to FIG. 1.4.6, in one embodiment, the chiller working fluid passage A66 may define a flowpath from the chiller working fluid inlet opening A78 and at least partially around one piston body C700. The flowpath may further extend across the connecting chiller conduit A54 to another or second piston body 84 adjacent or next to the first piston body 82. The flowpath of the chiller working fluid passage A66 further extends substantially circumferentially around the other piston body C700 (e.g., depicted at the second piston body C700). The flowpath is in fluid communication with a chiller working fluid outlet opening A80. In various embodiments, the chiller working fluid outlet opening A80 is positioned outward or distal from the reference longitudinal axis C204.

In various embodiments, the flowpath of the chiller working fluid passage A66 extends from the chiller working fluid inlet opening A78 at least partially circumferentially around one piston body C700 and further across the connecting chiller conduit A54 to extend at least partially circumferentially, or substantially circumferentially, around another or adjacent piston body C700. Similarly, the other or second piston body C700 includes the chiller working fluid opening and flowpath extended at least partially circumferentially to the connecting chiller conduit A54 to provide fluid communication and thermal communication to yet another piston body C700 and circumferentially around the yet another piston body C700 to the chiller working fluid outlet opening A80.

In still various embodiments, the chiller working fluid inlet opening A78, the chiller working fluid outlet opening A80, or both extend at least partially along the lateral direction L or orthogonal to the flowpath of the chiller working fluid passage A66 such as to ingress and egress the chiller working fluid through the chiller working fluid passage A66.

In one embodiment, the engine includes the chiller working fluid inlet opening A78 corresponding to each piston body C700. Additionally, or alternatively, the engine includes the chiller working fluid outlet opening A80 corresponding to each piston body C700. It should further be appreciated that in various embodiments, the flowpath of the chiller working fluid passage A66 extends at least partially along the lateral direction L such as shown and described in regard to FIG. 1.4.3. As further described in various embodiments herein, the flowpath arrangement shown and described in regard to FIGS. 1.4.3-1.4.7 provides thermal communication of the chiller working fluid with the engine working fluid, such as the engine working fluid within the chiller conduits A54 at each piston body C700. Furthermore, the flowpath arrangements shown and described in regard to FIGS. 1.4.3-1.4.7 further provide a desired amount of heat exchanging surface area for thermal energy transfer from the engine working fluid to the chiller working fluid. As such, embodiments of the chiller conduits A54, the chiller working fluid passage A66, or both, may provide an improved transfer of thermal energy from the engine working fluid to the chiller working fluid. Further still, embodiments of the chiller conduits A54, the chiller working fluid passage A66, or both, may desirably increase a temperature differential of the engine working fluid from the cold or compression chamber A222 relative to the hot or expansion chamber A221. Additionally, or alternatively, embodiments of the chiller conduits, A54, the chiller working fluid passage A66, or both, may desirably a stroke or cycle time or period of the engine A100.

Referring now to FIG. 1.4.7, a cutaway perspective view of an exemplary embodiment of the portion of the engine A100 depicted in FIG. 1.4.4 is provided. The exemplary embodiment in regard to FIG. 1.4.7 may be configured substantially similarly as shown and described in regard to FIGS. 1.4.1-1.4.6. The cutaway view further depicts the chiller conduit A54 surrounded by the chiller working fluid passage A66. The embodiment in regard to FIG. 1.4.7, and further depicted at least in part in FIGS. 1.4.5-1.4.6, a portion of the walled conduit A1050 is extended through the engine A100 inward of the plurality of piston bodies C700 relative to the radial direction R from the longitudinal axis C204. In one embodiment, such as depicted in regard to FIG. 1.4.7, the plurality of walled conduits A1050 is extended proximal to a reference longitudinal axis C204, such as inward of the piston bodies C700 along a radial direction R relative to the longitudinal axis C204. However, in other embodiments, such as depicted in regard to FIG. 1.7.1 through FIG. 1.7.4, the walled conduits A1050 may extend outward of the piston bodies C700, such as outward along the radial direction R relative to the longitudinal axis C204.

Referring now to FIG. 1.4.8, a perspective view of another exemplary embodiment of the engine A100 is provided. The perspective view in FIG. 1.4.8 further includes a partial cutaway view within the piston body C700 exposing the chiller working fluid passage A66 and chiller conduits A54. The embodiment provided in regard to FIG. 1.4.8 is configured substantially similarly as shown and described in regard to FIGS. 3-1.4.7. In FIG. 1.4.8, the chiller working fluid passage A66 depicts a single or common chiller working fluid inlet opening A78 from which the chiller working fluid passage A66 provides separate flowpaths to each piston body C700. The chiller working fluid passage A66 further depicts a single or common chiller working fluid outlet opening A80 at which the chiller working fluid passage A66 re-combines the separated chiller working fluid passages A66 before egressing the chiller working fluid through the single chiller working fluid outlet opening A80.

Referring to FIG. 1.4.8, the chiller working fluid passage A66 at the chiller working fluid inlet opening A78 separates into the shorter chiller working fluid flowpath provided to piston bodies C700 proximate to the chiller working fluid inlet opening A78. The chiller working fluid passage A66 at the chiller working fluid inlet opening A78 further separates into the longer chiller working fluid flowpath provided to piston bodies C700 distal to the chiller working fluid inlet opening A78.

In various embodiments, the piston bodies C700 distal to the chiller working fluid inlet opening A78 additionally are proximate to the chiller working fluid outlet opening A80. The shorter chiller working fluid flowpath provides the shorter flowpath from the piston body C700 proximate to the chiller working fluid outlet opening A80. The chiller working fluid flowpath A66 further provides the longer flowpath (relative to the first chiller working fluid flowpath) from the piston body C700 distal to the chiller working fluid outlet opening A80.

In one embodiment, the piston body C700, such as proximate to the chiller working fluid inlet opening A78, receives chiller working fluid via the shorter chiller working fluid flowpath and egresses chiller working fluid via the longer chiller working fluid flowpath. Alternatively, the piston body C700, such as proximate to the chiller working fluid outlet opening A80, receives chiller working fluid via the longer chiller working fluid flowpath and egresses chiller working fluid via the shorter chiller working fluid flowpath. Altogether, the chiller working fluid passage A66 may define a substantially equal volume flowpath at each piston body C700 between the chiller working fluid inlet opening A78 and the chiller working fluid outlet opening A80. The substantially equal volume arrangement may provide a substantially even thermal energy transfer from the engine working fluid at each piston body C700 to the chiller working fluid.

Referring still to FIG. 1.4.8, in one embodiment, the chiller working fluid passage A66 at least partially circumferentially surrounds each piston body C700. Still further, the chiller working fluid passage A66 is extended along the lateral direction L or otherwise co-directional to the piston body C700 such that the chiller working fluid surrounds the piston body C700.

In various embodiments, such as depicted in regard to FIG. 1.4.8, the chiller conduit A54 is extended from the compression chamber A222 along a first lateral direction and extends along a second lateral direction opposite of the first lateral direction. The chiller conduit A54 includes an approximately 180 degree turn between the chiller passage opening A58 and the chiller collection chamber A62. The chiller working fluid passage A66 further surrounds the chiller conduit A54 along the lateral direction L. In various embodiments, such as depicted in FIG. 1.4.8, the chiller working fluid passage A66 further surrounds the 180 degree turn portion of the chiller conduit A54. The chiller passage openings A58 may generally be positioned such as to prevent the piston A1011 of the piston assembly A1010 from covering or otherwise obscuring the chiller passage openings A58 during operation of the system A10.

During operation, chiller working fluid flowing through the chiller working fluid passage A66 may receive thermal energy from the engine working fluid within one or more of the chiller conduits A54. The rate or quantity of thermal energy transferring from the engine working fluid to the chiller working fluid within the chiller working fluid passage A66 may vary as between respective portions of the chiller working fluid passage A66, such as shown and described in regard to the first chiller working fluid passage A68 and the second chiller working fluid passage A70, and/or between respective piston bodies (e.g., the first piston body and the second piston body). For example, the rate or quantity of thermal energy transferring from the engine working fluid to the chiller working fluid passage A66 may depend at least in part on a temperature gradient between the chiller conduit A54 and the chiller working fluid passage A66, such as a temperature gradient between the engine working fluid and the chiller working fluid. In some embodiments, however, the engine working fluid within the plurality of chiller conduits A54 may exhibit a temperature that differs as between at least two piston bodies C700 (e.g., first piston body and second piston body) and/or as between at least two portions along the lateral extension of the chamber 222 (i.e., temperature gradient of the chamber 222 along the lateral direction L) within a given piston body. Additionally, or in the alternative, the engine working fluid within the plurality of piston bodies C700 may exhibit a temperature that differs as between at least two piston bodies. For example, the engine working fluid within the plurality of chiller conduits A54 corresponding to one piston body (e.g., the first piston body) may exhibit a temperature different from the plurality of chiller conduits A54 corresponding to another piston body (e.g., the second piston body) based at least on the phase difference of the piston assemblies A1010 within the respective piston bodies during operation of the engine.

In some embodiments, the temperature of the chiller working fluid may increase as the chiller working fluid flows through the chiller working fluid passage A66 and receives thermal energy from the engine working fluid within the chiller conduits A54. In one embodiment, as depicted in regard to FIGS. 1.4.3-1.4.7, the chiller working fluid passage A66 extending at least partially circumferentially around one piston body (e.g., the first piston body), and further extended at least partially circumferentially around one or more other piston bodies (e.g., the second piston body) includes the chiller working fluid increasing in temperature by receiving thermal energy at one piston body.

In some embodiments, engine working fluid flowing from a first piston body flowing to another or second piston body may exhibit a temperature that differs from the engine working fluid flowing in an opposite direction, from the other piston body to the first piston body.

In various embodiments, the chiller working fluid and the engine working fluid may exhibit a temperature gradient that depends at least in part on whether the engine working fluid is flowing towards one piston body or another piston body. For example, a first temperature gradient may correspond to the engine working fluid flowing towards one piston body and a second temperature gradient may correspond to the engine working fluid flowing towards another piston body. In some embodiments the first temperature gradient may be smaller than the second temperature gradient. In other embodiments the second temperature gradient may be greater than the first temperature gradient. For example, the first temperature gradient may be smaller than the second temperature gradient at least in part because of the temperature of the engine working fluid flowing towards one piston body is greater than the temperature of engine working fluid flowing towards the other piston body.

In some embodiments, the rate and/or quantity of thermal energy transfer from the engine working fluid to the chiller working fluid may depend on whether the engine working fluid defines the first temperature gradient or the second temperature gradient. For example, a first rate and/or quantity of thermal energy transfer from the engine working fluid to the chiller working fluid may correspond to engine working fluid flowing towards one piston body and a second rate and/or quantity of thermal energy transfer from the engine working fluid to the chiller working fluid may correspond to the engine working fluid flowing towards another piston body. In some embodiments the first rate and/or quantity of thermal energy transfer may be smaller than the second rate and/or quantity of thermal energy transfer. In other words, the second rate and/or quantity of thermal energy transfer may be greater than the first rate and/or quantity of thermal energy transfer. For example, the first rate and/or quantity of thermal energy transfer may be smaller than the second rate and/or quantity of thermal energy transfer at least in part because of the first temperature gradient corresponding to engine working fluid flowing towards one piston body being smaller than the second temperature gradient corresponding to engine working fluid flowing towards another piston body.

In some embodiments, the efficiency of thermal energy transfer from the engine working fluid to the chiller working fluid may be enhanced at least in part by the second rate and/or quantity of thermal energy transfer corresponding to the engine working fluid flowing towards the first piston body being greater than the first rate and/or quantity of thermal energy transfer corresponding to the engine working fluid flowing towards second piston body. For example, in this way, a relatively larger proportion of the thermal energy input from the chiller conduits A54 may be applied to the chiller working fluid as the chiller working fluid flows from one piston body to another piston body to which the chiller working fluid passage A66 is thermally coupled (i.e., via the connecting chiller conduit A54). The thermal energy input to the chiller working fluid during the cycle of the piston assembly in a first direction (e.g., downstroke portion of the stroke cycle) may contribute to the downstroke (e.g., directly) by further cooling and thereby further contracting the engine working fluid. During another portion of the engine cycle (e.g., the upstroke portion of the stroke cycle), a relatively smaller proportion of the thermal input by the engine working fluid in the chiller conduits A54 may be applied to the chiller working fluid, which may reduce or mitigate a potential for thermal energy output from the engine working fluid to counteract the upstroke by further heating and thereby contracting the engine working fluid, providing an additional or alternative efficiency enhancement. With a relatively smaller proportion of the thermal energy input by the chiller conduits A54 applied to the chiller working fluid during the upstroke, a smaller portion of the thermal energy input may be transferred to the chiller working fluid.

As the chiller working fluid flows through the chiller working fluid passage A66, thermal energy may preferentially transfer to the chiller working fluid within the chiller working fluid passage A66 where the temperature gradient is larger or largest, thereby preferentially providing thermal energy to the chiller working fluid at the walled conduit and/or first or second chiller working fluid passage A70 where there is a greater capacity to receive thermal energy from the engine working fluid. For example, the first chiller working fluid passage A68, positioned more proximate to the expansion chamber A221 than the second chiller working fluid passage A70, may exhibit a larger temperature gradient between the engine working fluid and the chiller working fluid. The second chiller working fluid passage A70, positioned distal to the expansion chamber A221 relative to the first chiller working fluid passage A68, may exhibit a lower temperature gradient between the engine working fluid and the chiller working fluid. Additionally, such as described herein , the chiller working fluid passage A66 at one piston body may exhibit a larger temperature gradient than another piston body to which the chiller working fluid passage A66 is thermally coupled (i.e., via the connecting chiller conduit A54), such as based on the cycle or stroke of the engine during operation. Still further, the temperature gradient at the first chiller working fluid passage A68 at one piston body may be different (e.g., greater or lesser) than the second chiller working fluid passage A70 at another piston body to which the chiller working fluid passage A66 is thermally coupled, such as due at least in part to the cycle or stroke of the engine. As such, thermal energy may preferentially transfer from the engine working fluid to the chiller working fluid based at least on the larger temperature gradient at any time during the cycle of the engine.

It should be appreciated that embodiments of the chiller assembly including the chiller working fluid passage A66 and the cold side heat exchanger A42 may function substantially similarly as shown and described by embodiments of the hot side heat exchanger C108 provided herein.

**Chapter 1.5 - Working Fluid Body Heater Conduits**

Now referring to FIG. 1.5.1, an exemplary embodiment of the working-fluid body c108 is provided. The presently disclosed working-fluid bodies c108 may define part of the heater body c100 the piston body C700. The working fluid body C108 includes a plurality of heater conduits or working-fluid pathways C110 through which engine working fluid flows between the expansion chamber A221 and the compression chamber A222.

The plurality of working-fluid pathways c110 may extend between respective ones of a plurality of a first opening or piston chamber apertures c111 and respective ones of a plurality of a second opening or regenerator apertures c113. The piston chamber apertures c111 provide fluid communication between the working-fluid pathways c110 and the piston chamber c112, and the regenerator apertures c113 provide fluid communication between the working-fluid pathways c110 and the regenerator conduit c1000. The piston chamber apertures c111 may define a first end of the working-fluid pathways c110 and the regenerator apertures c113 may define a second end of the working-fluid pathways c110.

Operation of the engine A100 and system A10 includes the plurality of piston assemblies A1010 moving in cyclic operation, such as in back and forth movement between the piston body c700 at the first end A101 and another piston body c700 at the second end A102 (FIG. 1.3.1). Pressure increases and decreases at respective chambers A221, A222 correspond to movement of the piston assemblies A1010, such as further described herein. In exemplary embodiments such as depicted in regard to FIG. 1.3.1. or FIG. 1.7.1 through FIG. 1.7.8., the plurality of piston bodies c700 may include the expansion chamber A221 and the compression chamber A222 defined at each end A101, A102 of each piston assembly A1010, such as to provide eight each of the expansion chamber A221 and the compression chamber A222 at four piston assemblies A1010. The plurality of piston assemblies A1010 may be disposed radially relative to the longitudinal axis C204.

The plurality of working fluid pathways C110 extend in fluid communication from a expansion chamber A221 to the walled conduit A1050. In various embodiments, such as further described herein, the working fluid pathways C110 extend in fluid communication from the expansion chamber A221 to a corresponding regenerator body C800 at the walled conduit A1050. A first plurality of heater conduits or working-fluid pathways C110 may fluidly communicate between an expansion chamber A221 defined by a first piston body C700 and a first compression chamber A222 defined by another piston body C700 different from the first piston body C700 (e.g., not the first piston body). A second plurality of working-fluid pathways C110 may fluidly communicate between a second expansion chamber A221 (i.e., different from the first expansion chamber) defined by a second piston body c700 and a compression chamber A222 defined by another piston body C700 (e.g., not the second piston body).

Fluid communication between the expansion chamber A221 of one piston body C700 and the compression chamber A222 of another piston body C700 through the heater conduits or working fluid pathways C110 provides for the engine working fluid to be in thermal communication with the heating working fluid surrounding the working fluid pathways C110. For example, the heating working fluid, such as described herein, is provided in thermal and/or fluid communication around the working fluid pathways C110. The working fluid pathways C110 fluidly separate the heating working fluid and the engine working fluid while further providing heat transfer between the heating working fluid and the engine working fluid (e.g., heat transfer from the heating working fluid to the engine working fluid).

The engine working fluid is heated at least at the working fluid pathways C110 and provides for pressure change at the respective expansion chamber A221 (e.g., pressure increase at the expansion chamber A221). Based at least on the engine cycle, such as the movement of the piston assemblies A1010, pressure changes at the engine working fluid between the fluidly connected expansion chamber A221 and the compression chamber A222 via the heater conduit or working fluid pathways C110 correspond to heat transfer to the engine working fluid from the heating working fluid. As further described herein, based at least on the engine cycle, heat transfer, or an amount of heat transferred, to the engine working fluid may be based on the engine cycle. For example, the amount of heat transferred to the engine working fluid may correspond to whether the expansion chamber A221 is increasing in pressure or decreasing in pressure, or whether a corresponding fluidly connected compression chamber A222 is decreasing in pressure or increasing in pressure.

As further described herein, the plurality of heater conduits or working fluid pathways C110 beneficially provides for heat exchange, such as heat transfer to from the heating working fluid to the engine working fluid. The plurality of working fluid pathways C110 provides a desired amount of heat transfer to the engine working fluid, such as to improve operation of the engine A100. Improved operation of the engine A100 may include improved power output, improved power density, and/or improved efficiency of the engine A100.

**Chapter 1.6 - Regenerator Body**

Now referring to FIGS. 1.6.1 through 1.6.6D, exemplary regenerator bodies c800 will be described.

The presently disclosed regenerator bodies c800 may define part of the heater body c100 and/or an engine c002, such as shown and described in regard to system A10 and engine A100 herein, or further herein with reference to FIG. 4.1.1. For example, a regenerator body c800 may define at least a portion of a monolithic body or a monolithic body-segment. Such monolithic body or monolithic body-segment may define at least a portion of the heater body c100 and/or the engine c002. Additionally, or in the alternative, the presently disclosed regenerator bodies c800 may be provided as a separate component, whether for use in connection with a heater body c100, an engine c002, or any other setting whether related or unrelated to a heater body c100 or an engine c002. It will be appreciated that an engine c002 and/or a heater body c100 may include any desired number of regenerator bodies c800.

FIG. 1.6.1A through 1.6.1D show an exemplary regenerator body c800 implemented within an exemplary engine c002. The regenerator body c800 may fluidly communicate with one or more piston bodies c700. For example, a plurality of working-fluid pathways c110 may provide fluid communication between a regenerator body c800 and a piston body c700. The working-fluid pathways c110 may fluidly communicate between a piston chamber c112 defined by the piston body c700 and a regenerator conduit c1000 defined by the regenerator body c800.

The plurality of working-fluid pathways c110 may extend between respective ones of a plurality of piston chamber apertures c111 and respective ones of a plurality of regenerator apertures c113. The piston chamber apertures c111 provide fluid communication between the working-fluid pathways c110 and the piston chamber c112, and the regenerator apertures c113 provide fluid communication between the working-fluid pathways c110 and the regenerator conduit c1000. The piston chamber apertures c111 may define a first end of the working-fluid pathways c110 and the regenerator apertures c113 may define a second end of the working-fluid pathways c110.

A piston body c700 may define a hot-side c1002 of the piston chamber c112 and a cold side piston chamber c1004. A regenerator conduit c1000 may include a hot-side portion c1006 and a cold-side portion c1008. A plurality of hot-side working-fluid pathways c1010 may provide fluid communication between the regenerator body c800 and a first piston body c700, such as between the hot-side portion c1006 and the hot-side c1002 of the piston chamber c112. A plurality of cold-side working-fluid pathways c1010 may provide fluid communication between the regenerator body c800 and a second piston body c700, such as between the cold-side regenerator conduit c1008 the cold-side c1004 of the piston chamber c112.

The first piston body c700 may include a first piston assembly c090 disposed therein and/or the second piston body c700 may include a second piston assembly c090 disposed therein. Heat may be input ($Q_{IN}$) to engine-working fluid disposed within the hot-side working-fluid pathways c1010, such as from a heater body c100 (e.g., FIG. 4.1.1) or any other suitable heat source. Heat may be extracted ($Q_{OUT}$) from engine-working fluid disposed within the cold-side working-fluid pathways c1012, such as from a chiller body (not shown) or any other suitable cooling source. A regenerator body c800 may be disposed adjacent to a piston body c700, such as circumferentially adjacent to a piston body c700. As shown in FIG. 1.6.1C, a regenerator body c800 may circumferentially surround a piston body c700. Alternatively, a regenerator body c800 may be disposed adjacent to a piston body c700. In some embodiments, a semiannular regenerator body c800 may be disposed circumferentially adjacent to a piston body c700.

During operation, engine-working fluid flowing from the plurality of hot-side working-fluid pathways c1010 to the regenerator body c800 enters the regenerator conduit c1000. Fluid passing through the regenerator conduit c1000 may flow out of the regenerator body c800 and into the plurality of cold-side working-fluid pathways c1012. The regenerator conduit c1000 includes a heat storage medium c1014 disposed therein. The heat storage medium c1014 may be any suitable thermal energy storage medium within which heat from the hot-side working-fluid pathways c1010 may be intermittently stored as the engine-working fluid flows from the regenerator body c800 to the cold-side working-fluid pathways c1012. In some embodiments, the heat storage medium c1014 may include a plurality of fin arrays c1016; however, other heat storage medium may additionally or alternatively be utilized, including sensible heat storage and/or latent heat storage technologies. Other suitable heat storage medium may include packed beds, include molten salts, miscibility gap alloys, silicon materials (e.g., solid or molten silicon), phase change materials, and so forth.

The plurality of fin arrays c1016 include an array of high-surface area heat transfer fins having a thermally conductive relationship with engine-working fluid in the regenerator conduit c1000. As fluid flows from the hot-side working-fluid pathways c1010 into or through the regenerator conduit c1000, heat transfers to the heat storage medium 1014 (e.g., the plurality of fin arrays c1016), preserving thermal energy from being extracted ($Q_{OUT}$) at the chiller body (not shown) or other suitable cooling source. As fluid flows from the cold-side working-fluid pathways c1012 into or through the regenerator conduit c1000, heat transfers from the heat storage medium 1014 (e.g., the plurality of fin arrays c1016) back to the engine-working fluid, thereby returning thermal energy to the engine-working fluid flowing into the hot-side working-fluid pathways c1010.

Still referring to FIG. 1.6.1A, in some embodiments, a heat storage medium c1014 may include a plurality of fin arrays c1016 adjacently disposed within a regenerator conduit c1000. The plurality of fin arrays c1016 may be respectively supported by the regenerator conduit c1000 in spaced relation to one another. The spaced relation of the plurality of fin arrays c1016 may define a gap, G c1018 longitudinally separating adjacent ones of the plurality of fin arrays c1016.

Referring now to FIGS. 1.6.2A and 2B, an exemplary regenerator conduits c1000 will be further described. As shown, an exemplary regenerator conduit c1000 may include an annular sidewall c1020. The annular sidewall c1020 may circumferentially surround the heat storage medium c1014, such as the plurality of fin arrays c1016. As shown in FIG. 1.6.2B, in some embodiments, a regenerator conduit c1000 may define an annulus. For example, the regenerator conduit c1000 may include a radially outward annular sidewall c1022 and a radially inward annular sidewall c1024. The radially outward annular sidewall c1022 may circumferentially surround the heat storage medium c1014, such as the plurality of fin arrays c1016. The heat storage medium c1014, such as the plurality of fin arrays c1016, may circumferentially surround the radially inward annular sidewall c1024. The plurality of fin arrays c1016 may extend from the regenerator conduit c1000. FIG. 1.6.3 shows an exemplary heat storage medium c1014. The heat storage medium shown in FIG. 1.6.3 includes a plurality of fin arrays c1016, which may correspond to the regenerator body c800 shown in FIG. 1.6.2A. FIG. 1.6.4A and 1.6.4B show another exemplary heat storage medium c1014, such as a plurality of fin arrays c1016, which may correspond to the regenerator body c800 shown in FIG. 1.6.2B.

As shown in FIG. 1.6.3, the regenerator conduit c100 circumferentially surrounding the heat storage medium c1014 (e.g., FIG. 1.6.2A) has been omitted from FIG. 1012a_4 to reveal details of the plurality of fin arrays c1016. As shown, a plurality of fin arrays c1016 may extend from at least a portion of the regenerator conduit c1000 obliquely towards a hot-side portion c1006 of the regenerator body c800. The regenerator conduit may be disposed about a longitudinal axis and the plurality of fin arrays c1016 may be supported by the regenerator conduit at least in part at an oblique angle relative to the longitudinal axis. For example, a first region c1026 of the plurality of fin arrays c1016 may extend obliquely from the regenerator conduit c1000 towards the hot-side portion c1006 of the regenerator body c800. Alternatively, the plurality of fin arrays c1016 may extent from at least a portion of the regenerator conduit c1000 obliquely towards a cold-side portion c1008 of the regenerator body c800. Additionally, or in the alternative, at least a portion of the plurality of fin arrays c1016 may extend perpendicularly from at least a portion of the regenerator conduit c1000. The plurality of fin arrays c1016 may be supported by the regenerator conduit c800 at least in part at a perpendicular angle relative to the longitudinal axis. For example, a second region c1028 of the plurality of fin arrays c1016 may extend perpendicularly from the regenerator conduit c1000.

FIG. 1.6.5 shows a side view of the plurality of fin arrays c1016, such as the fin arrays c1016 shown in FIG. 1.6.3 or in FIGS. 1.6.4A and 1.6.4B. As shown in FIG. 1.6.5, adjacent ones of the plurality of fin arrays c1016 may include a proximal fin array c1030 and a distal fin array c1032. The proximal fin array c1030 may have a distal surface c1034 and the distal fin array c1032 may have a proximal surface c1036. The distal surface c1034 may face the proximal surface c1036. The distal surface c1034 may be oriented towards the hot-side portion c1006 of the regenerator body c800 and the proximal surface c1036 may be oriented towards a cold-side portion c1008 of the regenerator body. The regenerator conduit c1000 may communicate with at least a portion of the distal surface c1034 and/or at least a portion of the proximal surface c1036 at an oblique angle. The oblique angle may be an acute angle or an obtuse angle. The acute angle may be from 1 degree to 89 degrees, such as from 10 degrees to 70 degrees, such as from 30 degrees to 60 degrees, such as from 40 degrees to 50 degrees. The obtuse angle may be from 91 to 179 degrees, such as from 100 to 160 degrees, such as from 120 to 150 degrees, such as from 130 to 140 degrees.

In some embodiments, at least some of the plurality of fin arrays c1016 may have a distal surface c1034 communicating with the regenerator conduit c1000 at an acute angle, with the distal surface c1034 oriented towards a hot-side portion c1006 of the regenerator body c800. The plurality of fin arrays c1016 may have a proximal surface c1036 communicating with the regenerator conduit c1000 at an obtuse angle, with the proximal surface c1036 oriented towards a cold-side portion c1008 of the regenerator body c800. Additionally, or in the alternative, at least some of the plurality of fin arrays c1016 may have a distal surface c1034 communicating with the regenerator conduit c1000 at an obtuse angle, with the distal surface c1034 oriented towards a hot-side portion c1006 of the regenerator body c800. The plurality of fin arrays c1016 may have a proximal surface c1036 communicating with the regenerator conduit c1000 at an acute angle, with the proximal surface c1036 oriented towards a cold-side portion c1008 of the regenerator body c800. Further in addition or in the alternative, at least some of the plurality of fin arrays c1016 may have a distal surface c1034 and/or a proximal surface c1036 communicating with the regenerator conduit c1000 at an angle perpendicular to the regenerator conduit c1000.

The distal surface c1034 of the proximal fin array c1030 and the proximal surface c1036 of the distal fin array c1032 may define a gap G c1018. Such a gap G c1018 may longitudinally separate the adjacent ones of the plurality of fin arrays c1016, such as the proximal fin array c1030 from the distal fin array c1032. The gap G c1018 may reduce or minimize thermally conductive heat transfer in the longitudinal direction of the regenerator body c800, for example, by separating respective ones of the plurality of fin arrays c1016 from one another. The gap G c1018 may longitudinally separate adjacent ones of the plurality of fin arrays c1016 by a longitudinal distance of from about 10 microns to about 1 millimeter, such as from about 10 microns to about 100 microns, such as from about 100 microns to about 500 microns, or such as from about 500 microns to about 1 millimeter. The gap G c1018 may be at least 10 microns, such as at least 100 microns, such as at least 500 microns, such as at least 1 millimeter. The gap G c1018 may be less than 1 millimeter, such as less than 500 microns, such as less than 100 microns, such as less than 10 microns. In some embodiments, the gap G c1018 may be selected so as to be at least a thick as a boundary layer of engine-working fluid deposed between the engine-working fluid and the surface of respective ones of the plurality of fin arrays. Such a boundary layer may isolate adjacent ones of the plurality of fin arrays c1016 from one another.

Referring again to FIG. 1.6.1A, in some embodiments, a regenerator body c800 may include a hot-side portion c1006 and a cold-side portion c1008. The hot-side portion c1006 may be operably coupled and fluidly communicate with the cold-side portion c1008. The hot-side portion c1006 of the regenerator body c800 may include a hot-side regenerator conduit c1038 and a hot-side plurality of fin arrays c1040 adjacently disposed within the hot-side regenerator conduit c1038 in spaced relation to one another. The cold-side portion c1008 of the regenerator body c800 may include a cold-side regenerator conduit c1042 and a cold-side plurality of fin arrays c1044 adjacently disposed within the cold-side regenerator conduit c1042 in spaced relation to one another.

The hot-side portion c1006 and the cold-side portion c1008 of the regenerator body c800 may be separated by a hot-to-cold gap H-C c1046. For example, in some embodiments, the spaced relation (e.g., the hot-to-cold gap H-C c1046) of the hot-side plurality of fin arrays c1040 to the cold-side plurality of fin arrays c1044 may define a hot-to-cold gap H-C c1038 longitudinally separating the hot-side plurality of fin arrays c1040 from the cold-side plurality of fin arrays c1042. Additionally, or in the alternative, the hot-side regenerator conduit c1038 and the cold-side regenerator conduit c1042 may be in the spaced relation to one another, further defining the hot-to-cold gap H-C c1046. The hot-to-cold gap H-C c1046 may reduce or minimize thermally conductive heat transfer between the hot-side portion c1006 and the cold-side portion c1008 of the regenerator body c800. In some embodiments, the hot-to-cold gap H-C c1046 may allow a regenerator body c800 to provide at least two thermally distinct thermal storage bodies within the same regenerator body c800.

In some embodiments, a fin array may define a lattice c1048. The lattice c1048 may include a plurality of lattice walls c1050 defining polyhedral passages c1052 therebetween. Such lattice walls c1050 and polyhedral passages c1052 as shown, for example, in FIGS. 1.6.2A and 1.6.2B. The regenerator conduit c1000 may be disposed about a longitudinal axis A c204, and the lattice walls c1050 may be oriented parallel to the longitudinal axis A c204. The polyhedral passages c1052 may have a polygonal crosssection. By way of example, the polyhedral passages c1050 may have a shape such as a rhombohedron, a right prism, an oblique prism, a frustum, or a cylinder, as well as combinations of these.

Now turning to FIGS. 1.6.6A through 1.6.6D, exemplary fin arrays c1016 will be further described. As shown, in some embodiments, a fin array c1016 may include a plurality of fin supports c1054 and a plurality of fins c1056 together defining an array of interconnected fins c1056 and fin supports c1054. The interconnected fins c1056 and fin supports c1054 may define a lattice c1048 as described herein. A plurality of fin supports c1054 may be disposed laterally and a plurality of fins c1056 may be disposed between adjacent ones of the laterally disposed fin supports c1054. In some embodiments, the plurality of fin supports c1054 may extend obliquely from the regenerator conduit c1000. The regenerator conduit c1000 may be disposed about a longitudinal axis A c204 and the plurality of fin supports c1054 may be supported by the regenerator conduit c1000 at least in part at an oblique angle relative to the longitudinal axis A c204. As shown, the oblique angle may be oriented towards a hot-side portion c1006 of the regenerator body c800. Alternatively, the oblique angle may be oriented towards a cold-side portion c1008 of the regenerator body c800.

The fin supports c1054 may have a distal surface c1034 communicating with the regenerator conduit c1000 at an acute angle, with the distal surface c1034 oriented towards a hot-side portion c1006 of the regenerator body c800. The fin supports c1054 may have a proximal surface c1036 communicating with the regenerator conduit c1000 at an obtuse angle, with the proximal surface c1036 oriented towards a cold-side portion c1008 of the regenerator body c800. Additionally, or in the alternative, at least some of the fin supports c1054 may have a distal surface c1034 communicating with the regenerator conduit c1000 at an obtuse angle, with the distal surface c1034 oriented towards a hot-side portion c1006 of the regenerator body c800. The fin supports c1054 may have a proximal surface c1036 communicating with the regenerator conduit c1000 at an acute angle, with the proximal surface c1036 oriented towards a cold-side portion c1008 of the regenerator body c800. Further in addition or in the alternative, at least some of the fin supports c 1054 may have a distal surface c1034 and/or a proximal surface c1036 communicating with the regenerator conduit c1000 at an angle perpendicular to the regenerator conduit c1000.

The regenerator conduit c1000 may communicate with at least a portion of the fin supports c1054 (e.g., a distal surface c1034 and/or a proximal surface c1036 thereof) at an oblique angle. The oblique angle may be an acute angle or an obtuse angle. The acute angle may be from 1 degree to 89 degrees, such as from 10 degrees to 70 degrees, such as from 30 degrees to 60 degrees, such as from 40 degrees to 50 degrees. The obtuse angle may be from 91 to 179 degrees, such as from 100 to 160 degrees, such as from 120 to 150 degrees, such as from 130 to 140 degrees.

In some embodiments, at least a portion of the plurality of fins c1056 may extend perpendicularly from the regenerator conduit c1000. For example, the regenerator conduit c1000 may be disposed about a longitudinal axis A c204 and the plurality of fins c1056 may be supported at least in part by the regenerator conduit c1000 at a perpendicular angle relative to the longitudinal axis A c204. Additionally, or in the alternative, the plurality of fins c1056 may be supported at least in part by the fin supports c1054 at a perpendicular angle relative to the longitudinal axis A c204.

The plurality of fins c1056 may extend from the plurality of fin supports c1054, such as along the longitudinal axis c204. In some embodiments, the fins c1056 may have a chevron shape. The chevron shape may include a tip c1058 oriented towards a hot-side portion c1006 of the regenerator body c800 and/or a tail c1060 oriented towards a cold-side portion c1008 of the regenerator body c800.

While the fins c1056 may extend from the plurality of fin supports c1054, a gap G c1018 may longitudinally separate adjacent fins c1056 and/or fin supports c1054 respectively corresponding to adjacent fin arrays c1016. For example, the gap G 1018 may longitudinally separate the tips c1058 of a proximal fin array c1030 from the tails c1060 of a distal fin array c1032.

As described herein, at least a portion of a regenerator body c800 may define an additively manufactured monolithic body or an additively manufactured monolithic body-segment. The regenerator body c800 may define a portion of a larger monolithic body or monolithic body segment, or the regenerator body c800 may define a module insertable into a monolithic body or a monolithic body-segment. In some embodiments, the plurality of fin arrays c1016 may be monolithically integrated with the regenerator conduit c100. For example, the array of interconnected fins c1056 and fin supports c1058 may define a monolithic structure such as a portion of a monolithic body or monolithic body-segment.

A regenerator body c800 may be formed of one or more materials selected at least in part on one or more thermal storage properties. For example, one or more materials may be selected for a regenerator body c800 based at least in part on a thermal conductivity and/or a heat capacity of the material. In some embodiments, the plurality of fin arrays c1016 may include a first material and the regenerator conduit may include a second material that differs from the first material. For example, the thermal conductivity of the first material may exceed the thermal conductivity of the second material. Additionally, or in the alternative, the heat capacity of the first material may exceed the heat capacity of the second material. In some embodiments, the plurality of fin arrays c1016 may include a material selected for thermal conductivity and/or the regenerator conduit c1000 may include a material selected for thermal resistivity. In an exemplary embodiment, the plurality of fin arrays c1016 may include a metal or metal alloy, and the regenerator conduit c1000 may include a ceramic. In other embodiments, the regenerator conduit c1000 may additionally or alternatively include a metal or metal alloy, and/or the plurality of fin arrays c1016 may include a ceramic.

Exemplary metal or metal alloys may be selected for high thermal conductivity and/or heat capacity properties. Suitable metal or metal alloys may include copper, aluminum, tin, zinc, nickel, chromium, titanium, tellurium, magnesium, and/or iron. In some embodiments, the metal or metal alloy may include a rare earth element. Exemplary copper alloys may include CuSn, CuZn, CuZnAs, CuZnP, CuZnFe, CuZnNi, CuCr, and/or CuTeSn.

Exemplary ceramics may be selected for low thermal conductivity and/or heat capacity properties. Suitable ceramics may include alumina, beryllia, ceria, and/or zirconia. In some embodiments, the ceramic may include a carbide, a boride, a nitride, and/or a silicide.

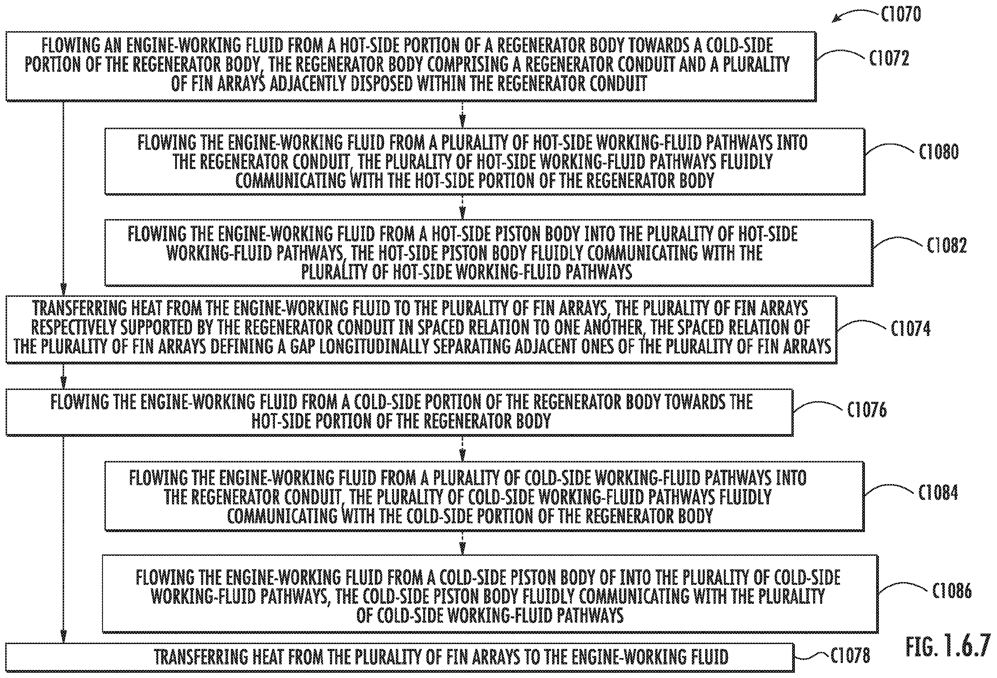

Now turning to FIG. 1.6.7, exemplary methods of regenerating heat in an engine-working fluid will be described. The exemplary methods of regenerating heat in an engine-working fluid may be performed in connection with operation of a regenerator body c800, a heater body c100, and/or an engine c002 as described herein. As shown in FIG. 1.6.7, an exemplary method c1070 may include, at block c1072, flowing an engine-working fluid from a hot-side portion c1006 of a regenerator body c800 towards a cold-side portion of the regenerator body c1008. The regenerator body c800 may include a regenerator conduit c1000 and a plurality of fin arrays c1016 adjacently disposed within the regenerator conduit c1000. The exemplary method c1070 may include, at block 1074, transferring heat from the engine-working fluid to the plurality of fin arrays c1016. The plurality of fin arrays c1016 may be respectively supported by the regenerator conduit c1000 in spaced relation to one another. The spaced relation of the plurality of fin arrays c1016 may define a gap G 1018 longitudinally separating adjacent ones of the plurality of fin arrays c1016. The exemplary method c1070 may further include, at block 1076, flowing the engine-working fluid from the cold-side portion c1008 of the regenerator body c800 towards the hot-side portion c1006 of the regenerator body c800. At block 1078, the exemplary method c1070 may include transferring heat from the plurality of fin arrays c1016 to the engine-working fluid.

In some methods c1070, flowing the engine-working fluid from the hot-side portion c1006 of the regenerator body c800 may include, at block 1080, flowing the engine-working fluid from a plurality of hot-side working-fluid pathways c1010 into the regenerator conduit c1000. The plurality of hot-side working-fluid pathways c1010 may fluidly communicate with the hot-side portion c1006 of the regenerator body c800. Exemplary methods c1070 may additionally or alternatively include, at block c1082, flowing the engine-working fluid from a hot-side c1002 of the piston chamber c112 into the plurality of hot-side working-fluid pathways c1010. The hot-side c1002 of the piston chamber c112 may fluidly communicate with the plurality of hot-side working-fluid pathways c1010.

In some methods c1070, flowing the engine-working fluid from the cold-side portion c1008 of the regenerator body c800 may include, at block c1084, flowing the engine-working fluid from a plurality of cold-side working-fluid pathways c1012 into the regenerator conduit c1000. The plurality of cold-side working-fluid pathways c1012 may fluidly communicate with the cold-side portion c1008 of the regenerator body c800. Exemplary methods c1070 may additionally or alternatively include, at block c1086, flowing the engine-working fluid from a cold-side c1004 of the piston chamber c112 into the plurality of cold-side working-fluid pathways c1012. The cold-side c1004 of the piston chamber c112 may fluidly communicate with the plurality of cold-side working-fluid pathways c1012.

In some embodiments, an exemplary method c1070 may include transferring a first quantity of heat per unit area from the engine-working fluid to the plurality of fin arrays c1016 while transferring a second quantity of heat per unit area from the engine-working fluid to the regenerator conduit c1000. The first quantity of heat per unit area may exceed the second quantity of heat per unit area. The plurality of fin arrays c1016 may include a first material and the regenerator conduit c1000 may include a second material. The thermal conductivity and of the first material may exceed the thermal conductivity of the second material. Additionally, or in the alternative, the heat capacity of the first material may exceed the heat capacity of the second material.

Exemplary conduction-enhancing protuberances may include any one or more of a combination of protuberant features having a variety of shapes and configurations, including nodules, loops, hooks, bumps, burls, clots, lumps, knobs, projections, protrusions, swells, enlargements, outgrowths, accretions, blisters, juts, and the like. These conductionattenuating protuberances c728 occur in an ordered, semi-ordered, random, or semi-random fashion. However, the particular configuration, arrangement, or orientation of the conduction-enhancing protuberances c728 may be selectively controlled or modified by adjusting the configuration or arrangement of at least a portion of the working-fluid body c108 and/or hot-side heat exchanger body c600, such as the configuration or arrangement of at least a portion of the working-fluid pathways c110 and/or heating fluid pathways c602.

It should be appreciated that in various embodiments the surface area within the heater conduits or working-fluid pathways C110 corresponds to an internal wall or surface of the heater conduit C110 at which the engine working fluid is in direct contact. In one embodiment, the surface area defines a nominal surface area of the working-fluid pathway C110, such as a cross sectional area within the working-fluid pathway C110. In other embodiments, features may be added or altered to the working-fluid passage C110 within the heater conduit, such as, but not limited to, surface roughness, protuberances, depressions, spikes, nodules, loops, hooks, bumps, burls, clots, lumps, knobs, projections, protrusions, swells, enlargements, outgrowths, accretions, blisters, juts, and the like, or other raised material, or combinations thereof, to desirably alter flow rate, pressure drop, heat transfer, flow profile or fluid dynamics of the engine working fluid.

## Chapter 1.7 - Engine Chamber to Chamber Conduits Arrangements

The cross sectional view provided in FIG. 1.3.1 is cut along the lateral direction L such as to depict two of four piston assemblies A1010 of the system A10. In various embodiments, the system A10 provided in regard to FIG. 1.3.1 further includes the walled conduits A1050 disposed inward of the piston bodies C700 proximate to the reference longitudinal axis C204, such as shown and described in regard to FIGS. 1.4.5-1.4.7. In other embodiments, the system A10 provided in regard to FIG. 1.3.1 further includes the walled conduits A1050 disposed outward of the piston bodies C700, such as shown and described in regard to FIG. 1.7.1 through FIG. 1.7.4.

Referring to FIG. 1.7.1 through FIG. 1.7.4, side, end, and perspective views of a portion of the system A10 are provided. The embodiments provided in regard to FIG. 1.7.1 through FIG. 1.7.4 are configured substantially similarly as shown and described in regard to FIG. 1.3.1 - FIG. 1.3.2. In regard to FIGS. 1.7.1 - FIG. 1.7.4, the portions of the system A10 depicted therein include four piston assemblies A1010 positioned within eight respective piston bodies C700. The piston bodies C700 may generally include the first volume wall and the second volume wall shown and described in regard to FIG. 1.3.1 - FIG. 1.3.2. The piston bodies C700 may generally define cylinders into which pistons A1011 of the piston assembly A1010 are each positioned such as to define the expansion chamber A221 and the compression chamber A222 within each piston body C700. However, it should be appreciated that other suitable geometries of the piston body C700 containing the piston A1011 may be utilized.

The engine A100 further includes a plurality of walled conduits A1050 connecting particular chambers A221, A222 of each piston body C700 (FIG. 1.3.1) such as to define a balanced pressure arrangement of the pistons A1011. In various embodiments, the engine A100 includes at least one interconnected volume of chambers A221, A222 such as described herein. In one embodiment, such as depicted in regard to FIGS. 1.7.1 - FIG. 1.7.4, the engine A100 includes two interconnected volumes in which each interconnected volume includes an expansion chamber A221 of a first piston body C700 of a first piston assembly A1010 connected in fluid communication of the engine working fluid with a compression chamber A222 of a second piston body C700 of a second piston assembly A1010 each connected by a conduit A1050. More particularly, the balanced pressure arrangement of piston assemblies A1010 depicted in regard to FIGS. 1.7.1 - FIG. 1.7.4 includes two interconnected volumes each substantially fluidly separated from one another and/or substantially pneumatically separated from one another. The fluidly separated and/or pneumatically separated arrangement of chambers A221, A222 into the interconnected volume, and those chambers A221, A222 outside of the interconnected volume or in another interconnected volume, is particularly provided via the arrangement of expansion chambers A221 connected to compression chambers A222 via the walled conduits A1050 such as further described herein.

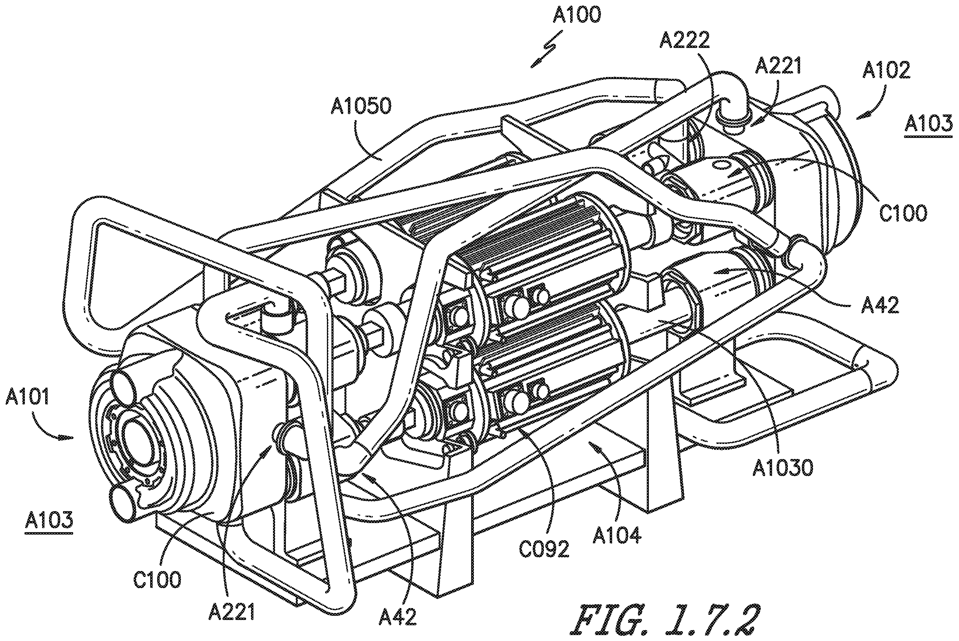

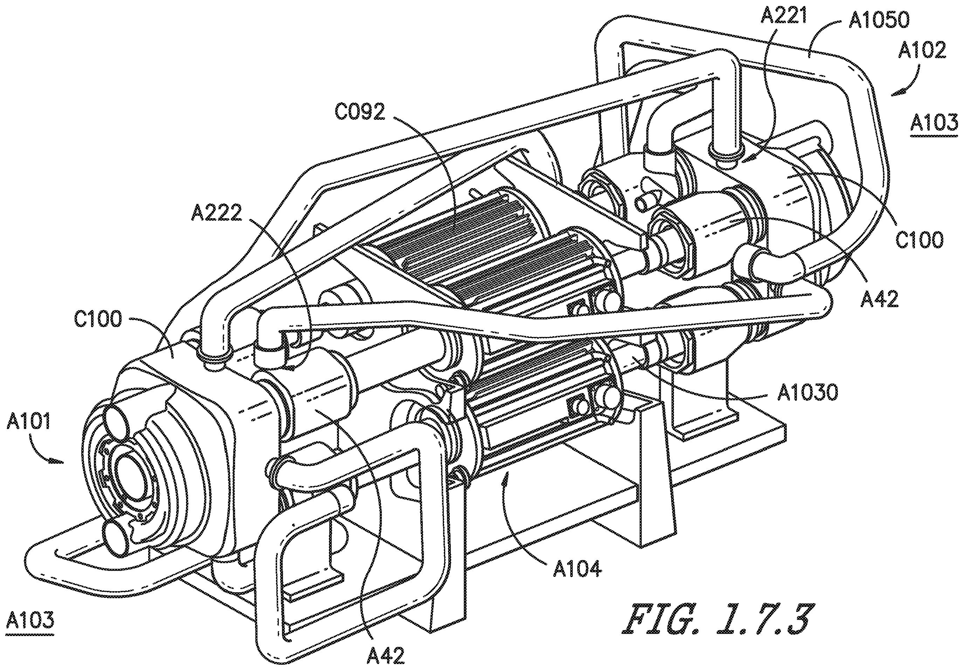

In various embodiments, the interconnected volume includes pairs of the expansion chamber A221 fluidly coupled to the compression chamber A222 each defined at laterally separated ends of the piston assemblies A1010. In one embodiment, the engine A100 defines a first end 101 separated along the lateral direction L by the connection member A1030 from a second end 102, such as depicted in FIG. 1.7.2 and FIG. 1.7.3. Each end of the engine A100 defines an expansion chamber A221 and a compression chamber A222 at each piston A1011 of each piston assembly A1010. The engine A100 depicted in FIGS. 1.7.1 - FIG. 1.7.4, and further in regard to FIG. 1.3.1, includes the expansion chamber A221 at one end connected to a respective compression chamber A222 at another end via respective conduits. In one embodiment, such as depicted in FIGS. 1.7.2 and 1.7.3, the engine A100 includes two expansion chambers A221 at the first end 101 each connected to respective compression chambers A222 at the second end 102 via respective conduits A1050. The engine A100 further includes two expansion chambers A221 at the second end 102 each connected to respective compression chamber A222 at the first end 101 via respective conduits A1050. The system A10 further includes four expansion chambers A221 at one end each connected to respective compression chambers A222 at the same end via respective conduits A1050. In one embodiment, the system A10 includes two expansion chambers A221 at the first end 101 each connected to respective compression chambers A222 at the first end 101 via respective walled conduits A1050. The system A10 further includes two expansion chambers A221 at the second end 102 each connected to respective compression chambers A222 at the second end 102 via respective walled conduits A1050.

To provide a balanced pressure arrangement of piston assemblies A1010, one interconnected volume includes a pair of the expansion chamber A221 at one end (e.g., the first end 101 or the second end 102) connected to the compression chamber A222 at the other or opposite end. In one embodiment, the expansion chamber A221 at the first end 101 is fluidly connected to the compression chamber A222 at the second end 102. In another embodiment, the expansion chamber A221 at the second end 102 is fluidly connected to the compression chamber A222 at the first end 101. The interconnected volume further includes a pair of expansion chambers A221 at the first end 101 or the second end 102 connected to a respective compression chamber A222 at the same end, opposing ends, or both, relative to the expansion chamber A221. In one embodiment, the expansion chamber A221 at the first end 101 is fluidly connected to the compression chamber A222 at the same end (i.e., the first end 101). In another embodiment, the expansion chamber A221 at the second end 102 is fluid connected to the compression chamber A222 at the same end (i.e., the second end 102). In yet another embodiment, the expansion chamber A221 at the first end 101 is fluidly connected to the compression chamber A222 at the second end 102 (i.e., the opposing end). In still yet another embodiment, the expansion chamber A221 at the second end 102 is fluidly connected to the compression chamber at the first end 101 (i.e., the opposing end). It should be appreciated that the arrangement described herein includes each expansion chamber A221 of one piston body C700 of one piston assembly A1010 connected to a respective compression chamber A222 of another, different piston body C700 of another, different piston assembly A1010. It should further be appreciated that, in various embodiments, the expansion chamber A221 of one piston body C700 and one piston assembly C1010 is exclusively fluidly connected to the compression chamber A222 of another piston body C700 of another piston assembly C1010 (i.e., each walled conduit A1050 fluidly connects only one expansion chamber A221 to only one compression chamber A222).

The balanced pressure arrangement of piston assemblies A1010 described herein is such that a uniform temperature applied at the expansion chambers A221 and the compression chambers A222 provides an equal pressure at the expansion chamber A221 of one piston body C700 counteracted by an equal and opposite pressure at the same piston body C700 relative to the expansion chamber A221. Stated alternatively, when a uniform temperature is applied to the expansion chambers A221 and the compression chambers A222, movement of one piston assembly A1010 defining a free piston assembly A1010 results in pressure cancellation at adjacent piston assemblies A1010 such that pressure waves will not propagate to induce movement of the adjacent piston assembly A1010.

It should be appreciated that each interconnected volume described herein includes one or more passages, chambers, openings, or other flowpaths between the arrangements of the compression chamber A222 and the expansion chamber A221 described above. For example, the particular arrangements of walled conduits A1050 providing fluid communication of the engine working fluid between the compression chamber A222 and the expansion chamber A221 such as described in regard to FIGS. 1.7.1 through 1.7.4 further includes the chiller conduits A54, collection chambers A62, A64, heater conduits C110, etc. such as shown and described in regard to FIG. 1.4.1 through FIG. 1.5.1. Additionally, or alternatively, the particular arrangements of walled conduits A1050 providing fluid communication between the compression chamber A222 and the expansion chamber A221 such as described in regard to FIG. 1.7.1 through FIG. 1.7.2 may further include a heat exchanger or regenerator, or features thereof, such as shown and described in regard to FIG. 1.6.1.

Although depicted as a balanced pressure arrangement of four piston assemblies A1010 at eight piston bodies C700 defining eight fluidly connected pairs of expansion chambers A221 and compression chambers A222, it should be appreciated that the engine A100 generally includes an interconnected volume such as described above. As such, other embodiments of the engine A100 may include a quantity of two or more piston assemblies A1010 in which the arrangements of the piston assembly A1010 are scaled accordingly based on the arrangement described above such as to provide at least one interconnected volume of chambers A221, A222 and conduits 1050.

In various embodiments, the system A10 defines the reference longitudinal axis C204 extended co-directional to the lateral direction L or generally along a direction along which the pistons A1011 articulate within the chambers A221, A222. The chambers A221, A222 are positioned in circumferential arrangement relative to the reference longitudinal axis C204. Each chamber 221, 222 is extended along the lateral direction L or otherwise co-directional to the reference longitudinal axis C204.

In one embodiment, the engine includes four piston assemblies A1010 extended along the lateral direction L and in circumferential arrangement relative to the reference longitudinal axis C204. The piston assemblies A1010 may be positioned equidistant to one another around the reference longitudinal axis C204. In one embodiment, a pair of the heater body is positioned at outer ends A103 of the engine. The heater body is positioned proximate to the expansion chamber A221 and distal to the compression chamber A222. Each heater body may be positioned and configured to provide a substantially even flow of thermal energy to four hot side heat exchangers 160 or expansion chambers A221 at a time.

In other embodiments, the engine A100 includes two or more piston assemblies A1010 in side-by-side arrangement. The piston assemblies A1010 may be positioned equidistant relative to one another. In still various embodiments, a single heater body C100 may be positioned relative to each hot side heat exchanger or working fluid body C108. It should be appreciated that various embodiments of the system A10 provided herein may include any quantity of heater bodies positioned at any quantity of expansion chambers A221 as desired.

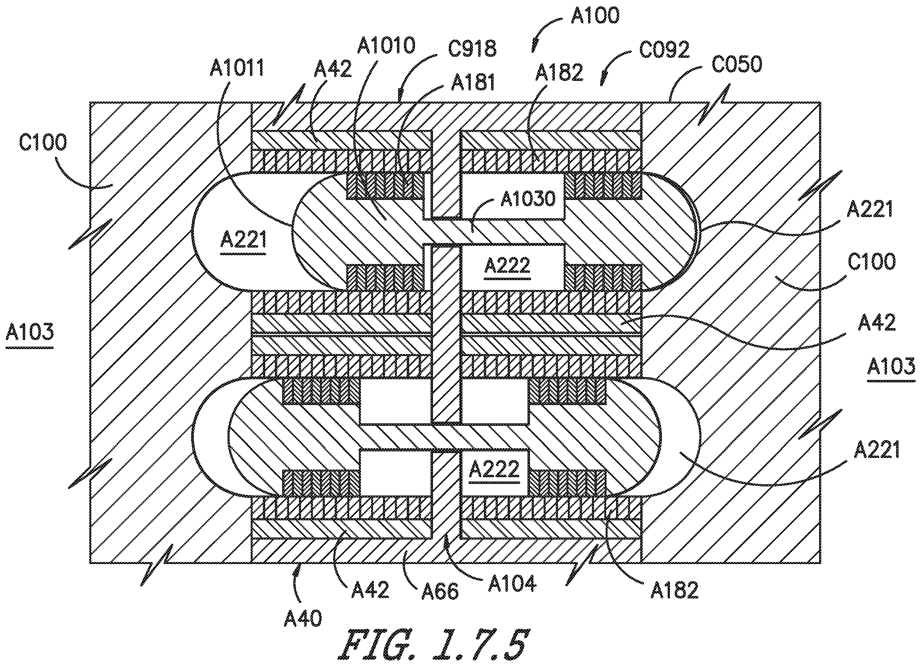

Further embodiments of the system A10 provided herein in regard to FIG. 1.7.5 through 1.7.8 further illustrate positioning of the heater body C100 relative to the expansion chamber A221. However, it should be appreciated that other arrangements may be utilized as desired such as to provide thermal energy to the expansion chambers A221. In still various embodiments, other arrangements may be utilized such as to provide selective or independent operability of a plurality of heater bodies C100. For example, selective or independent operability of the plurality of heater bodies C100 may desirably control a temperature, flow rate, or other property of thermal energy, or particularly the heating working fluid, provided in thermal communication to the working fluid body C108. Selective operability may further include selective on/off operation of one or more heater bodies C100 independent of one another.

It should further be appreciated that although the piston assemblies A1010 of the engine A100 are depicted in straight, flat, inline, or horizontally opposed arrangements, the piston assemblies A1010 and heater bodies C100 may alternatively be arranged in V-, W-, radial, or circumferential arrangements, or other suitable piston assembly A1010 arrangements. For example, one or more embodiments of the system A10 may include a center and/or outer heater body C100 around which the plurality of piston assemblies A1010 is positioned.

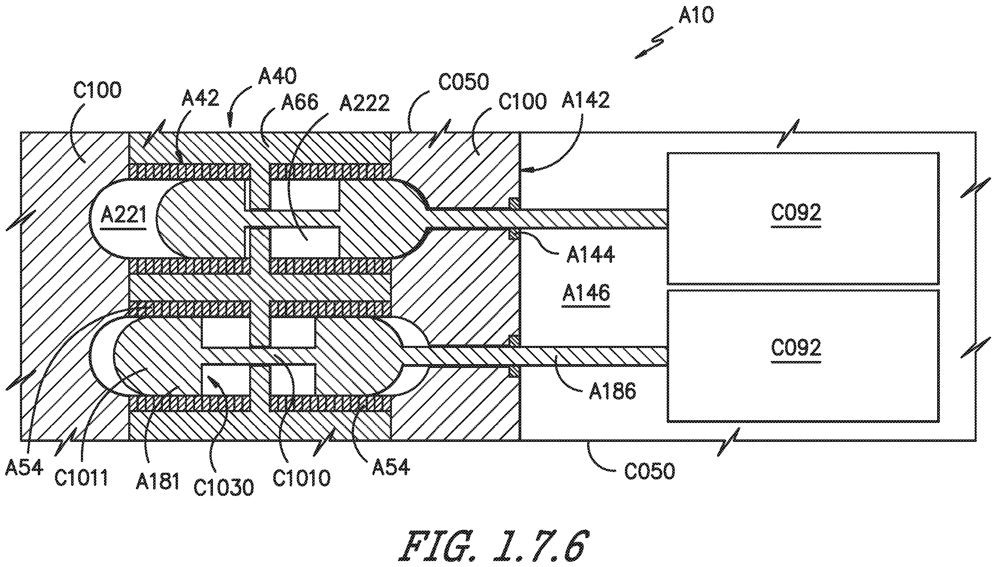

Referring now to FIG. 1.7.5 through FIG. 1.7.8, further exemplary embodiments of the system A10 are provided. The embodiments provided in regard to FIG. 1.7.5 through FIG. 1.7.8 are configured substantially similarly as shown and described in regard to FIG. 1.2.1 through FIG. 1.7.2. Referring to FIG. 1.7.5 through 1.7.8, positioning the load device c092 outside of the inner ends 104 of the piston assembly A1010 provides the connection member A1030 to be shorter between pistons A1011. The shorter connection member A1030 provides the pistons A1011 to be positioned more closely together in contrast to a longer connection member A1030 based at least on the load device c092 being positioned at the inner ends 104 of the piston assembly A1010. In regard to FIG. 1.7.5, the load device c092 is formed at least in part by the piston A1011 and the surrounding piston body C700. In regard to FIGS. 1.7.6 - FIG. 1.7.7, the load device c092 is positioned at one or more outer ends A103 of the engine. Positioning the load device c092 outside of the inner ends 104 provides dimensions and sizing of the load device c092 to be substantially de-coupled from dimensions and sizing of the closed cycle engine. For example, positioning the load device c092 outside of the inner end A104 of the engine de-couples the length and thickness of the dynamic member A181 from the connection member A1030. As another example, positioning the load device c092 outside of the inner end A104 of the engine de-couples a desired power density of the engine from the sizing and dimensions of the load device c092, such as an electric machine. As such, the shorter connection member A1030 between the pistons A1011 provides a smaller packaging of the engine while substantially maintaining the power generation and output relative to other arrangements.

In FIG. 1.7.5, the dynamic member A181 of the load device c092 defining the electric machine is positioned at the pistons A1011 of the piston assembly A1010. The stator assembly A182 of the electric machine is positioned at the piston body C700, such as at the second volume wall. Lateral movement of the pistons A1011 relative to the surrounding stator assembly A182 at the piston body C700 generates electricity at the electric machine. The system A10 further includes the chiller assembly surrounding the electric machine. In more particular embodiments, the chiller assembly surrounds the stator assembly A182 of the load device c092 defining an electric machine. The chiller assembly may further provide working fluid in thermal communication with inner ends 104 of the system A10, such as to provide thermal communication to the compression chamber A222 via the inner end wall A50.

Referring now to FIG. 1.7.5 through FIG. 1.7.6, in various embodiments the chiller assembly includes a chiller casing in which a chiller flowpath is defined next to the compression chamber A222 of the volume. The chiller flowpath may particularly be defined immediately next to or adjacent to the second volume wall defined by the chiller assembly, or particularly the chiller casing, such as depicted in regard to FIG. 1.7.5. The chiller assembly includes the second volume wall and further includes the inner end wall A50 such as described in regard to FIG. 1.3.1 - FIG. 1.3.2. The second volume wall and the inner end wall A50 may together define a single monolithic structure. Furthermore, the chiller casing may include the second volume wall and the inner end wall A50 and define the chiller flowpath as a single monolithic structure. As such, the structure and method for assembly and improved thermal efficiency may include positioning pistons A1011 and the connection member A1030 through the chiller assembly, operably coupling the pistons A1011 and the connection member A1030 together as the piston assembly A1010, and closing or sealing the expansion chamber A221 and compression chamber A222 via the heater body at the outer ends A103 of the closed cycle engine.

Referring now to FIG. 1.7.6 through FIG. 1.7.7,, in various embodiments the load device c092 is positioned at one or more outer ends A103 of the closed cycle engine in operative communication with the piston assembly A1010. The system A10 may further include an extension member A186 connected to one or more pistons A1011 of the piston assembly A1010. The extension member A186 is connected to the piston A1011 and extended laterally outward toward one or more outer ends A103. The extension member A186 is operatively connected to the load device c092 such that lateral movement of the piston assembly A1010 including the extension member A186 generates electric energy at the electric machine. Although not further depicted in regard to FIGS. 8-9, the extension member A186 further includes the dynamic member A181 at the load device c092 defining the electric machine operatively coupled to the electric machine in magnetic communication with the stator assembly A182, such as depicted and described in regard to FIG. 1.3.1 - FIG. 1.3.2.

Referring still to FIG. 1.7.6 through FIG. 1.7.7, the machine body c918 surrounding the load device c092 includes an interface wall A142 in contact with the outer end A103 of the load device c092. Within the machine body c918 and around the load device c092 is a cavity A146. The interface wall A142 includes a seal A144, such as a gap seal, at an interface of the extension member A186 and the interface wall A142. The cavity A146 may particularly define a pressurized cavity such that pressurization at the volume within the piston body C700, such as at the expansion chamber A221, is substantially maintained or mitigated from pressure loss within the expansion chamber A221 along the extension member A186. It should be appreciated that any suitable type of seal may be incorporated at the interface wall A142 such as to substantially maintain pressure at the expansion chamber A221, or provide an acceptably low rate of leakage over time from the expansion chamber A221.

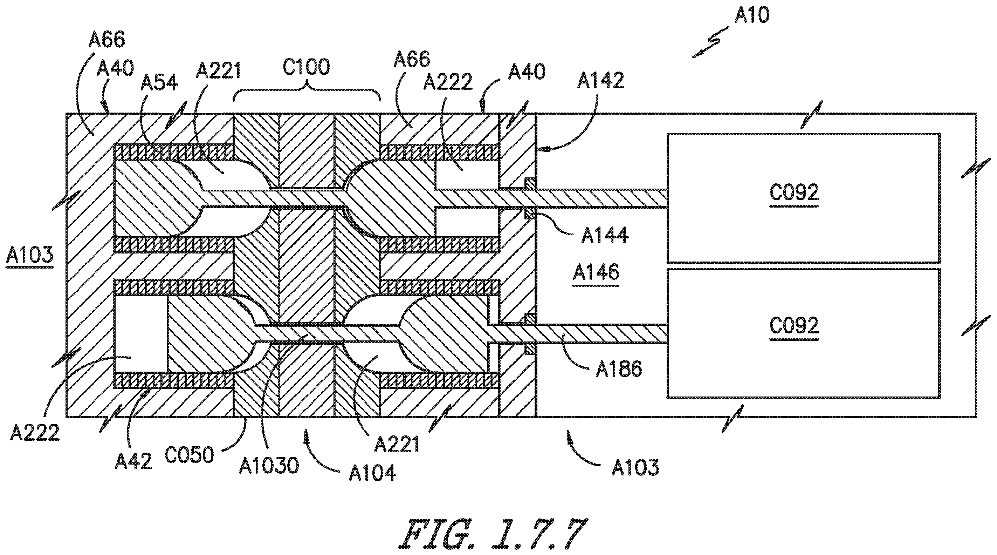

Regarding FIG. 1.7.6, and similarly as shown and described in regard to FIG. 1.3.1 through FIG. 1.7.5, the heater body is positioned at outer ends A103 of the closed cycle engine. In regard to the embodiment depicted in FIG. 1.7.7, the heater body is positioned at the inner end A104 of the closed cycle engine between each pair of piston bodies C700 at which each respective piston A1011 of the piston assembly A1010 is contained. The heater body may particularly define a single common heater body such as to provide a single thermal energy output source to each expansion chamber A221 of the closed cycle engine.

Referring to FIG. 1.7.7 and further in regard to the embodiment and description regarding FIG. 1.7.1 through FIG. 1.7.2, the single common heater body may be positioned to provide a substantially uniform thermal energy output to all eight expansion chambers A221 of the closed cycle engine. The single common heater body positioned between the expansion chambers A221 may alleviate or obviate issues that may arise from uneven thermal input to the expansion chambers A221. For example, the single common heater body may mitigate phase drifting of the piston assemblies A1010 relative to one another. As such, the single common heater body may promote balanced pressure operation of the closed cycle engine, mitigate unbalanced operation, reduce vibrations or mitigate promulgation of vibrations, improve efficiency of the system A10, or promote improved operability of the system A10.

It should be appreciated that various embodiments of the system A10 provided in regard to FIGS. 1.2.1 through FIG. 1.7.7 are further configured to provide a desired thermal energy output from the heater body to the expansion chambers A221. For example, the embodiments shown and described herein may be configured to output a substantially uniform thermal energy profile from each heater body to all expansion chambers A221. **In** still various embodiments, the chiller assembly includes the chiller working fluid input and the chiller working fluid output such as depicted and described in regard to FIG. 1.7.1 through FIG. 1.7.2, such as to provide a substantially uniform thermal energy output from the compression chamber A222 to the chiller assembly.

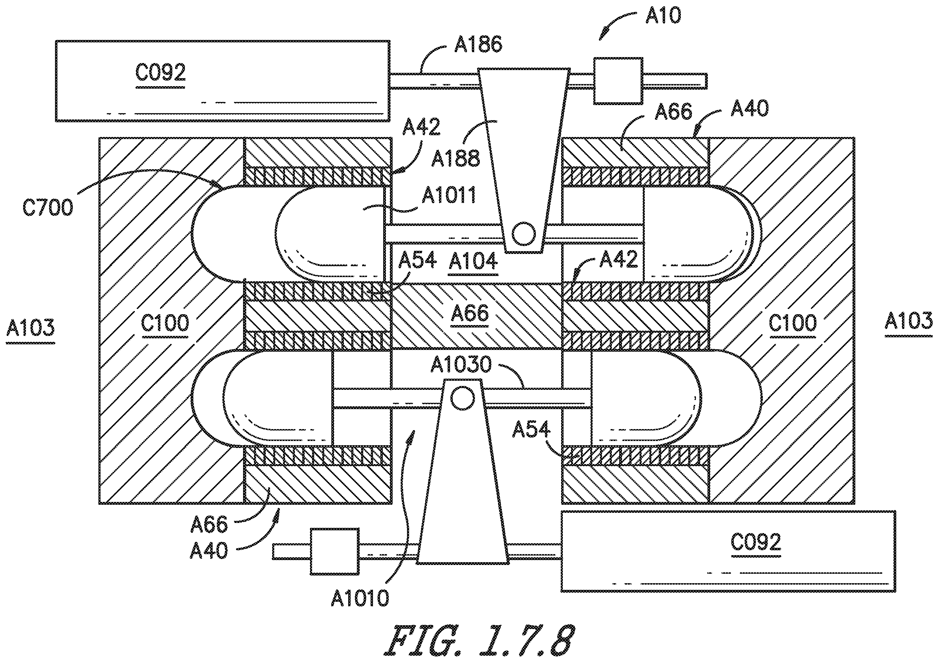

Referring now to FIG. 1.7.8, the schematic embodiment provided is configured substantially similarly as shown and described in regard to FIGS. 1.2.1 through FIG. 1.7.7. **In** the embodiment depicted in FIG. 1.7.8, the system A10 further includes an adapter A188 attaching the connection member A1030 to the extension member A186. **In** various embodiments, the adapter A188 is extended along a transverse direction generally acute to the lateral direction L. **In** one embodiment, the adapter A188 is extended substantially perpendicular to the lateral direction L. The adapter A188 provides substantially parallel arrangement of the connection member A1030 relative to the extension member A186 such as to translate lateral movement of the connection member A1030 at a first plane to lateral movement of the extension member A186 at a second plane different from the first plane. In various embodiments, the adapter A188 includes a mechanical connection, such as, for example, a rocker arm, to extend from the connection member A1030 to the load device c092. The adapter A188 further provides a diameter, length, or other dimension of the load device c092 to be de-coupled from dimensions of the closed cycle engine. In various embodiments, the adapter A188 provides the dynamic member A181 and/or extension member A186 of the load device c092 to have a stroke or length different from the connection member A1030. The adapter A188 may further provide the load device c092 to include a gearing system, a frequency converter, or other devices to alter or scale the output of the load device c092 from the size or speed of the piston assembly A1010. As such, the closed cycle engine and the load device c092 may each be sized substantially separately for improved performance of each.

In general, the exemplary embodiments of system A10 and engine, or portions thereof, described herein may be manufactured or formed using any suitable process. However, in accordance with several aspects of the present subject matter, some or all of system A10 may be formed using an additive manufacturing process, such as a 3-D printing process. The use of such a process may allow portions of the system A10 to be formed integrally, as a single monolithic component, or as any suitable number of sub-components. In various embodiments, the manufacturing process may allow the all or part of the heater body, the chiller assembly, the load device c092, or the engine to be integrally formed and include a variety of features not possible when using prior manufacturing methods. For example, the additive manufacturing methods described herein provide the manufacture of the system A10 having unique features, configurations, thicknesses, materials, densities, and structures not possible using prior manufacturing methods. Some of these novel features can, for example, improve thermal energy transfer between two or more components, improve thermal energy transfer to the engine working fluid, improve thermal energy transfer from the engine working fluid to the chiller working fluid, reduce leakages, or facilitate assembly, or generally improve thermal efficiency, power generation and output, or power density of the system A10 using an additive manufacturing process as described herein.

## Chapter 1.8 - Monolithic Engine Assembly

Now referring to FIGS. 1.8.1A through 1.8.1F, exemplary engine assemblies c900 will be described. The engine assemblies c900 described herein may include an engine c002, such as described in regard to the system A10 and engine A100 shown and depicted in regard to FIGS. 1.2.1 - 1.7.8, or further herein with reference to FIG. 4.1.1. The engine assembly c900 may include one or more monolithic bodies or monolithic body-segments as described herein. A monolithic body and/or a monolithic body-segment may be fabricated using an additive manufacturing technology and may be void of any seams, joints, or the like characteristic of separately fabricated components.

An engine c002 may include one or more heater bodies c100 and one or more engine bodies c050 that together define an engine assembly c900. An exemplary engine assembly c900 may include at least one heater body c100 and at least one engine body c050. However, it will be appreciated that any number of heater bodies c100 and/or any number of engine bodies c050 may be provided. In some embodiments, a first heater body c100 may be disposed at a first side of an engine assembly c900 and a second heater body c100 may be disposed at a second side of an engine assembly c900. One or more engine bodies c050 may be disposed adjacent to the first heater body c100 and/or adjacent to the second heater body c100. One or more heater bodies c100 and/or one or more engine bodies c050 may be operably coupled or operably couplable to one another such as via welding, fusing, or the like, so as to provide an integrally formed engine assembly c900. Additionally, or in the alternative, one or more heater bodies c100 and/or one or more engine bodies c050 may be operably coupled or operably couplable to one another such as via bolts, fasteners, or the like, so as to provide an assembled engine assembly c900.

The engine assembly c900 may include one or more piston assemblies c090 and one or more generator assemblies c092. The one or more piston assemblies c090 and the one or more generator assemblies c092 may be operably insertable within an engine body c050 and/or a heater body c100. The one or more generator assemblies c092 may receive a mid-ward portion of the one or more piston assemblies 092. The one or more piston assemblies c090 and/or the one or more generator assemblies c092 may be inserted into an engine body c050 and/or a heater body c100 prior to operably coupling at least one engine body c050 to another engine body c050 or to a heater body c100. Additionally, or in the alternative, one or more piston assemblies c090 and/or the one or more generator assemblies c092 may be inserted into an engine body c050 and/or a heater body c100 prior to operably coupling at least one heater body c100 to an engine body c050. In this way, an engine assembly c900 may be integrally formed and/or assembled at least in part by installing one or more piston assemblies c090 and/or the one or more generator assemblies c092 into one or more monolithic bodies and/or monolithic body-segments that make up the engine assembly c900. The one or more monolithic bodies and/or monolithic body-segments may be operably coupled to one another after having installed the one or more piston assemblies c090 and/or the one or more generator assemblies c092 therein. However, it will be appreciated that in some embodiments some of the more monolithic bodies and/or monolithic body-segments that make up an engine assembly c900 may be operably coupled to one another prior to installing the one or more piston assemblies c090 and/or the one or more generator assemblies c092 therein.

FIGS. 1.8.1A through 1.8.1F show exploded views of exemplary engine assemblies c900. An engine assembly c900 may include at least two monolithic bodies or monolithic body-segments, within which one or more piston assemblies c090 and one or more generator assemblies c092 may be enclosed. For example, an engine assembly c900 may include a first monolithic body that includes a first heater body c100 and a first portion of an engine body c050, and a second monolithic body that includes a second heater body c100 and a second portion of an engine body c050. In some embodiments, an engine assembly c900 may include only two monolithic bodies or monolithic body-segments, while in other embodiments an engine assembly c900 may include more than two (e.g., multiple) monolithic bodies or monolithic body-segments.

One or more of the monolithic bodies and/or monolithic body-segments that make up an engine assembly may include one or more regenerator bodies and/or one or more chiller bodies. The one or more regenerator bodies may define a portion of another monolithic body or a portion of a monolithic body-segment. Alternatively, the one or more regenerator bodies may represent a monolithic body or monolithic body-segment, such as a monolithic body or monolithic body-segment insertable, inserted, operably couplable, or operably coupled to another monolithic body or monolithic body-segment. The one or more chiller bodies may define a portion of another monolithic body or a portion of a monolithic body-segment. Alternatively, the one or more chiller bodies may represent a monolithic body or monolithic body-segment, such as a monolithic body or monolithic body-segment insertable, inserted, operably couplable, or operably coupled to another monolithic body or monolithic body-segment.

The engine assemblies c900 shown in FIGS. 1.8.1A and 1.8.1C include two monolithic bodies or monolithic body-segments within which one or more piston assemblies c090 and one or more generator assemblies c092 may be enclosed. The embodiments shown in FIGS. 1.8.1A and 1.8.1C allow for the one or more piston assemblies c090 and one or more generator assemblies c092 to be enclosed within an engine assembly c900 upon operably coupling the first monolithic body to the second monolithic body, which may advantageously minimize assembly steps.

As shown in FIG. 1.8.1A, the first monolithic body may be separated from the second monolithic body at or about an axial location corresponding to an axial end of the one or more generator assemblies c092. The first portion of the engine body c050 (e.g., on the left-hand side as shown) may define one or more generator housings respectively configured to receive the one or more generator assemblies c092. The one or more generator assemblies c092 may be respectively installed in the one or more generator housings defined by the first portion of the engine body c050. The first portion of the engine body c050 may define a first set of one or more piston chambers c112 respectively configured to receive a first portion of the one or more piston assemblies c090. The first portion of the one or more piston assemblies c090 may be respectively installed in the one or more piston chambers c112 defined by the first portion of the engine body c050.

Additionally, or in the alternative, the second portion of the engine body c050 may define a second set of one or more piston chambers c112 respectively configured to receive a second portion of the one or more piston assemblies c090. The second portion of the one or more piston assemblies c090 may be respectively installed in the second set of the one or more piston chambers c112 defined by the second portion of the engine body c050. The second portion of the engine body c050 and the first portion of the engine body c050 may be operably coupled to one another, enclosing the one or more generator assemblies c092 and the one or more piston assemblies c090 therein.

As another example, as shown in FIG. 1.8.1C, the first monolithic body may be separated from the second monolithic body at or about a mid-point of the engine assembly c900. The first monolithic body (e.g., on the left-hand side as shown) may include a first portion of the engine body c050 configured to receive a first portion of the one or more generator assemblies c092, and the second monolithic body may include a second portion of the engine body c050 configured to receive a second portion of the one or more generator assemblies c092. One or more piston assemblies c090 and/or one or more generator assemblies c092 may be installed in the first and/or second portion of the engine body c050, and the two monolithic bodies or monolithic body-segments may be operably coupled to one another, enclosing the one or more generator assemblies c092 and the one or more piston assemblies c090 therein.

As shown in FIG. 1.8.1B, an engine assembly c900 may include a plurality of monolithic bodies or monolithic body-segments separated at or about locations corresponding to respective components of the engine assembly. Engine assemblies c900 configured in accordance with FIG. 1.8.1B may include separate monolithic bodies or monolithic body-segments respectively corresponding to respective elements of the engine assembly c900. For example, an engine assembly c900 may include a first monolithic body-segment (e.g., on the top left-hand side as shown) that includes a first heater body c100, a second monolithic body-segment that includes a first portion of an engine body c050 corresponding to a left-hand side of one or more piston assemblies c090, a third monolithic body-segment that includes a second portion of the engine body c050 corresponding to one or more generator assemblies c092, a fourth monolithic body-segment that includes a third portion of the engine body c050 corresponding to a right-hand side of the one or more piston assemblies c090, and a fifth monolithic body-segment that includes a second heater body c100. The first monolithic body-segment that includes the first heater body c100 may additionally include a portion of the engine body c050. Additionally, or in the alternative, the second monolithic body-segment that includes the second heater body c100 may include a portion of the engine body c050.

The second monolithic body-segment may define one or more regenerator bodies and/or one or more chiller bodies corresponding to the first heater body c100. Additionally, or in the alternative, one or more regenerator bodies and/or one or more chiller bodies corresponding to the first heater body c100 may be operably coupled or operably couplable to the second monolithic body-segment. The fourth monolithic body-segment may define one or more regenerator bodies and/or one or more chiller bodies corresponding to the second heater body c100. Additionally, or in the alternative, one or more regenerator bodies and/or one or more chiller bodies corresponding to the second heater body c100 may be operably coupled or operably couplable to the fourth monolithic body-segment.

The one or more generator assemblies c092 may be installed in one or more generator housing defined by the second portion of the engine body c050. A first portion of one or more piston assemblies c090 may be installed in a corresponding one or more piston chambers c112 defined by the first portion of the engine body c050 and/or a second portion of the one or more piston assemblies c090 may be installed in a corresponding one or more piston chambers c112 defined by the second portion of the engine body c050. The respective portions of the engine assembly c900 may be operably coupled to one another, enclosing the one or more generator assemblies c092 and the one or more piston assemblies c090 therein.

As shown in FIG. 1.8.1D, an engine assembly c900 may include a first monolithic body or monolithic body-segment that includes a first heater body c100 and a first portion of an engine body c050, a second monolithic body or monolithic body-segment that includes a second portion of an engine body c050, and a third monolithic body or monolithic body-segment that includes a second heater body c100 and a third portion of an engine body c050. The second portion of the engine body c050 may define one or more generator housings configured to receive one or more generator assemblies c092, and the first and second portions of the engine body c050 may respectively define one or more piston chambers c112 respectively configured to receive respective portions of the one or more piston assemblies c090. The one or more generator assemblies c092 may be installed in the one or more generator housings defined by the second portion of the engine body c050. A first portion of the one or more piston assemblies c090 may be installed in the one or more piston chambers c112 defined by first portion of the engine body c050 and/or a second portion of the one or more piston assemblies c090 may be installed in the one or more piston chambers defined by the third portion of the engine body c050. The respective monolithic bodies and/or monolithic body-segments may be operably coupled to one another, enclosing the one or more generator assemblies c092 and the one or more piston assemblies c090 therein.

The second monolithic body or monolithic body-segment may define one or more regenerator bodies and/or one or more chiller bodies corresponding to the first heater body c100. Additionally, or in the alternative, one or more regenerator bodies and/or one or more chiller bodies corresponding to the first heater body c100 may be operably coupled or operably couplable to the second monolithic body or monolithic body-segment.

The third monolithic body or monolithic body-segment may define one or more regenerator bodies and/or one or more chiller bodies corresponding to the second heater body c100. Additionally, or in the alternative, one or more regenerator bodies and/or one or more chiller bodies corresponding to the second heater body c100 may be operably coupled or operably couplable to the third monolithic body or monolithic body-segment.

As shown in FIG. 1.8.1E, an engine assembly c900 may include a first monolithic body or monolithic body-segment that includes a first heater body c100 and a first portion of an engine body c050, a second monolithic body or monolithic body-segment that includes a second portion of an engine body c050, a third monolithic body or monolithic body-segment that includes a third portion of an engine body c050, and a fourth monolithic body or monolithic body-segment that includes a second heater body c100 and a fourth portion of an engine body c050. The second portion of the engine body c050 may define one or more generator housings respectively configured to receive a first portion one or more generator assemblies c092. Additionally, or in the alternative, the third portion of the engine body c050 may define one or more generator housings respectively configured to receive a second portion of one or more generator assemblies c092. The second and third portions of the engine body c050 may additionally define at least a portion of one or more piston chambers c112 respectively configured to receive respective portions of the one or more piston assemblies c090. Additionally, or in the alternative, the first portion of the engine body c050 and/or the fourth portion of the engine body c050 may define at least a portion of one or more piston chambers c112 respectively configured to receive respective portions of the one or more piston assemblies c090. A first portion of the one or more generator assemblies c092 may be respectively installed in the one or more generator housings defined by the second portion of the engine body c050 and/or a second portion of the one or more generator assemblies c092 may be respectively installed in the one or more generator housings defined by the third portion of the engine body c050. A first portion of one or more piston assemblies c090 may be respectively installed in the one or more piston chambers c112 defined by the second portion of the engine body c050 and/or a second portion of the one or more piston assemblies c090 may be respectively installed in the one or more piston chambers c112 defined by the third portion of the engine body c050. A third portion of the one or more piston assemblies c090 may be respectively installed in the one or more piston chambers c112 defined by the first portion of the engine body c050 and/or a fourth portion of the one or more piston assemblies c090 may be respectively installed in the one or more piston chambers c112 defined by the fourth portion of the engine body c050. The respective monolithic bodies and/or monolithic body-segments may be operably coupled to one another, enclosing the one or more generator assemblies c092 and the one or more piston assemblies c090 therein.

As shown in FIG. 1.8.1F, an engine assembly c900 may include only one heater body c100. For example, an engine assembly c900 may include a first monolithic body or monolithic body-segment that includes a heater body c100 and a first portion of an engine body c050, a second monolithic body or monolithic body-segment that includes a second portion of an engine body c050, and a third monolithic body or monolithic body-segment that includes a third portion of an engine body c050. The second portion of the engine body c050 may define one or more generator housings respectively configured to receive one or more generator assemblies c092, and the first and second portions of the engine body c050 may respectively define one or more piston chambers c112 configured to receive respective portions of the one or more piston assemblies c090. The one or more generator assemblies c092 may be respectively installed in the one or more generator assemblies defined by the second portion of the engine body c050. A first portion of one or more piston assemblies c090 may be respectively installed in the one or more piston chambers c112 defined by the first portion of the engine body c050 and/or a second portion of the one or more piston assemblies c090 may be respectively installed in the one or more piston chambers c112 defined by the third portion of the engine body c050. The respective monolithic bodies and/or monolithic body-segments may be operably coupled to one another, enclosing the one or more generator assemblies c092 and the one or more piston assemblies c090 therein.

In some embodiments, it may be advantageous for the monolithic body or monolithic body-segment that defines a heater body c100 to also define the one or more regenerator bodies corresponding to the heater body. When the heater body c100 and corresponding one or more regenerator bodies respectively define a portion of the same monolithic body or monolithic body-segment, working-fluid pathways c110 defined by the heater body c110 may fluidly communicate with the corresponding one or more regenerator bodies while minimizing fluid couplings.

In some embodiments, it may be advantageous for a monolithic body or monolithic body-segment that defines one or more generator housing to also define one or more chiller bodies corresponding to the one or more generator assemblies c092 respectively corresponding to the one or more generator housings. For example, this may allow for cooling fluid pathways to be defined by such monolithic body or monolithic body-segment while minimizing fluid couplings associated with the one or more chiller bodies.

The monolithic bodies and/or monolithic body-segments depicted in FIGS. 1.8.1A through 1.8.1F may respectively reflect one or more additively manufactured monolithic bodies or additively manufactured monolithic body-segments. In some embodiments a monolithic body or a monolithic body-segment may be additively manufactured in a continuous process, such as to provide a single monolithic structure void of any seams, joints, or the like characteristic of separately fabricated components. Additionally, or in the alternative, a monolithic body or a monolithic body-segment may include a plurality of separately fabricated components, which may be formed using an additive manufacturing technology or other suitable fabrication technologies. For example, a heater body c100 and/or an engine c002 may additionally or alternatively include a plurality of components formed using a fabrication technology other than additive manufacturing, and such separately components may be operably coupled or operably couplable to one another and/or to one or more monolithic bodies and/or a monolithic body-segments. Other suitable fabrication technologies that may be used to manufacture various components of the presently disclosed heater bodies c100 and closed-cycle engines c002 include, without limitation, forming (e.g., rolling, stamping, joining, etc.), extruding (e.g., sheet extruding), subtractive manufacturing (e.g., machining, drilling, laser cutting, etc.), forging or casting, as well as a combination thereof, or any other manufacturing technology.

Still referring to FIGS. 1.8.1A through 1.8.1F, an exemplary engine assembly c900 may include a first heater body c902 and a first engine body c904.

As shown, for example, in FIG. 1.8.1A a first monolithic body c908 may include a first heater body c902, a first engine body c904, a first piston body c916, and a first machine body c918. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 and a first machine body c918. The first piston body c916 may define at least a portion of a piston chamber c112. The piston chamber c112 may be configured to receive at least a portion of a piston assembly c090. The first machine body c918 may define at least a portion of a generator housing c919. The generator housing c919 may be configured to receive at least a portion of a load device c092. The first piston body c916 may define a third portion c920 of the first monolithic body c908 and/or a third portion c920 of the first engine body c904. The first machine body c918 may define a fourth portion c922 of the first monolithic body c908 and/or a fourth portion c922 of the first engine body c904.

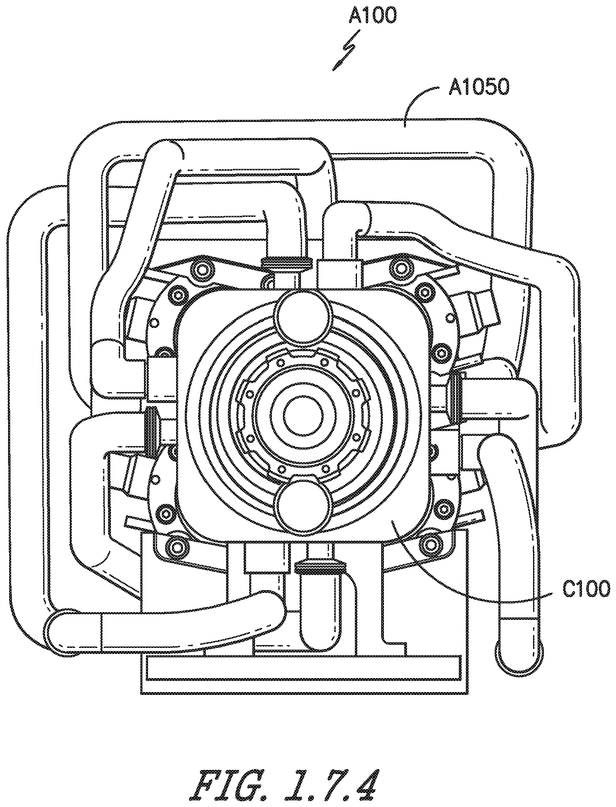

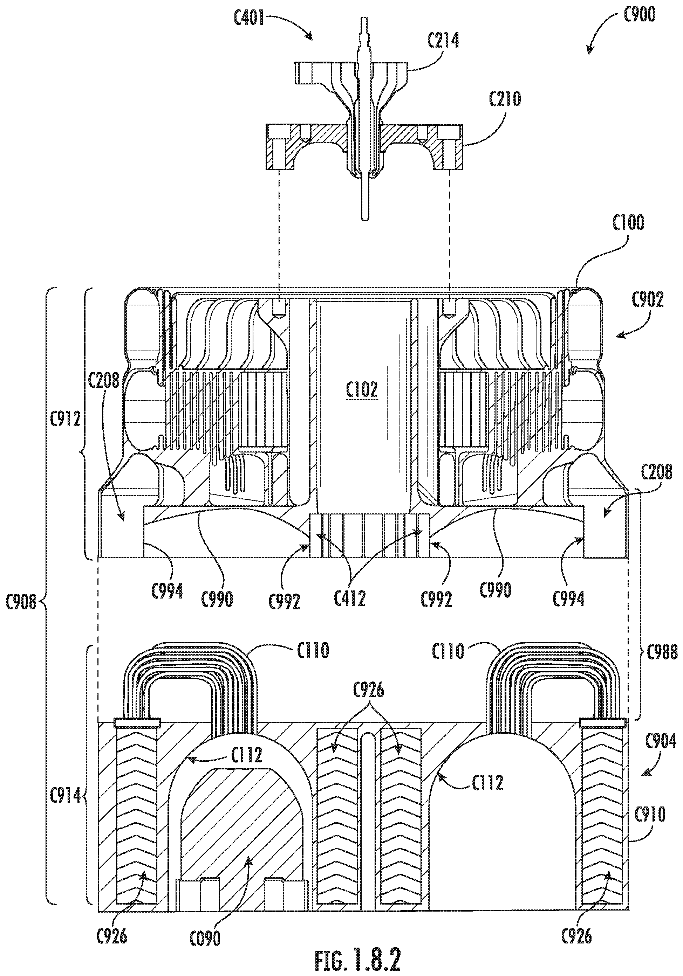

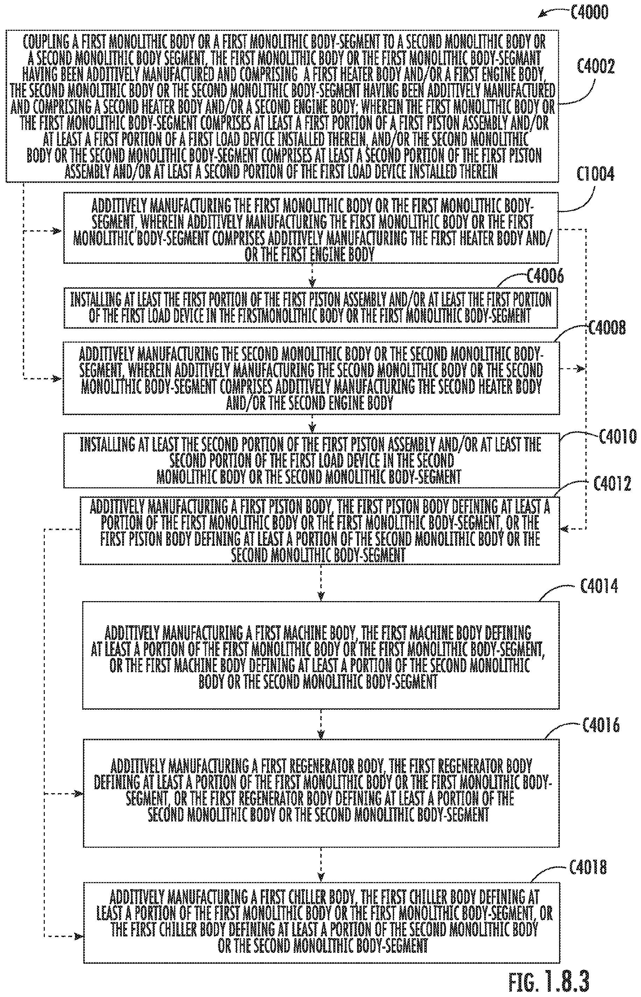

The first heater body c902 and/or the first engine body c904 may include a first regenerator body c926 and/or a first chiller body c928. For example, the first piston body c916 may include a first regenerator body c926. The first heater body c902 and/or the first engine body c904 may additionally or alternatively include a first chiller body c928. The first regenerator body c926 may define a portion of the first piston body c916 or at least a portion of a monolithic body-segment operably coupled or operably couplable to the first piston body c916. Additionally, or in the alternative, the first chiller body c928 may define a portion of the first piston body c916 or at least a portion of a monolithic body-segment operably coupled or operably couplable to the first piston body c916. As shown, for example, in FIG. 1. 8.1A, the first regenerator body c926 may define a fifth portion of the first monolithic body c908 and/or the first chiller body c928 may define a sixth portion of the first monolithic body c908.

Still referring to FIGS. 1.8.1A through 1.8.1F, an exemplary engine assembly c900 may additionally or alternatively include a second heater body c930 and/or a second engine body c932. As shown, for example, in FIG. 1.8.1A, the second heater body c930 may define a first portion c934 of a second monolithic body c936. The second engine body c932 may define a second portion c938 of the second monolithic body c936. The second monolithic body c936 may be operably coupled or operably couplable to the first monolithic body c908 and/or the first engine body c904.

As shown in FIG. 1.8.1A, the second engine body c932 may include a second piston body c944. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090. The second piston body c944 may be operably coupled or operably couplable to the first monolithic body c908 and/or the first the first engine body c904.

In some embodiments, the second piston body c944 may include a second regenerator body c952 and/or a second chiller body c954. For example, the second heater body c930 and/or the second engine body c932 may include a second regenerator body c952. The second heater body c930 and/or the second engine body c932 may additionally or alternatively include a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944. As shown, for example, in FIG. 1.8.1A, the second regenerator body c952 may define a fifth portion of the second monolithic body c936 and/or the second chiller body c928 may define a sixth portion of the second monolithic body c936. Additionally, or in the alternative, the second regenerator body c952 and/or the second chiller body c954 may define a monolithic body-segment operably coupled or operably couplable to the second monolithic body c936.

Now referring to FIG. 1.8.1B, in some embodiments, an engine assembly c900 may include a plurality of monolithic body-segments. For example, as shown in FIG. 1.8.1B, an engine assembly may include a first heater body c902, a first engine body c904, a second heater body c940, a second engine body c942, and a third engine body c960. As shown, a first heater body c902 may define at least a portion of a first monolithic body-segment c912. The first engine body c904 may define at least a portion of a second monolithic body-segment c914. The first engine body c904 may include a first piston body c916, and the first piston body c916 may define at least a portion of the second monolithic body-segment c914. The first piston body c916 may define at least a portion of a piston chamber c112. The piston chamber c112 may be configured to receive at least a portion of a piston assembly c090. The second monolithic body-segment c914 (e.g., the first piston body c916) may be operably coupled or operably couplable to the first monolithic body-segment c912 (e.g., the first heater body c902). For example, the second monolithic body-segment c914 (e.g., the first engine body c904) may be operably coupled or operably couplable to the first heater body c902.

The first engine body c904 may include a first regenerator body c926 and/or a first chiller body c928. The first regenerator body c926 and/or the first chiller body c928 may define at least a portion of the second monolithic body-segment c914. Additionally, or in the alternative, the first regenerator body c926 and/or the first chiller body c928 may define a monolithic body-segment operably coupled or operably couplable to the first monolithic body c908 or the second monolithic body-segment c914.

Still referring to FIG. 1.8.1B, an exemplary engine assembly c900 may additionally or alternatively include a second heater body c930 and/or a second engine body c932. As shown, a second heater body c930 may define at least a portion of a fourth monolithic body-segment c940. Additionally, or in the alternative, a second engine body c932 may define at least a portion of a fifth monolithic body-segment c942. A second piston body c944 may define at least a portion of the fifth monolithic body-segment c942. The fifth monolithic body-segment c942 may be operably coupled or operably couplable to the fourth monolithic body-segment c940. For example, the fifth monolithic body-segment c942 (e.g., the second engine body c932 or the second piston body c944) may be operably coupled or operably couplable to the second heater body c930.

The second engine body c932 may include a second regenerator body c952 and/or a second chiller body c954. The second regenerator body c952 and/or the second chiller body c954 may define at least a portion of the fifth monolithic body-segment c942. Additionally, or in the alternative, the second regenerator body c952 and/or the second chiller body c954 may define a monolithic body-segment operably coupled or operably couplable to the second monolithic body c936 or the fifth monolithic body-segment c942. In some embodiments, the second piston body c944 may include a second regenerator body c952 and/or a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944.

An exemplary engine assembly c900 may additionally or alternatively include a third engine body c960. The third engine body c960 may include a first machine body c918, and the first machine body c918 may define at least a portion of a third monolithic body-segment c924. The first machine body c918 may define at least a portion of a generator housing c919. The generator housing c919 may be configured to receive at least a portion of a load device c092. The third monolithic body-segment c924 (e.g., the first machine body c918) may be operably coupled or operably couplable to the second monolithic body-segment c914 (e.g., the first piston body c916).

Now referring to FIG. 1.8.1C, in some embodiments, an engine assembly c900 may include a plurality of monolithic bodies or monolithic body-segments, such as a first monolithic body or monolithic body-segment c908 defining a first heater body c902 and a first engine body c904, and a second monolithic body or monolithic body-segment c936 defining a second heater body c930 and a second engine body c932. A first monolithic body c908 may include a first heater body c902, a first engine body c904, a first piston body c916, and a first machine body c918. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 and a first machine body c918. The first piston body c916 may define a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090. The first machine body c918 may define a fourth portion c922 of the first monolithic body c908 and/or a fourth portion c922 of the first engine body c904. The first machine body c918 may define at least a portion of a generator housing c919. The generator housing c919 may be configured to receive at least a portion of a load device c092.

The first heater body c902 and/or the first engine body c904 may include a first regenerator body c926 and/or a first chiller body c928. For example, the first piston body c916 may include a first regenerator body c926. The first heater body c902 and/or the first engine body c904 may additionally or alternatively include a first chiller body c928. The first regenerator body c926 may define a portion of the first piston body c916 or at least a portion of a monolithic body-segment operably coupled or operably couplable to the first piston body c916. Additionally, or in the alternative, the first chiller body c928 may define a portion of the first piston body c916 or at least a portion of a monolithic body-segment operably coupled or operably couplable to the first piston body c916. The first regenerator body c926 may define a fifth portion of the first monolithic body c908 and/or the first chiller body c928 may define a sixth portion of the first monolithic body c908.

Still referring to FIGS. 1.8.1C, an exemplary engine assembly c900 may additionally or alternatively include a second heater body c930 and/or a second engine body c932. The second heater body c930 may define a first portion c934 of a second monolithic body c936. The second engine body c932 may define a second portion c938 of the second monolithic body c936. The second monolithic body c936 may be operably coupled or operably couplable to the first monolithic body c908 and/or the first engine body c904.

The second engine body c932 may include a second piston body c944 and/or a second machine body c946. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090. The second machine body c946 may define a fourth portion c950 of the second monolithic body c936 and/or a fourth portion c950 of the second engine body c932. The second machine body c946 may define at least a portion of a generator housing c919. The generator housing c919 may be configured to receive at least a portion of a load device c092. In some embodiments, the first machine body c918 may define a first portion c956 of a generator housing c919 and the second machine body c946 may define a second portion c958 of the generator housing c919. The first portion c956 of the generator housing c919 may be operably coupled or operably couplable to the second portion c958 of the generator housing c919.

In some embodiments, the second piston body c944 may include a second regenerator body c952 and/or a second chiller body c954. For example, the second heater body c930 and/or the second engine body c932 may include a second regenerator body c952. The second heater body c930 and/or the second engine body c932 may additionally or alternatively include a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944. The second regenerator body c952 may define a fifth portion of the second monolithic body c936 and/or the second chiller body c928 may define a sixth portion of the second monolithic body c936. Additionally, or in the alternative, the second regenerator body c952 and/or the second chiller body c954 may define a monolithic body-segment operably coupled or operably couplable to the second monolithic body c936.

Now referring to FIG. 1.8.1D, in some embodiments, an engine assembly c900 may include a plurality of monolithic bodies or monolithic body-segments, such as a first monolithic body or monolithic body-segment c908 defining a first heater body c902 and a first engine body c904, a second monolithic body or monolithic body-segment c936 defining a second heater body c930 and a second engine body c932, and a third monolithic body or monolithic body-segment c962 defining a third engine body c960.

A first monolithic body c908 may include a first heater body c902, a first engine body c904, and a first piston body c916. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 defining a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090.

The first heater body c902 and/or the first engine body c904 may include a first regenerator body c926. For example, the first piston body c916 may include a first regenerator body c926 and/or a first chiller body c928. The first heater body c902 and/or the first engine body c904 may additionally or alternatively include a first chiller body c928. The first regenerator body c926 may define a portion of the first piston body c916 or at least a portion of a monolithic body-segment operably coupled or operably couplable to the first piston body c916. Additionally, or in the alternative, the first chiller body c928 may define a portion of the first piston body c916 or at least a portion of a monolithic body-segment operably coupled or operably couplable to the first piston body c916. The first regenerator body c926 may define a fifth portion of the first monolithic body c908 and/or the first chiller body c928 may define a sixth portion of the first monolithic body c908.

Still referring to FIGS. 1.8.1D, an exemplary engine assembly c900 may additionally or alternatively include a second heater body c930 and/or a second engine body c932. The second heater body c930 may define a first portion c934 of a second monolithic body c936. The second engine body c932 may define a second portion c938 of the second monolithic body c936.

The second engine body c932 may include a second piston body c944. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090.

In some embodiments, the second piston body c944 may include a second regenerator body c952 and/or a second chiller body c954. For example, the second heater body c930 and/or the second engine body c932 may include a second regenerator body c952. The second heater body c930 and/or the second engine body c932 may additionally or alternatively include a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944. The second regenerator body c952 may define a fifth portion of the second monolithic body c936 and/or the second chiller body c928 may define a sixth portion of the second monolithic body c936. Additionally, or in the alternative, the second regenerator body c952 and/or the second chiller body c954 may define a monolithic body-segment operably coupled or operably couplable to the second monolithic body c936.

As shown, for example, in FIG. 1.8.1D, in some embodiments, an engine assembly c900 may include a third engine body c960. The third engine body c960 may define at least a portion of a third monolithic body or monolithic body-segment c962. As shown in FIG. 1.8.1D, the third engine body c960 may be operably couplable to the first engine body c904 and/or the second engine body c932. The third engine body c960 may include a third machine body c964. The third machine body c964 may define a first portion c972 of the third monolithic body c962 or at least a portion of a monolithic body-segment. The third machine body c964 may define at least a portion of a generator housing c919. The generator housing c919 may be configured to receive at least a portion of a load device c092. The third machine body c964 may be operably coupled or operably couplable to the first engine body c904 and/or the second engine body c932.

Now referring to FIG. 1.8.1E, in some embodiments, an engine assembly c900 may include a plurality of monolithic bodies or monolithic body-segments, such as a first monolithic body or monolithic body-segment c908 defining a first heater body c902 and a first engine body c904, a second monolithic body or monolithic body-segment c936 defining a second heater body c930 and a second engine body c932, a third monolithic body or monolithic body-segment c962 defining a third engine body c960, and a fourth monolithic body or monolithic body-segment c978 defining a fourth engine body c976.

A first monolithic body c908 may include a first heater body c902, a first engine body c904, and a first piston body c916. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 defining a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090.

The first heater body c902 and/or the first engine body c904 may include a first regenerator body c926. For example, the first piston body c916 may include a first regenerator body c926. The first regenerator body c926 may define a portion of the first piston body c916 or at least a portion of a monolithic body-segment operably coupled or operably couplable to the first piston body c916. The first regenerator body c926 may define a fifth portion of the first monolithic body c908.

Still referring to FIGS. 1.8.1E, an exemplary engine assembly c900 may additionally or alternatively include a second heater body c930 and/or a second engine body c932. The second heater body c930 may define a first portion c934 of a second monolithic body c936. The second engine body c932 may define a second portion c938 of the second monolithic body c936.

The second engine body c932 may include a second piston body c944. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090.

In some embodiments, the second piston body c944 may include a second regenerator body c952. For example, the second heater body c930 and/or the second engine body c932 may include a second regenerator body c952. The second regenerator body c952 may define a portion of the second piston body c944 or at least a portion of a monolithic body-segment operably coupled or operably couplable to the second piston body c944. The second regenerator body c952 may define a fifth portion of the second monolithic body c936 and/or. Additionally, or in the alternative, the second regenerator body c952 may define a monolithic body-segment operably coupled or operably couplable to the second monolithic body c936.

As shown in FIG. 1.8.1E, in some embodiments, an engine assembly c900 may include a third engine body c960 and a fourth engine body c976. The third engine body c960 may define at least a portion of a third monolithic body or monolithic body-segment c962. The third engine body c960 may be operably coupled or operably couplable to the first engine body c904 and/or the fourth engine body c976. The third engine body c960 may include a third machine body c964 and/or a third piston body c966. The third machine body c964 may define a first portion c972 of the third monolithic body c962 or at least a portion of a monolithic body-segment. The third piston body c966 may define a second portion c974 of the third monolithic body c962 or at least a portion of a monolithic body-segment. The third machine body c964 may be operably coupled or operably couplable to the fourth engine body c976 and/or the third piston body c966 may be operably coupled or operably couplable to the first engine body c904 (e.g., the first piston body c916).

The fourth engine body c976 may define at least a portion of a fourth monolithic body c978 or at least a portion of a monolithic body-segment operably coupled or operably couplable to the third engine body c960 and/or the second engine body c932. The fourth engine body c976 may include a fourth machine body c980 and/or a fourth piston body c982. The fourth machine body c980 may define a first portion c984 of the fourth monolithic body c978 or at least a portion of a monolithic body-segment. The fourth piston body c982 may define a second portion c986 of the fourth monolithic body c978 or at least a portion of a monolithic body-segment. The fourth machine body c980 may be operably coupled or operably couplable to the third engine body c960 (e.g., the third machine body c964) and/or the fourth piston body c982 may be operably coupled or operably couplable to the second engine body c932 (e.g., the second piston body c944). The third machine body c960 may define a first portion of a generator housing c919 and the fourth machine body c980 may define a second portion of the generator housing c919.

The first piston body c916 may be operably coupled or operably couplable to the third piston body c966. The first piston body c916 may define a first portion c968 of a first piston chamber c112 and the third piston body c966 may define a second portion c970 of the first piston chamber c112. The second piston body c944 may be operably coupled or operably couplable to the fourth piston body c982. The second piston body c944 may define a first portion c968 of a second piston chamber c112 and the fourth piston body c982 may define a second portion c970 of the second piston chamber c112.

The third piston body c966 may include the first chiller body c928 and/or the fourth piston body c982 may include the second chiller body c954. The first chiller body c928 may define at least a portion of the third monolithic body c962 or at least a portion of a monolithic body-segment operably coupled or operably couplable to the third piston body c966. The second chiller body c954 may define at least a portion of the fourth monolithic body c978 or at least a portion of a monolithic body-segment operably coupled or operably couplable to the fourth piston body c982.

Now referring to FIG. 1.8.1F, in some embodiments, an engine assembly c900 may include a plurality of monolithic bodies or monolithic body-segments, such as a first monolithic body or monolithic body-segment c908 defining a first heater body c902 and a first engine body c904, a second monolithic body or monolithic body-segment c936 defining a second engine body c932, and a third monolithic body or monolithic body-segment c962 defining a third engine body c960.

A first monolithic body c908 may include a first heater body c902, a first engine body c904, and a first piston body c916. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 defining a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090.

The first heater body c902 and/or the first engine body c904 may include a first regenerator body c926. For example, the first piston body c916 may include a first regenerator body c926. The first regenerator body c926 may define a portion of the first piston body c916 or at least a portion of a monolithic body-segment operably coupled or operably couplable to the first piston body c916. The first regenerator body c926 may define a fifth portion of the first monolithic body c908.

The second engine body c932 may define a second portion c938 of the second monolithic body c936. The second monolithic body c936 may be operably coupled or operably couplable to the third engine body c960.

The second engine body c932 may include a second piston body c944 and/or a second machine body c946. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090. The second machine body c946 may define a fourth portion c950 of the second monolithic body c936 and/or a fourth portion c950 of the second engine body c932. The second machine body c946 may define at least a portion of a generator housing c919. The generator housing c919 may be configured to receive at least a portion of a load device c092. In some embodiments, the first machine body c918 may define a first portion c956 of a generator housing c919 and the second machine body c946 may define a second portion c958 of the generator housing c919. The first portion c956 of the generator housing c919 may be operably coupled or operably couplable to the second portion c958 of the generator housing c919.

The third engine body c960 and a fourth engine body c976. The third engine body c960 may define at least a portion of a third monolithic body or monolithic body-segment c962. The third engine body c960 may be operably coupled or operably couplable to the first engine body c904 and/or the fourth engine body c976. The third engine body c960 may include a third machine body c964 and/or a third piston body c966. The third machine body c964 may define a first portion c972 of the third monolithic body c962 or at least a portion of a monolithic body-segment. The third piston body c966 may define a second portion c974 of the third monolithic body c962 or at least a portion of a monolithic body-segment. The third machine body c964 may be operably coupled or operably couplable to the fourth engine body c976 and/or the third piston body c966 may be operably coupled or operably couplable to the first engine body c904 (e.g., the first piston body c916). The first piston body c916 may be operably coupled or operably couplable to the third piston body c966. The first piston body c916 may define a first portion c968 of a first piston chamber c112 and the third piston body c966 may define a second portion c970 of the first piston chamber c112. The third piston body c966 may include the first chiller body c928. The first chiller body c928 may define at least a portion of the third monolithic body c962 or at least a portion of a monolithic body-segment operably coupled or operably couplable to the third piston body c966.

Now referring to FIG. 1.8.2, an exemplary engine assembly c900 may include a one or more engine-working fluid heat exchanger bodies c988. The one or more engine-working fluid heat exchanger bodies c988 may define at least a portion of the first heater body c902 and/or at least a portion of the first engine body c904. A working-fluid heat exchanger body c988 may include a plurality of working-fluid pathways c110 fluidly communicating between a piston body and a regenerator body (e.g., between a first piston body c916 and a first regenerator body c926, or between a second piston body c944 and a second regenerator body c952). For example, an engine body c904 may include a first piston body c916, a first regenerator body c926, and a working-fluid heat exchanger body c988 that includes a plurality of working-fluid pathways c110 fluidly communicating between the first piston body c916 and the first regenerator body c926. The working-fluid heat exchanger body c988 may define at least a portion of the first heater body c902 and/or at least a portion of the first engine body c904. The working-fluid heat exchanger body c988 may additionally or alternatively include a heating chamber body c990.

In some embodiments, the first heater body c902 may define at least a portion of a first monolithic-body segment c912 and/or the first engine body c904 may define at least a portion of a second monolithic-body segment c914. The first heater body c902 may include at least a portion of the heating chamber body c990. The heating chamber body c990 may define at least a portion of the first monolithic body-segment c912. The second monolithic body-segment c914 may include at least a portion of the working-fluid heat exchanger body c988, at least a portion of the first piston body c916, and/or at least a portion of the first regenerator body c926. The working-fluid heat exchanger body c988 may define at least a portion of the second monolithic body-segment c914. The heating chamber body c990 may surround at least a portion of the working-fluid heat exchanger body c988. For example, the heating chamber body c990 may define at least a portion of a recirculation pathway c104 surrounding at least a portion of the working-fluid heat exchanger body c988. The heating chamber body c990 may fluidly communicate at an upstream portion (e.g., at a radially inward portion) with a heating fluid inlet c992. For example, the heating chamber body c990 may fluidly communicate with a combustion chamber c102, such as with a combustion chamber outlet c412. The heating chamber body c990 may fluidly communicate at a downstream portion (e.g., at a radially outward portion) with a heating fluid outlet c994. For example, the heating chamber body c990 may fluidly communicate with a recirculation annulus c208.

Referring again to FIGS. 1.8.1A through 1.8.1F, exemplary engine assemblies c900 may include one or more fuel injector bodies c401. An exemplary fuel injector body c401 may include one or more combustor caps c210. For example, an engine assembly c900 may include a first fuel injector body c401. The first fuel injector body c401 may include a first combustor cap c210 monolithically integrated with the first heater body c902. Alternatively, the first fuel injector body c401 may include a first combustor cap c210 operably coupled or operably couplable to the first heater body c902. Additionally, or in the alternative, an engine assembly c900 may include a second fuel injector body c401. The second fuel injector body may include a second combustor cap c210 monolithically integrated with the second heater body c930. Alternatively, the second fuel injector body c401 may include a second combustor cap c210 operably coupled or operably couplable to the second heater body c930. A first fuel nozzle c214 may be monolithically integrated with first combustor cap c210. Alternatively, a first fuel nozzle c214 may be operably coupled or operably couplable to the first combustor cap c210. Additionally, or in the alternative, a second fuel nozzle c214 may be monolithically integrated with second combustor cap c210. Alternatively, a second fuel nozzle c214 may be operably coupled or operably couplable to the second combustor cap c210. A first piston assembly c090 may be operably inserted or operably insertable into a first piston chamber c112 and/or a second piston assembly c090 may be operably inserted or operably insertable into a second piston chamber c112. A first load device c092 may be operably inserted or operably insertable into a first generator housing c919 and/or a second load device c092 may be operably inserted or operably insertable into a second generator housing c919.

Now turning to FIG. 1.8.3, exemplary methods of building an engine assembly c900 will be described. As shown in FIG. 1.8.3, an exemplary method c4000 may include, at block c4002, coupling a first monolithic body c908 or a first monolithic body-segment c912 to a second monolithic body c936 or a second monolithic body segment c914. The first monolithic body c908 or the first monolithic body-segment c914 may have been additively manufactured and/or the second monolithic body c936 or the second monolithic body-segment c914 may have been additively manufactured. The first monolithic body c908 or the first monolithic body-segment c912 may include a first heater body c902 and/or a first engine body c904. The second monolithic body c936 or the second monolithic body-segment c914 may include a second heater body c930 and/or a second engine body c932. The first monolithic body c908 or the first monolithic body-segment c912 may include a first piston assembly c090 and/or a first load device c092 installed therein. Additionally, or in the alternative, the second monolithic body c936 or the second monolithic body-segment c914 may include the first piston assembly c090 and/or the first load device c092 installed therein.

An exemplary method 1000 may include, at block c4004, additively manufacturing the first monolithic body c908 or the first monolithic body-segment c912. Additively manufacturing the first monolithic body c908 or the first monolithic body-segment c912 may include additively manufacturing the first heater body c902 and/or the first engine body c904. An exemplary method 1000 may include, at block c4006, installing the first piston assembly c090 and/or the first load device c092 in the first monolithic body c908 or the first monolithic body-segment c912. For example, the method 1000 may include installing the first piston assembly c090 in the first heater body c902 and/or in the first engine body c904. Additionally, or in the alternative, the method 1000 may include installing the first load device c092 in the first heater body c902 and/or in the first engine body c904.

An exemplary method 1000 may include, at block c4008, additively manufacturing the second monolithic body c936 or the second monolithic body-segment c914. Additively manufacturing the second monolithic body c936 or the second monolithic body-segment c914 may include additively manufacturing the second heater body c930 and/or the second engine body c932. An exemplary method 1000 may include, at block c4010, installing the first piston assembly c090 and/or the first load device c092 in the second monolithic body c936 or the second monolithic body-segment c914. For example, the method 1000 may include installing the first piston assembly c090 in the second heater body c930 and/or the second engine body c932. Additionally, or in the alternative, the method 1000 may include installing the first load device c092 in the second heater body c930 and/or the second engine body c932.

An exemplary method 1000 may include, at block c4012, additively manufacturing a first piston body c916. The first piston body c916 may define at least a portion of the first monolithic body c908 or at least a portion of the first monolithic body-segment c912. Additionally, or in the alternative, the first piston body c916 may define at least a portion of the second monolithic body c936 or at least a portion of the second monolithic body-segment c914. The exemplary method c4000 may additionally or alternatively include installing the first piston assembly c090 in the first piston body c916.

The exemplary method 1000 may additionally or alternatively include, at block c4014, additively manufacturing a first machine body c922. The first machine body c922 may define at least a portion of the first monolithic body c908 or at least a portion of the first monolithic body-segment c912. Additionally, or in the alternative, the first machine body c922 may define at least a portion of the second monolithic body c936 or at least a portion of the second monolithic body-segment c912. The exemplary method c4000 may additionally or alternatively include installing the first load device c092 in the first machine body c922.

The exemplary method 1000 may additionally or alternatively include, at block c4016, additively manufacturing a first regenerator body c926. The first regenerator body c926 may define at least a portion of the first monolithic body c908 or at least a portion of the first monolithic body-segment c912. Additionally, or in the alternative, the first regenerator body c926 may define at least a portion of the second monolithic body c936 or at least a portion of the second monolithic body-segment c912. The exemplary method c4000 may additionally or alternatively include installing the first regenerator body c926 in the first monolithic body c908 or at least a portion of the first monolithic body-segment c912.

The exemplary method 1000 may additionally or alternatively include, at block c4018, additively manufacturing a first chiller body c928. The first chiller body c928 may define at least a portion of the first monolithic body c908 or at least a portion of the first monolithic body-segment c912. Additionally, or in the alternative, the first chiller body c928 may define at least a portion of the second monolithic body c936 or at least a portion of the second monolithic body-segment c912. The exemplary method c4000 may additionally or alternatively include installing the first chiller body c928 in the first monolithic body c908 or at least a portion of the first monolithic body-segment c912.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components.

Although additive manufacturing technology is described herein as providing fabrication of complex objects by building objects point-by-point, layer-by-layer, typically in a vertical direction, other methods of fabrication are possible and are within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes. As another example, embodiments of the present disclosure may include selectively depositing a binder material to chemically bind portions of the layers of powder together to form a green body article. After curing, the green body article may be pre-sintered to form a brown body article having substantially all of the binder removed, and fully sintered to form a consolidated article.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Laser Sintering (DLS), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Laser Melting (DLM), Direct Selective Laser Melting (DSLM), Selective Laser Melting (SLM), Direct Metal Laser Melting (DMLM), Binder Jetting (BJ), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel® available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" or "binding" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process, or additionally with a binder process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The plurality of successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 $\mu$m and 200 $\mu$m, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 $\mu$m, utilized during the additive formation process.

In addition, utilizing an additive process, the surface finish and features of the components may vary as need depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

After fabrication of the component is complete, various post-processing procedures may be applied to the component. For example, post processing procedures may include removal of excess powder by, for example, blowing or vacuuming. Other post processing procedures may include a stress relief process. Additionally, thermal, mechanical, and/or chemical post processing procedures can be used to finish the part to achieve a desired strength, surface finish, a decreased porosity decreasing and/or an increased density (e.g., via hot isostatic pressing), and other component properties or features.

It should be appreciated that one skilled in the art may add or modify features shown and described herein to facilitate manufacture of the system A10 provided herein without undue experimentation. For example, build features, such as trusses, grids, build surfaces, or other supporting features, or material or fluid ingress or egress ports, may be added or modified from the present geometries to facilitate manufacture of embodiments of the system A10 based at least on a desired manufacturing process or a desired particular additive manufacturing process.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While certain embodiments of the present disclosure may not be limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process, reduce potential leakage, reduce thermodynamic losses, improve thermal energy transfer, or provide higher power densities. For example, the integral formation reduces the number of separate parts that must be assembled, thus reducing associated time, overall assembly costs, reduces potential leakage pathways, or reduces potential thermodynamic losses. Additionally, existing issues with, for example, leakage, may advantageously be reduced. Still further, joint quality between separate parts may be addressed or obviated by the processes described herein, such as to desirably reduce leakage, assembly, and improve overall performance.

Also, the additive manufacturing methods described above provide much more complex and intricate shapes and contours of the components described herein to be formed with a very high level of precision. For example, such components may include thin additively manufactured layers, cross sectional features, and component contours. As another example, additive manufacturing may provide heat exchanger surface areas, volumes, passages, conduits, or other features that may desirably improve heat exchanger efficiency or performance, or overall engine or system performance. In addition, the additive manufacturing process provides the manufacture of a single component having different materials such that different portions of the component may exhibit different performance characteristics. The successive, additive steps of the manufacturing process provide the construction of these novel features. As a result, the components described herein may exhibit improved functionality and reliability.

## Chapter 1.9 - Exemplary Embodiments of the System and Engine

Closed-cycle engine arrangements, such as Stirling engines, generally define a ratio of power output in Watts to a product of mean average engine working fluid pressure in Pascals, swept volume of the engine working fluid in cubic meters, and engine cycle frequency in Hertz (i.e., operating frequency of a piston assembly), otherwise referred to as a Beale number. A maximum operating Beale number for Stirling engines, depending on operating temperature and engine performance, generally ranges between 0.05 and 0.15. Referring to certain embodiments of the system A10 shown and described herein, features, arrangements, ratios, or methods of manufacture and assembly shown and described herein provide the engine A100 to define a first operational parameter in which the first operational parameter defines a maximum operational Beale number greater than or equal to 0.10. In another embodiment, the engine A100 defines a maximum operational Beale number greater than 0.15. In still another embodiment, the engine A100 defines a maximum operational Beale number greater than 0.20. In yet another embodiment, the engine A100 defines a maximum operational Beale number greater than 0.23. In various embodiments, the engine A100 defines a maximum operational Beale number less than or equal to 0.35. In still various embodiments, the engine A100 defines a maximum operational Beale number less than 0.30. In one embodiment, embodiments of the engine A100 shown and described herein define a maximum operational Beale number between 0.10 and 0.35, inclusive. In still various embodiments, the engine A100 defines a maximum operational Beale number between 0.15 and 0.30.

Embodiments of the system A10 and engine A100 provided herein provide greater Beale numbers via one or more of the features, arrangements, ratios, or methods of manufacture and assembly provided herein. Greater Beale numbers are provided at least in part via lower average engine working fluid pressure, lower engine cycle frequency of the piston assemblies A1010, or lower swept volume of the engine working fluid between fluidly connected chambers A221, A222, or combinations thereof, relative to the power output from the piston assembly A1010. Exemplary embodiments of the system A10 and engine A100 provided herein may produce a mechanical power output from the piston assembly A1010 up to 100 kilowatts (kW) or more.

Embodiments of the engine A100 provided herein may provide greater Beale numbers based at least in part on the plurality of heater conduits C110 collectively defining a desired heat transferability of thermal energy from the hot side heat exchanger C108 to the engine working fluid within the plurality of heater conduits C110. In various embodiments, the system A10 defines a ratio of maximum cycle volume of the engine working fluid to a collective volume of the plurality of heater conduits. The maximum cycle volume is the maximum volume of the engine working fluid within the expansion chamber A221, the compression chamber A222, and the fluid volume connected therebetween (e.g., the expansion chamber A221 of one piston body and the compression chamber A222 of another piston body connected by the walled conduit A1050). The minimum cycle volume is the minimum volume of the engine working fluid within the expansion chamber A221, the compression chamber A222, and the fluid volume connected therebetween (e.g., the expansion chamber A221 of one piston body and the compression chamber A222 of another piston body connected by the walled conduit A1050). The difference between the maximum cycle volume and the minimum cycle volume is the swept volume. In one embodiment, the ratio of maximum cycle volume of the engine working fluid to the volume of the passages within the plurality of heater conduits is between 2.5 and 25. For example, in various embodiments, the plurality of heater conduits together contain between two-fifths and one-twenty-fifth of the volume of the total volume of engine working fluid based on the maximum cycle volume. Stated differently, between two-fifths and one-twenty-fifth of the maximum cycle volume of the engine working fluid is receiving thermal energy from the hot side heat exchanger C108 during operation of the system A10.

In still various embodiments, embodiments of the engine A100 provided herein may provide greater Beale numbers based at least in part on a ratio of surface area of the plurality of heater conduits C110 versus volume of the working fluid within the plurality of heater conduits C110. For instance, the plurality of heater conduits may provide a range of surface area collectively within the plurality of heater conduits C110 relative to the volume of the engine working fluid within the plurality of heater conduits C110. The surface area may generally define the internal area of the heater conduits in direct fluid contact with the engine working fluid. In various embodiments, the ratio of surface area of the plurality of heater conduits to volume of the working fluid within the plurality of heater conduits is between 8 and 40. For example, in various embodiments, the plurality of heater conduits together defines a unit surface area within the conduits (i.e., surface area in fluid contact with the engine working fluid) between 8 and 40 times greater than a unit volume of the plurality of heater conduits.

In various embodiments, the internal surface area of the plurality of heater conduits is defined between a first opening and a second opening of the heater conduits C110. The first opening is in direct fluid communication with the expansion chamber A221, such as depicted at the piston chamber aperture C111 in FIG. 1.5.1. The second opening is in direct fluid communication with the walled conduit C1050, such as depicted at the opening C113 in FIG. 1.5.1. In one embodiment, the second opening is in direct fluid communication with the walled conduit C1050 including the regenerator body C800 defined therewithin. In another embodiment, the surface area of the plurality of heater conduits C110 defines an internal area of the heater conduits C110 corresponding to portions of the heater conduits C110 receiving thermal energy from the heater body C100. In another embodiment, the surface area of the plurality of heater conduits C110 defines an internal area of the heater conduits C110 extending from a first opening, such as defined at the plurality of piston apertures C111 in FIG. 1.5.1, to a first or proximal fin, tab, wall, or other feature of the fin array C1016 of the regenerator body C800 at the walled conduit C1050. In still another embodiment, such as an embodiment providing direct fluid communication of the heater conduits C110 to the chiller conduits A54, the second opening, such as depicted at opening C113 in FIG. 1.5.1., is in direct fluid communication with chiller collection chamber A62 or the chiller conduits A54. In various embodiments, the second opening, such as depicted at opening C113 in FIG. 1.5.1., is in direct fluid communication with the chiller collection chamber opening A60.

Embodiments of the engine A100 provided herein may provide greater Beale numbers based at least in part on the plurality of chiller conduits A54 collectively defining a desired heat transferability of thermal energy from the engine working fluid within the plurality of chiller conduits A54 to the cold side heat exchanger A42. In various embodiments, the system A10 defines a ratio of maximum cycle volume of the engine working fluid to a collective volume of the plurality of chiller conduits A54. In one embodiment, the ratio of maximum cycle volume of the engine working fluid to the volume of the plurality of chiller conduits A54 is between 10 and 100. For example, in various embodiments, the plurality of chiller conduits A54 together contain between one-tenth and one-hundredth of the volume of the total volume of engine working fluid based on the maximum cycle volume. Stated differently, between one-tenth and one-hundredth of the maximum cycle volume of the engine working fluid is transferring thermal energy to the cold side heat exchanger A42 during operation of the system A10.

In still various embodiments, embodiments of the engine provided herein may provide greater Beale numbers based at least in part on a ratio of surface area of the plurality of chiller conduits A54 versus volume of the working fluid within the plurality of chiller conduits A54. For instance, the plurality of chiller conduits A54 may particularly provide a range of surface area collectively within the plurality of chiller conduits A54 relative to the volume of the engine working fluid within the plurality of chiller conduits A54. In various embodiments, the ratio of surface area of the plurality of chiller conduits A54 to volume of the working fluid within the plurality of chiller conduits A54 is between 7 and 40. For example, in various embodiments, the plurality of chiller conduits A54 together defines a unit surface area within the conduits (i.e., surface area in fluid contact with the engine working fluid) between 7 and 40 times greater than a unit volume of the plurality of chiller conduits A54.

In various embodiments, the surface area of the chiller conduits A54 is defined from the chiller passage opening A58 to the chiller collection chamber opening A60. In one embodiment, the surface area of the chiller conduits A54 is the internal area within the chiller conduits A54 corresponding to the portion of the chiller conduits A54 at least partially surrounded by the chiller working fluid within the chiller working fluid passage A66 in thermal communication with the engine working fluid.

Various embodiments of the system A10 and engine A100 shown and described herein provide desired power outputs, power densities, or efficiencies, or combinations thereof, based on one or more elements, arrangements, flowpaths, conduits, surface areas, volumes, or assemblies, or methods thereof, provided herein. Efficiencies described herein may include $T_{Hot,engine}$ corresponding to temperature input to the engine working fluid at the heater conduits or working fluid pathways C110 from the hot side heat exchanger C108. Still various embodiments include $T_{Cold,ambient}$ corresponding to temperature removed from the engine working fluid at the chiller conduits A54 to the cold side heat exchanger A42. In other instances, the temperature input may alternatively correspond to heat or thermal energy input to the engine working fluid, such as from the heating working fluid. Still further, the temperature removed may alternatively correspond to heat or thermal energy output from the engine working fluid, such as to the chiller working fluid. In still various embodiments, the environment is the chiller working fluid into which the engine A100 rejects, exhausts, or otherwise releases heat or thermal energy from the engine working fluid at the chiller conduits A54.

In still yet various embodiments, efficiencies described herein may include $Q_{Out}$ corresponding to thermal energy received by the engine working fluid at the heater conduits or working fluid pathways C110 from the hot side heat exchanger C108. Still various embodiments include $Q_{In}$ corresponding to thermal energy received at the chiller working fluid at the chiller working fluid passage A56 at the cold side heat exchanger A42 from the engine working fluid at the chiller conduits A54.

In still another embodiment, $E_{out}$ is the net electrical energy output from the load device C092 that is operatively coupled to the engine A100 via the piston assembly C1010.

In various embodiments, the features, arrangements, surface areas, volumes, or ratios thereof provide the engine A100 to operate at higher efficiencies over known closed cycle engines, or Stirling engines particularly. Various embodiments of the system A10 provided herein may be configured to produce mechanical power output from the piston assembly A1010 at a Carnot efficiency $\eta_{Carnot}$ of up to approximately 80%. In some embodiments, the system A10 provided herein may be configured to produce mechanical power output from the piston assembly A1010 at an efficiency of up to approximately 80% in certain cold environments (e.g., space). In one embodiment, the Carnot efficiency corresponds to the thermal efficiency of the engine A100 receiving thermal energy or heat at the heater conduits C110 and expelling thermal energy or heat from the engine working fluid at the chiller conduits A54. In one embodiment, the Carnot efficiency corresponds at least to the engine A100 including the hot side heat exchanger C108 and the cold side heat exchanger A42, such as depicted at the engine level efficiency (FIG. 1.2.1).

Various embodiments of the system A10 provided herein may be configured to produce mechanical power output from the piston assembly A1010 at electrical efficiency of up to approximately 80%. In one embodiment, the electrical efficiency corresponds to the useful work generated by the engine A100 receiving heat or thermal energy from the heating working fluid and releasing heat or thermal energy to the chiller working fluid and converted into electrical energy via the load device C092, such as depicted within area A106 in FIG. 1.2.1. In one embodiment, the electrical efficiency corresponds at least to the system A10 including the engine A100, the heater body C100, and the chiller assembly A40, such as depicted at the system level efficiency (FIG. 1.2.1).

In one embodiment, the system A10 provides a temperature differential via the heater body C100 and the chiller assembly C40 in which the engine A100 generates mechanical power output between 1 kW and 100 kW relative to the piston assembly A1010. In another embodiment, the system A10 is configured to generate between 10 kW and 100 kW. In yet another embodiment, the system A10 is configured to generate between 25 kW and 100 kW. In yet another embodiment, the system A10 may be configured to produce greater than 100 kW. For example, the system A10 may include a plurality of the engine A100 operably coupled at two or more piston assemblies A1010 and the load device c092 to produce greater than 100 kW. In various embodiments, a plurality of the engine A100 may be operably coupled to produce up to 5 megawatts.

In still various embodiments, the engine A100 further defines a second operational parameter defining a ratio of mechanical power output from the piston assembly A1010 to maximum cycle volume of the working fluid between 0.0005 and 0.0040 kW per cubic centimeter (cc) for a given efficiency. In various embodiments, the ratio of mechanical power output from the piston assembly A1010 to maximum cycle volume of the working fluid is a range of maximum ratio at which the mechanical power output from the piston assembly A1010 to maximum cycle volume of the working fluid is defined. In some embodiments, the engine A100 defines a maximum ratio of mechanical power output from the piston assembly A1010 to maximum cycle volume of the working fluid between 0.0005 and 0.0040 kW generated from the piston assembly A1010 for one cubic centimeter of engine working fluid at an engine efficiency of at least 50%. Stated differently, between 0.0005 and 0.0040 kW is generated from the piston assembly A1010 for one cubic centimeter of engine working fluid at an engine efficiency of at least 50%. In various embodiments, the engine A100 defines a ratio of mechanical power output from the piston assembly A1010 to the maximum cycle volume of the working fluid between 0.0010 and 0.0030 kW/cc at an engine efficiency of at least 50%. In another embodiment, the engine A100 defines a ratio of mechanical power output from the piston assembly A1010 to the maximum cycle volume of the working fluid between 0.0015 and 0.0025 kW/cc at an engine efficiency of at least 50%. In one embodiment, the system A10 defines the ratio of mechanical power output from the piston assembly A1010 to maximum cycle volume of the working fluid between 0.0005 kW/cc and 0.0040 kW/cc at a Carnot efficiency of the engine of up to 80%. In another embodiment, the engine A100 defines the ratio of mechanical power output from the piston assembly A1010 to maximum cycle volume of the working fluid between 0.0005 kW/cc and 0.0040 kW/cc with an efficiency of the engine A100 of up to 60%.

Various embodiments of the system A10 shown and described herein provide a power density by efficiency that may be advantageous over certain power generation or energy conversion systems including engine and heat exchanger systems. In certain embodiments, the system A10 includes a third operational parameter defining a multiplication product of power density (kW/m$^3$) and system level efficiency greater than 51. For example, the power density is power output at the load device c092 over volume of the engine working fluid at the engine A100. In particular embodiments, the system A10 includes the power density over maximum cycle volume of the engine working fluid at the engine A100. In some embodiments, the system A10 includes a power density (kW/m$^3$) by efficiency greater than 100. In still other embodiments, the system A10 includes a power density (kW/m$^3$) by efficiency greater than 255. In various embodiments, the system A10 includes a power density (kW/m$^3$) by efficiency less than 400. In other embodiments, the system A10 includes a power density (kW/m$^3$) by efficiency less than 125. In still various embodiments, the system A10 includes a power density (kW/m$^3$) by efficiency between 51 and 400.

In still various embodiments, the engine A100 includes a fourth operational parameter at which one or more of the efficiencies and ratio of mechanical power output from the piston assembly A1010 to maximum cycle volume of the engine working fluid relative to a temperature differential of the engine working fluid at the expansion chamber A221 and the compression chamber A222. In one embodiment, the fourth operational parameter defines the temperature differential of the engine working fluid at the expansion chamber A221 ant he compression chamber A222 of at least 630 degrees Celsius. In one embodiment, the cold side heat exchanger A42 is configured to reduce the temperature of the engine working fluid at the chiller conduits A54 and/or compression chamber A222 less than 120 degrees Celsius. In another embodiment, the cold side heat exchanger A42 is configured to reduce the temperature of the engine working fluid at the chiller conduits A54 or compression chamber A222 to between approximately -20 degrees Celsius and approximately 120 degrees Celsius on average during steady-state full power operation. In still another embodiment, the cold side heat exchanger A42 is configured to reduce the temperature of the engine working fluid at the chiller conduits A54 or compression chamber A222 to between 20 degrees Celsius and approximately 120 degrees Celsius on average during steady-state full power operation. In yet another embodiment, the hot side heat exchanger C108 is configured to heat the engine working fluid at the heater conduits C110 or expansion chamber A221 to at least 750 degrees Celsius. However, it should be appreciated that an upper limit of the heat provided to the hot side heat exchanger C108 or the expansion chamber A221 is based at least on materials limits, such as one or materials listed or described herein, or another suitable material for constructing the engine and/or system. Material limits may include, but are not limited to, a melting point, tensile stress, yield stress, deformation or deflection limits, or desired life or durability of the engine.

It should be appreciated that performances, power outputs, efficiencies, or temperature differentials at the system A10, the engine A100, or both, provided herein may be based on a "Sea Level Static" or "Standard Day" input air condition such as defined by the United States National Aeronautics and Space Administration, unless otherwise specified. For example, unless otherwise specified, conditions provided to the heater body, the chiller assembly, or both, or any subsystems, components, etc. therein, or any other portions of the system A10 receiving an input fluid, such as air, are based on Standard Day conditions.

The heat transfer relationships described herein may include thermal communication by conduction and/or convection. A heat transfer relationship may include a thermally conductive relationship that provides heat transfer through conduction (e.g., heat diffusion) between solid bodies and/or between a solid body and a fluid. Additionally, or in the alternative, a heat transfer relationship may include a thermally convective relationship that provides heat transfer through convection (e.g., heat transfer by bulk fluid flow) between a fluid and a solid body. It will be appreciated that convection generally includes a combination of a conduction (e.g., heat diffusion) and advection (e.g., heat transfer by bulk fluid flow). As used herein, reference to a thermally conductive relationship may include conduction and/or convection; whereas reference to a thermally convective relationship includes at least some convection.

A thermally conductive relationship may include thermal communication by conduction between a first solid body and a second solid body, between a first fluid and a first solid body, between the first solid body and a second fluid, and/or between the second solid body and a second fluid. For example, such conduction may provide heat transfer from a first fluid to a first solid body and/or from the first solid body to a second fluid. Additionally, or in the alternative, such conduction may provide heat transfer from a first fluid to a first solid body and/or through a first solid body (e.g., from one surface to another) and/or from the first solid body to a second solid body and/or through a second solid body (e.g., from one surface to another) and/or from the second solid body to a second fluid.

A thermally convective relationship may include thermal communication by convection (e.g., heat transfer by bulk fluid flow) between a first fluid and a first solid body, between the first solid body and a second fluid, and/or between a second solid body and a second fluid. For example, such convection may provide heat transfer from a first fluid to a first solid body and/or from the first solid body to a second fluid. Additionally, or in the alternative, such convection may provide heat transfer from a second solid body to a second fluid.

It will be appreciated that the terms "clockwise" and "counter-clockwise" are terms of convenience and are not to be limiting. Generally, the terms "clock-wise" and "counter-clockwise" have their ordinary meaning, and unless otherwise indicated refer to a direction with reference to a top-down or upright view. Clockwise and counter-clockwise elements may be interchanged without departing from the scope of the present disclosure.

Where temperatures, pressures, loads, phases, etc. are said to be substantially similar or uniform, it should be appreciated that it is understood that variations, leakages, or other minor differences in inputs or outputs may exist such that the differences may be considered negligible by one skilled in the art. Additionally, or alternatively, where temperatures or pressures are said to be uniform, i.e., a substantially uniform unit (e.g., a substantially uniform temperature at the plurality of chambers A221), it should be appreciated that in one embodiment, the substantially uniform unit is relative to an average operating condition, such as a phase of operation of the engine, or thermal energy flow from one fluid to another fluid, or from one surface to a fluid, or from one surface to another surface, or from one fluid to another surface, etc. For example, where a substantially uniform temperature is provided or removed to/from the plurality of chambers A221, A222, the temperature is relative to an average temperature over a phase of operation of the engine. As another example, where a substantially uniform thermal energy unit is provided or removed to/from the plurality of chambers A221, A222, the uniform thermal energy unit is relative to an average thermal energy supply from one fluid to another fluid relative to the structure, or plurality of structures, through which thermal energy transferred.

Various interfaces, such as mating surfaces, interfaces, points, flanges, etc. at which one or more monolithic bodies, or portions thereof, attach, couple, connect, or otherwise mate, may define or include seal interfaces, such as, but not limited to, labyrinth seals, grooves into which a seal is placed, crush seals, gaskets, vulcanizing silicone, etc., or other appropriate seal or sealing substance. Additionally, or alternatively, one or more of such interfaces may be coupled together via mechanical fasteners, such as, but not limited to, nuts, bolts, screws, tie rods, clamps, etc. In still additional or alternative embodiments, one or more of such interfaces may be coupled together via a joining or bonding processes, such as, but not limited to, welding, soldering, brazing, etc., or other appropriate joining process.

It should be appreciated that ratios, ranges, minimums, maximums, or limits generally, or combinations thereof, may provide structure with benefits not previously known in the art. As such, values below certain minimums described herein, or values above certain maximums described herein, may alter the function and/or structure of one or more components, features, or elements described herein. For example, ratios of volumes, surface area to volume, power output to volume, etc. below the ranges described herein may be insufficient for desired thermal energy transfer, such as to undesirably limit power output, efficiency, or Beale number. As another example, limits greater than those described herein may undesirably increase the size, dimensions, weight, or overall packaging of the system or engine, such as to undesirably limit the applications, apparatuses, vehicles, usability, utility, etc. in which the system or engine may be applied or operated. Still further, or alternatively, undesired increases in overall packaging may undesirably decrease efficiency of an overall system, application, apparatus, vehicle, etc. into which the engine may be installed, utilized, or otherwise operated. For example, although an engine may be constructed defining a similar or greater efficiency as described herein, such an engine may be of undesirable size, dimension, weight, or overall packaging such as to reduce an efficiency of the system into which the engine is installed. As such, obviation or transgression of one or more limits described herein, such as one or limits relative to features such as, but not limited to, heater conduits, chiller conduits A54, chamber volumes, walled conduit volumes, or operational temperatures, or combinations thereof, may undesirably alter such structures such as to change the function of the system or engine.

## CHAPTER 5 - SYSTEMS AND METHODS OF CONTROL

### Chapter 5.1.1 - Overview

Control systems and methods of controlling various systems disclosed herein will now be provided. In one aspect, a control system for a power generation system is provided. The power generation system includes one or more closed cycle engines, one or more electric machines operatively coupled thereto, and one or more energy storage devices in communication with the electric machines. The control system can control the closed cycle engine and its associated balance of plant to generate a temperature differential. Thus, the engine defines a hot side and a cold side. The temperature differential causes free piston assemblies to move within their respective piston chambers. The movement of the pistons causes the electric machines to generate electrical power. The generated electrical power can be provided to the energy storage devices for charging thereof. The control system monitors one or more operating parameters associated with the closed cycle engine, such as piston movement (e.g., amplitude and position), as well as one or more operating parameters associated with the electric machine, such as voltage or electric current. Based on such parameters, the control system generates control commands that are provided to one or more controllable devices of the system. The controllable devices execute control actions in accordance with the control commands. Accordingly, the desired output of the system can be achieved. Furthermore, the control system can monitor and anticipate load changes on the electric machines and can control the closed cycle engine to anticipate such load changes to better maintain steady state operation despite dynamic and sometimes significant electrical load changes on the electric machines. A method of controlling the power generation system is also provided. In another aspect, a control system for a heat pump system is provided. The heat pump system includes one or more of the closed cycle engines described herein. A method of controlling the heat pump system is also provided. The power generation and heat pump systems as well as control methods therefore are provided in detail below.

### Chapter 5.1.2 - Power Generation System Overview

FIG. 5.1.1 provides a schematic block diagram of a power generation system b1000 according to an aspect of the present disclosure. Generally, the power generation system b1000 is configured to generate electrical power. The generated electrical power can be used in any suitable manner. For instance, the generated electrical power can be used to charge a battery system, fed to a power grid, or used in some other suitable manner.

The power generation system b1000 includes a closed cycle engine b1110, e.g., such as any one of the closed cycle engines described herein. The closed cycle engine b1110 defines a hot side b1112 and a cold side b1114. Accordingly, the closed cycle engine b1110 defines a temperature differential $\Delta T$. Generally, during operation, the hot side b1112 is hotter than or at a higher temperature than the cold side b1114. In some embodiments, the hot side b1112 can be hotter than an ambient temperature. For instance, a heat source can heat or impart thermal energy to the hot side b1112, as denoted by $Q_{IN}$ in FIG. 5.1.1. In yet other embodiments, the hot side b1112 can be an ambient temperature and the cold side b1114 can be colder than the ambient temperature. For instance, heat or thermal energy can be removed from the cold side b1114, as denoted by $Q_{OUT}$ in FIG. 5.1.1. In some embodiments, the hot side b1112 can be actively heated and the cold side b1114 can be actively cooled or heat can be removed or extracted therefrom. The temperature differential ΔT between the hot side b1112 and the cold side b1114 causes one or more piston assemblies b1120 to move within their respective piston bodies b1116, e.g., between the hot side b1112 and the cold side b1114 of the engine. As the one or more piston assemblies b1120 are moved within their respective piston bodies b1116, one or more electric machines b1310 operatively coupled thereto generate electrical power.

As further depicted in FIG. 5.1.1, the power generation system b1000 includes a control system b1500 for controlling various aspects of the power generation system b1000, including controlling the closed cycle engine b1110 and the one or more electric machines b1310 operatively coupled thereto. The control system b1500 can include one or more control devices, such as sensors, controllers, processors, controllable devices b1534, etc. that can monitor and control various aspects of the power generation system b1000. An example manner in which the control system b1500 controls the power generation system b1000 will be described herein.

FIG. 5.1.2 provides a detailed schematic view of the power generation system b1000 of FIG. 5.1.1. As shown, the power generation system b1000 includes a closed cycle engine b1110, a balance of plant b1200 for creating or generating the temperature differential ΔT between the hot side b1112 and the cold side b1114 of the engine b1110, and an electrical system b1300 for generating electrical power utilizing the useful work produced by the closed cycle engine b1110. The closed cycle engine b1110 and its associated balance of plant b1200 are configured to produce useful work such that one or more electric machines b1310 of the electrical system b1300 can generate electrical power. As noted above, the generated electrical power can be utilized in any suitable way. For instance, for this embodiment, the generated electrical power can be used to charge one or more energy storage devices b1312 in communication with the one or more electric machines b1310.

The closed cycle engine b1110 can be any of the closed cycle engines b1110 described herein. For instance, in some embodiments, the closed cycle engine b1110 is a Stirling engine, such as e.g., any of the Stirling engines described herein. The closed cycle engine b1110 can include an engine block that has one or more piston bodies b1116. For instance, for the depicted embodiment of FIG. 5.1.2, the engine block includes four (4) piston bodies b1116. Each piston body b1116 can receive a piston assembly b1120 therein. The piston assemblies b1120 are each movable within their respective piston bodies b1116, e.g., between the hot side b1112 and the cold side b1114 of the engine. When the piston assemblies b1120 move or travel within their respective piston bodies b1116, the closed cycle engine b1110 produces useful work. Each piston assembly b1120 includes a pair of opposing pistons b1122, b1124 operatively coupled by a connection member b1126, e.g., a shaft.

The balance of plant b1200 shown schematically in FIG. 5.1.2 can be any of the balance of plant systems described herein, such as e.g., any of the balance of plant b1200 embodiments described in Chapter 2. For this embodiment, the balance of plant b1200 includes a heater loop b1210 for imparting thermal energy or heat to the hot side b1112 of the closed cycle engine b1110 and a chiller loop b1212 for removing or extracted thermal energy or heat from the cold side b1114. Accordingly, the heater loop b1210 and the chiller loop b1212 can generate the temperature differential ΔT. The temperature differential ΔT between the hot side b1112 and the cold side b1114 causes, at least in part, the piston assemblies b1120 to move or travel within their respective piston bodies b1116. Furthermore, the heater loop b1210 and chiller loop b1212 can be in fluid communication as shown in FIG. 5.1.2, e.g., for heat recovery purposes. The heater loop b1210 and the chiller loop b1212 can each have one or more controllable devices b1534 associated therewith.

The one or more electric machines b1310 are operatively coupled with the one or more piston assemblies b1120. The one or more electric machines b1310 can be operatively coupled with the one or more piston assemblies b1120 in any suitable manner, such as in any way described in Chapter 1. In some embodiments, for example, one or more electric machines b1310 can be operatively coupled with each piston assembly b1120. In other embodiments, each piston assembly b1120 need not have an electric machine b1310 operatively coupled thereto. The one or more electric machines b1310 can be operatively coupled with the one or more piston assemblies b1120 in any suitable manner. As one example, a piston body b1116 can serve as the stator b1324 and its associated piston assembly b1120 can serve as the dynamic member b1322 or mover of an electric machine b1310. Particularly, stator windings can be disposed along the piston body b1116 between the hot side b1112 and the cold side b1114 and the piston assembly b1120 can have one or more magnetic devices or permanent magnets connected thereto, e.g., connected to the connection member b1126 and/or to the pistons b1122, b1124 themselves. As the piston assemblies b1120 are moved between the hot side b1112 and the cold side b1114 of the closed cycle engine b1110, the stator windings of the piston body b1116 and the permanent magnets of the piston assembly b1120 are in magnetic communication along at least a portion of travel of the piston assembly b1120. Consequently, the permanent magnets excite the stator windings as the magnets travel thereby. In this way, the one or more electric machines b1310 are operable to generate electrical power when the one or more piston assemblies b1120 are moved between the hot side b1112 and the cold side b1114. Thus, in such instances, the electric machines b1310 operate in an electric generator state. That is, the electric machines b1310 function as generators at least in some instances of operation. Although the described above as having a linear configuration, the one or more electric machines b1310 can be any suitable type of electric machines b1310, including for example, rotary electric machines b1310.

As further depicted in FIG. 5.1.2, one or more electric machines b1326 can be operatively coupled with one or more devices of the chiller loop b1212. For instance, one or more electric machines b1326 can be operatively coupled with an expansion device or turbine of the chiller loop b1212. The one or more electric machines b1326 operatively coupled with the chiller loop b1212 can generate electrical power that can be used in some useful way and/or can be used to provide electrical power to drive some component of the chiller loop b1212, such as e.g., an expansion device or turbine of the chiller loop b1212.

For this embodiment, the electrical system b1300 of the power generation system b1000 includes one or more energy storage devices b1312 in communication with the one or more electric machines b1310, b1326. For instance, the one or more energy storage devices b1312 can be in electrical communication with the one or more electric machines b1310, e.g., by one or more suitable wired or wireless communication links. Particularly, the one or more energy storage devices b1312 can be in communication with the one or more electric machines b1310 operatively coupled with the closed cycle engine b1110 and/or the one or more electric machines b1326 operatively coupled with the chiller loop b1212. The one or more energy storage devices b1312 can include any suitable type or combination of energy storage devices b1312. For instance, in some embodiments, the one or more energy storage devices b1312 include one or more batteries. For example, as depicted in FIG. 5.1.2, the one or more energy storage devices b1312 are configured as a battery system. In some other embodiments, the one or more energy storage devices b1312 include one or more super capacitors. The one or more energy storage devices b1312 can include other suitable energy storage devices b1312 as well.

The one or more energy storage devices b1312 in communication with the one or more electric machines b1310 are operable to receive electrical power therefrom. That is, the electrical power generated by the one or more electric machines b1310 can be provided to the one or more energy storage devices b1312. Further, in some instances during operation, the one or more energy storage devices b1312 in communication with the one or more electric machines b1310 are operable to provide electrical power thereto. For example, during startup or initialization of the closed cycle engine b1110, the one or more energy storage devices b1312 can provide electrical power to the one or more electric machines b1310. The provided electrical power can cause the one or more electric machines b1310 to drive the one or more piston assemblies b1120 within their respective piston bodies b1116, e.g., between the hot side b1112 and cold side b1114. Accordingly, in some instances, the one or more electric machines b1310 are operable in an electric motor state. Thus, for the depicted embodiment of FIG. 5.1.2, the one or more electric machines b1310 operatively coupled with the closed cycle engine b1110 are operable in an electric motor state and in an electric generator state.

As further shown in FIG. 5.1.2, the electrical system b1300 can include an inverter b1314 for converting direct electrical current to alternating electrical current and one or more electrical loads b1316. The one or more electrical loads b1316 can be in communication with the one or more energy storage devices b1312 in any suitable manner, such as e.g., any suitable wired or wireless communication link. The one or more electrical loads are operable to receive electrical power from the one or more energy storage devices b1312. In some other embodiments, the one or more electric machines b1310 operatively coupled with the closed cycle engine b1110 and/or the one or more electric machines b1310 operatively coupled with some component of the chiller loop b1212 can provide direct electrical power to the one or more electrical loads b1316. The one or more electrical loads b1316 can include any suitable electrical load, such as e.g., a power grid, a fuel cell, an air conditioning unit of a vehicle, etc. A thermal management system b1330 is communicatively coupled with the various electrical components of the electrical system b1300 and is configured to management the thermal loads thereon, e.g., to maintain satisfactory operating temperatures thereof.

The power generation system b1000 also includes a control system b1500 for controlling various aspects thereof, as noted above. Particularly, the control system b1500 can initialize and control the power generation system b1000 during operation in accordance with various control schemes. As one example, the power generation system b1000 can be controlled in such a way that the efficiency of the overall power generation system b1000 is optimized. As another example, the power generation system b1000 can be controlled in such a way that the cost of operating the power generation system b1000 is optimized. For instance, the power generation system b1000 can be controlled in such a way that the cost of operating the system is minimized. In yet other embodiments, the power generation system b1000 can be controlled in such a way that a cost to power generation ratio is minimized. As yet another example, the power generation system b1000 can be controlled in such a way that a set amount of electrical power is generated by the electric machines b1310 of the system. Other control schemes are also possible.

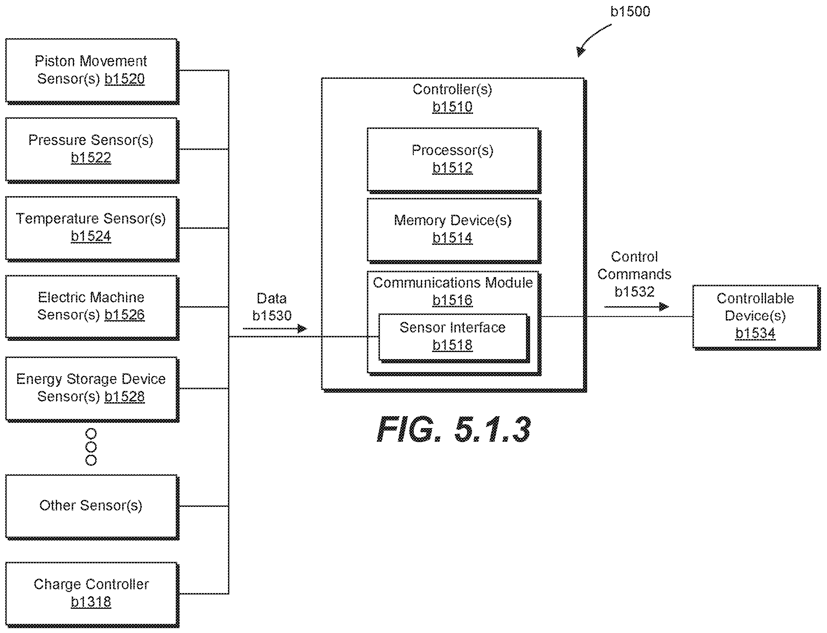

With reference now to FIGS. 5.1.2 and 5.1.3, FIG. 5.1.3 provides a block diagram depicting the control system b1500 of the power generation system b1000 of FIGS. 5.1.1 and 5.1.2. As noted above, the control system b1500 can include one or more control devices, such as sensors, controllers b1510, processors, controllable devices b1534, etc. that can monitor and control various aspects of the power generation system b1000. For instance, the control system b1500 can monitor one or more operating parameters of the closed cycle engine b1110, the one or more electric machines b1310, and/or the one or more energy storage devices b1312 using one or more sensors. For instance, the control system b1500 can monitor one or more piston movement characteristics using one or more piston movement sensors b1520. Example piston movement characteristics can include piston position, speed, amplitude, frequency, and/or phase. The piston movement sensors b1520 can be position encoders, for example. The control system b1500 can also monitor the pressure within the closed cycle engine b1110 at various positions or stations (e.g., within the piston bodies b1116 or along fluid pathways fluidly connecting the piston bodies b1116) using one or more pressure sensors b1522. Further, the control system b1500 can monitor the temperature within the closed cycle engine b1110 at various positions or stations (e.g., within the piston bodies b1116 or along fluid pathways fluidly connecting the piston bodies b1116) using one or more temperature sensors b1524.

In addition, the control system b1500 can monitor various operating parameters associated with components of the electrical system b1300. For instance, the control system b1500 can monitor one or more operating parameters associated with the one or more electric machines b1310 using one or more electric machine sensors b1526. For example, the control system b1500 can monitor the electric current generated or passing through the electric machines b1310 using one or more electric machine sensors b1526, including the amplitude, phase, and/or frequency of the electric current. As another example, the control system b1500 can monitor the voltage at the electric machines b1310 using one or more electric machine sensors b1526, including the amplitude, phase, and/or frequency of the voltage. The control system b1500 can monitor other operating parameters associated with the one or more electric machines b1310 using one or more electric machine sensors b1526, such as e.g., the magnetic field at the electric machines b1310.

Further, the control system b1500 can monitor various operating parameters associated with the one or more energy storage devices b1312 in communication with the one or more electric machines b1310 using one or more energy storage device sensors b1528. In this way, the operating state of the one or more energy storage devices b1312 can be determined. For example, the control system b1500 can monitor the load state of the one or more energy storage devices b1312 using the one or more energy storage device sensors b1528. In some embodiments, the load state of the one or more energy storage devices b1312 is descriptive of at least one of a state of charge and a charge acceptance rate of the one or more energy storage devices b1312 in communication with the one or more electric machines b1310. In some embodiments, the load state of the one or more energy storage devices b1312 is descriptive of both the state of charge and the charge acceptance rate of the one or more energy storage devices b1312. In monitoring the load state of the energy storage devices b1312, the control system b1500 can advantageously control the closed cycle engine b1110 and the one or more electric machines b1310 to meet the charging needs of the one or more energy storage devices b1312.

The state of charge is indicative of the available capacity of the one or more energy storage devices b1312. The state of charge can be expressed as a percentage of the rated capacity of the one or more energy storage devices b1312, e.g., 0-100% with 0% being empty and 100% being full or no available capacity. The state of charge of the one or more energy storage devices b1312 can be determined in any suitable manner, e.g., by a voltage method, coulomb counting method, Kalman filter method, etc. The charge acceptance rate of the one or more energy storage devices b1312 is indicative of the ability of the energy storage devices b1312 to accept and store energy under given conditions, such as e.g., temperature, state of charge, charging rate, charging method, and/or health of the energy storage devices b1312. The charge acceptance rate can be determined in any suitable manner.

The control system b1500 includes one or more controllers b1510. For instance, the control system b1500 can include one or more controllers b1510 that function as the main or primary control devices of the power generation system b1000. The control system b1500 can include other controllers b1510 as well. As shown best in FIG. 5.1.3, the controllers b1510 can include one or more processor(s) b1512 and associated memory device(s) b1514 configured to perform a variety of computer-implemented functions and/or instructions (e.g., performing the methods, steps, calculations and the like and storing relevant data as disclosed herein). The instructions, when executed by the one or more processors, can cause the one or more processors to perform operations, including providing control commands b1532 to various controllable devices b1534 of the power generation system b1000.

Additionally, the controllers b1510 can also include a communications module b1516 to facilitate communications between the controllers b1510 and various components of the power generation system b1000. Further, the communications module b1516 can include a sensor interface b1518 (e.g., one or more analog-to-digital converters) to permit signals transmitted from one or more sensors to be converted into signals that can be understood and processed by the one or more processors. It should be appreciated that the sensors can be communicatively coupled to the communications module b1516 using any suitable means. For example, the sensors can be coupled to the sensor interface b1518 via a wired connection. However, in other embodiments, the sensors may be coupled to the sensor interface b1518 via a wireless connection, such as by using any suitable wireless communications protocol. As such, the processor(s) b1512 can be configured to receive one or more signals from the sensors.

As used herein, the term "processor" refers not only to integrated circuits referred to in the art as being included in a computing device, but also refers to a controller, a microcontroller, a microcomputer, a programmable logic controller (PLC), an application specific integrated circuit, and other programmable circuits. The one or more processors can also be configured to compute advanced control algorithms. Additionally, the memory device(s) b1514 can generally include memory element(s) including, but not limited to, computer readable medium (e.g., random access memory (RAM)), computer readable nonvolatile medium (e.g., a flash memory), a floppy disk, a compact disc-read only memory (CD-ROM), a magneto-optical disk (MOD), a digital versatile disc (DVD) and/or other suitable memory elements. Such memory device(s) b1514 can generally be configured to store suitable computer-readable instructions that, when implemented by the processor(s) b1512, configure the controllers b1510 to perform the various functions described herein.

The control system b1500 also includes one or more controllable devices b1534. The controllable devices b1534 are communicatively coupled with the one or more controllers b1510, e.g., as shown in FIGS. 5.1.2 and 5.1.3. The controllable devices b1534 of the power generation system b1000 include any device communicatively coupled with the one or more controllers b1510 that, when commanded by the one or more controllers b1510, can cause a change in output of the power generation system b1000. As one example, the one or more controllers b1510 can control the one or more controllable devices b1534 to cause a change in the temperature differential $\Delta T$ between the hot side b1112 and the cold side b1114 of the closed cycle engine b1110. By changing the temperature differential $\Delta T$ between the hot side b1112 and the cold side b1114, the work output of the closed cycle engine b1110 can be changed, which can ultimately change the amount of electrical power generated by the one or more electric machines b1310 operatively coupled with the one or more piston assemblies b1120 of the closed cycle engine b1110. To cause a change in the temperature differential $\Delta T$ between the hot side b1112 and the cold side b1114, one or more controllers b1510 can command the one or more controllable devices b1534 to apply more or less heat to the hot side b1112 of the closed cycle engine b1110, remove more or less heat from the cold side b1114 of the closed cycle engine b1110, or some combination thereof. As yet another example, the one or more controllers b1510 can control the one or more control devices to cause the load on the one or more electric machines b1310 to change, which causes a change in the amount of electrical power generated by the one or more electric machines b1310.

One example controllable device b1534 includes a charge controller b1318 in communication with the one or more electric machines b1310 and the one or more energy storage devices b1312, e.g., as shown in FIG. 5.1.2. The charge controller b1318 are operatively configured to control or regulate the electrical power flowing between the one or more electric machines b1310 and the one or more energy storage devices b1312. The charge controller b1318 can allow all, some, or none of the electrical power generated by the one or more electric machines b1310 to flow to the one or more energy storage devices b1312. For instance, the charge controller b1318 can some of the electrical power to an electrical braking system b1320. The electrical braking system b1320 can include one or more resistor banks for dissipating the electrical power. In this way, the charge controller b1318 can control the flow of electrical power to the one or more energy storage devices b1312, e.g., to prevent overcharging of the one or more energy storage devices b1312.

Another example controllable device b1534 includes a mechanical braking system b1400 in communication with the one or more electric machines b1310, e.g., as shown in FIG. 5.1.2. The mechanical braking system b1400 is operatively configured to mechanically apply a counter torque or load on the one or more electric machines b1310 to change the electrical power output of the one or more electric machines b1310 and/or the movement of the piston assemblies b1120. For instance, the one or more controllers b1510 can command the mechanical braking system b1400 to apply a load on the one or more electric machines b1310 to synchronize one or more of the amplitude, phase, and frequency of the electric machine b1310 with one or more of the amplitude, phase, and frequency of the piston assemblies b1120 moving within their respective piston bodies b1116.

Another example controllable device b1534 can be any of the controllable devices b1534 associated with the heater loop b1210. For instance, one controllable device can include a fuel control device b1214 positioned along an intake line b1232 of the heater loop b1210, e.g., as shown in FIG. 5.1.21. The one or more controllers b1510 can command the fuel control device b1214 to allow a desired flow rate of fuel to flow to a combustor b1224 positioned along the heater loop b1210 (e.g., as described herein). Changing the amount of fuel provided to the combustor b1224 can change the heat input to the hot side b1112 of the closed cycle engine b1110, which consequently changes the temperature differential $\Delta T$ and thus the work output of the closed cycle engine b1110. Yet another example controllable device b1534 includes a compressor b1222 of the heater loop b1210. The compressor b1222 is operatively configured to compress or pressurize air flowing from an air source b1220 to the combustor b1224. The one or more controllers b1510 can control the compressor speed, e.g., by one or more control commands b1532, and thus can control the air/fuel mixture entering or at the combustor b1224. By changing the air/fuel mixture entering the combustor b1224, the heat input to the hot side b1112 of the closed cycle engine b1110 can be changed. As noted above, changing the heat input to the hot side b1112 can change the temperature differential ΔT between the hot side b1112 and the cold side b1114, which ultimately changes the work output of the closed cycle engine b1110.

Another example controllable device b1534 can be any of the controllable devices b1534 associated with the chiller loop b1212. For instance, the one or more controllable devices b1534 can include a compressor and/or pump positioned along the chiller loop b1212. The one or more controllers b1510 can control the speed of the compressor and/or pump and thus the amount of heat removed or extracted from the cold side b1114 of the closed cycle engine b1110. By removing less heat from the cold side b1114 of the engine, the temperature differential ΔT between the hot and cold side b1114 of the engine is changed, and consequently, the work output of the engine is also changed. Further, a braking system or the like can be used to change the counter torque or load on the one or more electric machines b1310 operatively coupled with one or more components of the chiller loop b1212, such as e.g., an expansion device.

To summarize, as shown best in FIG. 5.1.3, the one or more controllers b1510 can receive, from the one or more sensors, data b1530 indicative of one or more operating parameters associated with at least one of the closed cycle engine b1110 and the one or more electric machines b1310. For instance, data b1530 can be received from the piston movement sensors b1520, the pressure sensors b1522, the temperature sensors b1524, the electric machine sensors b1526, etc. The data b1530 can be indicative of operating parameters associated with one or both of the closed cycle engine b1110 and the electric machines b1310. For instance, the data b1530 can be indicative of one or more piston movement characteristics, the pressure within the closed cycle engine b1110 at various positions or stations, the temperature within the closed cycle engine b1110 at various positions or stations, the electric current generated or passing through the electric machines b1310, the voltage at the electric machines b1310 using one or more electric machine sensors b1526, the magnetic field at the electric machines b1310, etc. Additionally, in some embodiments, the one or more controllers b1510 can receive, from the one or more sensors, data b1530 indicative of one or more operating parameters associated with the one or more energy storage devices b1312, such as e.g., the load state of the devices.

Based on the received data b1530, the one or more controllers b1510 can control the power generation system b1000 in accordance with various control schemes. During normal operation, for example, the control system b1500 can monitor various operating parameters and can determine control commands b1532 to drive the operating parameters to an operating setpoint or target value. The control commands b1532 can then be provided to controllable device b1534(s). The controllable device b1534(s) can then perform control actions to execute the control commands b1532. When the controllable devices b1534 execute the control commands b1532, an output of the power generation is changed. For example, in performing the control action, the controllable device b1534 can cause a change to the amount of work done on the piston by the working fluid within the piston body b1116 and/or the amount of work done by the piston on the working fluid within the piston body b1116 (e.g., depending on whether the working fluid is expanding or contracting). By changing the work done by or on the piston, the piston speed of the piston assembly b1120 is changed, which changes the electrical power output of the electric machines b1310. Accordingly, the output of the power generation system b1000 is changed.

In addition, in the event the one or more of the piston assemblies b1120 are out of sync with their associated electric machines b1310 with respect to amplitude, phase, and/or frequency during charging of the energy storage devices b1312, the one or more controllers b1510 can provide a control command to one or more of the controllable devices b1534 to cause an adjustment to at least one of the electric machine b1310 and its associated piston assembly b1120 such that the electric machine b1310 and its associated piston assembly b1120 are synchronized in amplitude, phase, and frequency. Further, the control system b1500 can monitor for and prevent failure modes. In addition, as will be explained below, data b1530 can be received to initialize the power generation system b1000.

Chapter 5.1.3 - Power Generation System Modes of Operation

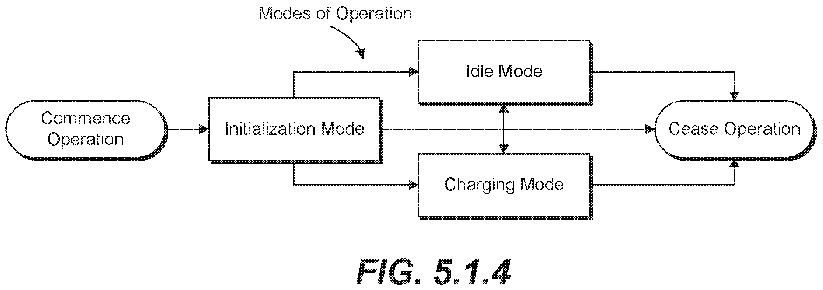

An example manner in which the power generation system b1000 can be operated will now be provided. FIG. 5.1.4 provides a block diagram depicting various modes of operation of the power generation system b1000 of FIGS. 5.1.1 and 5.1.2. As shown in FIG. 5.1.4, to commence operation, the power generation system b1000 can be operated in an initialization mode in which the closed cycle engine b1110 and its associated balance of plant b1200 is started up, e.g., from a non-operational state. Once the system is initialized, the power generation system b1000 can be operated in a normal mode, including an idle mode or a charging mode. In the idle mode, the piston assemblies b1120 move within their respective piston bodies b1116 between the hot side b1112 and the cold side b1114 under their own thermal power (e.g., without need for the electric machines b1310 to motor the piston assemblies b1120) and without or with a negligible load applied to the one or more electric machines b1310. As shown in FIG. 5.1.4, the power generation system b1000 can transition from the initialization mode to the idle mode. In the charging mode, the piston assemblies b1120 are moved within their respective piston bodies b1116 and a load is applied to the one or more electric machines b1310 operatively coupled with the piston assemblies b1120 of the closed cycle engine b1110, wherein the applied load is more than a negligible load. For instance, the load can be the one or more energy storage devices b1312. In the normal mode, the power generation system b1000 can transition between the idle mode and the charging mode. As one example, the power generation system b1000 can transition from the idle mode to the charging mode automatically based at least in part on a load state of the one or more energy storage devices b1312 or some other trigger criteria. Additionally or alternatively, the power generation system b1000 can be manually transitioned between operating modes, e.g., by a user input. When operation is no longer desired and/or required, operation of the power generation system b1000 can be ceased. To cease operation, as one example, the one or more controllers b1510 can cause the heat source to cease applying heat to the hot side b1112 of the closed cycle engine b1110 and/or cause one or more components to cease removing heat from or cooling the cold side b1114 of the engine. Eventually, the pistons b1122, b1124 will cease moving within their respective piston bodies b1116.

### Chapter 5.1.4 - Power Generation System Initialization

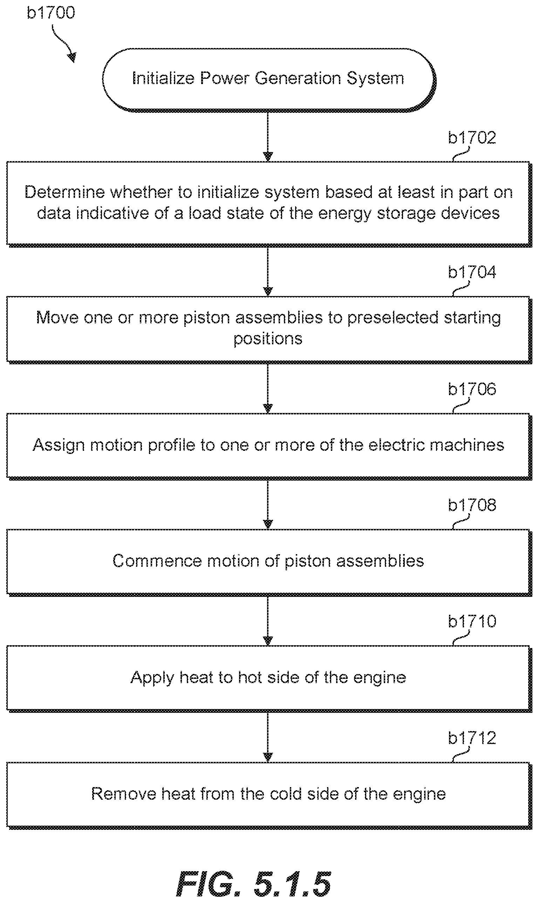

The power generation system b1000 can be initialized in the following example manner. FIG. 5.1.5 provides a flow diagram depicting an example method (b1700) of initializing the power generation system b1000 of FIGS. 1 and 2. Some or all of the method (b1700) can be implemented by the control system b1500 described herein. In addition, it will be appreciated that the method (b1700) can be modified, adapted, expanded, rearranged and/or omitted in various ways without deviating from the scope of the present subject matter.

At (b1702), the method (b1700) includes determining whether to initialize the power generation based at least in part on received data b1530 indicative of a load state of the one or more energy storage devices b1312 in communication with the one or more electric machines b1310. As one example, the one or more controllers b1510 can receive data b1530 indicative of a load state of the one or more energy storage devices b1312. For instance, the data b1530 can be received from the one or more energy storage device sensors b1528 communicatively coupled with the one or more controllers b1510, e.g., as shown in FIGS. 5.1.2 and 5.1.3. In some embodiments, the load state is indicative of at least one of a state of charge and a charge acceptance rate of the one or more energy storage devices b1312. In some other embodiments, the load state is indicative of both the state of charge and the charge acceptance rate of the one or more energy storage devices b1312.

After receiving the data b1530 indicative of at least one of the state of charge and the charge acceptance rate of the one or more energy storage devices b1312, the one or more controllers b1510 can determine the load state of the one or more energy storage devices b1312. In some embodiments, the received sensor data b1530 includes the actual state of charge percentage and charge acceptance rate, and thus, the one or more controllers b1510 need not determine or calculate the load state of the energy storage devices b1312.

The one or more controllers b1510 can determine whether to initialize the power generation system b1000 based at least in part on the received data b1530 indicative of the load state of the one or more energy storage devices b1312. For instance, in determining whether to initialize the power generation system b1000 based at least in part on the received data b1530 indicative of the load state, the one or more controllers b1510 are configured to ascertain whether the state of charge of the one or more energy storage devices b1312 is within a predetermined range. On one hand, if the state of charge of the one or more energy storage devices b1312 is within the predetermined range, the one or more controllers b1510 initialize the power generation system b1000, e.g., to ultimately charge the energy storage devices b1312. On the other hand, if the state of charge of the one or more energy storage devices b1312 is not within the predetermined range, the one or more controllers b1510 do not initialize the power generation system b1000.

For instance, the predetermined range can be set having any suitable lower limit and upper limit. For example, the lower limit can be set at 0% and the upper limit can be set at 85% of full capacity. In such an example, if the one or more energy storage devices b1312 have a state of charge between 0% and 85% of full capacity (e.g., 20%), the one or more controllers b1510 determine that the state of charge of the one or more energy storage devices b1312 is within the predetermined range, and thus, the one or more controllers b1510 initialize the power generation system b1000. In contrast, if the one or more energy storage devices b1312 have a state of charge greater than 85% of full capacity (e.g., 95%) the one or more controllers b1510 determine that the state of charge of the one or more energy storage devices b1312 is not within the predetermined range, and thus, the one or more controllers b1510 do not initialize the power generation system b1000. Accordingly, in some embodiments, the state of charge must be within the predetermined range for the power generation system b1000 to initialize.

Further, in some embodiments, in determining whether to initialize the power generation system b1000 based at least in part on the received data b1530 indicative of the load state, the one or more controllers b1510 are configured to ascertain whether the charge acceptance rate of the one or more energy storage devices b1312 is within a predetermined rate range. On one hand, if the charge acceptance rate of the one or more energy storage devices b1312 is within the predetermined rate range, the one or more controllers b1510 initialize the power generation system b1000, e.g., to ultimately charge the energy storage devices b1312. On the other hand, if the charge acceptance rate of the one or more energy storage devices b1312 is not within the predetermined rate range, the one or more controllers b1510 do not initialize the power generation system b1000.

For instance, the predetermined rate rage can be set having any suitable lower limit and upper limit. For example, the lower limit can be set at some predetermined rate threshold and the upper limit can be as any rate above the predetermined rate threshold. In such an example, if the one or more energy storage devices b1312 have a charge acceptance rate between or above the predetermined rate threshold and the upper limit, the one or more controllers b1510 determine that the state of charge of the one or more energy storage devices b1312 is within the predetermined rate range, and thus, the one or more controllers b1510 initialize the power generation system b1000. In contrast, if the one or more energy storage devices b1312 have a charge acceptance rate below the lower limit or predetermined charge threshold, the one or more controllers b1510 determine that the charge acceptance rate of the one or more energy storage devices b1312 is not within the predetermined rate range, and thus, the one or more controllers b1510 do not initialize the power generation system b1000. Accordingly, in some embodiments, the charge acceptance rate must be within the predetermined rate range for the power generation system b1000 to initialize.

In some embodiments, in determining whether to initialize the power generation system b1000 based at least in part on the received data b1530 indicative of the load state of the one or more energy storage devices b1312, the one or more controllers b1510 are configured to determine whether to initialize the power generation system b1000 based at least in part on both of the state of charge and the charge acceptance rate of the one or more energy storage devices b1312. Accordingly, in some embodiments, the state of charge and the charge acceptance rate must be within the predetermined range and the predetermined rate range, respectively, for the power generation system b1000 to initialize.

In some embodiments, in determining whether to initialize the power generation system b1000 based at least in part on the received data b1530 indicative of the load state of the one or more energy storage devices b1312, the one or more controllers b1510 are configured to determine whether to initialize the power generation system b1000 based at least in part on an objective function associated with operating the closed cycle engine b1110. For instance, the objective function can take into account certain parameters, such as the cost associated with operating the closed cycle engine b1110, the other power sources available to charge or power the one or more energy storage devices b1312, electrical loads b1316, and/or power grid b1332, the startup time, the state of charge and charge acceptance rate of the energy storage devices b1312, the power demanded by the one or more energy storage devices b1312, electrical loads b1316, and/or power grid b1332, the planned time for charging and/or powering the energy storage devices b1312, electrical loads b1316, and/or power grid b1332 (e.g., at peak hours or off-hours), etc. If the objective function exceeds a predetermined operation threshold, the one or more controllers b1510 can initialize the system. On the other hand, if the objective function does not exceed the predetermined operation threshold, the one or more controllers b1510 can determined not to initialize the system.

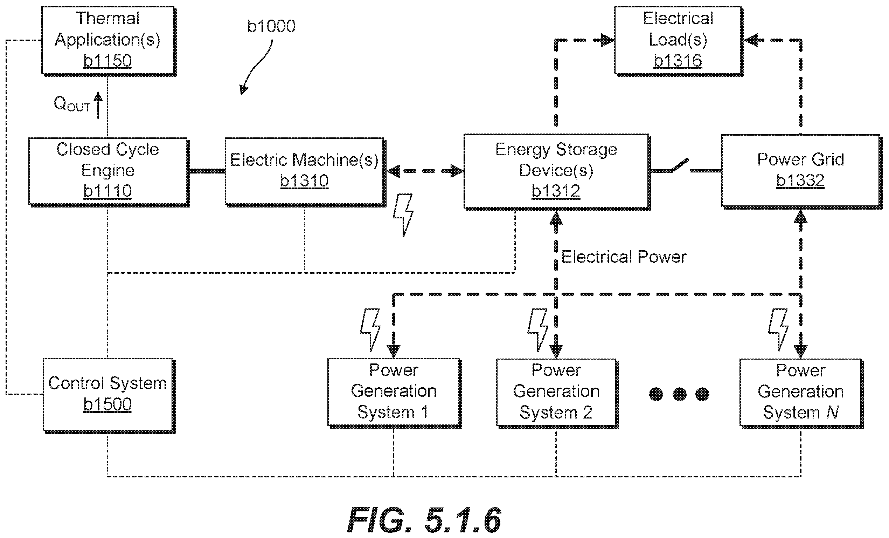

In some embodiments, the power generation system b1000 that includes the closed cycle engine b1110 is one of a plurality of power generation systems operable to provide electrical power to the one or more energy storage devices b1312 and/or power grid. For instance, as shown in FIG. 5.1.6, the power generation system b1000 of FIG. 5.1.2 is shown as one of a plurality of power generation systems operable to provide electrical power to the one or more energy storage devices b1312 and/or power grid. As depicted, a first power generation system, a second power generation system, and an Nth power generation system are shown in communication with the one or more energy storage devices b1312 and/or power grid. $N$ is an integer. The other power generation systems can be any suitable type of power generation systems, including without limitation, a wind energy power generation system, a solar energy power generation system, a fuel cell system, the grid, etc.

In this example, the one or more controllers b1510 of the control system b1500 can determine an objective function associated with each of the power generation systems b1000 associated with or in communication with the energy storage devices b1312 and/or power grid. The one or more controllers b1510 can assign or determine an objective function for each power generation system. Based on the determined objective functions, the one or more controllers b1510 can determine whether to initialize the power generation system b1000 associated with the closed cycle engine b1110. The determined objective function assigned or determined for the power generation system b1000 associated with the closed cycle engine b1110 can be based at least in part on a thermal demand from one or more thermal applications b1150 in thermal communication with the closed cycle engine b1110. The thermal demand can be indicative of the heating and/or cooling requirements of the thermal application(s) b1150. The one or more thermal applications b1150 can be any of the thermal applications provided herein, such as any of the thermal applications b140 provided in Chapter 2. In some embodiments, if the power generation system b1000 associated with the closed cycle engine b1110 has the most desirable objective function, the one or more controllers b1510 can initialize the system. If the power generation system b1000 associated with the closed cycle engine b1110 does not have the most desirable objective function, the one or more controllers b1510 can decline or postpone initialization of the system b1000.

At (b1704), returning to FIG. 5.1.5, the method (b1700) includes causing at least one of the one or more piston assemblies b1120 to move to a preselected starting position. For instance, in initializing the power generation system b1000, the one or more controllers b1510 are configured to cause at least one of the one or more piston assemblies b1120 to move to a preselected starting position. In some embodiments, all of the piston assemblies b1120 can be moved to their respective preselected starting positions. By moving one, some, or all of the piston assemblies b1120 to their respective starting positions, e.g., prior to motoring or kickstarting the piston assemblies b1120 as will be described below, the closed cycle engine b1110 can more quickly obtain more efficient operation, undesired vibrations can be minimized or eliminated during start up, and drifting of the piston assemblies b1120 within their respective piston bodies b1116 can be accounted for or corrected.

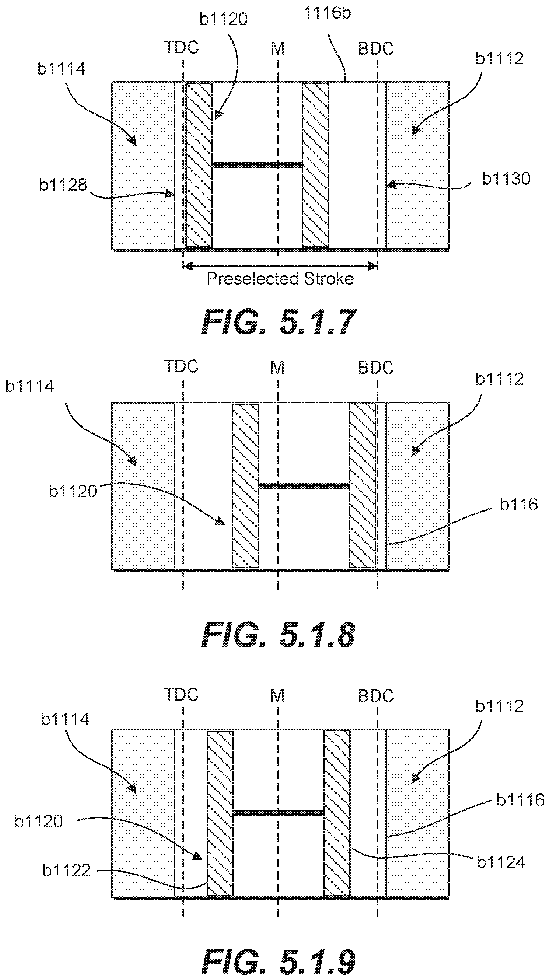

The preselected starting position can be any suitable position. For instance, FIG. 5.1.7 provides a schematic view of an example piston assembly b1120 disposed within one of the piston bodies b1116 of the closed cycle engine b1110 of the power generation system b1000 of FIGS. 5.1.1 and 5.1.2. As shown, the piston assembly b1120 has a preselected stroke that extends between a first end or top dead center position (TDC) and an opposing second end or bottom dead center position (BDC). A midpoint (M) is defined midway between the first end and the second end, or stated differently, midway between the top dead center position and the bottom dead center position. As the piston assembly b1120 is a free piston, the top dead center and the bottom dead center positions are selected to provide a predetermined margin between the piston and the end walls b1128, b1130 of the piston body b1116 when the piston assembly b1120 is at one of the top and bottom dead center positions. In this way, the pistons b1122, b1124 of the piston assembly b1120 do not engage or hit the end walls b1128, b1130. In some embodiments, the preselected starting position is substantially a top dead center position of the preselected stroke of the piston assembly b1120, e.g., as shown in FIG. 5.1.7. That is, at least one of the pistons b1122, b1124 of the piston assembly b1120 is positioned at the top dead center position. In yet other embodiments, the preselected starting position is substantially a bottom dead center position of the preselected stroke of the piston assembly b1120, e.g., as shown in FIG. 5.1.8. That is, at least one of the pistons b1122, b1124 of the piston assembly b1120 is positioned at the bottom dead center position. In some further embodiments, the preselected starting position is substantially a midpoint of the preselected stroke of the piston assembly b1120, e.g., as shown in FIG. 5.1.9. That is, the pistons b1122, b1124 of the piston assembly b1120 are spaced evenly from the midpoint.

In some embodiments, the preselected starting positions of the piston assemblies of the closed cycle engine can be selected as different starting positions, and consequently, the piston assemblies can be moved to different preselected positions. For instance, FIG. 5.1.10 provides a schematic view of two fluidly coupled piston bodies b1132, b1134 with piston assemblies b1136, 1138 disposed therein. As shown, for the first piston body b1132, the preselected starting position of the first piston assembly b1136 is substantially at the midpoint of the preselected stroke of the piston assembly b1136. For the second piston body b1134, the preselected starting position of the second piston assembly b1138 is substantially at a top dead center position of the preselected stroke of the piston assembly b1138. In other example embodiments, the piston assemblies b1136, 1138 can be moved to other suitable preselected starting positions relative to one another.

In yet other embodiments, the preselected starting position of one or more of the piston assemblies can be trimmed or adjusted over time, e.g., to account for drifting or degradation of the piston sealing elements over time. For instance, as shown in FIG. 5.1.11, two fluidly coupled piston bodies b1132, b1134 are shown with piston assemblies b1136, b1138 disposed therein. As shown, for the first piston body b1132, the preselected starting position of the first piston assembly b1136 is substantially a midpoint of the preselected stroke of the piston assembly b1136. For the second piston body b1134, the preselected starting position of the second piston assembly b1138 disposed therein is offset from the midpoint of the preselected stroke of the piston assembly b1138 by an offset trim. As one example, the determined offset trim can be determined based at least in part on data b1530 collected from previous operations of the power generation system b1000. For instance, the one or more controllers b1510 can receive data b1530 indicative of the movement of the second piston assembly b1138 during past operations (e.g., amplitude, phase, frequency, speed, etc.), and can determine that the second piston assembly b1138 drifts out of sync with respect to the first piston assembly b1136 and thus causes unwanted vibration, reduced work output of the closed cycle engine b1110, etc. By starting the second piston assemblies b1136, b1138 at the preselected starting position and in accordance with the offset trim, initially moving the piston assemblies b1136, b1138 into synchronization may be achieved more easily.

The piston assemblies can be moved to their respective positions in any suitable manner. As one example, the one or more controllers b1510 are configured to receive data b1530 indicative of one or more operating parameters associated with one or more of the piston assemblies b1120. More particularly, the one or more controllers b1510 can receive data b1530 indicative of a current position of the piston assemblies b1120 of the closed cycle engine b1110. For instance, the one or more controllers b1510 can receive data b1530 indicative of the current position of the piston assemblies b1120 from the piston movement sensors b1520, e.g., as shown in FIG. 5.1.3. Once the current position of the piston assemblies b1120 are known or obtained, the one or more controllers b1510 can determine one or more repositioning commands indicative of instructions for moving the piston assemblies b1120 to their respective preselected starting positions. The repositioning commands can each include instructions for moving a given piston assembly b1120 a repositioning distance and direction. Once the repositioning commands are determined, the one or more controllers b1510 can provide the repositioning commands to one or more controllable devices b1534 operable to reposition the piston assemblies b1120 within their respective piston bodies b1116.

In some embodiments, for example, the one or more controllable devices b1534 operable to reposition the piston assemblies b1120 within their respective piston bodies b1116 can be the one or more electric machines b1310. For instance, the one or more electric machines b1310 can be used to electrically cam the piston assemblies b1120 into their respective preselected starting positions. Particularly, the one or more controllers b1510 can cause electrical power to be provided to the one or more electric machines b1310. For example, the one or more controllers b1510 can cause the one or more energy storage devices b1312 in communication with the one or more electric machines b1310 to provide electrical power thereto. The electrical power provided to the electric machine b1310 can cause the electric machine b1310, functioning as an electric motor or actuator, to drive or electrically cam the piston assembly b1120 to the preselected starting position. That is, the piston assembly b1120 can be moved via electronics in accordance with a cam profile function or motion profile. In some alternative embodiments, the electrical cam can be some other electric machine b1310 operable to move an associated piston assembly b1120 to a preselected starting position.

In yet other embodiments, the one or more controllable devices b1534 operable to reposition the piston assemblies b1120 within the respective piston bodies b1116 can be an electric motor configured to drive a mechanical cam that in turn is operable to move the one or more piston assemblies b1120 to the respective preselected starting positions. In some other embodiments, as noted above, the closed cycle engine b1110 has a plurality of piston bodies b1116 in which piston assemblies b1120 are movable between their respective hot side b1112 and cold side b1114. The hot side b1112 of each piston body b1116 is in fluid communication with a cold side b1114 of another piston body b1116. Further, in such embodiments, in causing the at least one of the one or more piston assemblies b1120 to move to the preselected starting position, the one or more controllers b1510 are configured to cause one or more valves to move to an open position such that fluid flows between the piston bodies b1116. In this way, the pressure change within the piston bodies b1116 causes the piston assemblies b1120 to move to their respective preselected starting positions. Stated another way, one or more valves can be controlled to cross bleed the fluid between the piston bodies b1116 such that the pistons b1122, b1124 are moved to their respective preselected starting positions.

At (b1706), the method (b1700) includes assigning a motion profile to at least one of the one or more electric machines b1310. For instance, in initializing the power generation system b1000, the one or more controllers b1510 are configured to assign a motion profile to at least one of the one or more electric machines b1310. Particularly, the one or more controllers b1510 are configured to assign a motion profile to at least one electric machine b1310 that is operatively coupled with a piston assembly b1120 of the closed cycle engine b1110. The assigned motion profile can be selected from a motion profile table or database, e.g., stored in a memory device of the one or more controllers b1510. For instance, the motion profiles stored in the motion profile table can be defined as a set of X-Y points that define the position of the dynamic member b1322 of a given electric machine b1310 at a point in time, e.g., during motoring or kickstarting the engine.

The motion profile assigned to the electric machine b1310 includes instructions for controlling the electric machine b1310 to drivingly move at least one piston assembly b1120 during startup or initialization of the power generation system b1000. More specifically, the motion profile assigned to the electric machine b1310 includes instructions for controlling an output of the electric machine b1310 during startup of the power generation system b1000 such that the piston assembly b1120 operatively coupled thereto is drivingly moved by the electric machine b1310 within its piston body b1116. Stated another way, the assigned motion profile provides actuation instructions for the electric machine b1310 operatively coupled with one of the piston assemblies b1120. The motion profile can include various setpoints over time for achieving certain motion characteristics, such as e.g., velocity, acceleration, deceleration, jerk, frequency, phase, amplitude, etc. The motion profile can be based on one, some, or all of the motion characteristics. Accordingly, when electrical power is provided to the electric machine b1310, the electric machine b1310 can actuate the piston assembly b1120 in accordance with the motion characteristics of the assigned motion profile. The one or more controllers b1510 can cause the one or more energy storage devices b1312 to provide electrical power to the electric machine b1310. The provided electrical power can cause the electric machine b1310 to actuate the piston assembly b1120.

In some embodiments, the method (b1700) further includes designating, by the one or more controllers b1510, a master piston assembly b1120 selected from one of the one or more piston assemblies b1120 of the closed cycle engine b1110. For instance, for the depicted embodiment of FIG. 5.1.2, the closed cycle engine b1110 includes four (4) piston bodies b1116 with four (4) piston assemblies b1120. Each piston body b1116 has an associated piston assembly b1120 movable therein. One of the piston assemblies b1120 can be designated as the master piston assembly b1120. In such embodiments, the designated master piston assembly b1120 is the sole piston assembly b1120 actuated by its associated electric machine b1310 in accordance with the assigned motion profile. However, when the master piston assembly b1120 is moved by the electric machine b1310 in accordance with the assigned motion profile, the other piston assemblies b1120 are also moved, e.g., based at least in part on the arrangement and configuration of the piston assemblies b1120 as well as the arrangement and configuration of the fluidly connected volumes or piston chambers b1118 defined by the piston bodies b1116. In some embodiments, particularly in embodiments in which some piston assemblies b1120 of the engine are movable independently of one another (e.g., in a Tetris engine configuration as described in Chapter 3), more than one piston assembly b1120 can be designated as a master piston assembly b1120. For instance, at least one piston assembly b1120 of each independent group or tetra piece can be designated as a master piston. In such embodiments, the dependent or follower piston assemblies b1120 associated with the master piston assemblies b1120 need not have designated motion profiles as they operable to follow their respective master pistons b1122, b1124.

In yet other embodiments, in assigning the motion profile to the electric machines b1310, each of the of the one or more electric machines b1310 are assigned a motion profile. That is, each electric machine b1310 operatively coupled with a piston assembly b1120 is assigned a motion profile. Accordingly, during startup, the electric machines b1310 actuate their respective piston assemblies b1120 in accordance with their assigned profiles. In some embodiments, for each piston assembly b1120 of the closed cycle engine b1110, at least one electric machine b1310 operatively coupled thereto is assigned a motion profile. Thus, if more than one electric machine b1310 is operatively coupled with a given piston assembly b1120, only one of the electric machines b1310 need be assigned a motion profile.

At (b1708), with reference again to FIG. 5.1.5, the method (b1700) includes commencing motion of the piston assemblies b1120 of the closed cycle engine b1110. In some implementations, in initializing the power generation system b1000, the one or more controllers b1510 are configured to cause an electric machine b1310 to drivingly motor or electrically cam the piston assembly b1120 operatively coupled thereto based at least in part on the assigned motion profile. For instance, to cause the electric machine b1310 to drivingly motor the piston assembly b1120 operatively coupled thereto, the one or more controllers b1510 can cause the one or more energy storage devices b1312 to provide electrical power to the electric machine b1310 to drivingly motor the piston assembly b1120. Additionally or alternatively, electrical power can be provided by an alternative power supply. The amount of electrical power, the phase, and the frequency of the provided electrical power can be provided based at least in part on the assigned motion profile. When electrical power is provided to the electric machine b1310, the electric machine b1310 drives or motors the piston assembly b1120 operatively coupled thereto such that the piston assembly b1120 is driven or moved between the cold side b1114 and the hot side b1112 of the closed cycle engine b1110, e.g., as shown in FIG. 5.1.12. Specifically, as depicted in FIG. 5.1.12, the electric machine b1310 operatively coupled with the piston assembly b1120 can drivingly motor the piston assembly b1120 such that the piston assembly b1120 translates (denoted by the arrow labeled "T") between the hot side b1112 and the cold side b1114 of the closed cycle engine b1110.

In some embodiments, the one or more controllers b1510 cause the electric machine b1310 to drivingly motor the piston assembly b1120 operatively coupled thereto for a predetermined initialization time. After the electric machine b1310 drivingly motors the piston assembly b1120 operatively coupled thereto for the predetermined initialization time, the one or more controllers b1510 are further configured to command the electric machine b1310 to cease drivingly motoring the piston assembly b1120 operatively thereto. That is, after the predetermined initialization time elapses, the electric machine b1310 ceases motoring the piston assembly b1120. The predetermined initialization time can be a set or fixed amount of time that corresponds with a time period in which the piston assemblies b1120 can achieve predetermined motion characteristics without need for motoring or actuating by the electric machine b1310.

In yet other embodiments, the one or more controllers b1510 cause the electric machine b1310 to drivingly motor the piston assembly b1120 operatively coupled thereto until the electric machine b1310 completes or substantially completes the assigned motion profile. For instance, the motion profile can designate certain motion characteristics of the electric machine b1310 over time, and when the motion profile has been substantially completed, e.g., greater than ninety percent (90%), then the one or more controllers b1510 are further configured to command the electric machine b1310 to cease motoring the piston assembly b1120 operatively coupled thereto.

In some further embodiments, the one or more controllers b1510 cause the electric machine b1310 to drivingly motor the piston assembly b1120 operatively coupled thereto until the electric machine b1310 and/or the piston assembly b1120 operatively coupled thereto achieves or substantially achieves one or more motion characteristics, e.g., a predetermined speed, acceleration, amplitude, etc. For instance, when the one or more motion characteristics are achieved or substantially achieved, e.g., greater than ninety percent (90%), then the one or more controllers b1510 are further configured to command the electric machine b1310 to cease motoring the piston assembly b1120 operatively coupled thereto. Stated yet another way, once the one or more motion characteristics of the electric machine b1310 and/or piston assembly b1120 are achieved or substantially achieved, the electric machine b1310 ceases motoring the piston assemblies b1120 and the piston assembly b1120 from that point relies on the temperature differential $\Delta T$ between the hot side b1112 and the cold side b1114 to move the piston within the piston body b1116. In some further embodiments, the more controllers b1510 can cause the electric machine b1310 to drivingly motor the piston assembly b1120 operatively coupled thereto when the closed cycle engine b1110 "catches". Particularly, the control devices of the control system b1500 can monitor the motion characteristics noted above, and upon determining a discontinuity in the motion or behavior of the piston assembly b1120 and/or the dynamic member b1322 of the electric machine b1310 has occurred, the controllers b1510 can cause the electric machine b1310 to cease motoring the piston assembly b1120. This determined discontinuity can be associated with the engine catching, or stated differently, the discontinuity can be associated with an event in which the thermal power of the engine takes over to move the piston assemblies b1120 within their respective piston chambers b1118.

Although only one electric machine b1310 was described above as motoring a piston assembly b1120 operatively coupled thereto, it will be appreciated that one, some, or all of the piston assemblies b1120 of the closed cycle engine b1110 can be motored or drivingly moved during initialization, e.g., in the manner described above.

In some implementations, commencing motion of the piston assemblies b1120 of the closed cycle engine b1110 at (b1708) includes kick starting at least one piston assembly b1120 of the closed cycle engine b1110. For instance, in initializing the power generation system b1000, the one or more controllers b1510 are configured to cause one or more of the electric machines b1310 operatively coupled with the piston assemblies b1120 to drivingly kickstart their respective piston assemblies b1120. In some implementations, all of the piston assemblies b1120 of the closed cycle engine b1110 can be kickstarted by their respective electric machines b1310. In yet other implementations, some but not all of the piston assemblies b1120 of the closed cycle engine b1110 can be kickstarted by their respective electric machines b1310. For instance, for closed cycle engines b1110 having four (4) piston assemblies b1120, e.g., such as the closed cycle engine b1110 shown in FIG. 5.1.2, two of the four piston assemblies b1120 can be kickstarted. In some further embodiments, only a single piston assembly b1120 of the closed cycle engine b1110 is kickstarted by its associated electric machine b1310.

To cause an electric machine b1310 to drivingly kickstart the piston assembly b1120 operatively coupled thereto, the one or more controllers b1510 can cause the one or more energy storage devices b1312 to provide electrical power to the electric machine b1310. Additionally or alternatively, electrical power can be provided by an alternative power supply. The amount of electrical power, the phase, and the frequency of the provided electrical power can be provided based at least in part on the assigned motion profile. When electrical power is provided to the electric machine b1310, the electric machine b1310 kickstarts the piston assembly b1120 operatively coupled thereto such that the piston assembly b1120 is driven or moved between the cold side b1114 and the hot side b1112 of the closed cycle engine b1110.

In drivingly kickstarting the piston assembly b1120, the electric machine b1310 kickstarts the piston assembly b1120 operatively coupled thereto along a predetermined number of strokes. For instance, in some embodiments, the predetermined number of strokes is no more than one stroke of the piston assembly b1120. In such embodiments, the electric machine b1310 kickstarts the piston assembly b1120 operatively coupled thereto along the predetermined number of strokes and such that the piston assembly b1120 continues moving (e.g., translating) after the electric machine b1310 kickstarts the piston assembly b1120. In yet other embodiments, the predetermined number of strokes is between one and five strokes of the piston assembly b1120.

In initializing the power generation system b1000, the one or more controllers b1510 are configured to create a temperature differential $\Delta T$ between the hot side b1112 and the cold side b1114 of the closed cycle engine b1110. Prior to start up or initialization of the closed cycle engine b1110, the hot side b1112 may not be hotter or at a higher temperature than the cold side b1114, and consequently, the cold side b1114 may not be colder or at a lower temperature than the hot side b1112. Accordingly, the balance of plant b1200 associated with the closed cycle engine b1110 can create a temperature differential $\Delta T$ between the two opposing sides. For instance, in some implementations, the balance of plant b1200 can heat the hot side b1112 of the engine to create the temperature differential $\Delta T$ between the opposing sides. In some implementations, the balance of plant b1200 can cool or remove heat from the cold side b1114 of the engine to create the temperature differential $\Delta T$ between the opposing sides. In yet other implementations, the balance of plant b1200 can heat the hot side b1112 of the engine and cool or remove heat from the cold side b1114 of the engine to create the temperature differential $\Delta T$ between the opposing sides. The balance of plant b1200 can include any suitable heat source to impart thermal energy or heat the hot side b1112 of the closed cycle engine b1110, such as e.g., a combustor b1224 as will be described below. Furthermore, the balance of plant b1200 can include any suitable heat removal system for removing or extracting heat from the cold side b1114 of the closed cycle engine b1110. Additionally or alternatively, the balance of plant b1200 can include any suitable cooling system for cooling the cold side b1114 of the engine.

At (b1710), for instance, the method (b1700) includes causing a heat source to apply heat to the hot side b1112 of the closed cycle engine b1110. In this way, a temperature differential ΔT between the hot side b1112 and the cold side b1114 of the closed cycle engine b1110 can be created. The one or more controllers b1510 can cause the heat source to apply heat to the hot side b1112 of the closed cycle engine b1110. Particularly, the one or more controllers b1510 can cause the heat source to apply heat to the hot side b1112 before, at the same time, or after commencing motion of the piston assemblies b1120 at (b1708).

The heat source can be any controllable heat source. As one example, for the depicted embodiment of FIG. 5.1.2, the balance of plant b1200 includes a heater loop b1210. The heater loop b1210 includes a combustor b1224 operable to generate heat. Thus, in this embodiment, the heat source is the combustor b1224. Heat generated by the combustor b1224 can be exchanged with the hot side b1112 of the engine, e.g. to impart thermal energy thereto. In causing the combustor b1224 to apply heat to the hot side b1112 of the closed cycle engine b1110, the one or more controllers b1510 are configured to cause a compressor b1222 to move pressurized air along an intake line b1232 of the heater loop b1210 to the combustor b1224. Particularly, the one or more controllers b1510 can cause the rotary components of the compressor b1222 to rotate such that air is moved from an ambient environment into the compressor b1222. The compressor b1222 can pressurize the air, and the pressurized air can flow downstream to the combustor b1224. In addition, the one or more controllers b1510 can cause a fuel control device b1214 to selectively allow a fuel to flow to the combustor b1224 such that the fuel and air can mix and combust in the combustor b1224 to generate heat. The combustor b1224 can be in fluid communication with a hot side b1112 heat exchanger positioned along the heater loop b1210 downstream of the combustor b1224 and in a heat exchange relationship with the hot side b1112 for imparting heat thereto.

At (b1712), the method (b1700) includes removing heat from and/or cooling the cold side b1114 of the closed cycle engine b1110. In this manner, a temperature differential ΔT between the hot side b1112 the cold side b1114 of the closed cycle engine b1110 can be created. As noted above, heat can be removed from and/or the cold side b1114 can be cooled in addition to heat being applied to the hot side b1112 of the closed cycle engine b1110 at (b1710). In some implementations, the one or more controllers b1510 can cause a heat removal system to remove or extract heat from the cold side b1114 of the engine. Particularly, the one or more controllers b1510 can cause the heat removal system to remove/extract heat from the cold side b1114 before, at the same time, or after commencing motion of the piston assemblies b1120 at (b1708). Additionally or alternatively, the one or more controllers b1510 can cause a cooling system to cool the cold side b1114 of the engine. Specifically, the one or more controllers b1510 can cause the cooling system to cool the cold side b1114 before, at the same time, or after commencing motion of the piston assemblies b1120 at (b1708).

The heat removal system can be any suitable system, such as e.g., a system that implements a Rankine, Notarnicola, or other suitable cycle. As described herein, a system implementing a Notarnicola cycle operates on a constant density heat addition principle. For instance, a Notarnicola cycle system can include a constant density heat exchanger operable to hold a volume of working fluid at constant density during heat application. By applying heat to a working fluid held at constant density, the temperature and pressure of the working fluid can be increased and thus its potential energy can be increased as well. Advantageously, the increased potential energy of the working fluid can allow for an expansion device or the like to extract more useful work therefrom. In some embodiments, the Notarnicola cycle can include a Wrankel device, or constant density heat exchanger/expansion device, for producing and extracting useful work.

For the depicted embodiment of FIG. 5.1.2, the balance of plant b1200 includes a chiller loop b1212, such as e.g., one of the chiller loops described herein. The chiller loop b1212 can include a cold side b1114 heat exchanger positioned along the chiller loop b1212 and in a heat exchange relationship with the cold side b1114. In initializing the power generation system b1000, the one or more controllers b1510 are configured to cause the cold side b1114 heat exchanger to remove heat from the cold side b1114 of the closed cycle engine b1110. For instance, the cold side b1114 heat exchanger can remove or extract heat from the cold side b1114 of the engine and can use the thermal energy in some useful way. For example, as depicted embodiment of FIG. 5.1.2, the chiller loop b1212 is positioned at least in part in a heat exchange relationship with the heater loop b1210. Accordingly, heat removed from the cold side b1114 of the engine can be exchanged with the heater loop b1210, e.g., to provide for more efficient heating of the hot side b1112 of the engine.

The cooling system can be any suitable system, such as e.g., a system that implements a refrigeration or other cooling cycle. As one example, the balance of plant b1200 can include a refrigeration loop. A cold side b1114 heat exchanger (e.g., an evaporator) can be positioned along the refrigeration loop in a heat exchange relationship with the cold side b1114 of the closed cycle engine b1110. In initializing the power generation system b1000, the one or more controllers b1510 are configured to cause the cold side b1114 heat exchanger to cool the cold side b1114 of the closed cycle engine b1110. Accordingly, the temperature differential ΔT between the cold side b1114 and the hot side b1112 can be increased.

In summary, to initialize the power generation system b1000, at (b1702), the one or more controllers b1510 of the control system b1500 can determine whether to initialize the system based at least in part on data b1530 of indicative of the load state of the one or more energy storage devices b1312 in communication with the electric machines b1310. If the state of charge and charge acceptance rate of the one or more energy storage devices b1312 are within predetermined ranges, e.g., the energy storage devices b1312 have the capacity and the ability to accept electrical power, the one or more controllers b1510 can proceed with initializing the system. On the other hand, if the energy storage devices b1312 do not have the capacity and/or the ability to accept logical power, the one or more controllers b1510 can determine not to initialize the system. At (b1704) and (b1706), the one or more controllers b1510 can cause the one or more piston assemblies b1120 to move to their respective preselected starting positions (e.g., via electrical camming) and one or more motion profiles can be assigned to the electric machines b1310, respectively. At (b1708), the one or more controllers b1510 can commence motion of the piston assemblies b1120. For instance, the one or more controllers b1510 can cause the one or more electric machines b1310 to drivingly motor their respective piston assemblies b1120. That is, when electrical power is provided to the electric machines b1310, the dynamic members b1322 of the electric machines b1310 move in accordance with their assigned motion profiles, and as a result, the piston assemblies b1120 operatively coupled with the electric machines b1310 are moved within their respective piston bodies b1116, e.g., between the hot and cold side b1114 of the engine. In some embodiments, the one or more controllers b1510 can cause the one or more electric machines b1310 to drivingly kickstart their respective piston assemblies b1120. Particularly, electrical power can be supplied to the electric machine b1310 such that the dynamic member b1322 of the electric machine b1310 operatively coupled with the piston assembly b1120 is kickstarted in accordance with assigned motion profile. At (b1710), the one or more controllers b1510 cause a heat source to apply heat to the hot side b1112 of the engine. At (b1712), the one or more controllers b1510 cause a heat removal system and/or a cooling system to remove or cool the cold side b1114 of the engine. Stated differently, at (b1710) and (b1712), a temperature differential $\Delta T$ is created between the hot side b1112 and the cold side b1114 of the engine. The created temperature differential $\Delta T$ causes the working fluid within the piston bodies b1116 to expand/contract, which causes movement of the piston assemblies b1120 therein. Particularly, the expansion/contraction of the working fluid causes the piston assemblies b1120 to move within their respective piston bodies b1116 between the hot side b1112 and cold side b1114 of the engine. Once the temperature differential $\Delta T$ has

reached a preselected difference, the piston assemblies b1120 are movable within their respective piston bodies b1116 without assistance from the electric machines b1310 drivingly motoring or kickstarting the pistons b1122, b1124. When the temperature differential $\Delta T$ has reached the preselected difference, the system can "let go" or cease motoring/kickstarting the pistons b1122, b1124 and the system can commence normal operation, e.g., in an idle mode or charging mode.

**Chapter 5.1.5 - Power Generation** System **Normal Operation**

Once the power generation system b1000 is initialized, the system can operate in a normal mode. That is, the power generation system b1000 can be operated in the idle mode or the charging mode, e.g., as shown in FIG. 5.1.4. As noted above, in the charging mode, the piston assemblies b1120 are moved under their own thermal power (e.g., without need for the electric machines b1310 to motor the piston assemblies b1120) and an electrical load is applied to the one or more electric machines b1310 operatively coupled with the piston assemblies b1120 of the closed cycle engine b1110. In the idle mode, the piston assemblies b1120 are moved under their own thermal power but without or with a negligible electrical load applied on the electric machines b1310.

An example manner in which the power generation system b1000 can be controlled in the normal mode will now be provided. FIG. 5.1.13 provides a flow diagram depicting an example method (b1720) of controlling the power generation system b1000 of FIGS. 1 and 2 in normal mode. Some or all of the method (b1720) can be implemented by the control system b1500 described herein. In addition, it will be appreciated that exemplary method (b1720) can be modified, adapted, expanded, rearranged and/or omitted in various ways without deviating from the scope of the present subject matter.

At (b1722), the method (b1700) includes setting an operating parameter setpoint. For instance, the one or more controllers b1510 can set the operating parameter setpoint. The operating parameter setpoint is indicative of a desired or target value of some variable operating parameter of the power generation system b1000. In some embodiments, for instance, the operating parameter setpoint can be indicative of an operating parameter associated with the electric machines b1310 operatively coupled with the closed cycle engine b1110. For example, the operating parameter setpoint can be indicative of a target electrical current generated by or at the electric machines b1310. As another example, the operating parameter setpoint can be indicative of a target voltage at the electric machines b1310. In other embodiments, the operating parameter setpoint can be indicative of an operating parameter associated with the closed cycle engine b1110. For example, the operating parameter setpoint can be indicative of a target pressure at some station or position within or fluidly connected with one of the piston bodies b1116. As another example, the operating parameter setpoint can be indicative of a target temperature at some station or position within or fluidly connected with one of the piston bodies b1116. In still other embodiments, the operating parameter setpoint can be indicative of an operating parameter associated with the movement of one or more of the piston assemblies b1120 of the closed cycle engine b1110. For example, the operating parameter setpoint can be indicative of a target speed of one or more of the piston assemblies b1120 of the closed cycle engine b1110. As another example, the operating parameter setpoint can be indicative of a target amplitude of one or more of the piston assemblies b1120 of the closed cycle engine b1110.

The operating parameter setpoint can be set by the one or more controllers b1510 based at least in part on a selected control scheme. The control scheme can be selected from one of a plurality of control schemes. As one example, in some embodiments, the power generation system b1000 can be controlled in accordance with an efficiency control scheme. Utilizing the efficiency control scheme, the power generation system b1000 can be controlled in such a way that the efficiency of the overall power generation system b1000 is optimized. In such embodiments, the operating parameter setpoint can be set as an objection function that seeks to maximize the efficiency of the power generation system b1000. As another example, in some embodiments, the power generation system b1000 can be controlled in accordance with a cost control scheme. Utilizing the cost control scheme, the power generation system b1000 can be controlled in such a way that the cost of operating the overall power generation system b1000 is optimized. In such embodiments, the operating parameter setpoint can be set as an objection function that seeks to minimize the cost of operating the power generation system b1000. As a further example, in some other embodiments, the power generation system b1000 can be controlled in accordance with a cost to power ratio control scheme. Utilizing the cost to power ratio control scheme, the power generation system b1000 can be controlled in such a way that the cost to power ratio is minimized during operation. In such embodiments, the operating parameter setpoint can be set as an objection function that seeks to minimize the cost to power ratio of operating the power generation system b1000.

As yet another example, in some embodiments, the power generation system b1000 can be controlled in accordance with a power output control scheme. Utilizing the power output control scheme, the power generation system b1000 can be controlled in such a way that a set amount of electrical power is generated by the electric machines b1310 of the system. In such embodiments, the operating parameter setpoint can be set as a target electrical power output of the system. In some embodiments, to achieve a particular electrical power output from the electric machines b1310, the operating parameter setpoint can be set as a target piston movement characteristic, such as e.g., the amplitude, speed (i.e., the amplitude of the piston at constant frequency), frequency, etc. The speed of the piston can be the max linear piston speed, for example. Advantageously, as will be explained further below, in some embodiments the operating parameter setpoint can be set as a target piston speed that corresponds to or is associated with a desired or target electrical power output of the electric machines b1310. By setting the operating parameter setpoint as a target piston speed, a one-to-one relationship can be maintained between the piston speed and the electrical power output of the electric machine b1310. Based on the piston speed set point, the fuel input required to heat the hot side b1112 of the closed cycle engine b1110 to achieve the set piston speed can be determined.

For instance, FIG. 5.1.14 provides a table of an example control law. The control law can be stored in one or more of the memory devices of the one or more controllers b1510, for example. The control law can be accessed by the one or more processors. As shown, the control law associates or corresponds various piston speeds with electrical power outputs of the electric machines b1310. Then, as noted above, the fuel input (i.e., an amount of fuel to input into the combustor b1224 for combustion) can be determined. Notably, the piston speed has a one-to-one relationship with the power output of the electric machines b1310. For instance, as depicted in FIG. 5.1.14, a piston speed A2 is associated with a power output A1 in a one-to-one relationship. The piston speeds B2, C2, and so on to N2 are associated with their respective power outputs B1, C1, and N1 in one-to-one relationships as well. Based on the selected piston speed and/or power output, the fuel input is determined to achieve the desired piston speed and/or power output.

Further, in some example embodiments, the operating parameter setpoint can be varied by the one or more controllers b1510 during operation of the power generation system b1000. For instance, in some embodiments, the operating parameter setpoint can be automatically varied based at least in part on the load state of the one or more energy storage devices b1312 in communication with the one or more electric machines b1310. The one or more controllers b1510 can receive data b1530 from one or more sensors associated with the one or more energy storage devices b1312. Based at least in part on the received data b1530, the one or more controllers b1510 can then determine the load state of the one or more energy storage devices b1312 in communication with the electric machines b1310. As noted previously, the load state can be descriptive of a state of charge or charge capacity of the one or more energy storage devices b1312. In some implementations, the operating parameter setpoint can be varied based at least in part on the state of charge or charge capacity of the one or more energy storage devices b1312.

By way of example, FIG. 5.1.15 provides a graph depicting an operating parameter setpoint as well as a charge capacity of the one or more energy storage devices b1312 as a function of charge time. As shown, when the charge capacity or state of charge of the one or more energy storage devices b1312 reaches a predetermined charge or predetermined percentage of full charge, the operating parameter setpoint can be varied, e.g., decreased. For instance, in embodiments in which the operating parameter setpoint is indicative of a target piston speed, when the charge capacity of the one or more energy storage devices b1312 reaches the predetermined charge, the operating parameter setpoint of the piston speed can be decreased. In this way, the closed cycle engine b1110 will ultimately produce less useful work, and consequently, the electric machines b1310 operatively coupled thereto will generate less electrical power. Accordingly, the electric machines b1310 can charge the energy storage devices b1312 at a slower charge rate, e.g., to top off or trickle charge the one or more energy storage devices b1312. Moreover, as further shown in FIG. 5.1.15, the operating parameter setpoint can be varied multiple times over the charge time, e.g., when the charge capacity of the one or more energy storage devices b1312 reaches a given predetermined charge. Particularly, when the charge capacity of the one or energy storage devices b1312 reaches a given predetermined charge, the operating parameter setpoint can be varied in a step-like manner as shown in FIG. 5.1.15. In some embodiments, the operating parameter setpoint can be varied in a gradual or ramp-like manner.

In some embodiments, the closed cycle engine b1110 and its associated electric machines b1310 are one of a plurality of closed cycle engines and electric machines b1310 of a power generation system b1000. For instance, FIG. 5.1.16A provides a schematic view of a power generation system b1000 that includes a plurality of closed cycle engines each having one or more associated electric machines b1310. Each of the electric machines b1310 of the system are in communication with a charge controller b1318. A plurality of energy storage devices b1312 are in communication with the charge controller b1318 as shown. A switching device can be positioned between the energy storage devices b1312 and the charge controller b1318. Moreover, each closed cycle engine b1110, electric machine b1310, and energy storage devices b1312 are communicatively coupled with the one or more controllers b1510 of the control system b1500. In such embodiments, instead of varying the operating parameter setpoint of a particular engine, the one or more controllers b1510 can control the engines, e.g., to on and off positions. In this way, when the charge capacity of the energy storage devices b1312 reach a predetermined charge (e.g., as shown in FIG. 5.1.15), the one or more controllers b1510 can cause one or more of the closed cycle engines b1110 to turn off. Moreover, in embodiments where one or more energy storage devices b1312 come on line or require electrical power, the one or more controllers b1510 can cause one or more of the closed cycle engines to turn on. In addition, as noted herein, some closed cycle engine b1110 configurations can include piston assemblies b1120 that are movable independently of one another. In such embodiments, the one or more controllers b1510 can cause one or more of the piston assemblies b1120 to cease movement or startup based at least in part on the charge capacity of the one or more energy storage devices b1312.

Further, the one or more controllers b1510 can activate the one or more switching devices, e.g., for better maintaining the health of the energy storage devices b1312. For instance, the one or more controllers b1510 can activate a switching device to an open position based at least in part on a sensed temperature of the energy storage device. In this way, the one or more controllers b1510 can prevent the energy storage devices b1312 from overheating, among other benefits.

FIG. 5.1.16B provides a schematic view of a distributed power generation network that includes a plurality of closed cycle engines each having one or more associated electric machines according to an example aspect of the present disclosure. For this embodiment, the closed cycle engine b1110 and its associated electric machines b1310 are one of a plurality of closed cycle engines b1110 and electric machines b1310 of a distributed power generation network b1900. For instance, FIG. 5.1.16B provides a schematic view of a distributed power generation network b1900 that includes a plurality of closed cycle engines each having one or more associated electric machines b1310. Each of the electric machines b1310 of the system are in communication with an energy management controller b1334. A switching device can be positioned between each electric machine b1310 and the energy management controller b1334. A power grid b1332 provides communication between the energy management controller b1334 and one or more energy storage devices b1312 and one or more electrical loads b1316. In such embodiments, instead of varying the operating parameter setpoint of a particular engine to control the electrical power output of the distributed network b1900, the one or more controllers b1510 can control the engines b1110, e.g., to on and off positions. In this way, when the charge capacity of the energy storage devices b1312 reach a predetermined charge (e.g., as shown in FIG. 5.1.15), the one or more controllers b1510 can cause one or more of the closed cycle engines b1110 to turn off and/or the switching device can be selectively controlled to control the electrical power to the power grid b1332 and ultimately to the energy storage devices b1312 and electrical loads b1316. Moreover, in embodiments where one or more energy storage devices b1312 and/or electrical loads b1316 come on line or demand additional electrical power, the one or more controllers b1510 can cause one or more of the closed cycle engines b1110 to turn on and/or cause the switching devices to close the circuit to allow electrical power to flow from a given electric machine b1310 to the power grid b1332.

In addition, in some example embodiments, the operating parameter setpoint can be varied by the one or more controllers b1510 based at least in part on the charge acceptance rate of the energy storage devices b1312 in communication with the electric machines b1310. Particularly, the one or more controllers b1510 can receive data b1530 from one or more sensors associated with the one or more energy storage devices b1312. Based at least in part on the received data b1530, the one or more controllers b1510 can then determine the charge acceptance rate of the one or more energy storage devices b1312 in communication with the electric machines b1310. Moreover, the one or more controllers b1510 can determine a charging rate of the energy storage devices b1312, e.g., based at least in part on one or more operating parameters associated with the electric machines b1310 (e.g., electric current and/or voltage at the electric machines b1310). Thereafter, the one or more controllers b1510 can determine whether the charging rate exceeds the charge acceptance rate of the energy storage devices b1312. If the charging rate exceeds the charge acceptance rate of the energy storage devices b1312, the operating parameter setpoint can be changed or varied such that the charging rate is adjusted towards the charge acceptance rate of the energy storage devices b1312. On the other hand, if the charging rate does not exceed the charge acceptance rate of energy storage devices b1312, the operating parameter setpoint can be changed or varied such that the charging rate is adjusted closer to the determined charge acceptance rate of the energy storage devices b1312, e.g., for more efficient charging. Accordingly, in some implementations, the operating parameter setpoint can be varied based at least in part on the charge acceptance rate of the one or more energy storage devices b1312.

In yet other embodiments, the operating parameter setpoint can be varied by the one or more controllers b1510 based at least in part on an anticipated load change on the electric machines b1310. The anticipated load change can be determined by the one or more controllers b1510 based at least in part on the received load state of electrical device(s) in communication with the electric machines b1310, such as energy storage devices b1312, the power grid b1332, electrical loads b1316, etc. For instance, the load state data b1530 can be indicative of an anticipated change in electrical power demanded by the electrical device(s) on the electric machine(s) b1310 and an anticipated time at which the anticipated change in electrical power demanded by the electrical device on the electric machine is to occur. Thus, the magnitude and timing of the load change can be considered by the one or more controllers b1510 and the operating parameter set point can be varied accordingly. In some embodiments, the load state data includes a runtime indicator indicative of a time period or time at which one or more of the electrical devices or elements anticipate coming on line or are scheduled to drop offline. Stated differently, the runtime indicator is indicative of a time period or time at which one or more electrical devices (e.g., electrical loads b1316, energy storage devices b1312, the power grid b1332, etc.) anticipate or are scheduled to receive electrical power from the electric machine b1310. In some embodiments, in addition to the runtime indicator, the load state data includes a power demand schedule indicative of the electrical power demand that each electrical device places on the electric machine(s) b1310 over a given period or runtime. In some embodiments, the power demanded by the electrical devices on the electric machine(s) b1310 are monitored by the one or more controller(s) b1510 so that dynamic load changes can be anticipated. Thus, in some embodiments, the electrical devices are in communication with or communicatively coupled with the one or more controller(s) b1510.

In some embodiments, particularly where there are multiple electrical devices in communication with the electric machine b1310, the load state of the electrical device is indicative of a total anticipated change in electrical power demanded by the plurality of electrical devices on the electric machine for a predetermined time period. For instance, the predetermined time period can be five seconds (5 s). The load state data can be used to anticipate the total anticipated load change over the predetermined time period. Thus, instead of making changes in response to every load change, the system varies the output of the engine and/or electric machine in response to a cumulative anticipated load over the predetermined time period, e.g., (5 seconds). This may, for example, prevent excessive ramping of the closed cycle engine and/or excessive varying of the operating parameter setpoint. Further, in some embodiments, the load state data b1530 can be indicative of the number of electrical devices (e.g., energy storage devices b1312) that are electrically connected with the electric machines b1310 and the electrical power demanded by the electrical devices on the electric machine(s) b1310.

Generally, by anticipating load changes on the electric machine b1310, the output of the closed cycle engine b1110 can more closely balance with the load on the electric machine b1310 when the anticipated load change actually occurs. In this manner, the piston assemblies b1120 are able to better maintain their respective amplitudes during a load change and amplitude spike increases and decreases can be prevented. The operating parameter setpoint can be varied to account for such anticipated loads so as to allow the closed cycle engine b1110 to better maintain steady-state operation despite dynamic load changes on the electric machines b1310.

By way of example, FIG. 5.1.17 provides a graph depicting an applied load on the electric machines b1310 as a function of time as well as a fuel input to the combustor b1224 of a closed cycle engine b1110 as a function of time according to an example aspect of the present disclosure. As shown, the applied load on the electric machines b1310 is initially stable during a charging mode. Then, at time T1, the one or more controllers b1510 receive data indicative of one or more operating parameters associated with the energy storage devices b1312 and/or the electric machine b1310. The data can be received by the one or more controllers b1510 from the charge controller b1318 and/or one or more sensors associated with the electric machines b1310 and/or the energy storage devices b1312. The received data can be indicative of a load state of the one or more energy storage devices b1312. Based on the received data, and particularly on the load state of the one or more energy storage devices b1312, the one or more controllers b1510 can determine whether a load change on the one or more electric machines b1310 is anticipated. In this example, the one or more controllers b1510 determine that a load change is in fact anticipated based at least in part on the received data indicative of the load state of the one or more energy storage devices b1312. Thus, at time T1, the one or more controllers b1510 determine that a load change is anticipated. Particularly, the one or more controllers b1510 determined that a load change is anticipated at time T2. The anticipated load change on the electric machines b1310 at time T2 can correspond with one or more energy storage devices b1312 scheduled to go off line (i.e., no longer receive electrical power from the electric machines b1310).

As further shown in FIG. 5.1.17, the operating parameter setpoint can be varied to account for the anticipated load change on the electric machines b1310. Specifically, the operating parameter setpoint can be varied in such a way that the fuel input to the combustor b1224 is ramped in anticipation of the load change at time T2. In this example, as the anticipated load change is a load decrease, the operating parameter setpoint is varied in such a way that the fuel input to the combustor b1224 is ramped down. However, as will be appreciated, if the anticipated load change is a load increase, the operating parameter setpoint is varied in such a way that the fuel input to the combustor b1224 is ramped up or increased over time. As depicted in FIG. 5.1.17, the one or more controllers b1510 vary the operating parameter setpoint such that the fuel input ramps down and stabilizes at a preselected fuel input known to maintain the amplitude of the pistons b1122, b1124 for the anticipated load change. Advantageously, by ramping the fuel input in anticipation of a load change, the closed cycle engine b1110 may operate more efficiently and better maintain its steady-state operation despite the dynamic drop in electrical load on the electric machines b1310. Furthermore, gradually ramping the closed cycle engine b1110 can reduce vibration of the engine and extend the useful service life of the components of the power generation system b1000, among other benefits.

As another example, FIG. 5.1.17B provides a graph depicting a plurality of applied loads on the electric machines b1310 as a function of time as well as a fuel input to the combustor b1224 of a closed cycle engine b1110 as a function of time according to an example aspect of the present disclosure. As shown, the applied loads on the electric machines b1310 include a first load L1 and a second load L2, which are both stable or steady state at a current time TC during a charging mode. The first load L1 corresponds to a first electrical device in communication with the electric machines b1310 and the second load L2 corresponds to a second electrical device in communication with the electric machines b1310. At the current time TC, the one or more controllers b1510 can receive data indicative of a load state of the electrical devices in communication with the electric machines b1310. Based on the received data, and particularly on the load state of the electrical devices, the one or more controllers b1510 can determine whether any of the electrical devices in communication with the electric machines b1310 anticipate causing a load change on the one or more electric machines b1310, e.g., by dropping offline, demanding more electric power, or demanding less electrical power. In some embodiments, the load state data is indicative of one or more electrical devices coming on line, or transitioning from not demanding electrical power from the electric machines b1510 to demanding electrical power from the electric machines b1510. By considering the load state of the plurality of electrical devices in communication with the electric machines b1510, for this embodiment, the load state of the electrical devices is indicative of a total anticipated change in electrical power demanded by the plurality of electrical devices on the electric machine. Stated differently, based on the received load state data, the one or more controllers b1510 can determine a total anticipated change in electrical power demanded by the plurality of electrical devices on the electric machine within a predetermined time period occurring in the future with respect to the current time TC. The predetermined future time period can be a rolling time period set ahead from the current time by predetermined anticipation period, for example.

As depicted in FIG. 5.1.17B, based on the received load state data, the one or more controllers b1510 determine that the first load L1 corresponding to the first electrical device in communication with the electric machines b1310 anticipates decreasing its demanded power on the electric machines b1310 by -P within a predetermined future time period spanning from T1 to T2. Furthermore, based on the received load state data, the one or more controllers b1510 determine that the second load L2 corresponding to the second electrical device in communication with the electric machines b1310 anticipates increasing its demanded power on the electric machines b1310 by +2P within the predetermined future time period spanning from T1 to T2. Accordingly, the one or more controllers b1510 can determine the net or total anticipated load change on the electric machines b1310 within the predetermined future time period, e.g., by summing all of the anticipated load changes. In this example, the one or more controllers b1510 determine the total anticipated load change on the electric machines b1310 within the predetermined future time period is +P (+2P + -P = +P).

Based on the determined total anticipated load change on the electric machines b1310 within the predetermined future time period, the operating parameter setpoint can be varied to account for the total anticipated load change on the electric machines b1310. Specifically, the operating parameter setpoint can be varied in such a way that the fuel input to the combustor b1224 is ramped in anticipation of the total load change within the predetermined future time period. In this example, as the total anticipated load change is a load increase of +P, the operating parameter setpoint is varied in such a way that the fuel input to the combustor b1224 is ramped up or increased over time as shown in FIG. 5.1.17B. However, as will be appreciated, if the total anticipated load change was a load decrease, the operating parameter setpoint can be varied in such a way that the fuel input to the combustor b1224 is ramped down or decreased over time.

As depicted in FIG. 5.1.17B, in this example, the one or more controllers b1510 vary the operating parameter setpoint such that the fuel input ramps up and stabilizes at a preselected fuel input known to maintain the amplitude of the pistons b1122, b1124 at a predetermined amplitude range despite the anticipated load change. The fuel input can be ramped up such that the preselected fuel input stabilizes at a time TZ, which corresponds with the timing of when the second load L2 increases by +2P, or more broadly, when the load change on the electric machines b1510 is greatest within the predetermined future time window. Advantageously, by considering the total anticipated load on the electric machines b1310 over a predetermined future time period (e.g., 5 seconds), the closed cycle engine b1110 may operate more efficiently and better maintain its steady-state operation despite the dynamic load changes on the electric machines b1310. Further, excessive ramping of the closed cycle engine and/or excessive varying of the operating parameter setpoint can be prevented. For instance, instead of ramping down the fuel input in anticipation of the first load L1 decreasing by -P, the fuel input is ramped up to account for the cumulative anticipated load change occurring within the predetermined future time period, which is anticipated as a load increase due to the second load L2 scheduled or anticipated to increase by +2P. Thus, by ramping the closed cycle engine based on the total anticipated load change within a predetermined future time period, the closed cycle engine and its associated balance of plant may achieve greater overall efficiency and the service lives of the various components of the system may be increased.

At (b1724), returning to FIG. 5.1.13, the method (b1720) includes receiving, from the one or more sensors, data indicative of one or more operating parameters associated with at least one of the closed cycle engine b1110 and the one or more electric machines b1310. For instance, the one or more controllers b1510 can receive data from the one or more of the sensors, e.g., as shown in FIG. 5.1.3. In some embodiments, as noted above, the one or more controllers b1510 can also receive data indicative of a load state of the one or more energy storage devices b1312 in communication with the electric machines b1310. The one or more controllers b1510 can receive the sensor data from the sensors continuously, at a predetermined interval, and/or upon request.

As one example, the one or more controllers b1510 can receive, from the one or more piston sensors, data indicative of one or more piston movement characteristics. As noted previously, example piston movement characteristics can include piston position, speed, amplitude, frequency, and/or phase. Data indicative of the one or more piston movement characteristics can be received for one, some, or all of the piston assemblies b1120. As another example, the one or more controllers b1510 can receive, from the one or more pressure sensors b1522, data indicative of the pressure within the closed cycle engine b1110 at one or more positions or stations (e.g., within the piston bodies b1116 or along fluid pathways fluidly connecting the piston bodies b1116). As yet another example, the one or more controllers b1510 can receive, from the one or more temperature sensors b1524, data indicative of the temperature within the closed cycle engine b1110 at one or more positions or stations (e.g., within the piston bodies b1116 or along fluid pathways fluidly connecting the piston bodies b1116). Further, the one or more controllers b1510 can receive, from the one or more temperature sensors b1524, data indicative of the temperature at the combustor b1224 or heat source operable to provide thermal energy to the hot side b1112 of the closed cycle engine b1110.

In addition, as another example, the one or more controllers b1510 can receive, from the one or more electric machine sensors b1526, data indicative of one or more operating parameters associated with the one or more electric machines b1310. For instance, the one or more controllers b1510 can receive, from the one or more electric machine sensors b1526, data indicative of the electric current generated or passing through the electric machines b1310, including the amplitude, phase, and/or frequency of the electric current. Moreover, the one or more controllers b1510 can receive, from the one or more electric machine sensors b1526, data indicative of the voltage at the electric machines b1310, including the amplitude, phase, and/or frequency of the voltage. Furthermore, the one or more controllers b1510 can receive, from the one or more electric machine sensors b1526, data indicative of the magnetic field at the electric machines b1310.

As yet another example, the one or more controllers b1510 can receive, from the one or more energy storage device sensors b1528, data b1530 indicative of one or more operating parameters associated with the one or more energy storage devices b1312 in communication with the electric machines b1310. For instance, the one or more controllers b1510 can receive, from the one or more electric machine sensors b1526, data b1530 indicative of the load state of the energy storage devices b1312. In some embodiments, as noted above, the load state of the one or more energy storage devices b1312 is descriptive of at least one of a state of charge and a charge acceptance rate of the one or more energy storage devices b1312 in communication with the one or more electric machines b1310.

At (b1726), the method (b1700) includes determining a control command based at least in part on the received data indicative of the one or more operating parameters associated with at least one of the closed cycle engine and the one or more electric machines, wherein the control command is selected based at least in part to cause a change in output of the power generation system. For instance, the one or more controllers b1510 can receive the data at (b1724), and based at least in part on the received data, the one or more controllers b1510 can determine one or more control commands b1532 indicative of instructions for causing a change in an output of the power generation system b1000. Further, in some embodiments, the control command is determined by the one or more controllers b1510 based at least in part on the operating parameter setpoint set at (b1722).

As one example, the determined control command can be indicative of instructions for causing a change in an output of the one or more electric machines b1310, e.g., by adjusting the electrical load on the electric machines b1310, causing the electric machines b1310 to operate in a more or less efficient manner, etc. As another example, the determined control command can be indicative of instructions for causing a change in an output of the closed cycle engine b1110, which in turn causes a change in the output of the electric machines b1310 operatively coupled thereto. For instance, the control command can be indicative of instructions for causing a change to the pressure of the working fluid within or at some station or position within the engine, the temperature differential $\Delta T$ between the hot side b1112 and the cold side b1114, the volume of the working fluid within the closed cycle engine b1110, the number of moles of the working fluid within the closed cycle engine b1110, etc.

In some embodiments, the one or more controllers b1510 can determine the control command based on only a single operating parameter, such as e.g., piston speed, electric current at the electric machines b1310, the pressure at some station or position within the closed cycle engine b1110, etc. In yet other embodiments, the one or more controllers b1510 can determine the control command based on only two operating parameters, such as e.g., piston speed and the electric current at the electric machines b1310. In some further embodiments, the one or more controllers b1510 can determine the control command based on two or more operating parameters.

In some embodiments, determining the control command based at least in part on the received data indicative of the one or more operating parameters associated with at least one of the closed cycle engine b1110 and the one or more electric machines b1310 includes determining an error or difference between the operating parameter setpoint set at (b1722) and the received operating parameter at (b1724). The one or more controllers b1510 can then determine the control command based at least in part on the determined difference.

For instance, FIG. 5.1.18 provides a table of an example control law that associates various differences with various control commands b1532. The control law can be stored in one or more of the memory devices of the one or more controllers b1510, for example. The control law can be accessed by the one or more processors. As noted, the control law associates or corresponds various differences with various control commands b1532. Particularly, as depicted, a difference A corresponds to or is associated with a control command D. For instance, if the difference between the operating parameter setpoint and the received operating parameter yields an error or difference A, the control command D associated with the difference A is determined or selected as the control command. The control command D can be indicative of instructions for adjusting a controllable device b1534, such as e.g., a fuel control device b1214, such that an output of the power generation system b1000 is changed. More specifically, the control command D can be indicative of instructions for adjusting the controllable device b1534 such that the difference between the operating parameter setpoint and the sensed operating parameter received as part of the data is driven toward zero (0). In this way, the control command determined or selected based at least in part on data received from the one or more sensors, when provided to a controllable device, can cause the electric machine operatively coupled with the piston assembly to generate a preselected electrical power output.

As further shown in FIG. 5.1.18, a difference B corresponds to or is associated with a control command E, a difference C corresponds to or is associated with a control command F, and so on as the Nth difference corresponds with the Nth control command. In some embodiments, the determined difference and the control command can be associated with one another in a one-to-one relationship. In other embodiments, the determined difference and the control command can be associated with one another based at least in part on some mathematical relationship, such as via derivatives or integrals.

FIG. 5.1.19 provides an example feedback control loop for controlling the power generation system b1000 in accordance with an embodiment of the present disclosure. As shown in FIG. 5.1.19, an operating parameter setpoint b1536 is input into a summation block. For instance, the operating parameter setpoint b1536 input into the summation block can be the operating parameter setpoint set at (b1722). For this example, the operating parameter setpoint b1536 is a target piston speed of a piston assembly b1120 of the closed cycle engine b1110. The piston speed target can be selected to achieve a particular power output of the electric machines b1310. For instance, the one or more controllers b1510 can access the control law of FIG. 5.1.14 and select the piston speed that corresponds with the desired power output of the electric machines b1310. However, the operating parameter setpoint b1536 can be a target value for some other operating parameter associated with at least one of the electric machines b1310 and the closed cycle engine b1110. As further depicted, one or more sensed/calculated operating parameters b1538 received as part of the data at (b1724) are input into the summation block as well. For this example, the sensed/calculated operating parameter b1538 is the piston speed of the piston assembly b1120 of the closed cycle engine b1110. The piston speed of the piston assembly b1120 can be sensed by one of the piston movement sensors b1520.

The operating parameter setpoint b1536 (e.g., the target piston speed) and the sensed/calculated operating parameter b1538 (e.g., the actual piston speed of the piston assembly b1120) are input into the summation block and the one or more controllers b1510 then determine the error or difference b1540 therebetween. The one or more controllers b1510 can then make an adjustment to drive the difference b1540 toward zero (0). For instance, the one or more controllers b1510 can access the control law of FIG. 5.1.18, and can determine a control command that corresponds or is associated with the determined difference b1540. The control command is indicative of instructions for causing a change in an output of the power generation system b1000. As one example, the control command b1532 can be provided to a controllable device b1534 that is operable to control an input (e.g., a thermal input) to a working fluid disposed within the piston body b1116 in which the piston assembly b1120 is disposed. In this way, ultimately, the piston speed of the piston assembly b1120 is changed and the difference b1540 between the operating parameter setpoint b1536 and the sensed/calculated operating parameter b1538 is driven towards zero (0), and consequently, the amount of electrical power generated by the electric machine b1310 operatively coupled thereto is changed.

FIG. 5.1.20 provides another example feedback control loop for controlling the power generation system b1000 in accordance with an embodiment of the present disclosure. As shown in FIG. 5.1.20, in some embodiments, a plurality of differences can be determined and the one or more controllers b1510 can output one or more control commands b1532 based at least in part on the determined differences. Particularly, a first operating parameter setpoint and a first sensed operating parameter are input into a first summation block.

Once the first operating parameter setpoint (e.g., the target piston speed) and the first sensed operating parameter (e.g., the actual piston speed of the piston assembly b1120) are input into the first summation block, the one or more controllers b1510 then determine a first difference therebetween. The one or more controllers b1510 can then make an adjustment to drive the first difference toward zero (0), e.g., in a manner noted above. Further, a second operating parameter setpoint and a second sensed operating parameter are input into a second summation block. Once the second operating parameter setpoint (e.g., the target pressure of the working fluid at a station within the engine) and the second sensed operating parameter (e.g., the actual pressure of the working fluid at the station) are input into the second summation block, the one or more controllers b1510 then determine a second difference therebetween. The one or more controllers b1510 can then make an adjustment to drive the second difference toward zero (0), e.g., in a manner noted above. Moreover, a third operating parameter setpoint and a third sensed operating parameter are input into a third summation block. Once the third operating parameter setpoint (e.g., the voltage or current at the electric machines b1310) and the third sensed operating parameter (e.g., the actual voltage or electrical current at the electric machines b1310) are input into the third summation block, the one or more controllers b1510 then determine a third difference therebetween. The one or more controllers b1510 can then make an adjustment to drive the third difference toward zero (0), e.g., in a manner noted above. In such embodiments, the one or more controllers b1510 can determine each of the differences and determine one or more control commands b1532 that drive the differences toward zero (0). In some instances, the one or more controllers b1510 can assign weights to the differences, e.g., based on some preselected criteria, and determine the control commands b1532 in accordance with the determined differences and applied weights. The applied weights can be selected based at least in part on the selected control scheme and/or the importance of driving a particular difference toward zero (0). Further, the applied weights can be selected based at least in part on an optimization function that seeks to minimize or maximize a certain aspect of the power generation system b1000.

At (b1728), with reference again to FIG. 5.1.13, the method (b1700) includes providing the control command to a controllable device b1534. In this way, the controllable device b1534 can execute the control command (e.g., perform a control action) to change an output of the power generation system b1000. For instance, as shown in FIG. 5.1.19, the determined control command can be provided to the controllable device b1534. The controllable device b1534 can perform a control action b1542 based at least in part on the control command. For instance, if the controllable device b1534 is a valve and the control command is indicative of instructions for opening the valve to a set position or angle, the controllable device b1534 can actuate the valve to the set position based at least in part on the provided control command. When the controllable device b1534 performs the control action b1542 in accordance with the control command, the output of the power generation system b1000 is changed. For example, in performing the control action b1542, the controllable device b1534 can cause a change to the amount of work done on the piston by the working fluid within the piston body b1116 and/or the amount of work done by the piston on the working fluid within the piston body b1116 (e.g., depending on whether the working fluid is expanding or contracting). By changing the work done by or on the piston, the piston speed of the piston assembly b1120 is changed, which ultimately changes the output of the power generation system b1000. As noted herein, the controllable device b1534 can be any device communicatively coupled with the one or more controllers b1510 that, when commanded by the one or more controllers b1510 via a control command, causes a change in output of the power generation system b1000.

FIG. 5.1.21 provides a schematic view of an example heater loop b1210 of the balance of plant b1200 of the power generation system b1000 of FIGS. 5.1 and 5.1.2. As shown, in some example embodiments, the controllable device b1534 is a device operable to change the temperature differential ΔT between the hot side b1112 and the cold side b1114 of the closed cycle engine b1110. As one example, the controllable device b1534 is a fuel control device b1214 positioned along an intake line b1232 of the heater loop b1210. The one or more controllers b1510 can provide the control command to the fuel control device b1214, e.g., to change the amount of fuel flowing to the combustor b1224 positioned downstream of the fuel control device b1214 along the heater loop b1210. The fuel control device b1214 can perform a control action b1542 based at least in part on the provided control command. For instance, the fuel control device b1214 can modulate the amount of fuel provided to the combustor b1224, e.g., to change the fuel/air mixture thereof and consequently the heat input to the hot side b1112 of the closed cycle engine b1110.

As another example, with reference still to FIG. 5.1.21, the controllable device b1534 can be an actuator b1226 operable to move or control a recirculation device b1230 positioned along the heater loop b1210. The actuator b1226 is operatively coupled with the recirculation device b1230. The one or more controllers b1510 can provide the control command to the actuator b1226, e.g., to change the amount of combustion gasses or heating working fluid HWF recirculated to the combustor b1224. In this way, the equivalence ratio (i.e., the ratio of the actual fuel/air ratio to the stoichiometric fuel/air ratio) can be changed, and thus ultimately the heat input to the hot side b1112 of the closed cycle engine b1110 can be changed, which in turn changes the output of the power generation system b1000. In some example embodiments, the recirculation device b1230 is a geometry-based control device. For instance, e.g. the geometry-based control device can be built into some portion of the heater body. Based upon one or more flowrates through the passages of the heater body, the geometry-based control device can direct a preselected amount of recirculated heating working fluid HWF to the combustor b1224 with the remaining portion being exhausted from the system and/or used as a heat recovery source for imparting thermal energy to components of the heater loop b1210 and/or the chiller loop b1212 and/or some other thermal system or application in fluid communication with the balance of plant b1200 of the cycle engine.

As yet another example, the controllable device b1534 can be the compressor b1222 of the heater loop b1210. The one or more controllers b1510 can provide the control command to the compressor b1222, e.g., to change the speed of the compressor b1222. In this way, the mass flow and/or the pressure of the air flowing downstream to the combustor b1224 can be changed, and thus ultimately the heat input to the hot side b1112 of the closed cycle engine b1110 can be changed, which in turn changes the output of the power generation system b1000.

As another example, the controllable device b1534 is a device operable to change the temperature differential ΔT between the hot side b1112 and the cold side b1114 of the closed cycle engine b1110, and particularly, the device is operable to remove more or less heat from the cold side b1114 of the closed cycle engine b1110. For instance, the controllable device b1534 can be a compressor, pump, turbine, or some other controllable device b1534 positioned along the chiller loop b1212 of the balance of plant b1200 of the closed cycle engine b1110.

FIG. 5.1.22 provides a schematic view of two fluidly coupled piston bodies b1116 of the closed cycle engine b1110 of FIG. 5.1.2. As shown, in some example embodiments, the controllable device b1534 is a device operable to change the pressure and/or the number of molecules of the fluid within the closed cycle engine b1110, e.g., at a particular station of the engine. As one example, the controllable device b1534 can be one or more pressure control devices positioned along a fluid pathway fluidly connecting the piston bodies b1116. The controllable device b1534 can include multiple pressure control devices b1140, b1142, e.g., as depicted in FIG. 5.1.22. The pressure control devices b1140, b1142 are communicatively coupled with the one or more controllers b1510. The one or more controllers b1510 can provide the control command to the pressure control devices b1140, b1142, e.g., to change the pressure of the engine working fluid EWF within the closed cycle engine b1110. The pressure control devices b1140, b1142 can perform a control action based at least in part on the provided control command. For instance, the pressure control devices b1140, b1142 can modulate the pressure of the engine working fluid EWF. In this way, the work done by the piston assembly b1120 on the engine working fluid EWF (e.g., during a compression stroke) or the work done on the piston assembly b1120 by the engine working fluid EWF (e.g., during an expansion stroke) can be changed, and thus the output of the power generation system b1000 can be changed.

In yet other embodiments, the pressure control devices b1140, b1142 can add or remove engine working fluid EWF (e.g., the pressure control devices b1140, b1142 can release engine working fluid EWF to an ambient environment) such that the number of molecules of working fluid is changed, which ultimately changes the work done on or by the piston assemblies b1120, which in turn causes the electric machines b1310 to generate more or less electrical power, or more generally, the output of the power generation system b1000 is changed. In yet further embodiments, the closed cycle engine b1110 can include an accumulator b1144 that can change the pressure of the working fluid within the closed cycle engine b1110 or can change the number of molecules of the working fluid. A valve b1146 or the like can be controlled by the one or more controllers b1510 to selectively allow an amount of working fluid to flow into or out of the accumulator b1144.

With reference again to FIG. 5.1.2, in some example embodiments, the controllable device b1534 is a device operable to change the load on the electric machines b1310 (i.e., the torque load thereon), which causes a change in the amount of electrical power generated by the one or more electric machines b1310. Changing the electrical load on the electric machines b1310 may also change the motion characteristics of the piston assemblies b1120 of the closed cycle engine b1110. As one example, the controllable device b1534 is a charge controller b1318 in communication with the electric machines b1310. The charge controller b1318 can include one or more switching devices operable to selectively apply a load on the electric machines b1310. The switching devices of the flow control device can be controlled by the one or more controllers b1510 to selectively apply a predetermined load on the electric machines b1310. For instance, based at least in part on a provided control command, the switching devices can allow the energy storage devices b1312 to apply an electric load on the electric machines b1310, or in some instances, the switching devices can prevent the energy storage devices b1312 from applying an electric load on the electric machines b1310. Further, in some embodiments, based at least in part on one or more control commands b1532, the switching devices of the charge controller b1318 can selectively allow one or more resistor banks of the electrical braking system b1320 to apply an electric load on the electric machines b1310, or in some instances, the switching devices can prevent the resistor banks of the electrical braking system b1320 from applying an electric load on the electric machines b1310.

As another example, the controllable device b1534 can be a mechanical braking system b1400 operatively coupled with the electric machines b1310. The one or more controllers b1510 can control the mechanical braking system b1400 to selectively apply a predetermined load on the electric machines b1310. Particularly, the one or more controllers b1510 can provide the control command to the mechanical braking system b1400 and the mechanical braking system b1400 can perform a control action to execute the control command. For instance, the mechanical braking system b1400, when commanded to do so, can apply a predetermined load on the electric machines b1310. Further, the control command can be indicative of instructions to apply more or less of a predetermined load on the electric machines b1310, e.g., to change an output of the power generation system b1000.

As yet another example, the one or more controllers b1510 can cause the one or more electric machines b1310 to operate in a less efficient manner. For instance, the one or more controllers b1510 can provide a control command indicative of instructions for the electric machines b1310 to operate in a less efficient manner, e.g., to apply a predetermined load or torque on the closed cycle engine b1110, which ultimately changes the output of the power generation system b1000. By way of example, the phase or current advance angle, the amplitude of phase current, or some other operating parameter known to affect the efficiency of electric machines b1310 can be controlled to operate one or more of the electric machines b1310 in a reduced-efficiency mode. In some embodiments, the one or more controllers b1510 can cause the one or more electric machines b1310 operate in a more efficient manner, e.g., to change the applied predetermined torque load on the closed cycle engine b1110.

In some implementations, as noted above, the system can anticipate dynamic load changes on the electric machine and make adjustments to the output of the closed cycle engine in anticipation of such load changes. FIG. 5.1.22A provides a flow diagram for a method (b1800) of controlling a system according to an example aspect of the present disclosure. For instance, the method (b1800) can be implemented to control any of the energy conversion or power generation systems described herein, such as any of the systems of FIGS. 5.1.1, 5.1.2, 5.1.6, 5.1.16A, 5.1.16B, etc. In addition, it will be appreciated that exemplary method (b1800) can be modified, adapted, expanded, rearranged and/or omitted in various ways without deviating from the scope of the present subject matter.

At (b1802), the method (b1800) includes operating a closed cycle engine having a piston assembly movable within a piston chamber defined by a piston body of the closed cycle engine. For instance, the closed cycle engine can be any of the closed cycle engines provided herein. In some implementations, the closed cycle engine is a Stirling engine. In some implementations, the closed cycle engine is a regenerative heat engine. Further, in some implementations, in operating the closed cycle engine b1110 at (b1802), a computer readable medium that includes computer-executable instructions, which, when executed by one or more processors of the controller b1510, cause the controller b1510 to: cause or create a temperature differential between the hot side b1112 and the cold side b1114 of the closed cycle engine b1110 having a piston assembly b1120 movable within a piston chamber b1118 defined by a piston body b1116 of the closed cycle engine b1110, the piston assembly b1120 moved based at least in part on the temperature differential. For instance, the controller b1510 can cause the heater loop b1210 to impart thermal energy to the hot side b1112 and can cause the chiller loop b1212 to remove or extract heat from the cold side b1214. In this way, the engine working fluid EWF to expand and contract, thereby moving the piston assembly b1120 within the piston chamber b1118.

At (b1804), the method (b1800) includes receiving data indicative of a load state of an electrical device in communication with an electric machine operatively coupled with the piston assembly. For instance, the data can be received from various sensors described herein. The controller b1510 can receive data b1530 indicative of a load state of the electrical device in communication with the electric machine b1310 operatively coupled with the piston assembly b1120, the electric machine b1310 being operable to generate electrical power when the piston assembly b1120 is moved within the piston chamber b1118. In some implementations, the electrical device is a power grid. In some implementations, the electrical device is an energy storage device, such as a battery. In some implementations, the electrical device is an electrical device or system of a vehicle. Further, in some implementations, the load state of the electrical device is indicative of the electrical power demanded by the electrical device on the electric machine. In other implementations, the load state of the electrical device includes a runtime indicator indicative of a time period in which the electrical device anticipates coming on line or dropping offline.

In some implementations, the load state of the electrical device received as part of the data can account for a power generation state of one or more other power generation systems. For instance, with reference to FIG. 5.1.6, the load state data associated the electrical device received by the controller b1510 can be indicative of a power generation state of other power generation systems in communication with the electrical device (e.g., the energy storage devices b1312 and/or the electrical loads b1316 via the power grid b1332). Particularly, the load state data associated with the electrical device received by the controller b1510 can be indicative of a power generation state of the first power generation system, the second power generation system, and so on to the Nth power generation system. The power generation state data can be received as part of the load state data of the electrical device as noted above, or in some implementations, directly from the power generation system itself. The power generation state data can include how much and when other power generation systems anticipate providing electrical power to the energy storage devices b1312 and/or the electrical loads b1316 via the power grid b1332. Accordingly, the controller b1510 can receive data b1530 indicative of the power generation state of each power generation system in communication with the electrical device, which can include when and how much the other power generation systems anticipate providing electrical power thereto, which ultimately affects the load state of the electrical device (e.g., the power demanded from the electric machine b1310 by the electrical device). In this way, the closed cycle engine b1110 can ramp up or down to anticipate load changes on the electric machine b1310, e.g., in a similar manner as shown in FIG. 5.1.17.

With reference again to FIGS. 5.1.16A and 5.1.16B, in some implementations, the load state of the electrical device received as part of the data can account for a power generation state of one or more other power generation systems that include a closed cycle engine and one or more associated electric machines. In addition, the load state of the electrical device can take into account a plurality of electrical device load states, such as the load state of each energy storage device b1312 shown in FIG. 5.1.16A. The controller b1510 can utilize the collective load state data of the electrical devices to anticipate power demand changes, or stated differently, load changes on the electric machine b1310. Further, with reference to FIG. 5.1.16B, the load state of the electrical device received as part of the data can account for a load state of one or more other electrical loads b1316 and/or energy storage devices b1312 in communication with the energy management system b1334. In this way, certain closed cycle engines b1110 of the distributed power network b1900 can be ramped up or down or turned on or off to meet anticipated power demand changes, which as noted above, can ultimately cause load changes on the electric machine b1310.

At (b1806), with reference again to FIG. 5.1.22A, the method (b1800) includes determining a load change is anticipated on the electric machine based at least in part on the load state of the electrical device. In some implementations, the load change is a load decrease on the electric machine. In other implementations, the load change is a load increase on the electric machine. In some implementations, the method (b1800) further includes determining whether the anticipated load change is a load increase or a load decrease. The controller b1510 can determine whether a load change is anticipated, e.g., based on the load state data. As noted above, the load state data can be based at least in part on the power generation state of one or more other power generation systems in communication with the electrical device, including the power generation system state of other closed cycle engines and associated electric machines, a plurality of load states or a collective load state of electrical devices in communication with the electric machine, including via a power grid, and/or some combination thereof.

At (b1808), the method (b1800) includes determining a control command indicative of instructions for adjusting an output of at least one of the closed cycle engine and the electric machine prior to the anticipated load change on the electric machine. The one or more controllers b1510 can determine the control command and can provide the control command to a controllable device, such as any of the controllable devices provided herein. In some implementations, the controller b1510 can determine a control command indicative of instructions for adjusting an output of at least one of the closed cycle engine and the electric machine prior to or at the same time as the anticipated load change on the electric machine. In this way, the closed cycle engine can be ramped up or down in anticipation of the load change, or at the very least, immediately upon the load change. Accordingly, in such implementation, the controller b1510 controls the system in a proactive manner.

At (b1810), the method (b1800) includes causing a controllable device to adjust the output of at least one of the closed cycle engine and the electric machine prior to the anticipated load change on the electric machine based at least in part on the determined control command. In some implementations, the controllable device is a fuel control device. In some implementations, the controllable device is a fuel pump. As noted above, in some implementations, the method (b1800) includes determining whether the anticipated load change is a load increase or a load decrease. In such implementations, on one hand, if the anticipated load change is a load decrease, the control command is determined such that a fuel input to the combustor is ramped down to anticipate the load decrease. On the other hand, if the anticipated load change is a load increase, the control command is determined such that a fuel input to the combustor is ramped up to anticipate the load increase. The controller b1510 can cause a controllable device to adjust the output of at least one of the closed cycle engine and the electric machine prior to or at the same time as the anticipated load change on the electric machine based at least in part on the determined control command.

### Power Generation System - Out-of-Sync Condition

Furthermore, in the event the one or more of the piston assemblies b1120 are out of sync with their associated electric machines b1310 with respect to amplitude, phase, and/or frequency, the one or more controllers b1510 can provide a control command to one or more of the controllable devices b1534 noted above to cause an adjustment to at least one of the electric machine b1310 and its associated piston assembly b1120 such that the electric machine b1310 and its associated piston assembly b1120 are synchronized in amplitude, phase, and frequency. For instance, the operating parameters associated with at least one of the one or more electric machines b1310 and the piston assemblies b1120 received as part of the data at (b1724) can include an electric machine b1310 characteristic (e.g., an electric current or voltage at the electric machines b1310) and a piston motion characteristic (e.g., a piston position, speed, amplitude, frequency, phase). Based at least in part on the electric machine b1310 characteristic and the piston motion characteristic, the one or more controllers b1510 can determine whether the electric machine b1310 is out-of-sync (i.e., not synchronous with) or in-sync (i.e., synchronous with) with its associated piston assembly b1120, e.g., in amplitude, phase, and/or frequency. That is, the one or more controllers b1510 can determine whether the electric machine b1310 is synchronous with or not synchronous with its associated piston assembly b1120 in amplitude, phase, and/or frequency.

In response to whether the electric machine b1310 is synchronous or not synchronous with its associated piston assembly b1120, the one or more controllers b1510 can determine a control command. Particularly, if one or more controllers b1510 determine that the electric machines b1310 are in-sync with their respective associated piston assemblies b1120, the one or more controllers b1510 determine a control command indicative of instructions for maintaining synchronization of the amplitude, phase, and frequency of the electric machines b1310 and their associated piston assemblies b1120 and continue forward with driving the difference between an operating parameter setpoint and sensed or calculated parameters. However, if the one or more controllers b1510 determine that an electric machine b1310 is out-of-sync with its associated piston assembly b1120, the one or more controllers b1510 can determine a control command indicative of instructions for adjusting an amplitude, phase, and/or frequency of one of the electric machine b1310 and its associated piston assembly b1120, e.g., so that the electric machine b1310 and its associated piston assembly b1120 are synchronous in amplitude, phase, and frequency.

As one example, in the event an electric machine b1310 is determined as out-of-sync with its associated piston assembly b1120, the one or more controllers b1510 can cause the electrical braking system b1320 to adjust at least one of the amplitude, phase, and/or frequency of at least one of the electric machine b1310 and the piston assembly b1120 such that they become synchronous. Particularly, the control command can be indicative of instructions for applying an electrical load on the one or more electric machines b1310, e.g., to synchronize the amplitude, phase, and frequency of the electric machine b1310 with the amplitude, phase, and frequency of its associated piston assembly b1120. As another example, in the event an electric machine b1310 is determined as out-of-sync with its associated piston assembly b1120, the one or more controllers b1510 can cause the mechanical braking system b1400 to adjust at least one of the amplitude, phase, and/or frequency of at least one of the electric machine b1310 and the piston assembly b1120 such that they become synchronous. As yet another example, in the event an electric machine b1310 is determined as out-of-sync with its associated piston assembly b1120, the one or more controllers b1510 can cause the electric machine b1310 to operate in a more or less efficient way to adjust at least one of the amplitude, phase, and/or frequency of at least one of the electric machine b1310 and the piston assembly b1120 such that they become synchronous. In further examples, some other controllable device b1534 mentioned herein can adjust at least one of the amplitude, phase, and/or frequency of at least one of the electric machine b1310 and the piston assembly b1120 such that they become synchronous.

**Chapter 5.1.6 - Power Generation System Failure Event Prevention**

The power generation system b1000 can include features and control logic for preventing various failure events. For instance, the one or more controllers b1510 can include control logic for preventing the piston assemblies b1120 from hitting, impacting, or otherwise engaging the walls of the piston body b1116 in which they are disposed. By way of example, if the load on the electric machines b1310 unexpectedly and rapidly decreases, the one or more controllers b1510 can include control logic for controlling the system such that the piston assemblies b1120 are prevented from slamming against or engaging the walls of their respective piston bodies b1116. The one or more controllers b1510 can include control logic for preventing other failure events of the power generation system b1000 as well.

Generally, to prevent failure events from occurring during operation of the power generation system b1000, the one or more controllers b1510 can monitor operating parameters associated with the electric machines b1310, operating parameters associated with the closed cycle engine b1110, and/or operating parameters associated with the energy storage devices b1312 in communication with the electric machines b1310. Particularly, the one or more controllers b1510 can determine whether the operating parameters received as part of the data are within a preselected operating range. For instance, the one or more controllers b1510 can determine whether an operating parameter received as part of the data exceeds (i.e., go above or below) a predetermined threshold or predetermined rate of change. If the one or more controllers b1510 determine that the operating parameter exceeds the predetermined threshold or predetermined rate of change, the one or more controllers b1510 can determine a control command indicative of instructions for returning the operating parameter within the preselected operating range. The control command can then be provided to one or more controllable devices b1534 of the system, such as e.g., any of the controllable devices b1534 noted herein. The controllable devices b1534 can then perform a control action to execute the control command, e.g., to drive or return the operating parameter within the preselected operating range.

In some embodiments, the control system b1500 of the power generation system b1000 is operatively configured to prevent the piston assemblies b1120 of the closed cycle engine b1110 from impacting (i.e., physically contacting) the walls of the piston body b1116 in which the piston assemblies b1120 are disposed. As noted above, the one or more controllers b1510 can include control logic for preventing the piston assemblies b1120 from impacting the walls of the piston body b1116 in which they are disposed.

As one example, during operation of the power generation system b1000 in charging mode, the one or more controllers b1510 can monitor the piston position and the amplitude of the piston assemblies b1120 (i.e., the stroke of the pistons b1122, b1124). For instance, the one or more controllers b1510 can receive data indicative of one or more operating parameters associated with the closed cycle engine b1110. The operating parameters received as part of the data can include the position and amplitude of the piston assemblies b1120. In such embodiments, if the piston amplitude is outside of a preselected operating range or the position is such that the piston is in danger of striking the piston body b1116 or some other component, the one or more controllers b1510 can determine a control command indicative of instructions for returning or moving the piston amplitude toward the preselected operating range. The control command can be provided to a controllable device b1534 by the one or more controllers b1510. The controllable device b1534 can be any of the controllable devices b1534 described herein. The controllable device b1534 can perform a control action to execute the control command. Accordingly, the one or more piston assemblies b1120 can be prevented from impacting the walls of the piston bodies b1116 in which they are disposed.

As another example, during operation of the power generation system b1000 in charging mode, the one or more controllers b1510 can monitor the electrical load on the electric machines b1310. The electric current and/or the voltage at the electric machine b1310 can be used to monitor the electrical load on the electric machine b1310. Other operating parameters can be used as well to monitor the electrical load on the electric machines b1310. In such embodiments, if the operating parameter associated with the electric machine b1310 is outside of a preselected operating range, the one or more controllers b1510 can determine a control command indicative of instructions for returning or moving the operating parameter associated with the electric machine b1310 toward the preselected operating range. The control command can be provided to a controllable device b1534 by the one or more controllers b1510. The controllable device b1534 can be any of the controllable devices b1534 described herein. The controllable device b1534 can perform a control action to execute the control command. Accordingly, the one or more piston assemblies b1120 can be prevented from impacting the walls of the piston bodies b1116 in which they are disposed.

By way of example, FIG. 5.1.23 provides a graph depicting an applied load on the electric machines b1310 as a function of time as well as piston amplitude as a function of time according to an example aspect of the present disclosure. As shown, the applied load on the electric machines b1310 is initially stable during a charging mode. Then, after some time, the applied load on the electric machines b1310 unexpectedly and rapidly decreases. The one or more controllers b1510 can receive the electric current at the electric machines b1310 as the operating parameter. The one or more controllers b1510 can determine that the electric current is outside of the preselected operating range. Particularly, the one or more controllers b1510 can determine that the electric current has exceeded (e.g., gone below) a predetermined threshold, e.g., as shown in FIG. 5.1.23.

Notably, when the electrical load on the electric machines b1310 unexpectedly and rapidly decreases, the amplitude of the piston assemblies b1120 rapidly increases or spikes. When the amplitude of the piston assemblies b1120 spikes, the piston assemblies b1120 are at risk of impacting the walls of their respective piston bodies b1116. Accordingly, the one or more controllers b1510 determine a control command indicative of instructions for returning the applied electrical load on the electric machines b1310 within the preselected operating range, or for this example, applying an electrical load on the electric machines b1310 such that the pistons b1122, b1124 are prevented from impacting the walls of the piston bodies b1116. The determine control command can be provided to one or more controllable devices b1534, such as e.g., any of the control devices described herein. The controllable device b1534 can then perform a control action to execute the control command.

As one example, the controllable device b1534 can be the charge controller b1318. The switching devices of the charge controller b1318 can cause the electrical braking system b1320 to apply a near instantaneous electrical load on the electric machines b1310 such that the applied load on the electric machines b1310 rapidly increases at or near its load prior to the unexpected and rapid decrease, e.g. as shown in FIG. 5.1.23. In this way, the piston assemblies b1120 can be prevented from impacting their respective piston bodies b1116. As another example, the controllable device b1534 can be the mechanical braking system b1400. The one or more controllers b1510 can cause the mechanical braking system b1400 to apply a load or counter torque on the electric machines b1310 such that the applied load on the electric machines b1310 rapidly increases at or near its load prior to the unexpected and rapid decrease.

As further shown in FIG. 5.1.23, after the controllable device b1534 performs the control action to execute the control command, the applied electrical load returns to near its load or value prior to the unexpected and rapid decrease. Accordingly, the piston amplitude decreases relatively rapidly based on the applied load. In some embodiments, to prevent damage to one or more components of the power generation system b1000, the power generation system b1000 can be ramped down. To ramp down the system, the one or more controllers b1510 of the control system b1500 can cause the applied load on the electric machines b1310 to decrease in a stepwise manner, e.g., as shown in FIG. 5.1.23. By stepping down the applied load on the electric machines b1310, the closed cycle engine b1110 can gradually ramp down thus allowing the piston assemblies b1120 to gradually decrease in amplitude. For instance, each time the applied load on the electric machines b1310 is stepped down, the fuel input to the system can be ramped down or decreased gradually. When the applied load on the electric machines b1310 reaches at or near zero (0), the piston amplitude can stabilize in the idle mode and the power generation system b1000 can thereafter cease operation. As shown in FIG. 5.1.23, the applied load can be stepped down first and the piston amplitude can ramped down. In other embodiments, however, the piston amplitude can first be ramped down and then the applied load can be stepped down.

Stepping down the applied load on the electric machines b1310 after an unexpected and rapid decrease and subsequent increase allows for the closed cycle engine b1110 to gradually ramp down. Advantageously, this allows a smooth transition for the relatively slow transient response closed cycle engine b1110 to gradually cease operation. Moreover, gradually ramping down the closed cycle engine b1110 can reduce vibration of the system and extend the useful service life of the components of the power generation system b1000, among other benefits.

Further, additionally or alternatively to the braking systems, the power generation system b1000 can include a system that prevents the piston assemblies b1120 from impacting the walls of the piston bodies b1116. For instance, FIG. 5.1.24 provides a schematic view of an example impact prevention system b1550. For this embodiment, the piston assembly b1120 has two opposing pistons b1122, b1124 operatively coupled via a connection member b1126. The opposing pistons b1122, b1124 are disposed within respective piston bodies b1116. An electric machine b1310 is operatively coupled with the piston assembly b1120. Specifically, the electric machine b1310 includes a stator b1324, which is stationary, and a dynamic member b1322 operatively coupled with the connection member b1126 of the piston assembly b1120. The dynamic member b1322 is movable in unison with the piston assembly b1120. As further depicted in FIG 5.1.24, the impact prevention system b1550 includes bumpers b1552 mechanically coupled with the piston bodies b1116. A plurality of springs b1554 can mechanically couple the bumpers b1552 with their respective piston bodies b1116. If the amplitude of the piston assembly b1120 moves outside of the preselected operating range, the dynamic member b1322 of the electric machine b1310 can impact or engage a pair of bumpers b1552, thereby preventing the piston assembly b1120 from impacting one of the walls of one of the piston bodies b1116. Accordingly, the impact prevention system b1550 acts as a failsafe and prevents damage to the piston assembly b1120, the piston bodies b1116, and/or the electric machine b1310.

In some embodiments, the control system b1500 of the power generation system b1000 is operatively configured to prevent the electric machines b1310 from overheating. In such embodiments, with reference again to FIG. 5.1.2, during operation of the power generation system b1000, particularly in charging mode, the one or more controllers b1510 can monitor the temperature of the electric machines b1310. Particularly, the one or more controllers b1510 can receive data indicative of one or more operating parameters associated with the electric machines b1310. For instance, the one or more operating parameters received as part of the data can include a temperature of the electric machines b1310. The data can be received from an electric machine b1310 sensor operable to detect or measure temperature at the electric machine b1310.

Next, the one or more controllers b1510 can determine whether the electric machine b1310 temperature is within a preselected operating range. For example, the one or more controllers b1510 can determine whether the electric machine b1310 temperature exceeds (e.g., goes above) a predetermined temperature threshold. If the one or more controllers b1510 determine that the electric machine b1310 temperature exceeds the predetermined temperature threshold, the one or more controllers b1510 can determine a control command indicative of instructions for returning the electric machine b1310 temperature below the predetermined temperature threshold. The control command can then be provided to one or more controllable devices b1534 of the system, such as e.g., any of the controllable devices b1534 noted herein. The controllable devices b1534 can then perform a control action to execute the control command, e.g., to drive or return the electric machine b1310 temperature below the predetermined temperature threshold. As one example, when the controllable device b1534 performs the control action to execute the control command, the control action performed by the controllable device b1534 can cause the piston assemblies b1120 to reduce in speed or amplitude for a predetermined time, e.g., until the electric machine b1310 temperature falls below the predetermined temperature threshold. As yet another example, when the controllable device b1534 performs the control action to execute the control command, the control action performed by the controllable device b1534 can cause the load on the electric machine b1310 to decrease for a predetermined time, e.g., until the electric machine b1310 temperature falls below the predetermined temperature threshold.

In some embodiments, the control system b1500 of the power generation system b1000 is operatively configured to prevent overcharging of the one or more energy storage devices b1312 in communication with the electric machines b1310. In such embodiments, during operation of the power generation system b1000, particularly in charging mode, the one or more controllers b1510 can monitor the load state of the one or more energy storage devices b1312 in communication with the electric machines b1310. Particularly, the one or more controllers b1510 can receive data indicative of state of charge and/or the charge acceptance rate of the one or more energy storage devices b1312. The data can be received from one or more sensors associated with the one or more energy storage devices b1312. The load state of the energy storage devices can be continuously monitored or monitored at a predetermined intervals, for example.

In some embodiments, the one or more controllers b1510 can then determine whether the state of charge of the energy storage devices b1312 is within a preselected operating range. For example, the one or more controllers b1510 can determine whether the state of charge of the energy storage devices b1312 exceeds (e.g., goes above) a predetermined charge threshold or capacity. If the one or more controllers b1510 determine that the state of charge exceeds the predetermined charge threshold, the one or more controllers b1510 can determine a control command indicative of instructions for ceasing charging operations. The control command can then be provided to one or more controllable devices b1534 of the system, such as e.g., any of the controllable devices b1534 noted herein. The controllable devices b1534 can then perform a control action to execute the control command, e.g., to cease charging operation.

In some embodiments, after receiving the data, the one or more controllers b1510 can determine whether the charge acceptance rate of the energy storage devices b1312 is within a preselected operating range. For example, the one or more controllers b1510 can determine whether the charge acceptance rate of the energy storage devices b1312 exceeds (e.g., falls below) a predetermined minimum charge rate threshold. If the one or more controllers b1510 determine that the charge acceptance rate exceeds the predetermined minimum charge rate threshold, the one or more controllers b1510 can determine a control command indicative of instructions for ceasing charging operations. The control command can then be provided to one or more controllable devices b1534 of the system, such as e.g., any of the controllable devices b1534 noted herein. The controllable devices b1534 can then perform a control action to execute the control command, e.g., to cease charging operation.

**Chapter 5.1.7 - Power Generation System Transition Between Modes**

The power generation system b1000 can be transitioned from the idle mode to the charging mode in the following example manner. FIG. 5.1.25 provides a graph depicting an applied load on the electric machines b1310 as well as a fuel input as a function of time as the system transitions from an idle mode to a charging mode according to an example aspect of the present disclosure. As shown, the power generation system b1000 initially is operating in an idle mode. To transition from the idle mode to the charging mode, the one or more controllers b1510 of the control system b1500 can cause the applied load on the electric machines b1310 to increase in a stepwise manner, e.g., as shown in FIG. 5.1.25. By stepping up the applied load on the electric machine b1310, the closed cycle engine b1110 can gradually ramp up. Particularly, for each step up of the applied load, the fuel input is gradually ramped up or increased linearly until the rise of the applied load step is met. Once the rise of the applied load step is met, the fuel input levels off or becomes constant for a time. When the fuel input matches the rise of the applied load step, the one or more controllers b1510 cause the applied load to step up once again, and the fuel input is once again gradually ramped up or increased in a linear manner until the rise of the applied load step is met once again. When the applied load on the electric machines b1310 reaches a preselected charging mode load, the fuel input ramps up to meet the preselected charging mode load and levels off thereafter during the charging mode. As shown in FIG. 5.1.25, the applied load can be stepped up first and the fuel input can then be ramped up. In other embodiments, however, the fuel input can first be ramped up and then the applied load can be stepped up.

When transitioning from the idle mode to the charging mode, stepping up the applied load on the electric machines b1310 allows for the closed cycle engine b1110 to gradually ramp up. Advantageously, this allows a smooth transition for the relatively slow transient response closed cycle engine b1110 to synchronize with the relatively fast transient response electric machines b1310. Moreover, gradually ramping up the heat input to the hot side b1112 of the closed cycle engine b1110 allows for the piston assemblies b1120 to more closely match the amplitude, phase, and frequency of their associated electric machines b1310 when transitioning from the idle mode to the charging mode, which can reduce vibration of the system and extend the useful service life of the components of the power generation system b1000, among other benefits.

The power generation system b1000 can be transitioned from the charging mode to the idle mode in the following example manner. FIG. 5.1.26 provides a graph depicting an applied load on the electric machines b1310 as well as a fuel input as a function of time as the system transitions from a charging mode to an idle mode according to an example aspect of the present disclosure. As shown, the power generation system b1000 initially is operating in a charging mode. To transition from the charging mode to the idle mode, the one or more controllers b1510 of the control system b1500 can cause the applied load on the electric machines b1310 to decrease in a stepwise manner, e.g., as shown in FIG. 5.1.26. By stepping down the applied load on the electric machine b1310, the closed cycle engine b1110 can gradually ramp down. Particularly, for each step down of the applied load, the fuel input is gradually ramped down or decreased linearly until the decrease in rise of the applied load step is met. Once the decrease in rise of the applied load step is met, the fuel input levels off or becomes constant for a time. When the fuel input matches the decrease in rise of the applied load step, the one or more controllers b1510 cause the applied load to step down once again, and the fuel input is once again gradually ramped down or decreased in a linear manner until the decrease in rise of the applied load step is met once again. When the applied load on the electric machines b1310 reaches a preselected idle mode load (i.e., a load of zero (0) or substantially zero (0)), the fuel input ramps down to meet the preselected idle mode load and levels off thereafter during the idle mode. As shown in FIG. 5.1.26, the applied load can be stepped down first and the fuel input can then be ramped down. In other embodiments, however, the fuel input can first be ramped down and then the applied load can be stepped down.

When transitioning from the charging mode to the idle mode, stepping down the applied load on the electric machines b1310 allows for the closed cycle engine b1110 to gradually ramp down. Advantageously, this allows a smooth transition for the relatively slow transient response closed cycle engine b1110 to synchronize with the relatively fast transient response electric machines b1310 during the transition phase between the charging mode and the idle mode. Moreover, gradually ramping down the heat input to the hot side b1112 of the closed cycle engine b1110 allows for the piston assemblies b1120 to more closely match the amplitude, phase, and frequency of their associated electric machines b1310 when transitioning from the charging mode to the idle mode, which can reduce vibration of the system and extend the useful service life of the components of the power generation system b1000, among other benefits.

**Chapter 5.1.8 - Heat pump system Overview**

FIG. 5.1.27 provides a schematic view of a heat pump system b1600 according to an aspect of the present disclosure. Generally, the heat pump system b1600 is configured to heat and/or cool an environment, a sealed volume, another system, other devices, some combination thereof, etc. For instance, in some example embodiments, the heat pump system b1600 can used as a cryocooler. The heat pump system b1600 can be used for other suitable applications as well.

As shown the heat pump system b1600 includes one or more electric machines b1310 and one or more closed cycle engines b1110. Each electric machine b1310 can be operatively coupled with a piston assembly b1120 of one of the closed cycle engines b1110. For instance, as depicted in FIG. 5.1.27, an electric machine b1310 is shown operatively coupled with a piston assembly b1120 of the closed cycle engine b1110. The one or more closed cycle engines b1110 can be any one of the closed cycle engines b1110 described herein. The electric machines b1310 can function as electric motors to drivingly move the piston assemblies b1120 within their respective piston bodies b1116. Particularly, electrical power can be provided to the electric machines b1310 (e.g., from any suitable power supply). When electrical power is provided to the electric machines b1310, the electric machines b1310 can drivingly move the piston assemblies b1120 within their respective piston bodies b1116.

In drivingly moving the piston assemblies b1120, a temperature differential ΔT is created. Specifically, by drivingly moving the piston assemblies b1120, a temperature differential ΔT is created between a hot side b1112 and a cold side b1114 of the engine. During operation, the hot side b1112 is hotter than or at a higher temperature than the cold side b1114. In some embodiments, the hot side b1112 can be hotter than an ambient temperature. In yet other embodiments, the hot side b1112 can be an ambient temperature and the cold side b1114 can be colder than the ambient temperature. The hot side b1112 can give off heat, which can be used for heating applications. As depicted in FIG. 5.1.27, the hot side b1112 is in fluid communication with a thermal system b1610. Relatively cool fluid can exit the thermal system b1610 and can be heated by the hot side b1112 of the closed cycle engine b1110, or more broadly, by heat generated by the engine b1110. The relatively warm fluid can then be passed through the thermal system b1610 to provide heating thereto. Accordingly, heat can be removed from the hot side b1112 and provided to a thermal system b1610. The thermal system b1610 can be any suitable system operable to receive heat or thermal energy. The cold side b1114, on the other hand, can take in or receive heat, which can be useful for cooling applications, such as e.g., cryogenic cooling applications. For instance, as illustrated in FIG. 5.1.27, the cold side b1114 is in fluid communication with a thermal system b1612. Relatively warm fluid can exit the thermal system b1612 and can be cooled by the cold side b1114 of the closed cycle engine b1110. The relatively cool fluid can then be passed through the thermal system b1612 to provide cooling thereto.

As further depicted in FIG. 5.1.27, the heat pump system b1600 includes a control system b1500 for controlling various aspects of the heat pump system b1600, including controlling the closed cycle engine b1110 and the one or more electric machines b1310 operatively coupled thereto. The control system b1500 can include one or more control devices, such as sensors, controllers, processors, controllable devices, etc. that can monitor and control various aspects of the heat pump system b1600. For instance, the control system b1500 of the heat pump system b1600 can include any of the control devices described above with reference to the power generation system b1000.

The heat pump system b1600 can be controlled by the control system b1500 in the same or similar manner as power generation system b1000 is controlled by its associated control system b1500. Particularly, the control system b1500 of the heat pump system b1600 can be controlled as summarized below.

The control system b1500 can initialize the heat pump system b1600 in the following example manner. The control system b1500 can first determine whether a thermal system in fluid communication with the closed cycle engine b1110 requires heating and/or cooling. For instance, one or more thermal systems b1610, can be in fluid communication with the hot side b1112 of the closed cycle engine b1110 and/or one or more thermal systems b1612 can be in fluid communication with the cold side b1114 of the closed cycle engine b1110, e.g., as shown in FIG. 5.1.27. More particularly, the thermal systems b1610, b1612 described above can be in a heat exchange relationship with the hot side b1112 and/or the cold side b1114, e.g., so that fluid can be warmed by the hot side b1112 and provided to the thermal system b1610 or systems in fluid communication with the hot side b1112 and/or so that fluid can be cooled by the cold side b1114 and provided to the thermal system b1612 or systems in fluid communication with the cold side b1114 of the closed cycle engine b1110. If one, some, or all of the thermal systems require heating/cooling, the control system b1500, or more particularly one or more controllers b1510 of the control system b1500, can initialize the heat pump system b1600. In some embodiments, in response to the thermal demand, the controller b1510 is configured to cause the electric machine to change an amplitude of the piston assembly, which ultimately changes the thermal output of the closed cycle engine b1110.

In some implementations, in initializing the heat pump system b1600, the control system b1500 can move the one or more piston assemblies b1120 of the closed cycle engine b1110 to their respective preselected starting positions, e.g. in a manner described above. For instance, the electric machines b1310 operatively coupled with the piston assemblies b1120 can electrically cam or move the piston assemblies b1120 to their respective preselected starting positions. Further, in initializing the heat pump system b1600, the one or more controllers b1510 of the control system b1500 can assign a motion profile to the one or more electric machines b1310. In this way, when electrical power is provided to the one or more electric machines b1310, the electric machines b1310 can move in accordance with the assigned motion profiles. The one or more controllers b1510 can assign motion profiles to the one or more electric machines b1310 in any suitable manner, e.g., such as in any of the manners described herein.

With the piston assemblies b1120 in their respective preselected starting positions and the motion profiles assigned to the electric machines b1310, the control system b1500 can commence motion of the piston assemblies b1120. For instance, electrical power can be provided to the electric machines b1310. The power supplied or provided to the electric machines b1310 can be based at least in part on the assigned motion profiles. When the electric machines b1310 are provided with electric power, the electric machines b1310 drivingly motor the piston assemblies b1120 such that the piston assemblies b1120 are moved within their respective piston bodies b1116 of the closed cycle engine b1110. As the piston assemblies b1120 are moved within their respective piston bodies b1116, a temperature differential $\Delta T$ is created, e.g., due to the expansion and compression of the working fluid within the piston bodies b1116. Once a predetermined temperature differential $\Delta T$ is created, the heat pump system b1600 is initialized.

During normal operation of the heat pump system b1600, the electric machines b1310 continue motoring the piston assemblies b1120, in contrast to the power generation system b1000 in which the electric machines b1310 cease motoring and switch to electric generators to generate electrical power. In normal mode, the control system b1500 can control the heat pump system b1600 in the same or similar manner as the power generation system b1000 is controlled by its associated control system b1500. For instance, the one or more controllers b1510 of the control system b1500 of the heat pump system b1600 can set an operating parameter setpoint. For instance, the operating parameter setpoint can be indicative of a target value for a piston motion characteristic associated with the piston assemblies b1120. For example, the piston motion characteristic can be a piston position, speed, amplitude, phase, and/or frequency. In other embodiments, the operating parameter setpoint can be indicative of a target value of a characteristic associated with the electric machines b1310. For instance, the characteristic associated with the electric machines b1310 can be an electric current through the electric machines b1310, a voltage at the electric machines b1310, and/or some other characteristic associated with the electric machines b1310. Furthermore, in some embodiments, the operating parameter setpoint can be indicative of a target value associated with a temperature input or output of the closed cycle engine b1110. For example, the target value can be a target temperature at the hot side b1112 and/or a target value at the cold side b1114 of the closed cycle engine b1110.

In addition, during normal operation of the heat pump system b1600, the one or more controllers b1510 can receive data indicative of one or more operating parameters associated with at least one of the closed cycle engine b1110 and the electric machines b1310. The operating parameters can be any of the operating parameters described herein. The one or more controllers b1510 can receive the data from any of the sensors described herein.

With the data received, the one or more controllers b1510 of the control system b1500 determine a control command based at least in part on the received data. The control command can be indicative of instructions for adjusting an output of the heat pump system b1600. Particularly, the control command can be indicative instructions for a controllable device b1534 to perform a control action that ultimately changes an output of the heat pump system b1600, such as e.g., a change in the temperature differential $\Delta T$ between the hot side b1112 and the cold side b1114. Accordingly, once the one or more controllers b1510 determine the control command, the control command can be provided to one or more controllable devices b1534 of the heat pump system b1600. In this way, the controllable devices b1534 can perform a control action to execute the control command. As one example, the control command can be indicative of instructions for changing the amount of electric power provided to electric machines b1310. A controllable device b1534 operable to change the amount of electrical power to the electric machines b1310 can cause the amount of power provided to the electric machines b1310 to change. By changing the amount of electrical power to the electric machines b1310, the amount of electrical energy that can be converted to mechanical energy by the electric machines b1310 is changed, and consequently, the temperature differential $\Delta T$ between the hot side b1112 and the cold side b1114 of the closed cycle engine b1110 is also changed. Thus, ultimately the heat input or output of the heat pump system b1600 is changed.

In addition, the heat pump system b1600 can include one or more failure event systems and/or control logic for preventing failure events of the system. For example, in some embodiments, the alleged machines are in communication with an electrical braking system b1320 operatively configured to protect the electric machines b1310 during operation, e.g., from electrical transients, including current and voltage spikes. The electrical braking system b1320 can also be configured to apply a load on the electric machine b1310 in the event electrical power is rapidly and unexpectedly decreased. In this way, the closed cycle engine b1110 does not overspeed. That is, the electrical braking system b1320 can apply a load on the electric machine b1310 nearly instantaneous in the event of electric power loss such that the piston assemblies b1120 of the closed cycle engine b1110 do not increase in amplitude such that the piston assemblies b1120 impact the walls of the piston bodies b1116. In other embodiments, the heat pump system b1600 can include a mechanical braking system b1400 operable to apply a counter torque or load on the electric machines b1310 in the event of electrical power loss or some other rapid change in electrical power. The electrical braking system b1320 and/or the mechanical braking system b1400 can apply loads on the electric machines b1310 in the event of a rapid and unexpected power change in a step-like manner so as to allow the piston assemblies b1120 to ramp down. Furthermore, the closed cycle engine b1110 can include mechanical impact prevention systems for preventing the piston assemblies b1120 and/or the dynamic member b1322 of the electric machine b1310 from impacting one or more walls of the piston bodies b1116.

## Chapter 5.1.9 - Computing System

FIG. 5.1.28 provides an example computing system in accordance with an example embodiment of the present disclosure. The one or more controllers, computing devices, or other control devices described herein can include various components and perform various functions of the one or more computing devices of the computing system b2000 described below.

As shown in FIG. 5.1.28, the computing system b2000 can include one or more computing device(s) b2002. The computing device(s) b2002 can include one or more processor(s) b2004 and one or more memory device(s) b2006. The one or more processor(s) b2004 can include any suitable processing device, such as a microprocessor, microcontroller, integrated circuit, logic device, and/or other suitable processing device. The one or more memory device(s) b2006 can include one or more computer-readable media, including, but not limited to, non-transitory computer-readable media, RAM, ROM, hard drives, flash drives, and/or other memory devices.

The one or more memory device(s) b2006 can store information accessible by the one or more processor(s) b2004, including computer-readable instructions b2008 that can be executed by the one or more processor(s) b2004. The instructions b2008 can be any set of instructions that when executed by the one or more processor(s) b2004, cause the one or more processor(s) b2004 to perform operations. In some embodiments, the instructions b2008 can be executed by the one or more processor(s) b2004 to cause the one or more processor(s) b2004 to perform operations, such as any of the operations and functions for which the computing system b2000 and/or the computing device(s) b2002 are configured, such as e.g., operations for controlling certain aspects of power generation systems and/or controlling one or more closed cycle engines as described herein. For instance, the methods described herein can be implemented in whole or in part by the computing system b2000. Accordingly, the method can be at least partially a computer-implemented method such that at least some of the steps of the method are performed by one or more computing devices, such as the exemplary computing device(s) b2002 of the computing system b2000. The instructions b2008 can be software written in any suitable programming language or can be implemented in hardware. Additionally, and/or alternatively, the instructions b2008 can be executed in logically and/or virtually separate threads on processor(s) b2004. The memory device(s) b2006 can further store data b2010 that can be accessed by the processor(s) b2004. For example, the data b2010 can include models, databases, etc.

The computing device(s) b2002 can also include a network interface b2012 used to communicate, for example, with the other components of system (e.g., via a network). The network interface b2012 can include any suitable components for interfacing with one or more network(s), including for example, transmitters, receivers, ports, controllers b1510, antennas, and/or other suitable components. One or more controllable devices b1534 and other controllers b1510 can be configured to receive one or more commands or data from the computing device(s) b2002 or provide one or more commands or data to the computing device(s) b2002.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only.

This written description uses examples to describe the presently disclosed subject matter, including the best mode, and also to provide any person skilled in the art to practice the subject matter, including making and using any devices or systems and performing any incorporated methods. The patentable scope of the presently disclosed subject matter is defined by the claims.

## Claims

1. A system, comprising:

   a closed cycle engine having a piston body (c916) defining a hot side and a cold side and having a piston assembly (c090) movable within the piston body; an electric machine (b1310) operatively coupled with the piston assembly, wherein the electric machine is operable to generate electrical power when the piston assembly is moved within the piston chamber; and
   a control system (B1500), comprising:

one or more sensors (B1520) operable to detect a piston movement characteristic of the piston assembly movable within the piston body;
a controllable device; and
a controller (B1510) communicatively coupled with the one or more sensors and the controllable device, the controller being configured to:

determine a control command based at least in part on data received from the one or more sensors, the control command selected based at least in part to cause the electric machine operatively coupled with the piston assembly to generate a preselected electrical power output; and
provide the determined control command to the controllable device, the controllable device operable to control an input to an engine working fluid disposed within the piston body, wherein expansion and contraction of the engine working fluid causes the piston assembly to move within the piston body, wherein the data received from the one or more sensors is indicative of one or more operating parameters associated with the electric machine, wherein the one or more operating parameters associated with the electric machine received as part of the data includes at least one of an electric current and a voltage at the electric machine, **characterized in** the controller being configured to: determine whether the voltage and/or the electric current has decreased at a predetermined rate and a predetermined amount; and determine a control command indicative of instructions for applying a substantially instantaneous load on the electric machine if the voltage and/or the electric current has decreased at the predetermined rate and the predetermined amount.

2. The system of claim 1, wherein the electric machine comprises:

a dynamic member operably connected to the piston assembly, and
a stator assembly surrounding the dynamic member, wherein the electric machine is operatively coupled to the piston assembly to generate electrical power when the piston assembly is moved within the piston chamber.

3. The system of claim 2, wherein the piston assembly has two opposing pistons operatively coupled via a connection member, and wherein the dynamic member is connected to the connection member of the piston assembly.

4. The system of any preceding claim, wherein the piston assembly has two opposing pistons operatively coupled via a connection member, and wherein the system defines an outer end and an inner end each relative to a lateral extension of the piston assembly, wherein the outer end defines laterally distal ends of the system and the inner end defines a laterally inward position of the system, and wherein the electric machine is positioned at the inner end between the pistons of the piston assembly.

5. The system of claim 4, wherein the hot side of the closed cycle engine is at or proximate to the outer end, and wherein the cold side of the closed cycle engine is at or proximate to the inner end.

6. The system of any of claims 4-5, the system comprising:
a heater body configured to produce a heating working fluid, wherein the heater body is positioned at or proximate to the hot side of the closed cycle engine, and wherein the electric machine is positioned at or proximate to the cold side of the closed cycle engine.

7. The system of any of claims 4-6, the system comprising:
a cold side heat exchanger positioned in heat exchanger relationship with the cold side of the closed cycle engine and configured to remove heat from the cold side.

8. The system of any preceding claim, the system comprising:
an energy storage device in communication with the electric machine, wherein the energy storage device in communication with the electric machine is operable to receive electrical power therefrom or provide electrical power thereto.

9. The system of any preceding claim, wherein the data received from the one or more sensors is indicative of a load state of the energy storage device, and wherein the control command is determined based at least in part on the load state of the energy storage device, and wherein the load state of the energy storage device is indicative of at least one of a state of charge or a charge acceptance rate of the energy storage device.

10. The system of claim 9, wherein the controller is configured to:

determine whether the state of charge of the energy storage device exceeds a predetermined charge threshold;

determine a control command indicative of instructions for ceasing charging operations if the state of charge of the energy storage device exceeds the predetermined charge threshold; and

provide the control command to the controllable device, wherein the control command is indicative of instructions for causing the controllable device to cease charging operations of the energy storage device.

11. The system of any of claims 9-10, wherein the controller is configured to:

determine whether the charge acceptance rate of the energy storage device is within a preselected operating range;

determine whether the charge acceptance rate of the energy storage device exceeds a predetermined minimum charge rate threshold;

determine a control command indicative of instructions for ceasing charging operations if the charge acceptance rate of the energy storage device exceeds the predetermined minimum charge rate threshold; and

provide the control command to the controllable device, wherein the control command is indicative of instructions for causing the controllable device to cease charging operations of the energy storage device.

12. The system of any preceding claim, wherein the data received from the one or more sensors is indicative of one or more operating parameters associated with the electric machine, and wherein the one or more operating parameters associated with the electric machine received as part of the data includes a temperature of the electric machine, and further wherein the controller is configured to:

determine whether the temperature of the electric machine is within a preselected operating range;

determine whether the temperature of the electric machine exceeds a predetermined temperature threshold;

determine a control command indicative of instructions for returning the temperature of the electric machine below the predetermined temperature threshold if the temperature of the electric machine exceeds the predetermined temperature threshold; and

provide the control command to the controllable device, wherein the control command is indicative of instructions for causing the controllable device to return the temperature of the electric machine below the predetermined temperature threshold.

13. The system of any preceding claim, wherein the control command indicative of instructions for returning the temperature of the electric machine below the predetermined temperature threshold is indicative of instructions for causing one or more of:

the piston assembly to reduce in amplitude; or a load on the electric machine to decrease for a predetermined time.

14. The system of any preceding claim, wherein the one or more operating parameters associated with the electric machine received as part of the data includes at least one of an electric current and a voltage at the electric machine, and wherein the controller is configured to:

determine whether the electric current is outside of a preselected operating range;

determine whether the electric current has exceeded a predetermined threshold; and

determine a control command indicative of instructions for returning the electric current within the preselected operating range if the electric current has exceeded the predetermined threshold.

15. The system of any preceding claim, wherein the controller is configured to:

set an operating parameter setpoint;

receive data indicative of one or more operating parameters associated with at least one of the closed cycle engine and the electric machine; and

determine the control command based at least in part on the received data indicative of the one or more operating parameters and the operating parameter setpoint, the control command being indicative of instructions for causing a change in an output of the system.

16. The system of claim 15, wherein the operating parameter setpoint is indicative of an operating parameter associated with the electric machine, and wherein the operating parameter is indicative of a target electrical current, a target voltage, or both, generated by or at the electric machine.

17. The system of any of claims 15-16, wherein the operating parameter setpoint is indicative of an operating parameter associated with the closed cycle engine, and wherein the operating parameter setpoint associated with the closed cycle engine is indicative of one or more of a target pressure at a position within or fluidly connected with the piston body or a target temperature at a position within or fluidly connected with the piston body.

18. The system of any of claims 15-17, wherein the operating parameter setpoint is indicative of an operating parameter associated with the closed cycle engine, and wherein the operating parameter setpoint associated with the closed cycle engine is indicative of an operating parameter associated with movement of the piston assembly, and wherein the operating parameter associated with movement of the piston assembly is one or more of a target speed of the piston assembly, a target amplitude of the piston assembly, or a target position of the piston assembly at some point along a stroke of the piston assembly.

19. The system of any preceding claim, the system comprising:
a charge controller in communication with the electric machine and the energy storage device.

## Patentansprüche

1. Ein System, bestehend aus:

einen Motor mit geschlossenem Zyklus mit einem Kolbenkörper (c916), der eine heiße Seite und eine kalte Seite definiert, und mit einer Kolbenanordnung (c090), die innerhalb des Kolbenkörpers beweglich ist;
eine elektrische Maschine (b1310), die operativ mit der Kolbenanordnung gekoppelt ist, wobei die elektrische Maschine bedienbar ist, um elektrische Energie zu erzeugen, wenn die Kolbenanordnung innerhalb der Kolbenkammer bewegt wird; und
ein Kontrollsystem (B1500), bestehend aus:

eine oder mehrere Sensoren (B1520), die eine Kolbenbewegung erfassen können, die für die innerhalb des Kolbenkörpers bewegliche Kolbenbaugruppe charakteristisch ist;
ein steuerbares Gerät; und
eine Steuerung (B1510), die kommunikativ mit einem oder mehreren Sensoren und der steuerbaren Einrichtung gekoppelt ist, wobei die Steuerung so konfiguriert ist, dass einen Steuerbefehl zu bestimmen, der zumindest teilweise auf Daten basiert, die von einem oder mehreren Sensoren empfangen wurden, wobei der Steuerbefehl, der zumindest teilweise ausgewählt wurde, dazu führt, dass die elektrische Maschine, die operativ mit der Kolbenanordnung gekoppelt ist, eine vorgewählte elektrische Leistung erzeugt; und
Bereitstellung des bestimmten Steuerbefehls für die steuerbare Einrichtung, die steuerbare Einrichtung, die bedienbar ist, um einen Eingang zu einem Motorarbeitsfluid zu steuern, das innerhalb des Kolbenkörpers angeordnet ist, wobei die Expansion und Kontraktion des Motorarbeitsfluids bewirkt, dass sich die Kolbenanordnung innerhalb des Kolbenkörpers bewegt, wobei die von einem oder mehreren Sensoren empfangenen Daten auf einen oder mehrere Betriebsparameter hinweisen, die mit der elektrischen Maschine verbunden sind, wobei der eine oder mehrere Betriebsparameter, die mit der als Teil der Daten empfangenen elektrischen Maschine verbunden sind, mindestens einen elektrischen Strom und eine Spannung an der elektrischen Maschine umfassen, **dadurch gekennzeichnet, dass** die Steuerung so konfiguriert ist, dass:

festzustellen, ob die Spannung und/oder der elektrische Strom mit einer vorbestimmten Rate und einer vorbestimmten Menge abgenommen hat; und
Bestimmen Sie einen Steuerbefehl, der Anweisungen zum Aufbringen einer im Wesentlichen sofortigen Last auf die elektrische Maschine anzeigt, wenn die Spannung und/oder der elektrische Strom mit der vorbestimmten Rate und der vorbestimmten Menge abgenommen hat.

2. Das System nach Anspruch 1, wobei die elektrische Maschine umfasst:

ein dynamisches Element, das betriebsbereit mit der Kolbenanordnung verbunden ist, und eine Statoranordnung, die das dynamische Element umgibt, wobei die elektrische Maschine operativ mit der Kolbenanordnung gekoppelt ist, um elektrische Energie zu erzeugen, wenn die Kolbenanordnung innerhalb der Kolbenkammer bewegt wird.

3. Das System nach Anspruch 2, wobei die Kolbenanordnung zwei gegenüberliegende Kolben aufweist, die über ein Verbindungselement operativ gekoppelt sind, und wobei das dynamische Element mit dem Verbindungselement der Kolbenanordnung verbunden ist.

E 7 6 1

. Das System nach einem der vorhergehenden Ansprüche, wobei die Kolbenanordnung zwei gegenüberliegende Kolben aufweist, die über ein Verbindungselement operativ gekoppelt sind, und wobei das System ein äußeres Ende und ein inneres Ende jeweils relativ zu einer seitlichen Verlängerung der Kolbenanordnung definiert, wobei das äußere Ende seitlich distale Enden des Systems definiert und das innere Ende eine seitlich nach innen gerichtete Position des Systems definiert und wobei die elektrische Maschine am inneren Ende zwischen den Kolben der Kolbenanordnung positioniert ist.

5. Das System nach Anspruch 4, wobei die heiße Seite des Motors mit geschlossenem Zyklus am oder nahe am äußeren Ende ist und wobei die kalte Seite des Motors mit geschlossenem Zyklus am oder nahe am inneren Ende ist.

6. Das System nach einem der Ansprüche 4-5, wobei das System umfasst:
ein Heizkörper, der so konfiguriert ist, dass er eine Heizarbeitsflüssigkeit erzeugt, wobei der Heizkörper an oder nahe der heißen Seite des Motors mit geschlossenem Zyklus positioniert ist und wobei die elektrische Maschine an oder nahe der kalten Seite des Motors mit geschlossenem Zyklus positioniert ist.

7. Das System nach einem der Ansprüche 4-6, wobei das System umfasst:
einen kaltseitigen Wärmetauscher, der in Wärmetauscher-Beziehung mit der kalten Seite des Motors mit geschlossenem Kreislauf positioniert und so konfiguriert ist, dass er Wärme von der kalten Seite ableitet.

8. Das System nach einem der vorhergehenden Ansprüche, das System umfasst:
eine Energiespeichervorrichtung in Kommunikation mit der elektrischen Maschine, wobei die Energiespeichervorrichtung in Kommunikation mit der elektrischen Maschine bedienbar ist, um elektrische Energie davon zu empfangen oder elektrische Energie dafür bereitzustellen.

9. Das System nach einem der vorhergehenden Ansprüche, wobei die von einem oder mehreren Sensoren empfangenen Daten auf einen Lastzustand des Energiespeichers hinweisen und wobei der Steuerbefehl zumindest teilweise auf der Grundlage des Lastzustands des Energiespeichers bestimmt wird und wobei der Lastzustand des Energiespeichers auf mindestens einen Ladezustand oder eine Ladungsannahmerate des Energiespeichers hinweist.

10. Das System nach Anspruch 9, wobei die Steuerung so konfiguriert ist:

festzustellen, ob der Ladezustand des Energiespeichers einen vorgegebenen Ladeschwellenwert überschreitet;
einen Steuerbefehl festzulegen, der Anweisungen für die Einstellung des Ladevorgangs enthält, wenn der Ladezustand des Energiespeichers den vorgegebenen Ladeschwellenwert überschreitet; und
dem steuerbaren Gerät den Steuerbefehl zur Verfügung zu stellen, wobei der Steuerbefehl Hinweise darauf enthält, wie das steuerbare Gerät den Ladevorgang des Energiespeichers einstellt.

11. Das System nach einem der Ansprüche 9-10, wobei die Steuerung so konfiguriert ist:

festzustellen, ob die Ladeannahmerate des Energiespeichers innerhalb eines vorgewählten Betriebsbereichs liegt;
festzustellen, ob die Ladeannahmerate des Energiespeichers einen vorgegebenen Mindestladeratenschwellenwert überschreitet;
einen Steuerbefehl festzulegen, der Anweisungen für die Einstellung des Ladevorgangs enthält, wenn die Ladeannahmerate des Energiespeichers die vorgegebene Mindestladerate überschreitet; und
dem steuerbaren Gerät den Steuerbefehl zur Verfügung zu stellen, wobei der Steuerbefehl Hinweise darauf enthält, wie das steuerbare Gerät den Ladevorgang des Energiespeichers einstellt.

12. Das System nach einem der vorhergehenden Ansprüche, wobei die von einem oder mehreren Sensoren empfangenen Daten auf einen oder mehrere Betriebsparameter hinweisen, die mit der elektrischen Maschine verbunden sind, und wobei die einem oder mehreren Betriebsparameter, die mit der elektrischen Maschine verbunden sind, die als Teil der Daten empfangen wird, eine Temperatur der elektrischen Maschine umfassen und wobei die Steuerung ferner konfiguriert ist, um:

festzustellen, ob die Temperatur der elektrischen Maschine innerhalb eines vorgewählten Betriebsbereichs liegt;
festzustellen, ob die Temperatur der elektrischen Maschine eine vorbestimmte Temperaturschwelle überschreitet;
einen Steuerbefehl festlegen, der Anweisungen zur Rückführung der Temperatur der elektrischen Maschine unter den vorbestimmten Temperaturschwellenwert enthält, wenn die Temperatur der elektrischen Maschine den vorbestimmten Temperaturschwellenwert überschreitet; und

Stellen Sie der steuerbaren Einrichtung den Steuerbefehl zur Verfügung, wobei der Steuerbefehl Hinweise darauf enthält, wie die steuerbare Einrichtung dazu veranlasst werden kann, die Temperatur der elektrischen Maschine unter den vorbestimmten Temperaturschwellenwert zurückzugeben.

13. Das System nach einem der vorhergehenden Ansprüche, wobei der Steuerbefehl, der Anweisungen zum Zurückgeben der Temperatur der elektrischen Maschine unterhalb der vorbestimmten Temperaturschwelle anzeigt, Anweisungen zum Verursachen einer oder mehrerer von:

    die Kolbenanordnung zur Verringerung der Amplitude; oder
    eine Last auf der elektrischen Maschine für eine vorbestimmte Zeit zu verringern.

14. Das System nach einem der vorhergehenden Ansprüche, wobei der eine oder mehrere Betriebsparameter, die mit der als Teil der Daten empfangenen elektrischen Maschine verbunden sind, mindestens einen von einem elektrischen Strom und einer Spannung an der elektrischen Maschine umfassen und wobei die Steuerung so konfiguriert ist:

    festzustellen, ob sich der elektrische Strom außerhalb eines vorgewählten Betriebsbereichs befindet;
    festzustellen, ob der elektrische Strom eine vorbestimmte Schwelle überschritten hat; und
    ein Steuerbefehl zu bestimmen, das Anweisungen zur Rückführung des elektrischen Stroms innerhalb des vorgewählten Betriebsbereichs anzeigt, wenn der elektrische Strom die vorbestimmte Schwelle überschritten hat.

15. Das System nach einem der vorhergehenden Ansprüche, wobei die Steuerung so konfiguriert ist:

    einen Sollwert für den Betriebsparameter festlegen;
    Daten erhalten, die auf einen oder mehrere Betriebsparameter hinweisen, die mit mindestens einem Motor mit geschlossenem Zyklus und der elektrischen Maschine verbunden sind; und
    den Steuerbefehl zumindest teilweise auf der Grundlage der empfangenen Daten bestimmen, die auf einen oder mehrere Betriebsparameter und den Sollwert des Betriebsparameters hinweisen, wobei der Steuerbefehl auf Anweisungen zum Verursachen einer Änderung einer Ausgabe des Systems hinweist.

16. Das System nach Anspruch 15, wobei der Sollwert des Betriebsparameters einen mit der elektrischen Maschine verbundenen Betriebsparameter anzeigt und wobei der Betriebsparameter einen Sollstrom, eine Sollspannung oder beides anzeigt, der von oder an der elektrischen Maschine erzeugt wird.

17. Das System nach einem der Ansprüche 15-16, wobei der Betriebsparameter-Sollwert auf einen Betriebsparameter hinweist, der mit dem Motor mit geschlossenem Zyklus verbunden ist, und wobei der Betriebsparameter-Sollwert, der mit dem Motor mit geschlossenem Zyklus verbunden ist, auf einen oder mehrere eines Zieldrucks an einer Position innerhalb oder flüssig mit dem Kolbenkörper oder einer Zieltemperatur an einer Position innerhalb oder flüssig mit dem Kolbenkörper verbunden ist.

18. Das System nach einem der Ansprüche 15-17, wobei der Betriebsparameter-Sollwert auf einen Betriebsparameter hinweist, der mit dem Motor mit geschlossenem Zyklus verbunden ist, und wobei der Betriebsparameter-Sollwert, der mit dem Motor mit geschlossenem Zyklus verbunden ist, auf einen Betriebsparameter hinweist, der mit der Bewegung der Kolbenanordnung verbunden ist, und wobei der Betriebsparameter, der mit der Bewegung der Kolbenanordnung verbunden ist, einer oder mehreren einer Zieldrehzahl der Kolbenanordnung, einer Zielamplitude der Kolbenanordnung oder einer Zielposition der Kolbenanordnung an einem bestimmten Punkt entlang eines Hubs der Kolbenanordnung entspricht.

19. Das System nach einem der vorhergehenden Ansprüche, das folgendes System umfasst:
einen Laderegler in Kommunikation mit der elektrischen Maschine und dem Energiespeicher.

**Revendications**

1. Un système comprenant:

    un moteur à cycle fermé ayant un corps de piston (c916) définissant un côté chaud et un côté froid et ayant un ensemble de piston (c090) mobile à l'intérieur du corps de piston;
    une machine électrique (b1310) couplée en fonctionnement à l'ensemble piston, dans laquelle la machine électrique peut produire de l'énergie électrique lorsque l'ensemble piston est déplacé à l'intérieur de la chambre de piston; et
    un système de commande (B1500), comprenant:

        un ou plusieurs capteurs (B1520) utilisables pour détecter un mouvement du piston caractéristique de l'ensemble du piston mobile à l'intérieur du corps du piston; un dispositif contrôlable; et un contrôleur (B1510) couplé de manière communicative avec un ou plusieurs capteurs et le dispositif contrôlable, le contrôleur étant configuré pour:

> déterminer une commande de commande basée au moins en partie sur les données reçues d'un ou de plusieurs capteurs, la commande de commande sélectionnée basée au moins en partie pour faire en sorte que la machine électrique couplée au piston génère une sortie de puissance électrique présélectionnée; et fournir la commande de commande déterminée au dispositif contrôlable, le dispositif contrôlable pouvant commander une entrée dans un fluide de fonctionnement du moteur disposé dans le corps du piston, dans lequel l'expansion et la contraction du fluide de fonctionnement du moteur provoquent le déplacement de l'ensemble du piston dans le corps du piston, dans lequel les données reçues d'un ou de plusieurs capteurs indiquent un ou plusieurs paramètres de fonctionnement associés à la machine électrique, dans lequel un ou plusieurs paramètres de fonctionnement associés à la machine électrique reçus dans le cadre des données comprennent au moins un courant électrique et une tension à la machine électrique, **caractérisés en ce que** le contrôleur étant configuré pour:

> > déterminer si la tension et/ou le courant électrique a diminué à un taux prédéterminé et à une quantité prédéterminée; et déterminer une commande de commande indiquant les instructions pour l'application d'une charge essentiellement instantanée sur la machine électrique si la tension et/ou le courant électrique a diminué au taux prédéterminé et à la quantité prédéterminée.

2. Le système de la revendication 1, dans lequel la machine électrique comprend:

> un membre dynamique relié de façon opérative à l'ensemble du piston, et un ensemble de stator entourant l'élément dynamique, dans lequel la machine électrique est couplée en fonctionnement à l'ensemble de piston pour générer de l'énergie électrique lorsque l'ensemble de piston est déplacé à l'intérieur de la chambre de piston.

3. Le système de la revendication 2, dans lequel l'ensemble piston a deux pistons opposés couplés en fonctionnement par un élément de connexion, et dans lequel l'élément dynamique est connecté à l'élément de connexion de l'ensemble piston.

4. Le système de toute revendication précédente, dans lequel l'ensemble piston a deux pistons opposés couplés en fonctionnement par un élément de connexion, et dans lequel le système définit une extrémité extérieure et une extrémité intérieure chacune par rapport à une extension latérale de l'ensemble piston, dans lequel l'extrémité extérieure définit les extrémités latéralement distales du système et l'extrémité intérieure définit une position latéralement vers l'intérieur du système, et dans lequel la machine électrique est positionnée à l'extrémité intérieure entre les pistons de l'ensemble piston.

5. Le système de la revendication 4, dans lequel le côté chaud du moteur à cycle fermé se trouve à l'extrémité extérieure ou à proximité de celle-ci, et dans lequel le côté froid du moteur à cycle fermé se trouve à l'extrémité intérieure ou à proximité de celle-ci.

6. Le système de l'une des revendications 4-5, le système comprenant:
un corps chauffant configuré pour produire un fluide de travail chauffant, dans lequel le corps chauffant est positionné au côté chaud ou à proximité du côté chaud du moteur à cycle fermé, et dans lequel la machine électrique est positionnée au côté froid ou à proximité du côté froid du moteur à cycle fermé.

7. Le système de l'une des revendications 4-6, le système comprenant:
un échangeur de chaleur côté froid placé en relation échangeur de chaleur avec le côté froid du moteur à cycle fermé et configuré pour éliminer la chaleur du côté froid.

8. Le système de toute revendication antérieure, le système comprenant:
un dispositif de stockage d'énergie en communication avec la machine électrique, dans lequel le dispositif de stockage d'énergie en communication avec la machine électrique peut être utilisé pour recevoir de l'énergie électrique ou fournir de l'énergie électrique à partir de celle-ci.

**9.** Le système de toute revendication précédente, dans lequel les données reçues d'un ou de plusieurs capteurs indiquent un état de charge du dispositif de stockage d'énergie, et dans lequel la commande de commande est déterminée sur la base au moins en partie de l'état de charge du dispositif de stockage d'énergie, et dans lequel l'état de charge du dispositif de stockage d'énergie indique au moins un état de charge ou un taux d'acceptation de charge du dispositif de stockage d'énergie.

**10.** Le système de la revendication 9, dans lequel le contrôleur est configuré pour:

déterminer si l'état de charge du dispositif de stockage d'énergie dépasse un seuil de charge prédéterminé;
déterminer une commande de contrôle indiquant les instructions pour cesser les opérations de charge si l'état de charge du dispositif de stockage d'énergie dépasse le seuil de charge prédéterminé; et
fournit la commande de commande au dispositif contrôlable, dans laquelle la commande de commande indique des instructions pour faire cesser les opérations de charge du dispositif de stockage d'énergie.

**11.** Le système de l'une des revendications 9-10, dans lequel le contrôleur est configuré pour:

déterminer si le taux d'acceptation de la charge du dispositif de stockage d'énergie se situe dans une plage de fonctionnement présélectionnée;
déterminer si le taux d'acceptation de la charge du dispositif de stockage d'énergie dépasse un seuil de taux de charge minimal prédéterminé;
déterminer une commande de contrôle indiquant les instructions relatives à la cessation des opérations de charge si le taux d'acceptation de la charge du dispositif de stockage d'énergie dépasse le seuil de taux de charge minimal prédéterminé; et
fournit la commande de commande au dispositif contrôlable, dans laquelle la commande de commande indique des instructions pour faire cesser les opérations de charge du dispositif de stockage d'énergie.

**12.** Le système de toute revendication précédente, dans lequel les données reçues d'un ou de plusieurs capteurs indiquent un ou plusieurs paramètres de fonctionnement associés à la machine électrique, et dans lequel un ou plusieurs paramètres de fonctionnement associés à la machine électrique reçus dans le cadre des données comprennent une température de la machine électrique, et dans lequel le contrôleur est configuré pour:

déterminer si la température de la machine électrique se situe dans une plage de fonctionnement présélectionnée;
déterminer si la température de la machine électrique dépasse un seuil de température prédéterminé;
déterminer une commande de commande indiquant les instructions pour ramener la température de la machine électrique en dessous du seuil de température prédéterminé si la température de la machine électrique dépasse le seuil de température prédéterminé; et
fournir la commande de commande au dispositif contrôlable, dans laquelle la commande de commande indique des instructions pour faire revenir le dispositif contrôlable à la température de la machine électrique en dessous du seuil de température prédéterminé.

**13.** Le système de toute revendication précédente, dans lequel la commande de commande indiquant des instructions pour ramener la température de la machine électrique en dessous du seuil de température prédéterminé indique des instructions pour provoquer une ou plusieurs des causes suivantes:

l'ensemble du piston pour réduire l'amplitude; ou
une charge sur la machine électrique à diminuer pendant un temps prédéterminé.

**14.** Le système de toute revendication précédente, dans lequel un ou plusieurs paramètres de fonctionnement associés à la machine électrique reçus dans le cadre des données comprennent au moins un courant électrique et une tension à la machine électrique, et dans lequel le contrôleur est configuré pour:

déterminer si le courant électrique se trouve en dehors d'une plage de fonctionnement présélectionnée;
déterminer si le courant électrique a dépassé un seuil prédéterminé; et
déterminer une commande de commande indiquant les instructions pour le retour du courant électrique dans la plage de fonctionnement présélectionnée si le courant électrique a dépassé le seuil prédéterminé.

**15.** Le système de toute revendication précédente, dans lequel le contrôleur est configuré pour:

fixer un paramètre de consigne de fonctionnement;
recevoir des données indiquant un ou plusieurs paramètres de fonctionnement associés à au moins un moteur à cycle fermé et à la machine électrique; et

détermine la commande de contrôle sur la base, au moins en partie, des données reçues indiquant un ou plusieurs paramètres de fonctionnement et le point de consigne du paramètre de fonctionnement, la commande de contrôle indiquant des instructions pour provoquer une modification d'une sortie du système.

**16.** Le système de la revendication 15, dans lequel le point de consigne du paramètre de fonctionnement est indicatif d'un paramètre de fonctionnement associé à la machine électrique, et dans lequel le paramètre de fonctionnement est indicatif d'un courant électrique cible, d'une tension cible, ou des deux, générés par la machine électrique ou au niveau de celle-ci.

**17.** Le système de l'une quelconque des revendications 15 à 16, dans lequel le point de consigne du paramètre de fonctionnement est indicatif d'un paramètre de fonctionnement associé au moteur à cycle fermé, et dans lequel le point de consigne du paramètre de fonctionnement associé au moteur à cycle fermé est indicatif d'une ou de plusieurs pressions cibles à une position à l'intérieur ou en liaison fluide avec le corps du piston ou d'une température cible à une position à l'intérieur ou en liaison fluide avec le corps du piston.

**18.** Le système de l'une quelconque des revendications 15 à 17, dans lequel le point de consigne du paramètre de fonctionnement est indicatif d'un paramètre de fonctionnement associé au moteur à cycle fermé, et dans lequel le point de consigne du paramètre de fonctionnement associé au moteur à cycle fermé est indicatif d'un paramètre de fonctionnement associé au mouvement de l'ensemble du piston, et dans lequel le paramètre de fonctionnement associé au mouvement de l'ensemble du piston est une ou plusieurs vitesses cibles de l'ensemble du piston, une amplitude cible de l'ensemble du piston ou une position cible de l'ensemble du piston en un point quelconque le long d'une course de l'ensemble du piston.

**19.** Le système de toute revendication antérieure, le système comprenant:

un régulateur de charge en communication avec la machine électrique et le dispositif de stockage d'énergie.

FIG. 1.1.1

FIG. 1.1.2

FIG. 1.1.3

EP 3 973 166 B1

FIG. 1.1.4

TABLE ES-1  NOMINAL HEAT BALANCES OF PRIME-MOVERS AS A PERCENTAGE OF
FUEL INPUT

| ENGINE TYPE | WORK | RECOVERABLE HEAT | REJECTED HEAT |
|---|---|---|---|
| DIESEL | 36 | 42 | 22 |
| ADIABATIC TURBO-COMPOUND DIESEL | 47 | 36 | 17 |
| GAS TURBINE (SIMPLE) | 25 | 45 | 30 |
| GAS TRIBUNE (REGENERATIVE) | 38 | 22 | 40 |
| STIRLING (CURRENT) | 34 | 54 | 12 |

# FIG. 1.1.5

**FIG. 1.2.1**

FIG. 1.3.1

FIG. 1.3.2

**FIG. 1.4.1**

*FIG. 1.4.2*

FIG. 1.4.3

EP 3 973 166 B1

FIG. 1.4.4

C700

A66

A64

A62

C112

A1050

C112 A12

C204

A1050

A72

R

R

R

A1050

A12

C112

A74

A1050

C112

R

A72

C700

*FIG. 1.4.5*

FIG. 1.4.6

FIG. 1.4.7

FIG. 1.4.8

FIG. 1.5.1

FIG. 1.6.1A

FIG. 1.6.1B

FIG. 1.6.1C

FIG. 1.6.1D

FIG. 1.6.2B

FIG. 1.6.2A

FIG. 1.6.3

C1014,C1016

C1006

C1048

C1008

FIG. 1.6.4A

C1016

FIG. 1.6.4B

C1032    C1018

C1048

C1036

G

C1048

C1034

C1030

FIG. 1.6.5

FIG. 1.6.6A

FIG. 1.6.6B

FIG. 1.6.6C

FIG. 1.6.6D

FIG. 1.6.7

FIG. 1.7.1

FIG. 1.7.2

FIG. 1.7.3

EP 3 973 166 B1

FIG. 1.7.4

FIG. 1.7.5

FIG. 1.7.6

EP 3 973 166 B1

FIG. 1.7.7

EP 3 973 166 B1

FIG. 1.7.8

FIG. 1.8.1A

EP 3 973 166 B1

FIG. 1.8.1B

FIG. 1.8.1C

FIG. 1.8.1D

FIG. 1.8.1E

FIG. 1.8.1F

EP 3 973 166 B1

123

FIG. 1.8.2

EP 3 973 166 B1

◄—C4000

COUPLING A FIRST MONOLITHIC BODY OR A FIRST MONOLITHIC BODY-SEGMENT TO A SECOND MONOLITHIC BODY OR
A SECOND MONOLITHIC BODY SEGMENT, THE FIRST MONOLITHIC BODY OR THE FIRST MONOLITHIC BODY-SEGMANT
HAVING BEEN ADDITIVELY MANUFACTURED AND COMPRISING A FIRST HEATER BODY AND/OR A FIRST ENGINE BODY,
THE SECOND MONOLITHIC BODY OR THE SECOND MONOLITHIC BODY-SEGMENT HAVING BEEN ADDITIVELY MANUFACTURED
AND COMPRISING A SECOND HEATER BODY AND/OR A SECOND ENGINE BODY; WHEREIN THE FIRST MONOLITHIC BODY OR
THE FIRST MONOLITHIC BODY-SEGMENT COMPRISES AT LEAST A FIRST PORTION OF A FIRST PISTON ASSEMBLY AND/OR
AT LEAST A FIRST PORTION OF A FIRST LOAD DEVICE INSTALLED THEREIN, AND/OR THE SECOND MONOLITHIC
BODY OR THE SECOND MONOLITHIC BODY-SEGMENT COMPRISES AT LEAST A SECOND PORTION OF THE FIRST PISTON
ASSEMBLY AND/OR AT LEAST A SECOND PORTION OF THE FIRST LOAD DEVICE INSTALLED THEREIN

C4002

ADDITIVELY MANUFACTURING THE FIRST MONOLITHIC BODY OR THE FIRST MONOLITHIC BODY-
SEGMENT, WHEREIN ADDITIVELY MANUFACTURING THE FIRST MONOLITHIC BODY OR THE FIRST
MONOLITHIC BODY-SEGMENT COMPRISES ADDITIVELY MANUFACTURING THE FIRST HEATER BODY AND/
OR THE FIRST ENGINE BODY

C1004

INSTALLING AT LEAST THE FIRST PORTION OF THE FIRST PISTON ASSEMBLY AND/OR AT LEAST THE FIRST PORTION
OF THE FIRST LOAD DEVICE IN THE FIRSTMONOLITHIC BODY OR THE FIRST MONOLITHIC BODY-SEGMENT

C4006

ADDITIVELY MANUFACTURING THE SECOND MONOLITHIC BODY OR THE SECOND MONOLITHIC BODY-
SEGMENT, WHEREIN ADDITIVELY MANUFACTURING THE SECOND MONOLITHIC BODY OR THE SECOND
MONOLITHIC BODY-SEGMENT COMPRISES ADDITIVELY MANUFACTURING THE SECOND HEATER BODY
AND/OR THE SECOND ENGINE BODY

C4008

INSTALLING AT LEAST THE SECOND PORTION OF THE FIRST PISTON ASSEMBLY AND/OR AT LEAST THE
SECOND PORTION OF THE FIRST LOAD DEVICE IN THE SECOND
MONOLITHIC BODY OR THE SECOND MONOLITHIC BODY-SEGMENT

C4010

ADDITIVELY MANUFACTURING A FIRST PISTON BODY, THE FIRST PISTON BODY DEFINING AT LEAST A
PORTION OF THE FIRST MONOLITHIC BODY OR THE FIRST MONOLITHIC BODY-SEGMENT, OR THE
FIRST PISTON BODY DEFINING AT LEAST A PORTION OF THE SECOND MONOLITHIC BODY OR THE
SECOND MONOLITHIC BODY-SEGMENT

C4012

ADDITIVELY MANUFACTURING A FIRST MACHINE BODY, THE FIRST MACHINE BODY DEFINING
AT LEAST A PORTION OF THE FIRST MONOLITHIC BODY OR THE FIRST MONOLITHIC BODY-SEGMENT,
OR THE FIRST MACHINE BODY DEFINING AT LEAST A PORTION OF THE SECOND MONOLITHIC
BODY OR THE SECOND MONOLITHIC BODY-SEGMENT

C4014

ADDITIVELY MANUFACTURING A FIRST REGENERATOR BODY, THE FIRST REGENERATOR BODY
DEFINING AT LEAST A PORTION OF THE FIRST MONOLITHIC BODY OR THE FIRST MONOLITHIC BODY-
SEGMENT, OR THE FIRST REGENERATOR BODY DEFINING AT LEAST A PORTION OF THE
SECOND MONOLITHIC BODY OR THE SECOND MONOLITHIC BODY-SEGMENT

C4016

ADDITIVELY MANUFACTURING A FIRST CHILLER BODY, THE FIRST CHILLER BODY DEFINING AT
LEAST A PORTION OF THE FIRST MONOLITHIC BODY OR THE FIRST MONOLITHIC BODY-SEGMENT, OR
THE FIRST CHILLER BODY DEFINING AT LEAST A PORTION OF THE SECOND MONOLITHIC BODY
OR THE SECOND MONOLITHIC BODY-SEGMENT

C4018

FIG. 1.8.3

125

**FIG. 5.1.1**

FIG. 5.1.2

FIG. 5.1.3

*FIG. 5.1.4*

b1700

Initialize Power Generation System

b1702

Determine whether to initialize system based at least in part on data indicative of a load state of the energy storage devices

b1704

Move one or more piston assemblies to preselected starting positions

b1706

Assign motion profile to one or more of the electric machines

b1708

Commence motion of piston assemblies

b1710

Apply heat to hot side of the engine

b1712

Remove heat from the cold side of the engine

*FIG. 5.1.5*

**FIG. 5.1.6**

EP 3 973 166 B1

**FIG. 5.1.7**

**FIG. 5.1.8**

**FIG. 5.1.9**

**FIG. 5.1.10**

**FIG. 5.1.11**

FIG. 5.1.12

b1720

Operate Power Generation System

b1722

Set an operating parameter setpoint

b1724

Receive data indicative of one or more operating parameters associated with at least one of the engine and the electric machines operatively coupled with the piston assemblies of the engine

b1726

Determine a control command based at least in part on the received data indicative of the one or more operating parameters

b1728

Provide the control command to a controllable device

*FIG. 5.1.13*

Control Law

| Power Output | Piston Speed | Fuel Input |
|---|---|---|
| A1 | A2 | A3 |
| B1 | B2 | B3 |
| C1 | C2 | C3 |
| ... | ... | ... |
| N1 | N2 | N3 |

*FIG. 5.1.14*

*FIG. 5.1.15*

Predetermined Charge — 100%

Operating Parameter Setpoint

Charge Capacity

Operating Parameter Setpoint (vertical axis)

Charge Capacity (%)

Charge Time

*FIG. 5.1.16A*

FIG. 5.1.16B

FIG. 5.1.17

*FIG. 5.1.17B*

**Control Law**

| Difference | Control Command |
|---|---|
| A | D |
| B | E |
| C | F |
| ... | ... |
| N | N |

*FIG. 5.1.18*

Operating Parameter Setpoint b1536

Difference b1540

Controller(s) b1510

Control Command b1532

Controllable Device(s) 1534

Control Action b1542

Sensor(s)

Sensed/Calculated Operating Parameter b1538

*FIG. 5.1.19*

*FIG. 5.1.20*

**FIG. 5.1.21**

**FIG. 5.1.22**

b1800

b1802

Operating a closed cycle engine having a piston assembly movable within a piston chamber defined by a piston body of the closed cycle engine

b1804

Receiving data indicative of a load state of an electrical device in communication with an electric machine operatively coupled with the piston assembly

b1806

Determining a load change is anticipated on the electric machine based at least in part on the load state of the electrical device

b1808

Determining a control command indicative of instructions for adjusting an output of at least one of the closed cycle engine and the electric machine prior to the anticipated load change on the electric machine

b1810

Causing a controllable device to adjust the output of at least one of the closed cycle engine and the electric machine prior to the anticipated load change on the electric machine based at least in part on the determined control command

## FIG. 5.1.22A

*FIG. 5.1.23*

**FIG. 5.1.24**

**FIG. 5.1.25**

**FIG. 5.1.26**

FIG. 5.1.27

COMPUTING SYSTEM b2000

COMPUTING DEVICE(S) b2002

PROCESSOR(S) b2004

MEMORY b2006

INSTRUCTIONS b2008

DATA b2010

COMMUNICATIONS INTERFACE b2012

# FIG. 5.1.28

**EP 3 973 166 B1**

**Patent documents cited in the description**

- EP 3301287 A1